# EUROPEAN PATENT APPLICATION

(11) **EP 4 576 740 A1**
(43) Date of publication of application: **25.06.2025**
(21) Application number: 23854929.9
(22) Date of filing: 17.08.2023
(51) Int. Cl.: H04L 67/131, H04L 67/52, H04W 4/02

(54) **METHOD, SERVER, TERMINAL, AND BASE STATION**

(30) Priority: 19.08.2022 US 202263399433 P
(71) Applicant: Panasonic Intellectual Property Corporation of America, Torrance, CA 90504 (US)
(72) Inventor: MURAKAMI, Yutaka, Kadoma-shi, Osaka 571-0057 (JP)
(74) Representative: Grünecker Patent- und Rechtsanwälte PartG mbB
(86) International application number: PCT/JP2023/029714
(87) International publication number: WO 2024/038895

(57) **Abstract**

A method implemented by a server includes receiving control information indicating that a first terminal is in a first area of a real space (S7431 or S7432), transmitting information corresponding to the first terminal to a second terminal displaying a first virtual space corresponding to the first area of the real space, and displaying an image corresponding to the first terminal on a display screen of the second terminal (S7433).

## Description

### [Technical Field]

The present disclosure relates to a method, a server, a terminal, and a base station.

### [Background Art]

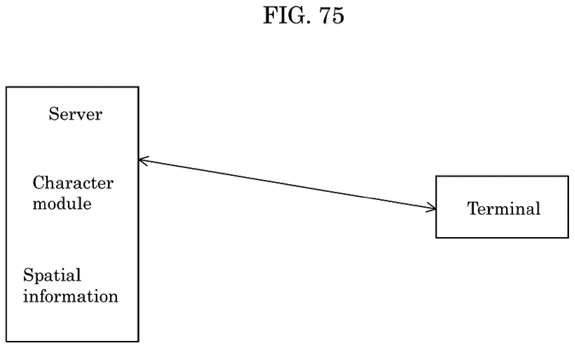

A method of making a character appear in a virtual space has been proposed. As illustrated in FIG. 75, a server includes a character module and spatial information. A terminal accesses the server, and the server makes the character appear in the virtual space using the spatial information.

### [Citation List]

### [Patent Literature]

[PTL 1] Japanese Unexamined Patent Application Publication No .2015-122075
[PTL 2] WO 2020/122220
[PTL 3] WO 2021/045181
[PTL 4] WO 2021/215080

### [Summary of Invention]

### [Technical Problem]

One conventional technique is for making a character appear solely in a virtual space as disclosed in Patent Literature (PTL) 1, and the technique of PTL 1 is not one that links the virtual space and the real space, but is limited to use for operating the character only within the virtual space. Therefore, there is a problem that it is not a more diversified system suitable for the real environment where the terminal and the user are present.

In view of this, the present disclosure makes a character (avatar) appear in a virtual space based on the position of a terminal (or user) in real space.

### [Solution to Problem]

A server according to one aspect of an invention understood based on the present disclosure includes: a communicator; and a processor, wherein the communicator receives information indicating that a first terminal is in a first area of a real space, the processor generates first avatar information corresponding to the first terminal, and the communicator transmits the first avatar information to a second terminal displaying a first virtual space corresponding to the first area of the real space, and displays the information on a display screen of the second terminal.

These general or specific aspects may be realized as a system, a method, an integrated circuit, a computer program, or a computer-readable recording medium such as a CD-ROM, or any given combination thereof.

### [Advantageous Effects of Invention]

The server of the present disclosure can display, in a first virtual space corresponding to a first area of a real space, a first avatar corresponding to a terminal in the first area of the real space. With this, the terminal can easily participate in a virtual space corresponding to the real space where the terminal is.

By making a character (avatar) corresponding to a device such as a terminal appear in a virtual space in coordination with the position where the device is present in the real space, the advantageous effect of being able to provide a more diversified system suitable for the real environment where the terminal and the user are present can be achieved.

### [Brief Description of Drawings]

[FIG. 1]

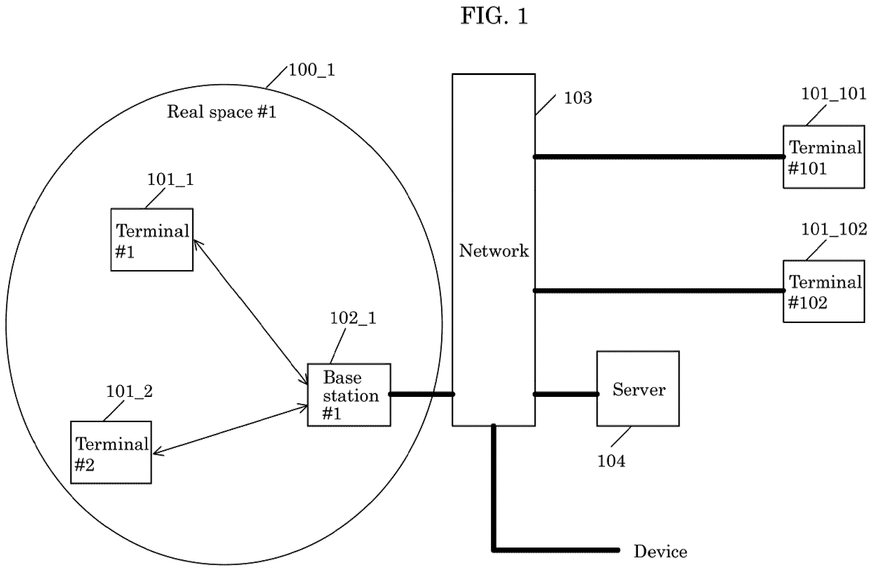

   FIG. 1 illustrates an example of a system configuration according to Embodiment 1.
[FIG. 2]

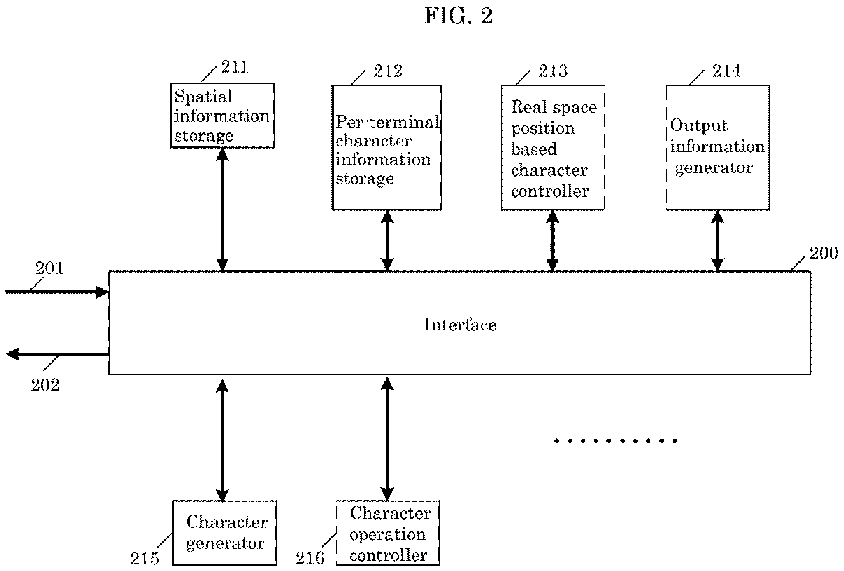

   FIG. 2 illustrates an example of a configuration of a server according to Embodiment 1.
[FIG. 3A]

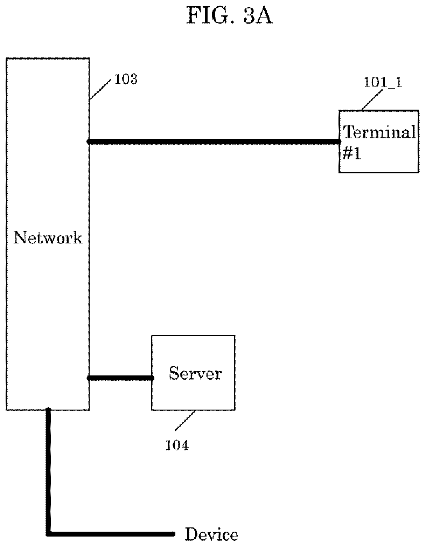

   FIG. 3A illustrates another example of a system configuration according to Embodiment 1.
[FIG. 3B]

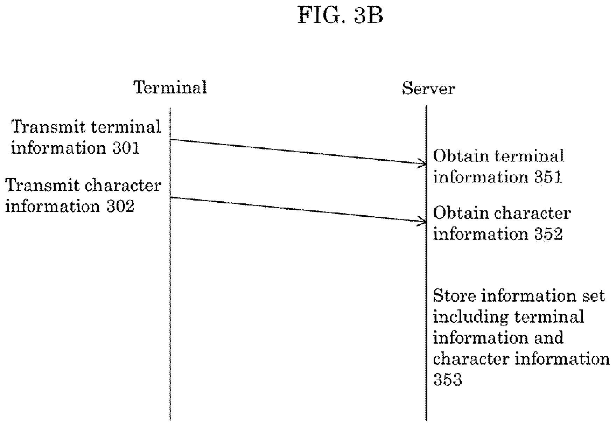

   FIG. 3B is a sequence diagram illustrating an example of communication between a server and a terminal according to Embodiment 1.
[FIG. 4A]

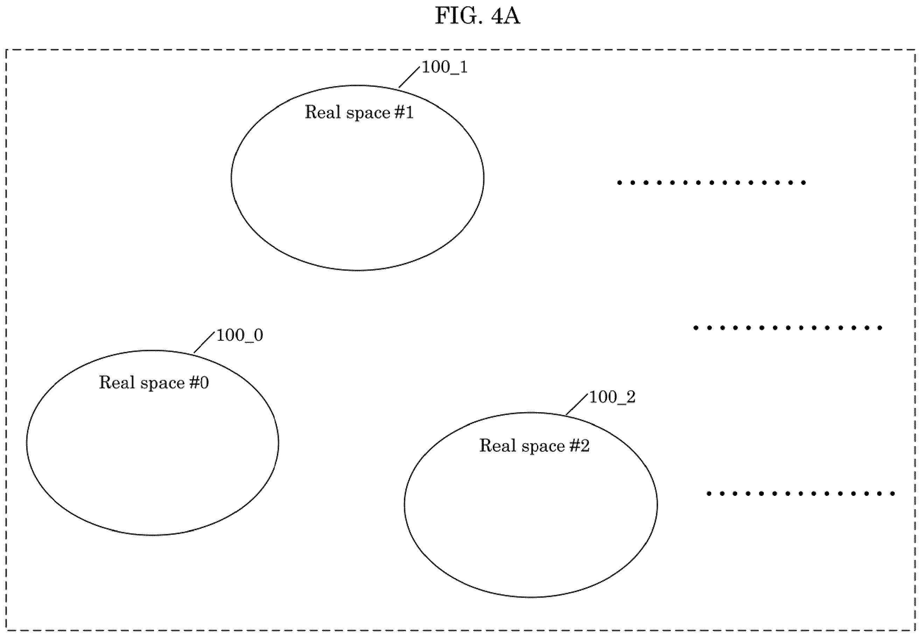

   FIG. 4A illustrates an example of real spaces according to Embodiment 1.
[FIG. 4B]

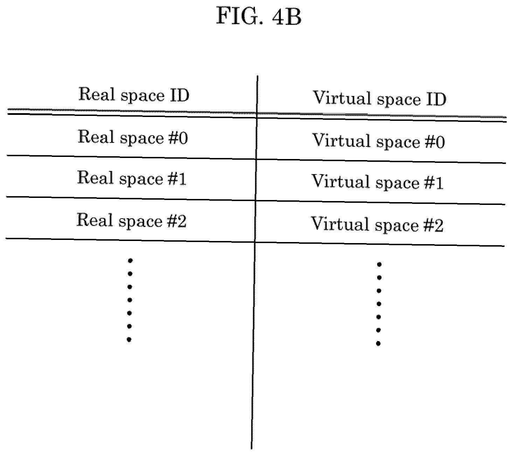

   FIG. 4B illustrates an example of correspondence between real spaces and virtual spaces according to Embodiment 1.
[FIG. 5]

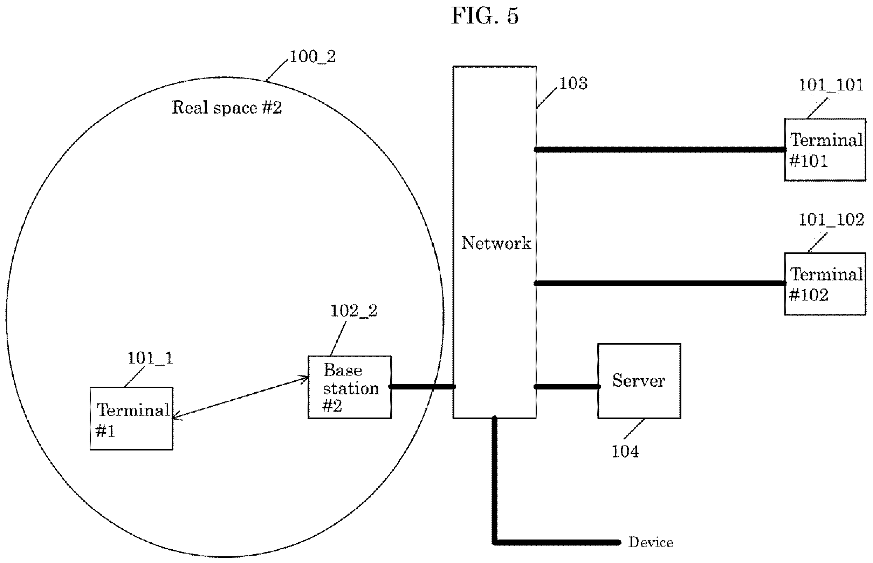

   FIG. 5 illustrates another example of a system configuration according to Embodiment 1.
[FIG. 6]

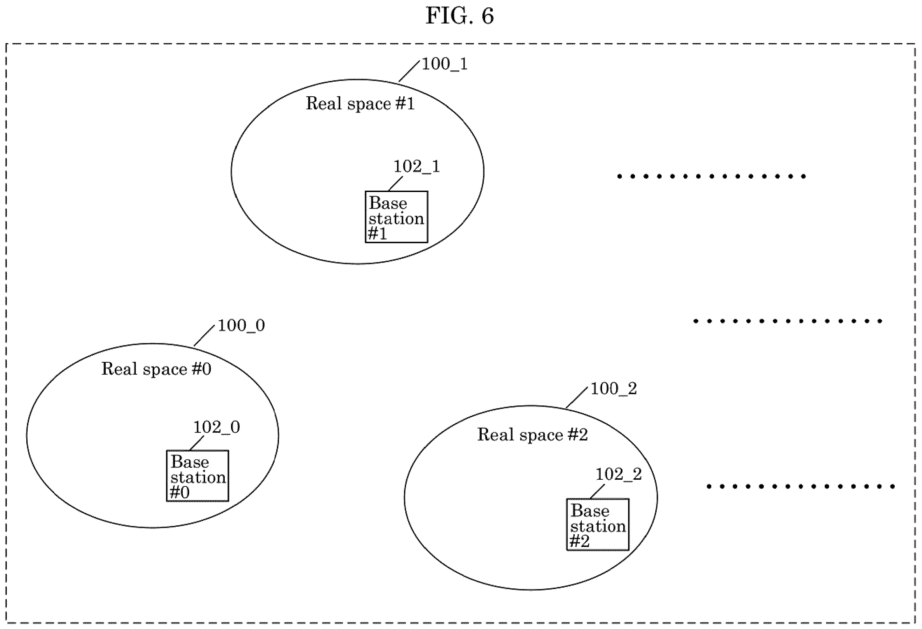

   FIG. 6 illustrates an example of an arrangement of real spaces and base stations according to Embodiment 1.
[FIG. 7A]

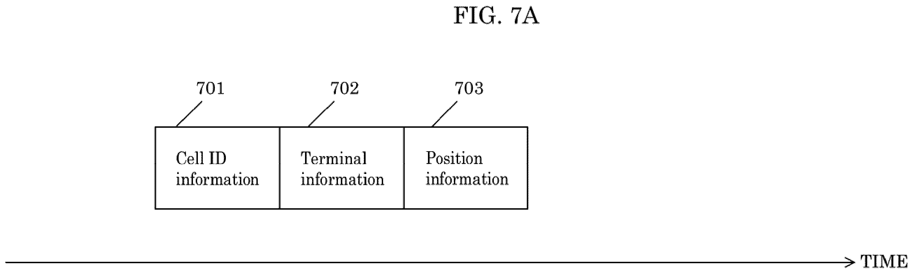

   FIG. 7A illustrates an example of transmission information according to Embodiment 1.
[FIG. 7B]

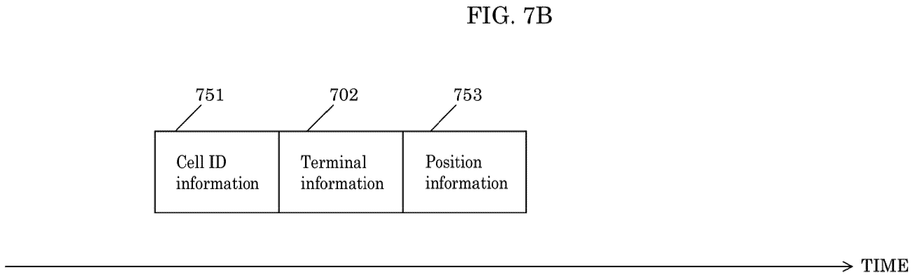

   FIG. 7B illustrates another example of transmission information according to Embodiment 1.
[FIG. 8]

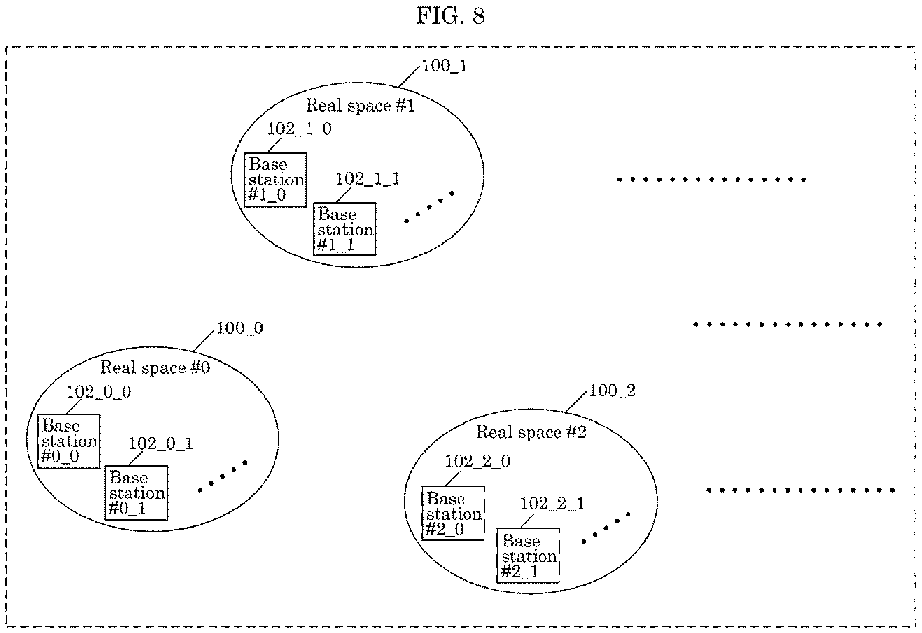

   FIG. 8 illustrates another example of an arrangement of real spaces and base stations according to Embodiment 1.
[FIG. 9]

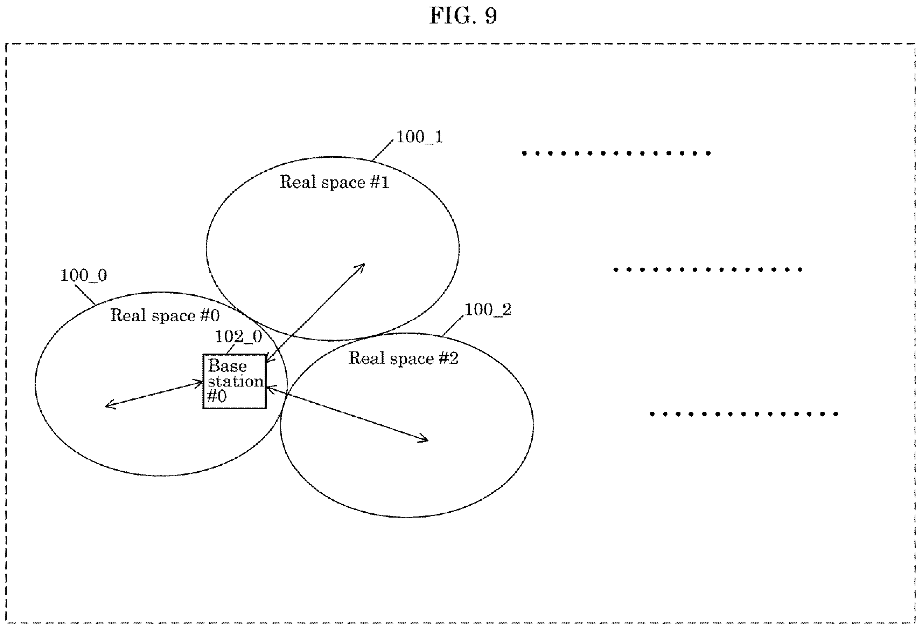

   FIG. 9 illustrates another example of an arrangement of real spaces and base stations according to Embodiment 1.
[FIG. 10A]

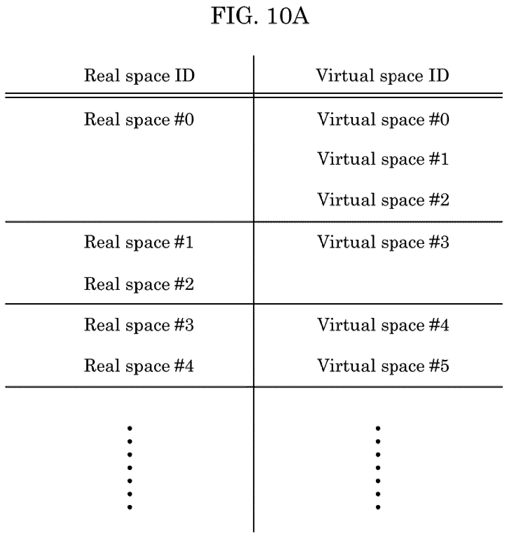

   FIG. 10A illustrates another example of correspondence between real spaces and virtual spaces according to Embodiment 1.
[FIG. 10B]

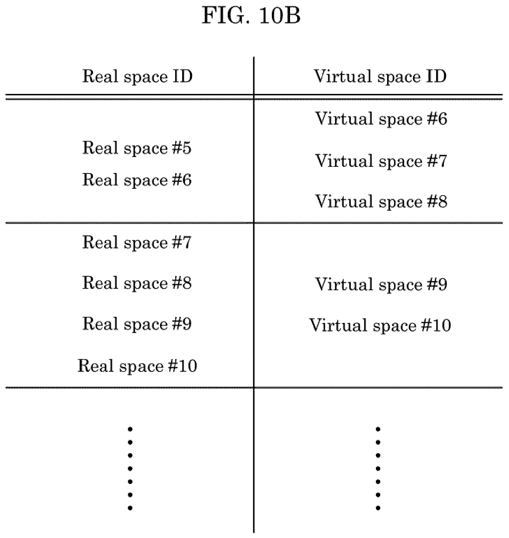

   FIG. 10B illustrates another example of correspondence between real spaces and virtual spaces according to Embodiment 1.
[FIG. 11]

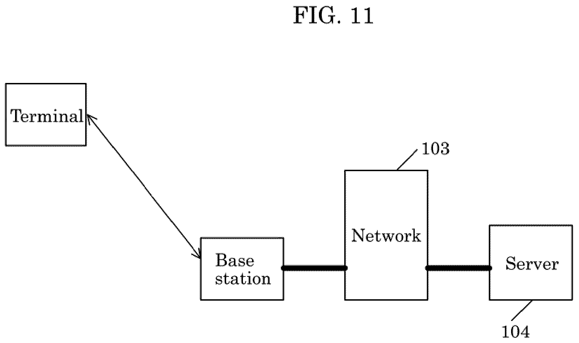

   FIG. 11 illustrates another example of a system configuration according to Embodiment 1.
[FIG. 12]

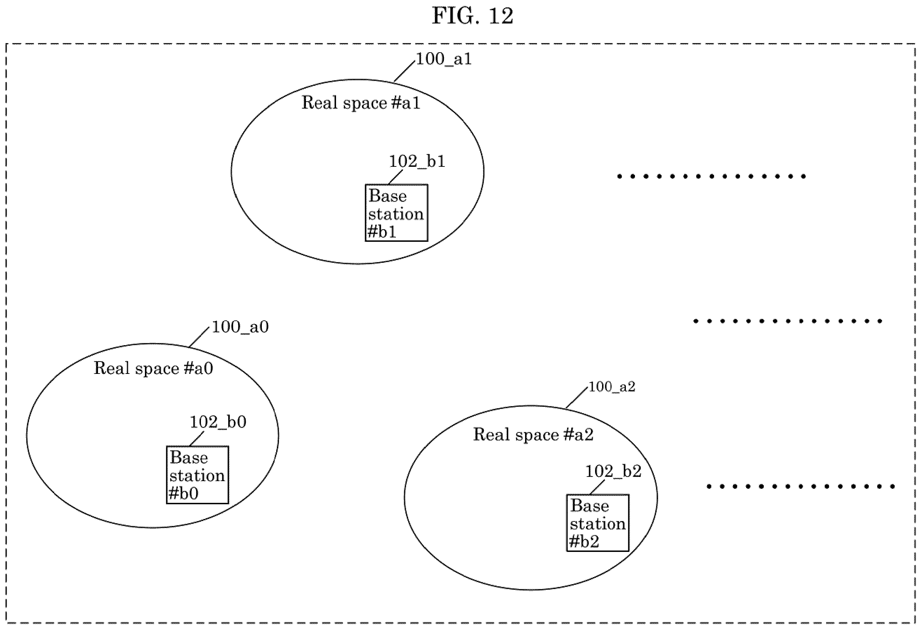

   FIG. 12 illustrates another example of an arrangement of real spaces and base stations according to Embodiment 1.
[FIG. 13]

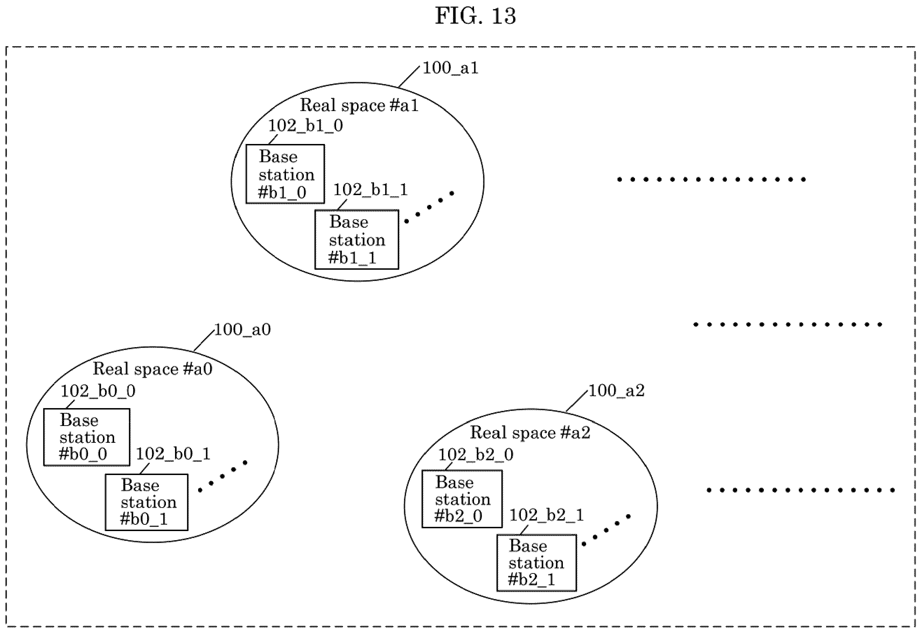

   FIG. 13 illustrates another example of an arrangement of real spaces and base stations according to Embodiment 1.
[FIG. 14]

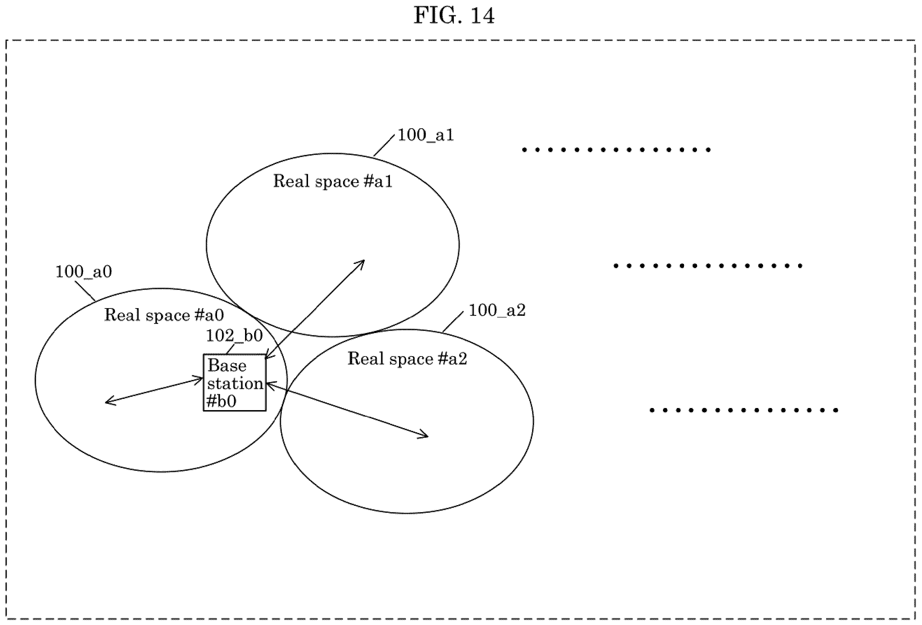

   FIG. 14 illustrates another example of an arrangement of real spaces and a base station according to Embodiment 1.
[FIG. 15]

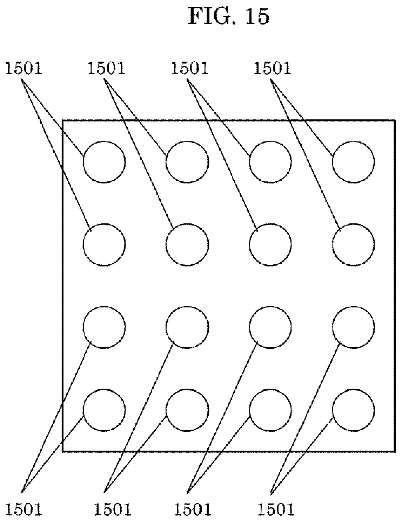

   FIG. 15 illustrates an example of an antenna configuration.
[FIG. 16A]

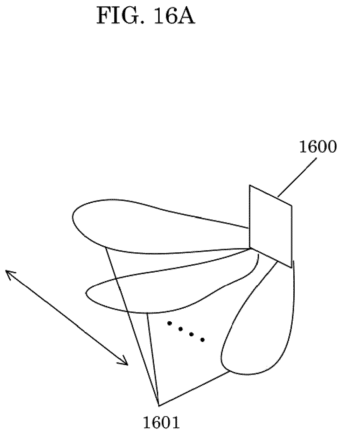

   FIG. 16A illustrates an example of beamforming performed by a base station and a terminal.
[FIG. 16B]

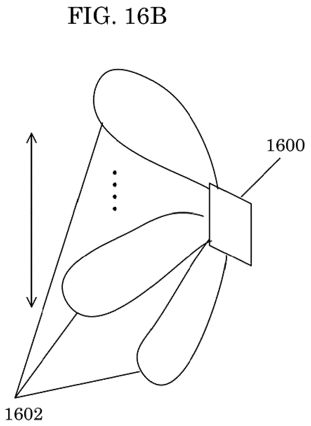

   FIG. 16B illustrates another example of beamforming performed by a base station and a terminal.
[FIG. 16C]

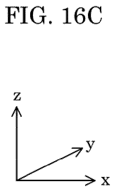

   FIG. 16C illustrates an example of a coordinate system according to Embodiment 1.
[FIG. 17A]

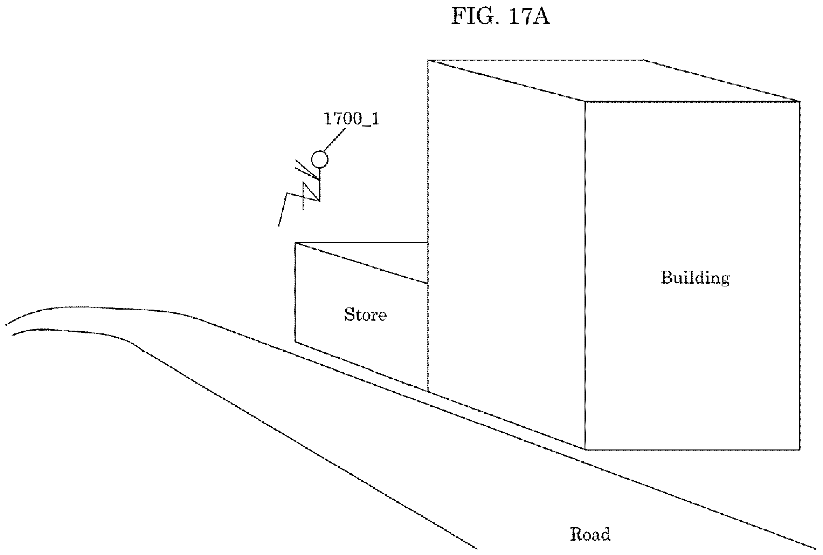

   FIG. 17A illustrates an example of character display in a virtual space according to Embodiment 1.
[FIG. 17B]

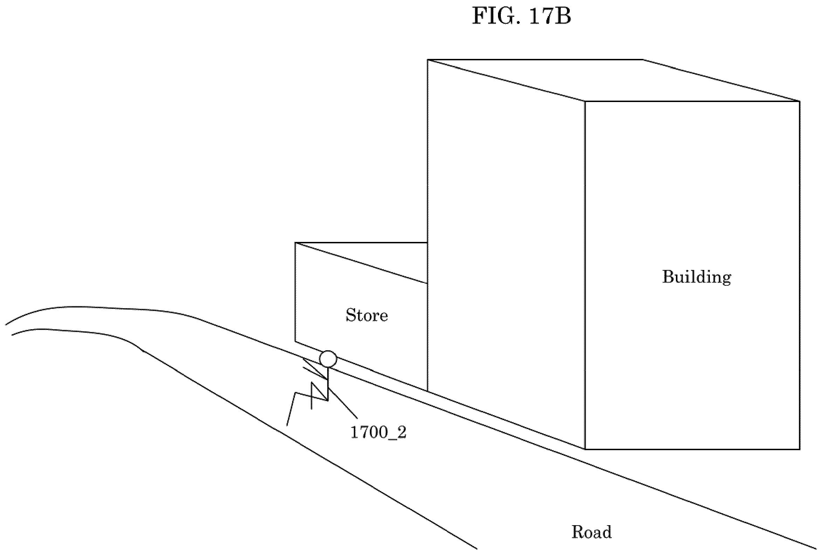

   FIG. 17B illustrates another example of character display in a virtual space according to Embodiment 1.
[FIG. 18]

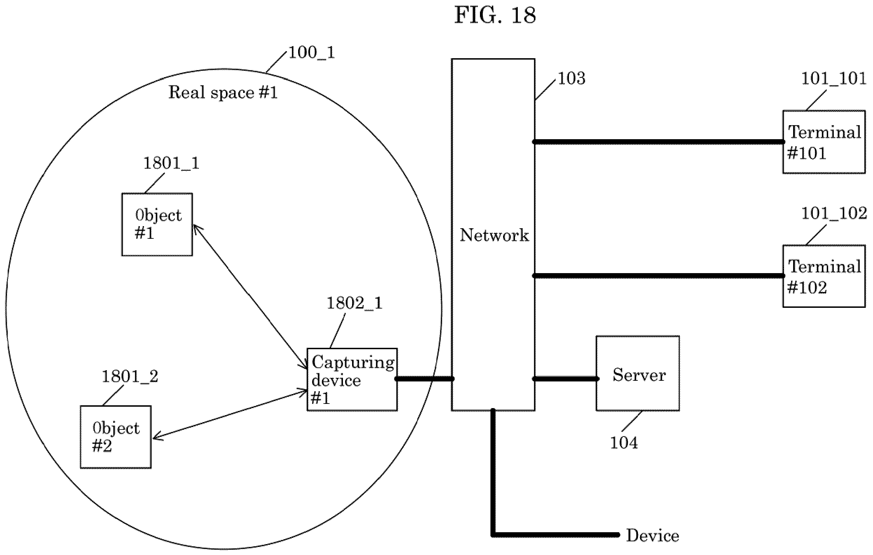

   FIG. 18 illustrates an example of a system configuration according to Embodiment 2.
[FIG. 19A]

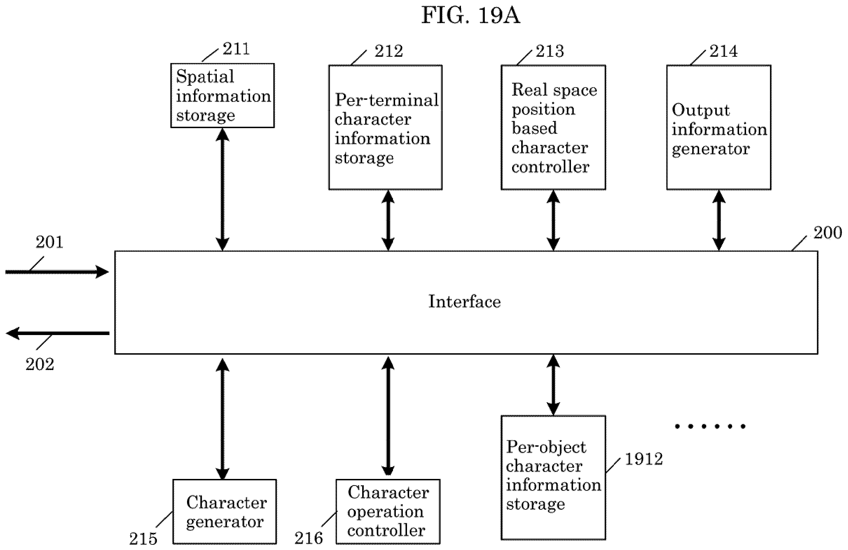

   FIG. 19A illustrates an example of a configuration of a server according to Embodiment 2.
[FIG. 19B]

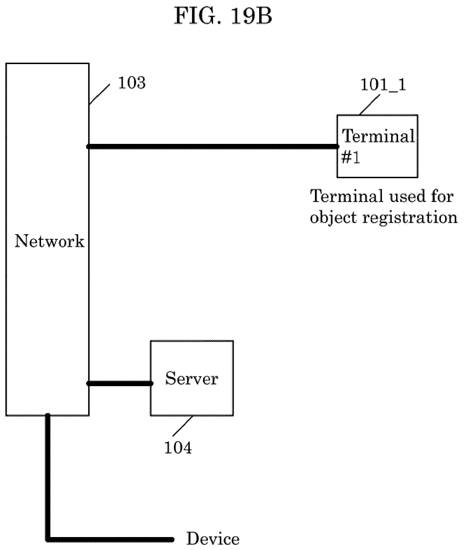

   FIG. 19B illustrates an example of a system configuration according to Embodiment 2.
[FIG. 19C]

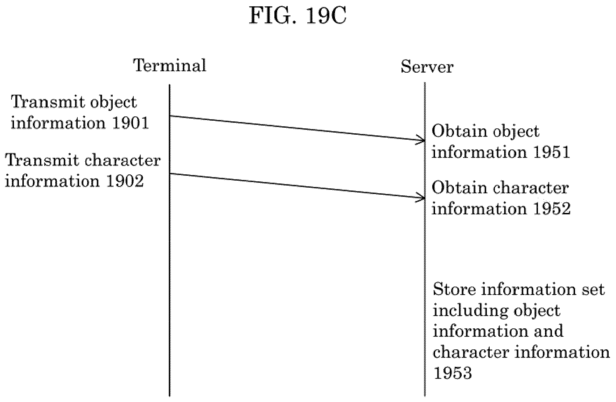

   FIG. 19C illustrates an example of a process of associating an object with a character according to Embodiment 2.
[FIG. 20]

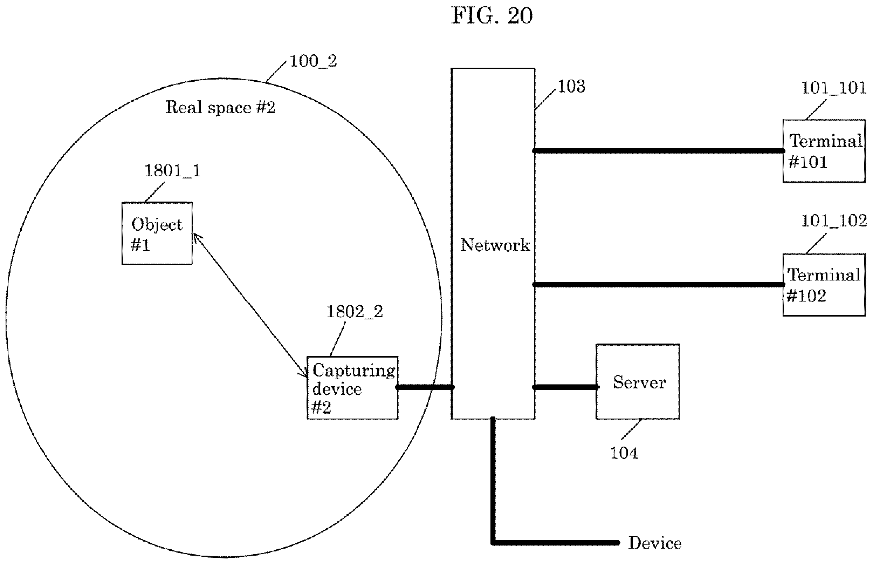

   FIG. 20 illustrates an example of a system configuration according to Embodiment 2.
[FIG. 21]

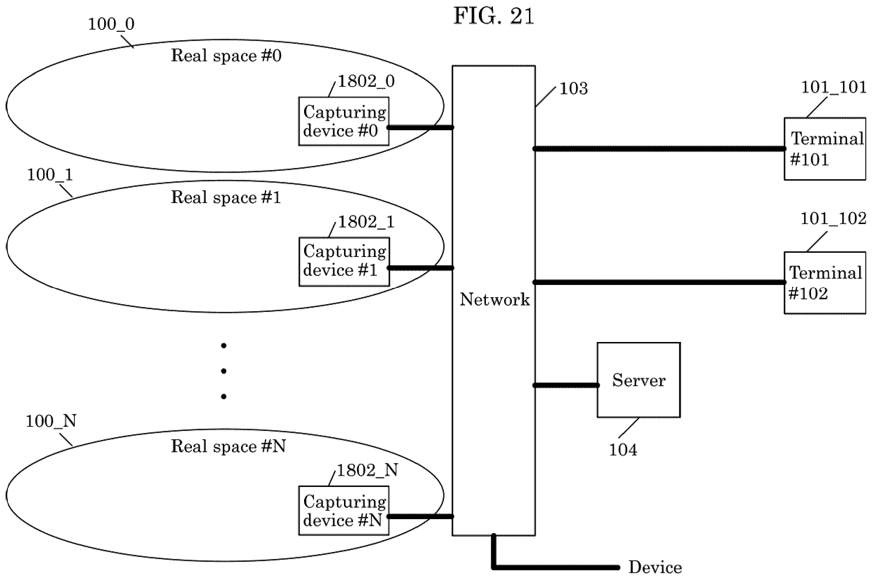

   FIG. 21 illustrates an example of a system configuration according to Embodiment 2.
[FIG. 22]

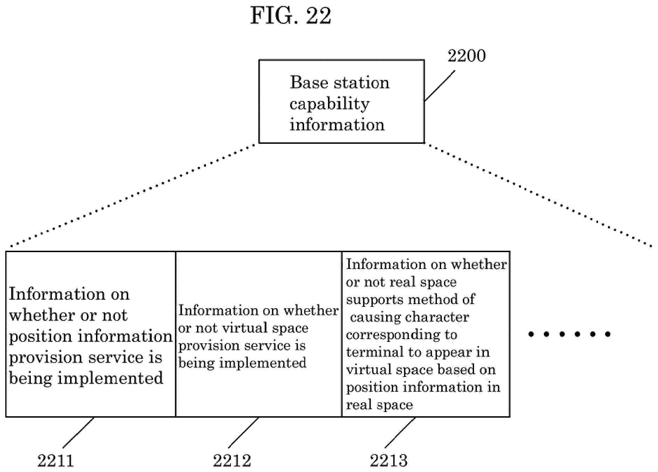

   FIG. 22 illustrates an example of base station capability information according to Embodiment 3.
[FIG. 23]

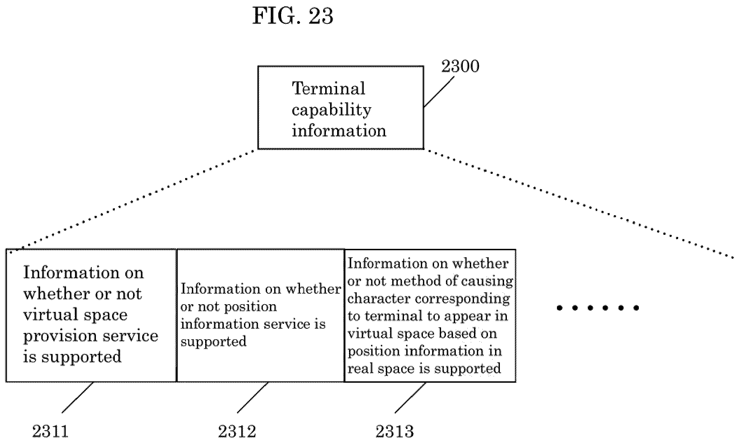

   FIG. 23 illustrates an example of terminal capability information according to Embodiment 3.
[FIG. 24A]

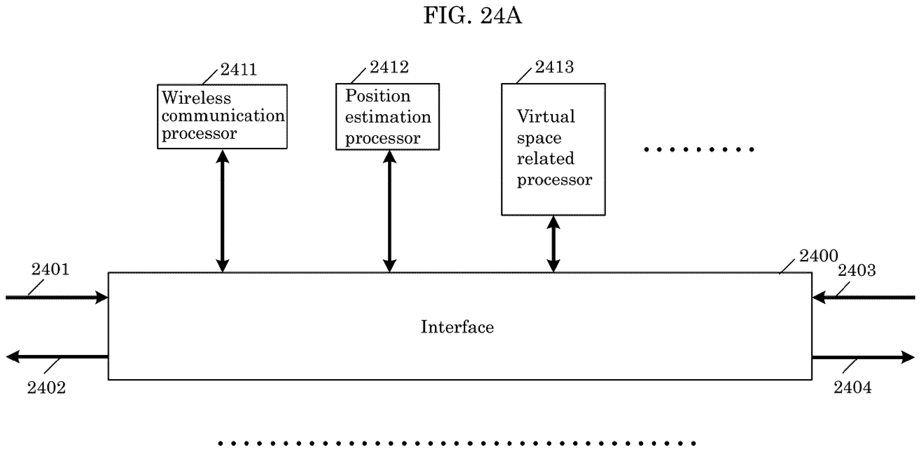

   FIG. 24A illustrates an example of a configuration of a base station according to Embodiment 3.
[FIG. 24B]

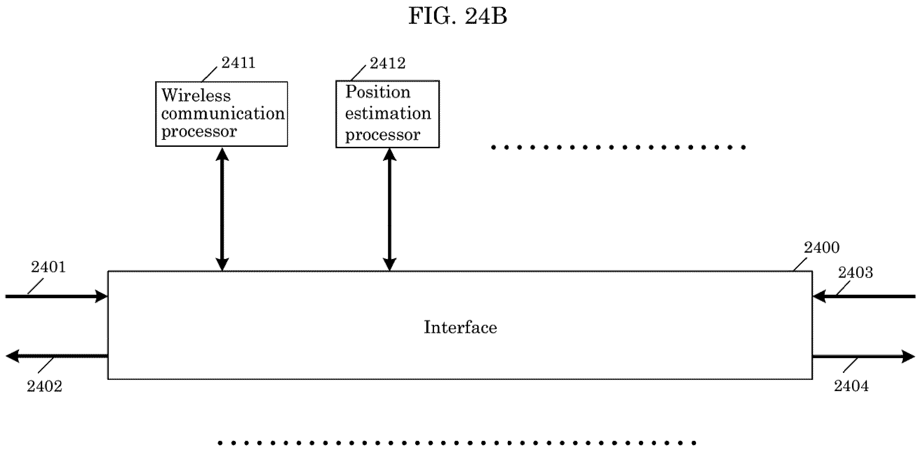

   FIG. 24B illustrates another example of a configuration of a base station according to Embodiment 3.
[FIG. 24C]

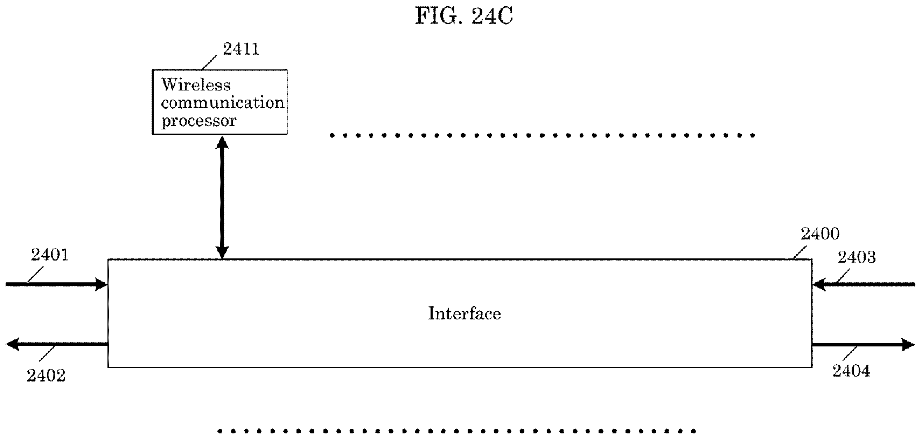

   FIG. 24C illustrates another example of a configuration of a base station according to Embodiment 3.
[FIG. 25A]

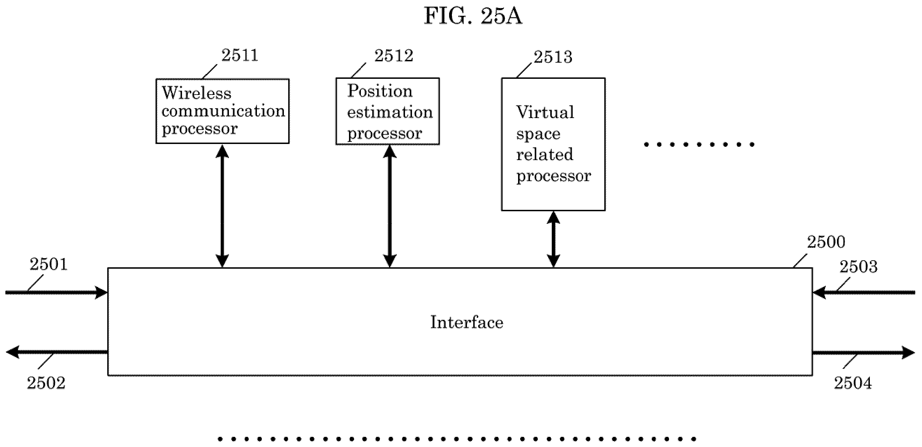

   FIG. 25A illustrates an example of a configuration of a terminal according to Embodiment 3.
[FIG. 25B]

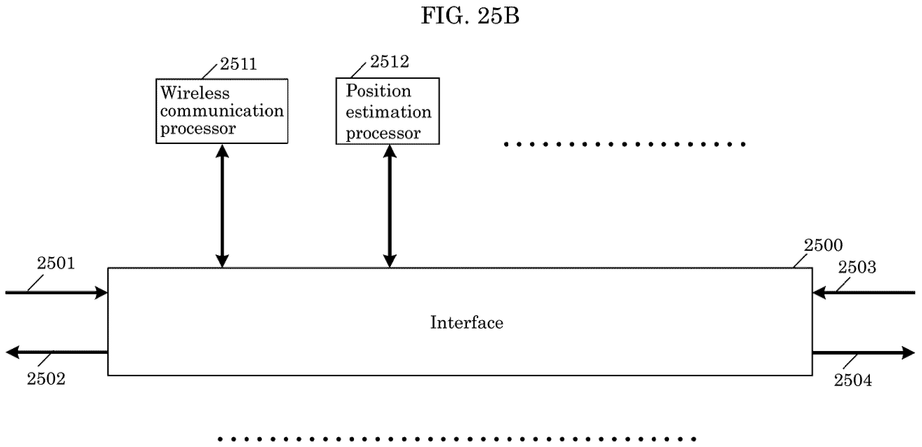

   FIG. 25B illustrates another example of a configuration of a terminal according to Embodiment 3.
[FIG. 25C]

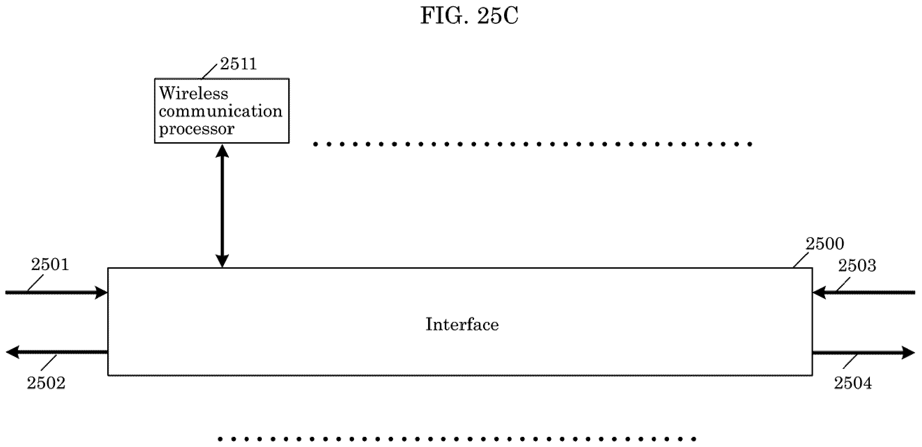

   FIG. 25C illustrates another example of a configuration of a terminal according to Embodiment 3.
[FIG. 25D]

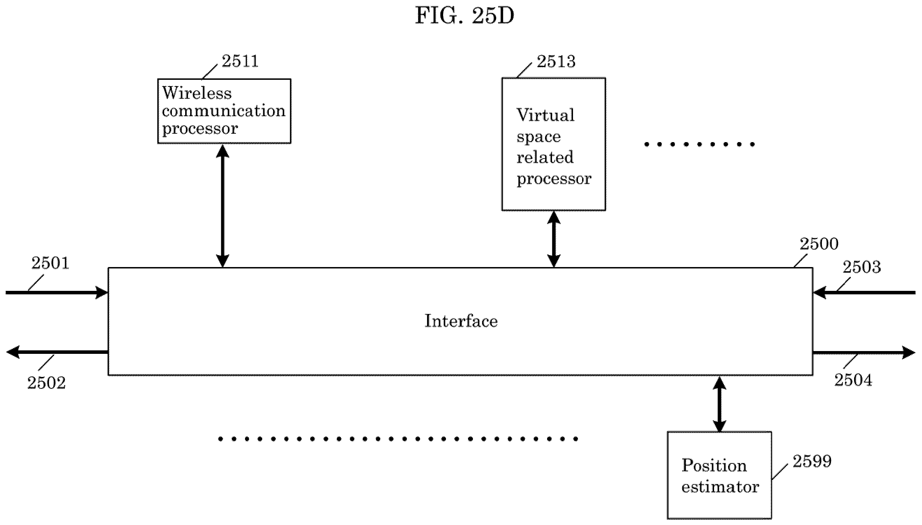

   FIG. 25D illustrates another example of a configuration of a terminal according to Embodiment 3.
[FIG. 26]

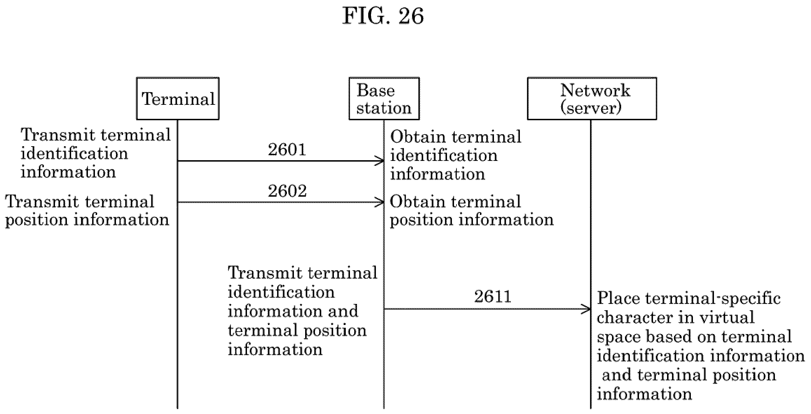

   FIG. 26 illustrates an example of operations performed by a base station according to Embodiment 3.
[FIG. 27]

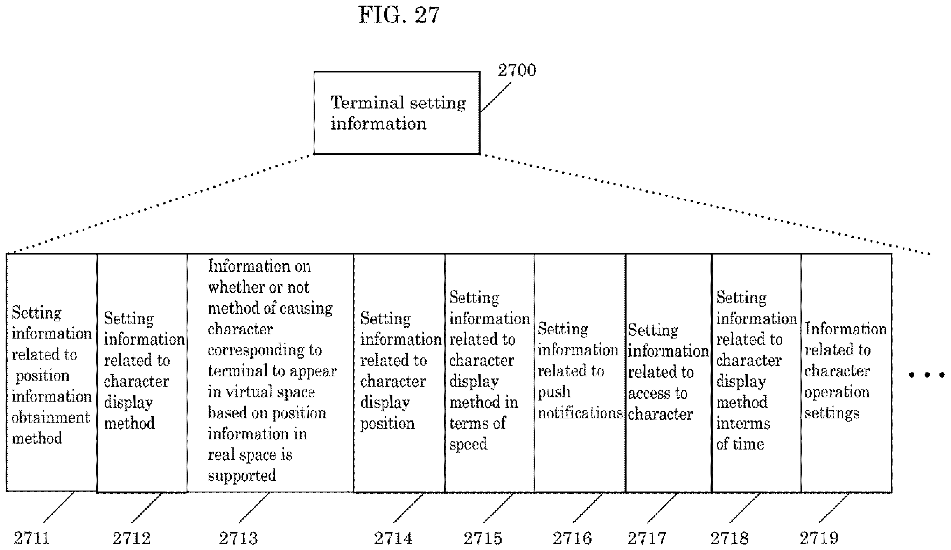

   FIG. 27 illustrates an example of terminal setting information according to Embodiment 3.
[FIG. 28A]

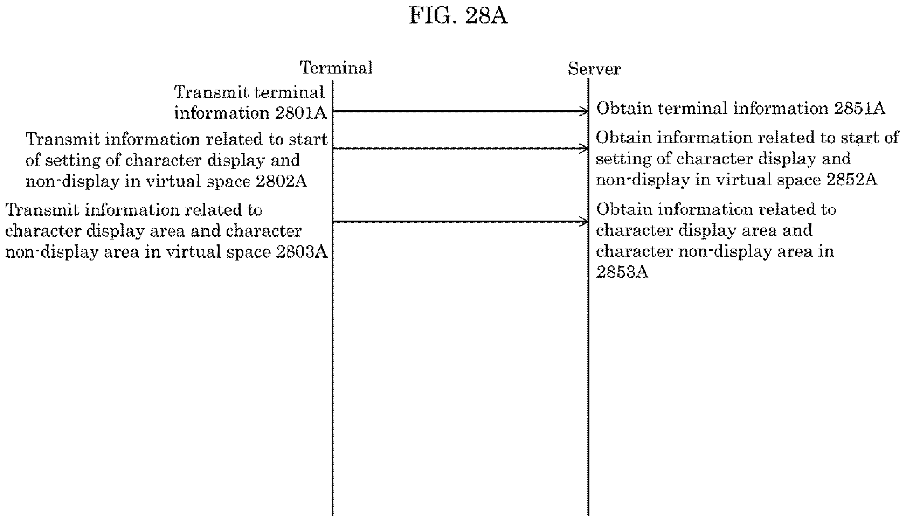

   FIG. 28A illustrates an example of communication between a terminal, a base station, and a server according to Embodiment 3.
[FIG. 28B]

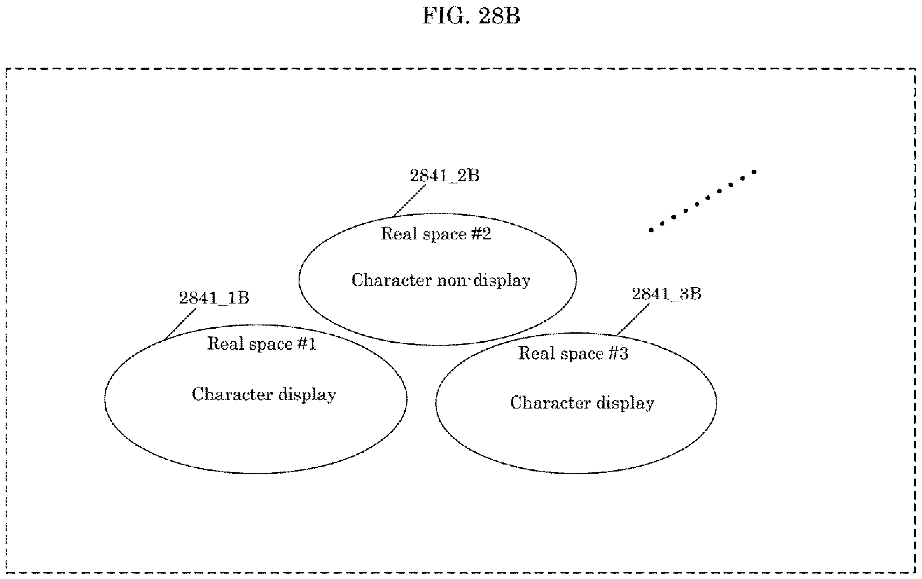

   FIG. 28B illustrates an example of setting of a character display area and a non-display setting area in a virtual space according to Embodiment 3.
[FIG. 28C]

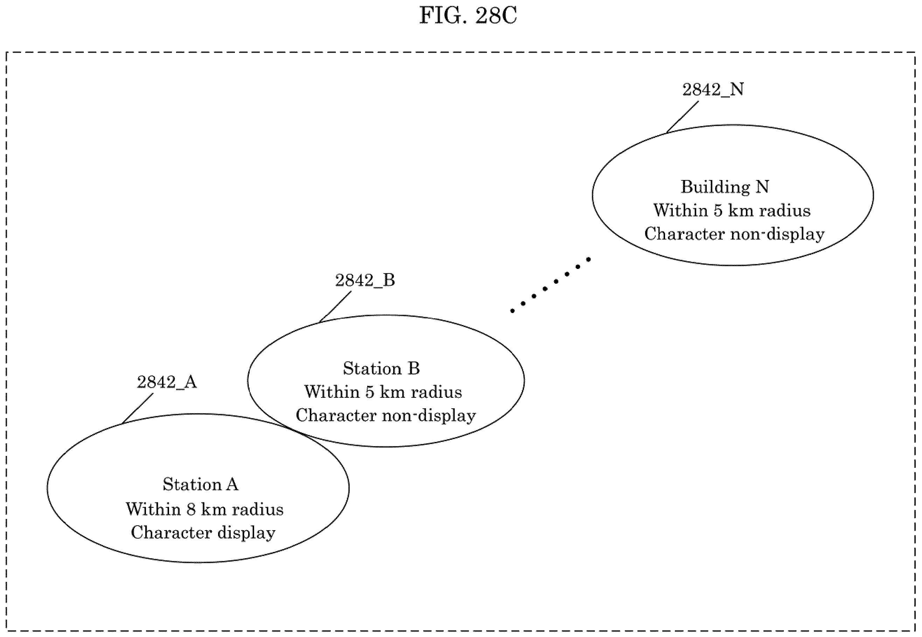

   FIG. 28C illustrates another example of setting of a character display area and a non-display setting area in a virtual space according to Embodiment 3.
[FIG. 28D]

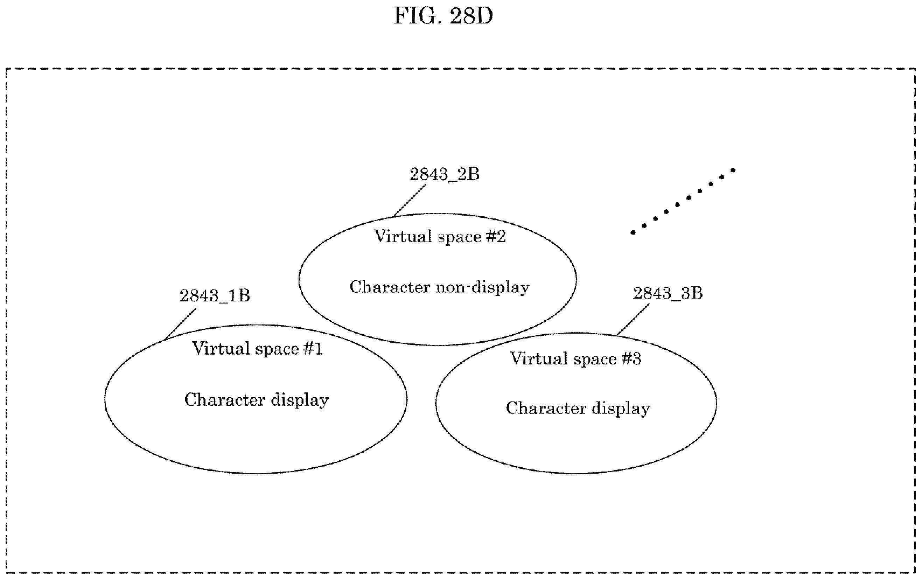

   FIG. 28D illustrates another example of setting of a character display area and a non-display setting area in a virtual space according to Embodiment 3.
[FIG. 28E]

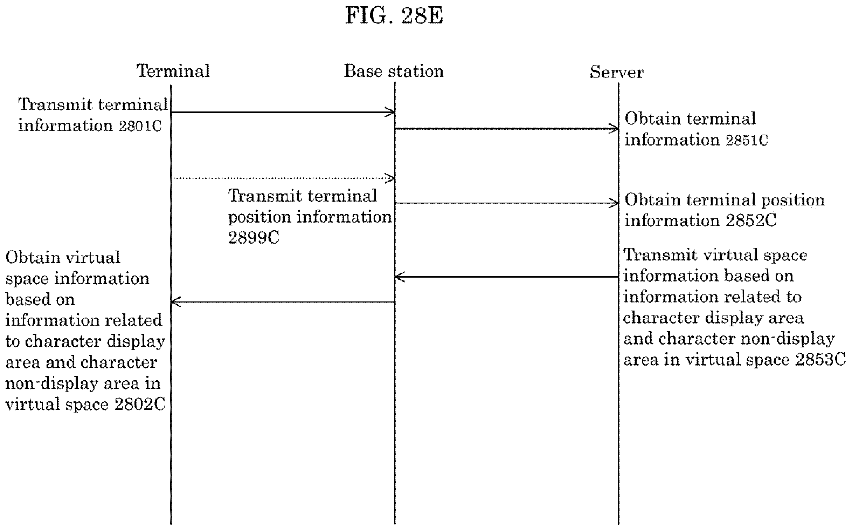

   FIG. 28E illustrates another example of communication between a terminal, a base station, and a server according to Embodiment 3.
[FIG. 29A]

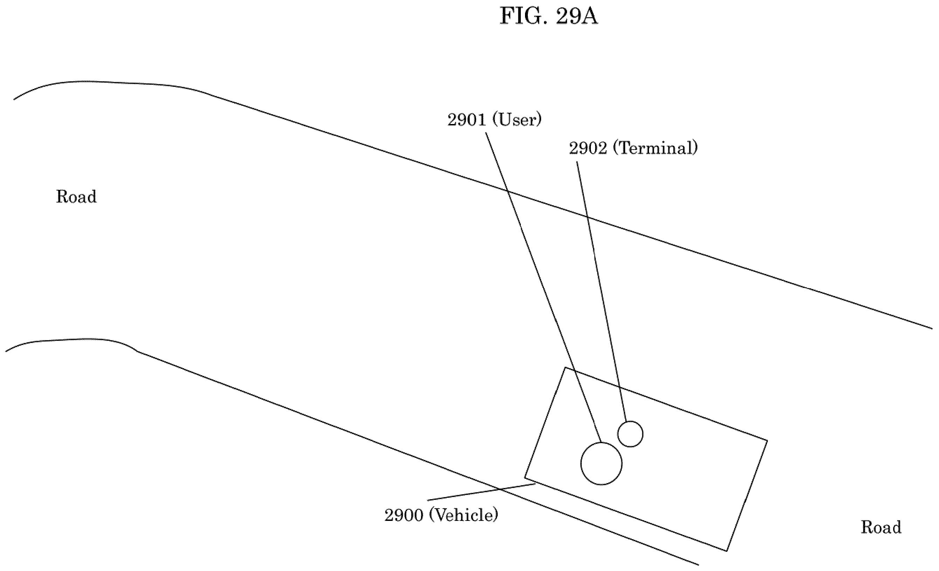

   FIG. 29A illustrates an example of a situation in a real space according to Embodiment 3.
[FIG. 29B]

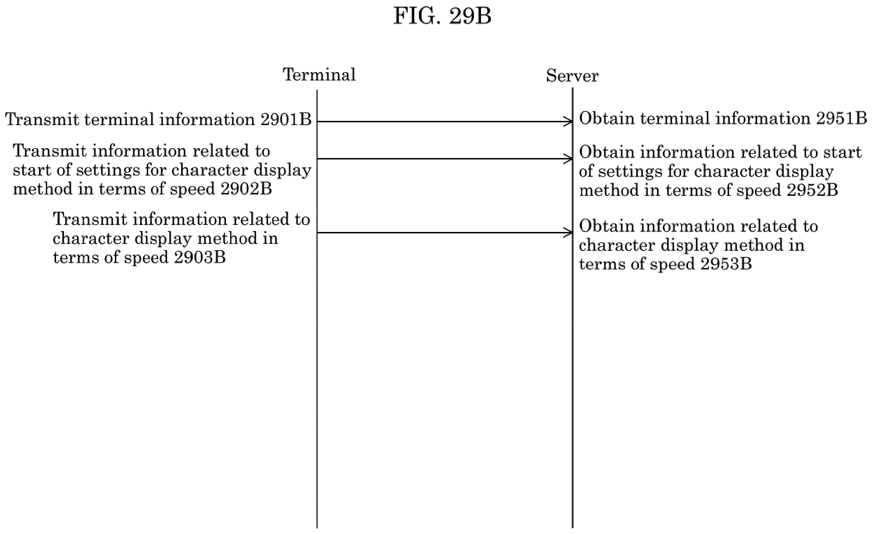

   FIG. 29B illustrates an example of display method settings according to Embodiment 3.
[FIG. 29C]

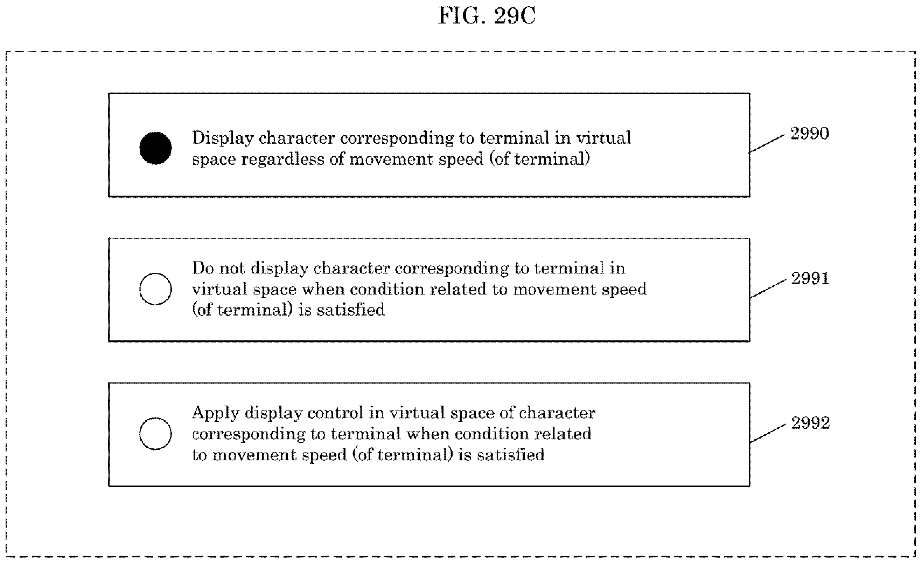

   FIG. 29C illustrates another example of display method settings according to Embodiment 3.
[FIG. 29D]

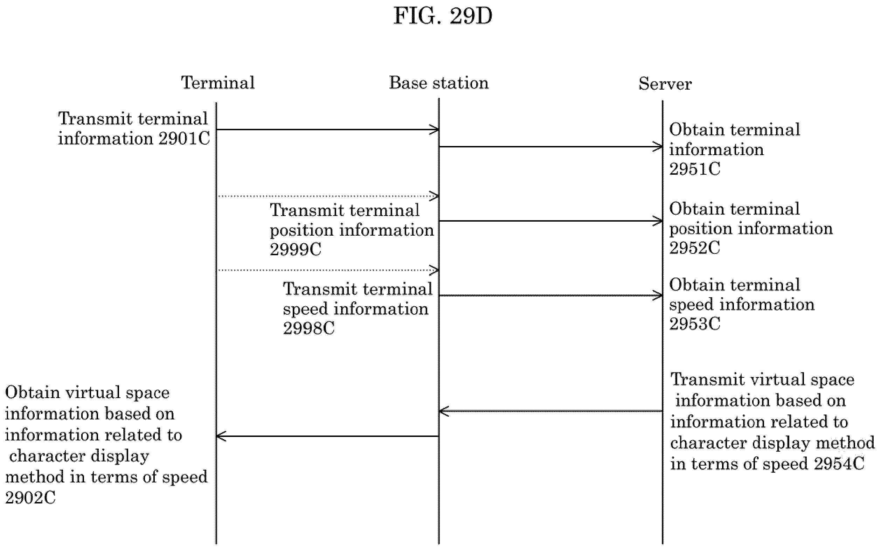

   FIG. 29D illustrates another example of communication between a terminal, a base station, and a server according to Embodiment 3.
[FIG. 29E]

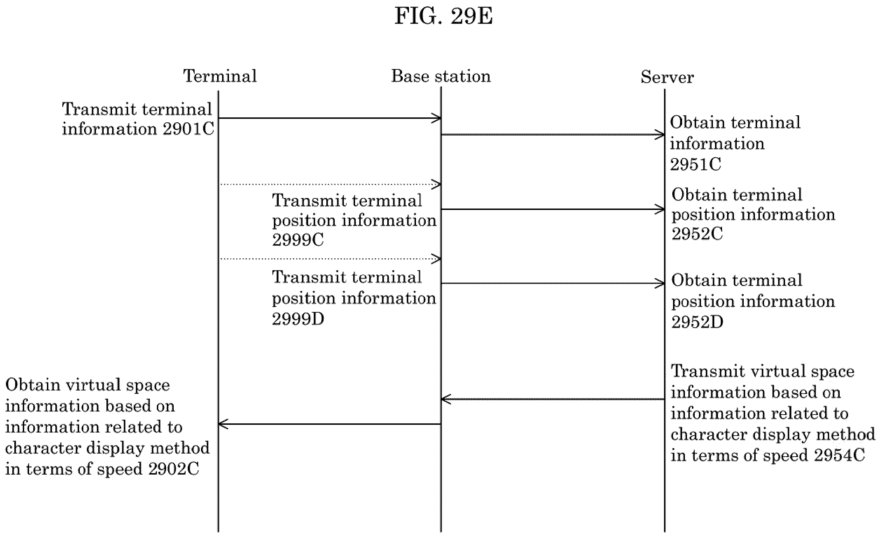

   FIG. 29E illustrates another example of communication between a terminal, a base station, and a server according to Embodiment 3.
[FIG. 30A]

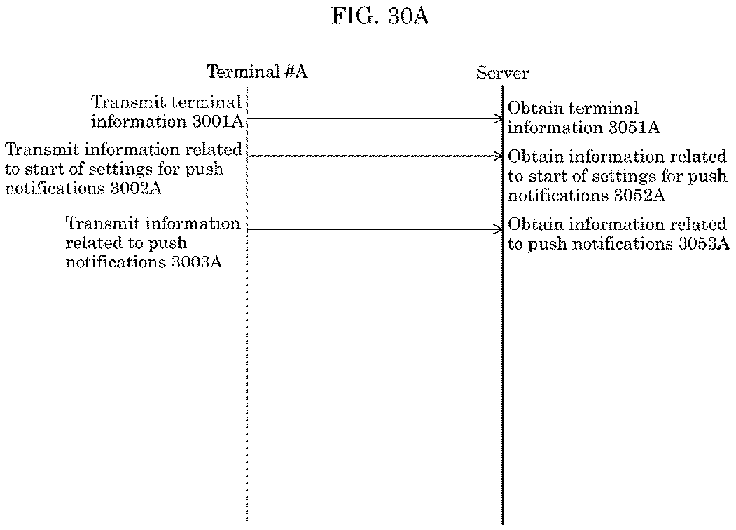

   FIG. 30A illustrates another example of communication between a terminal, a base station, and a server according to Embodiment 3.
[FIG. 30B]

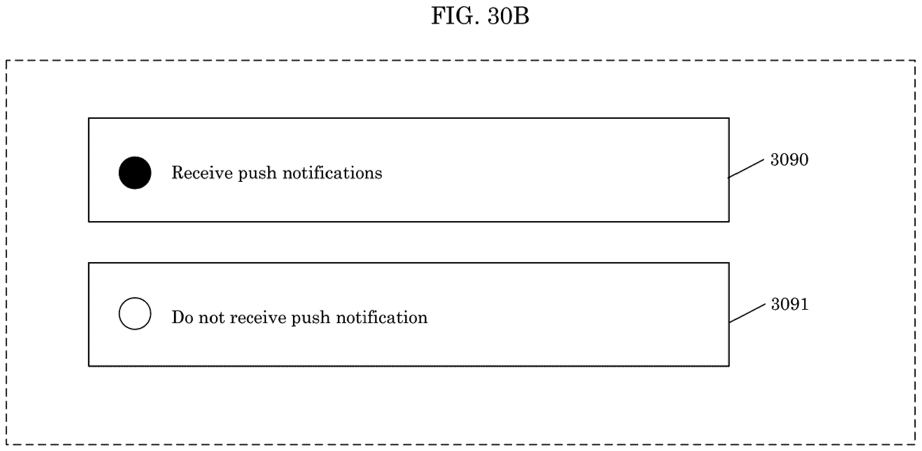

   FIG. 30B illustrates an example of push notification settings according to Embodiment 3.
[FIG. 30C]

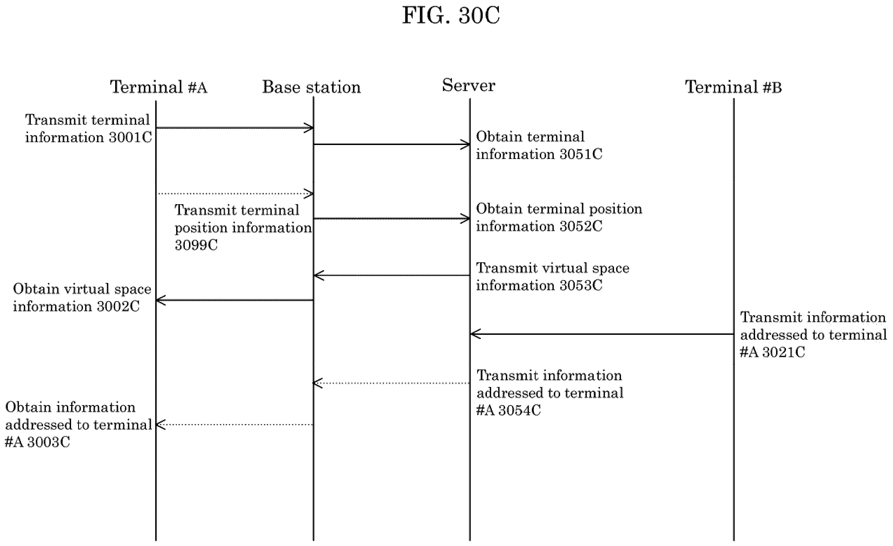

   FIG. 30C illustrates another example of communication between a terminal, a base station, and a server according to Embodiment 3.
[FIG. 31A]

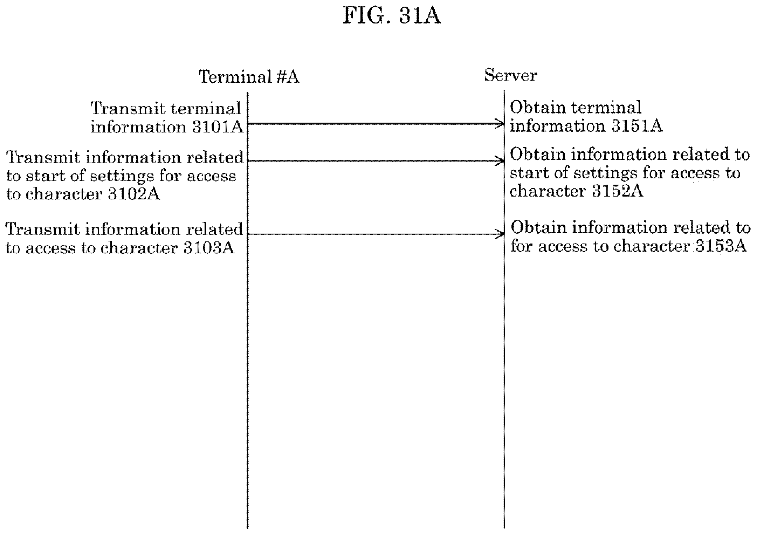

   FIG. 31A illustrates another example of communication between a terminal, a base station, and a server according to Embodiment 3.
[FIG. 31B]

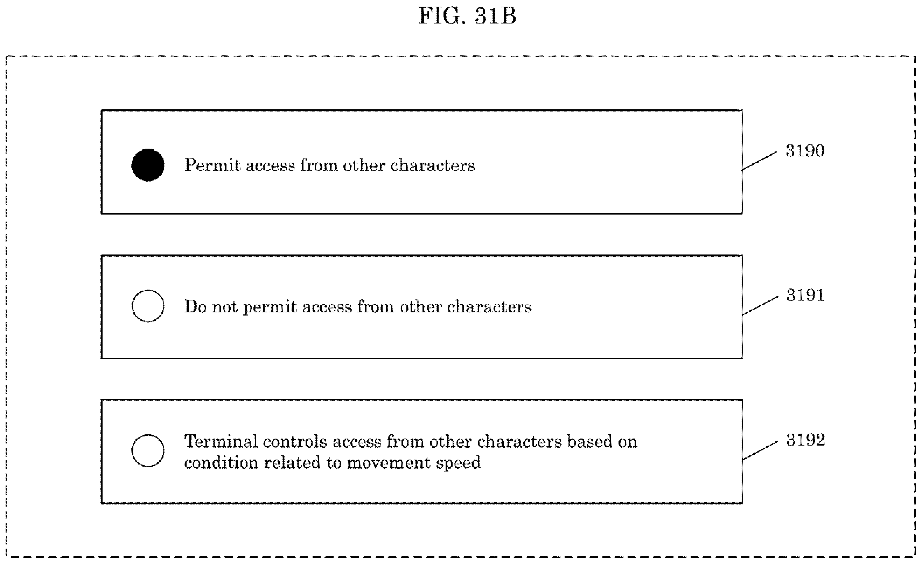

   FIG. 31B illustrates an example of push notification settings according to Embodiment 3.
[FIG. 31C]

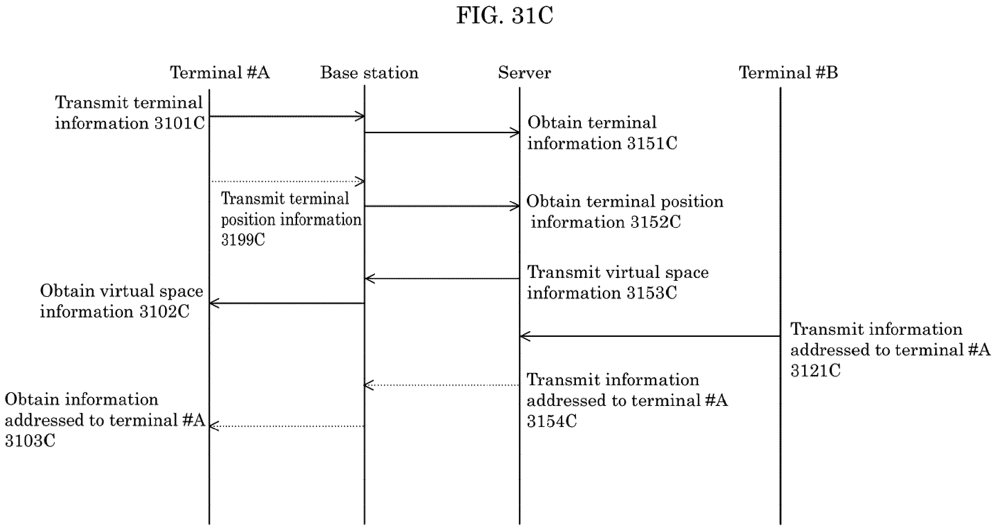

   FIG. 31C illustrates another example of communication between a terminal, a base station, and a server according to Embodiment 3.
[FIG. 31D]

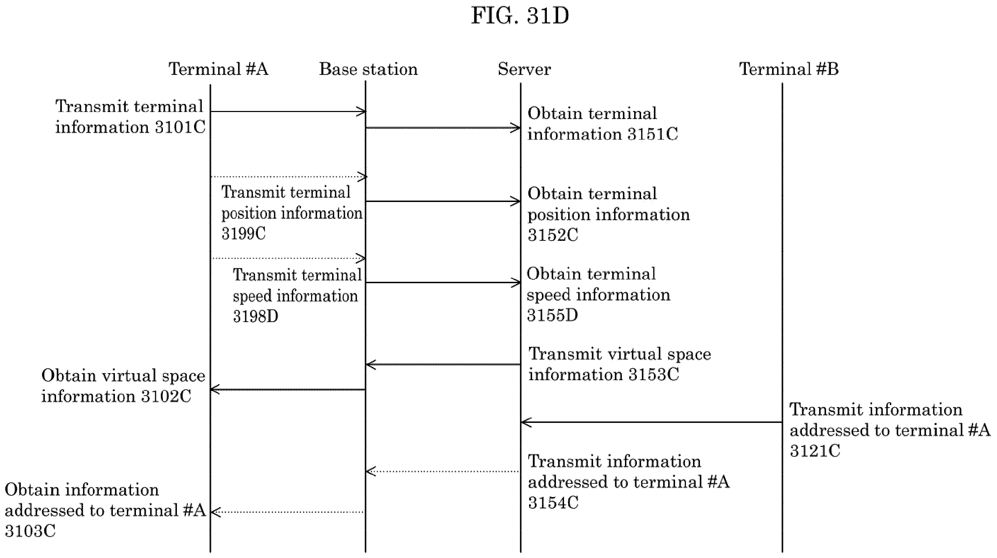

   FIG. 31D illustrates another example of communication between a terminal, a base station, and a server according to Embodiment 3.
[FIG. 31E]

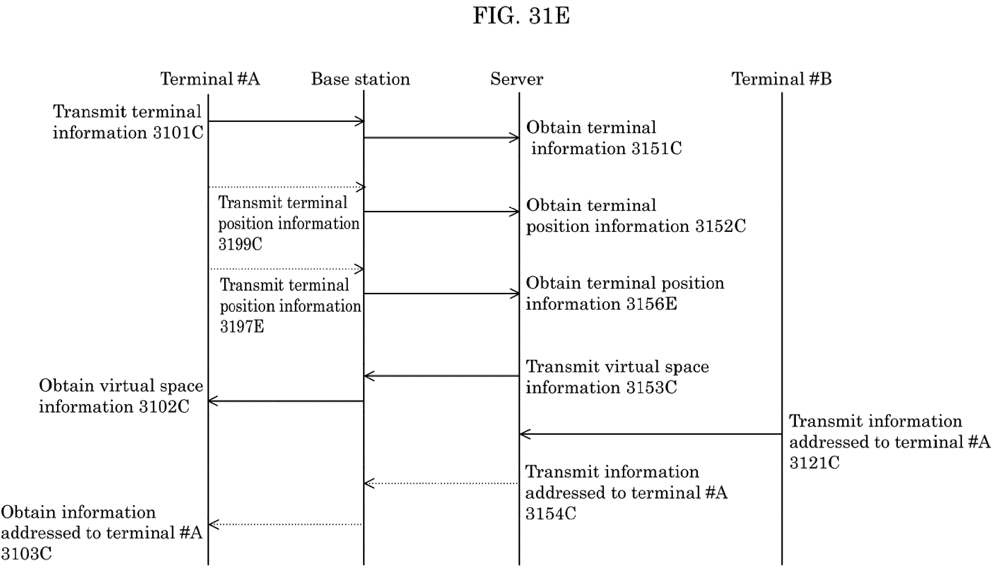

   FIG. 31E illustrates another example of communication between a terminal, a base station, and a server according to Embodiment 3.
[FIG. 32A]

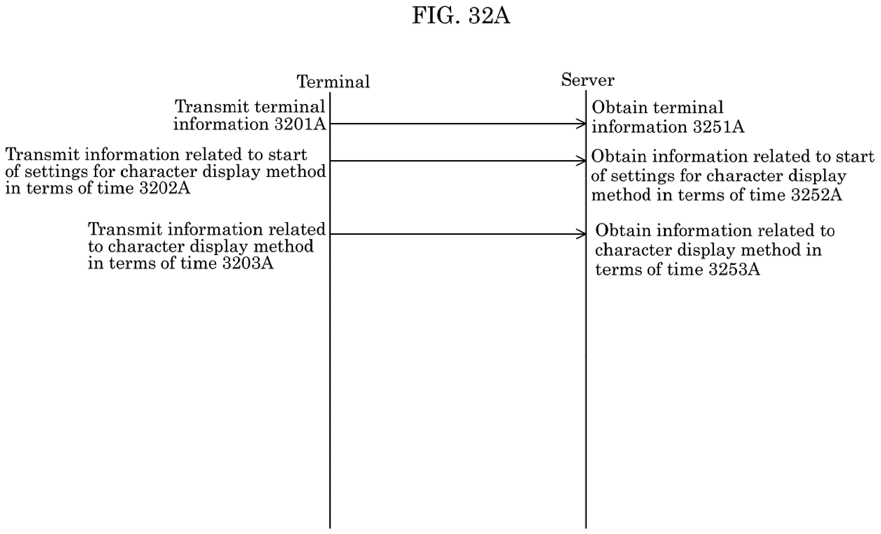

   FIG. 32A illustrates another example of communication between a terminal, a base station, and a server according to Embodiment 3.
[FIG. 32B]

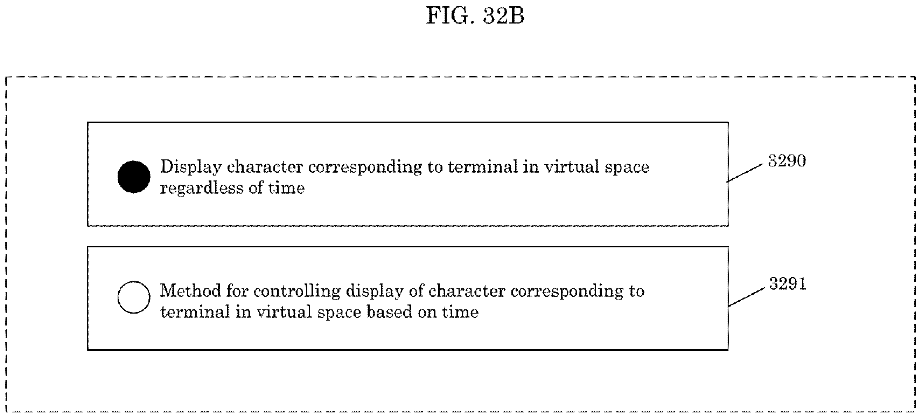

   FIG. 32B illustrates another example of display method settings according to Embodiment 3.
[FIG. 32C]

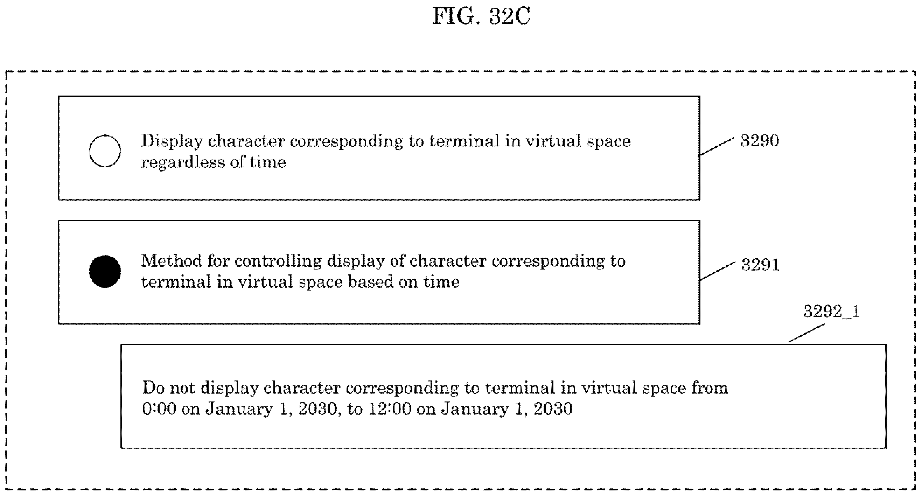

   FIG. 32C illustrates another example of display method settings according to Embodiment 3.
[FIG. 32D]

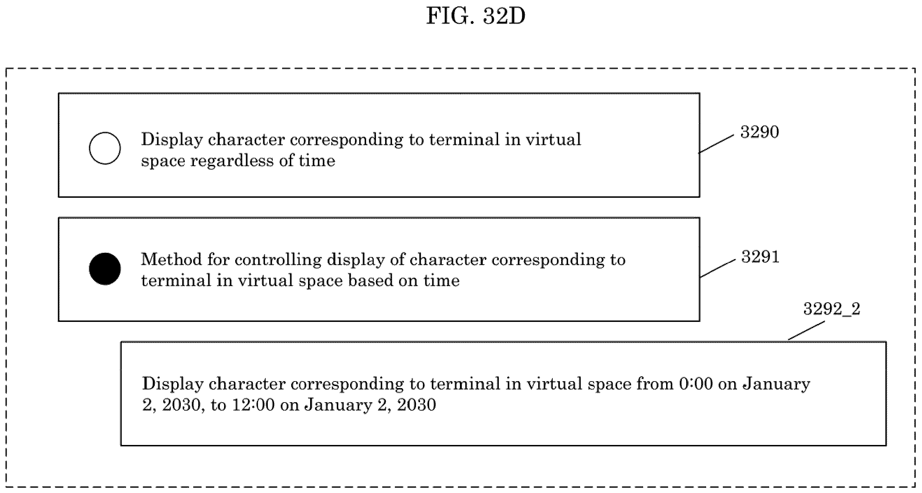

   FIG. 32D illustrates another example of display method settings according to Embodiment 3.
[FIG. 32E]

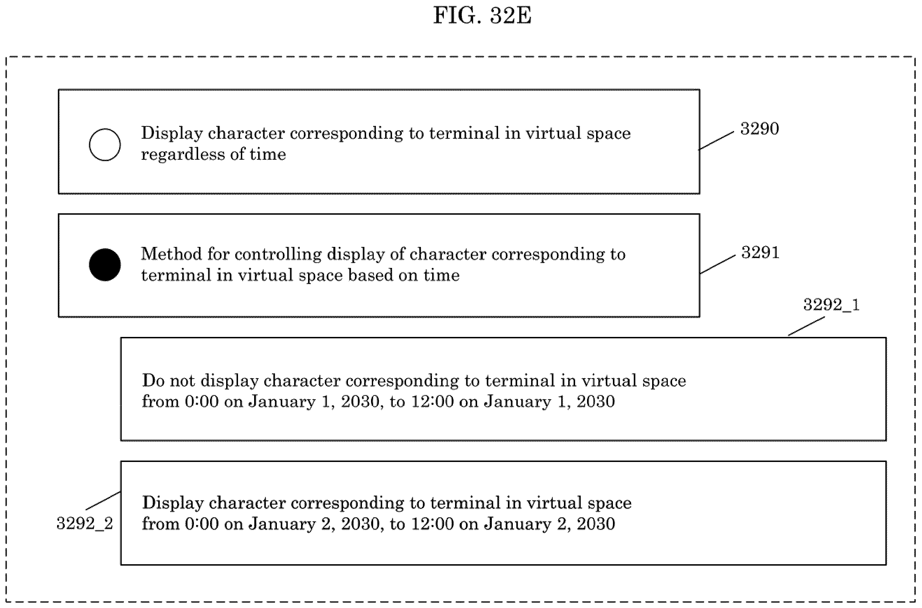

   FIG. 32E illustrates another example of display method settings according to Embodiment 3.
[FIG. 32F]

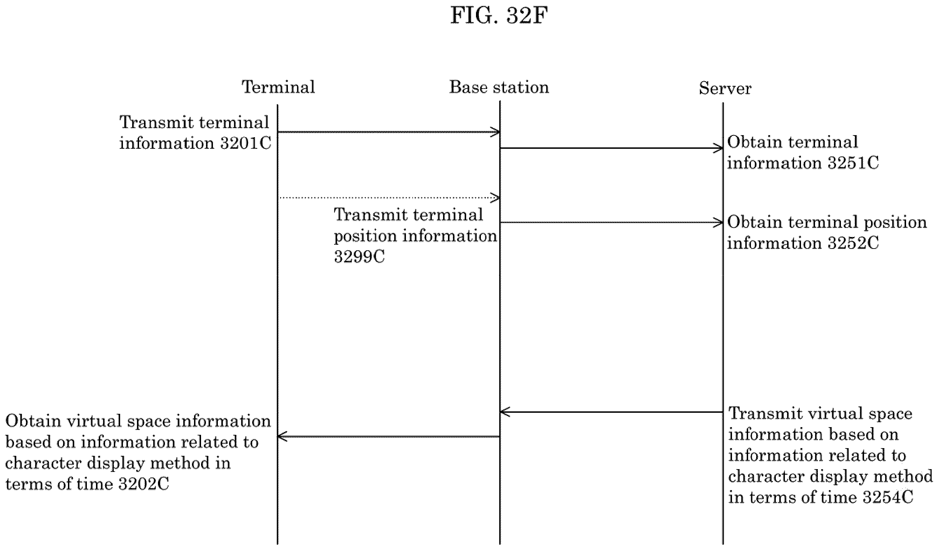

   FIG. 32F illustrates another example of communication between a terminal, a base station, and a server according to Embodiment 3.
[FIG. 33A]

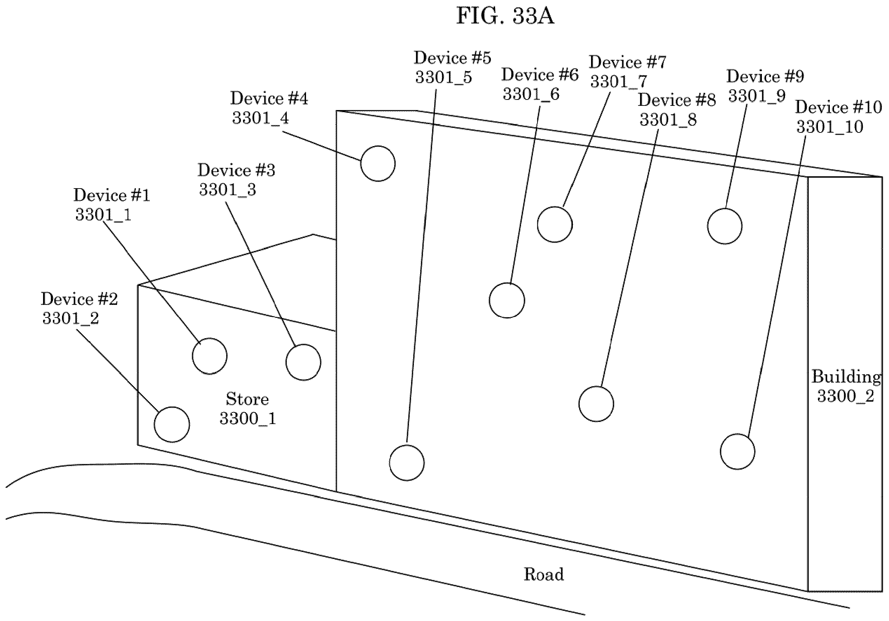

   FIG. 33A illustrates an example of a system configuration according to Embodiment 4.
[FIG. 33B]

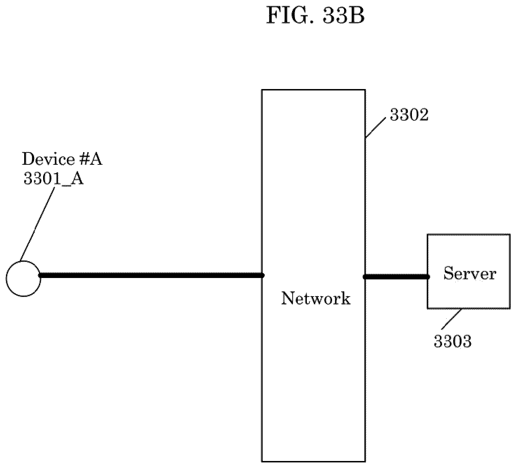

   FIG. 33B illustrates an example of a system configuration according to Embodiment 4.
[FIG. 33C]

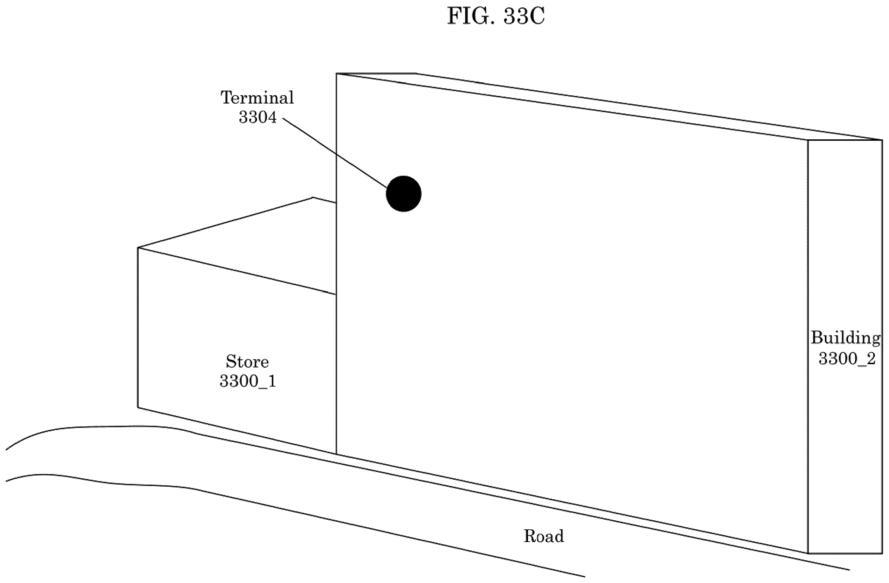

   FIG. 33C illustrates another example of a system configuration according to Embodiment 4.
[FIG. 33D]

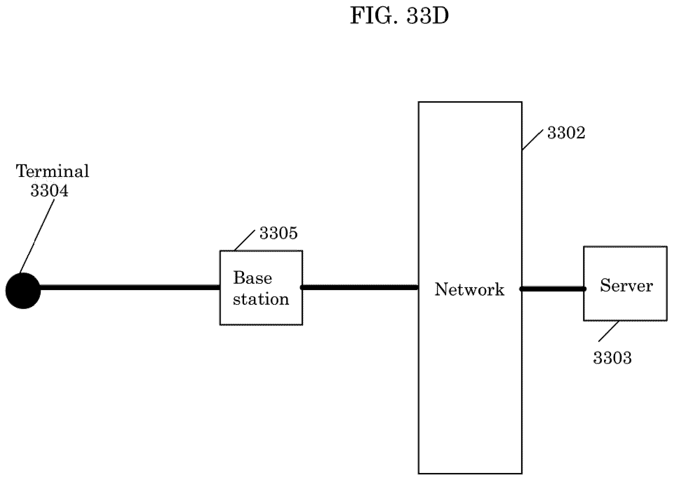

   FIG. 33D illustrates another example of a system configuration according to Embodiment 4.
[FIG. 34A]

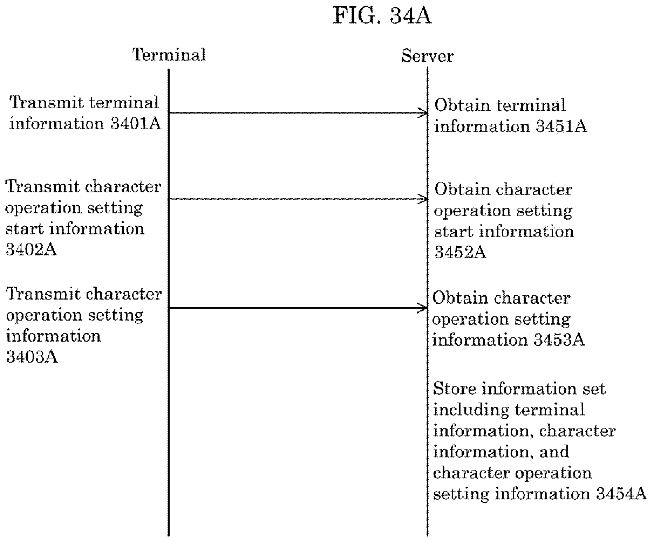

   FIG. 34A illustrates an example of communication between a terminal, a base station, and a server according to Embodiment 5.
[FIG. 34B]

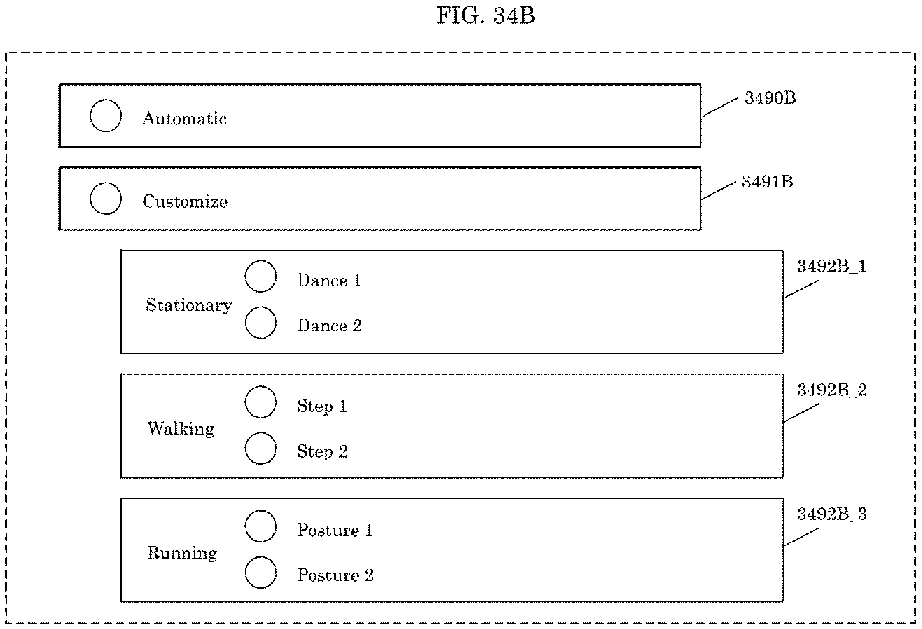

   FIG. 34B illustrates an example of character operation settings according to Embodiment 5.
[FIG. 34C]

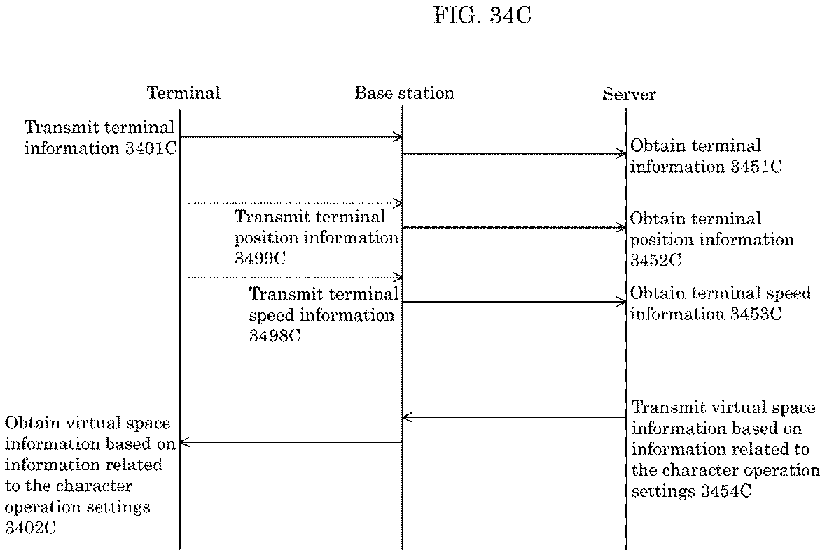

   FIG. 34C illustrates another example of communication between a terminal, a base station, and a server according to Embodiment 5.
[FIG. 34D]

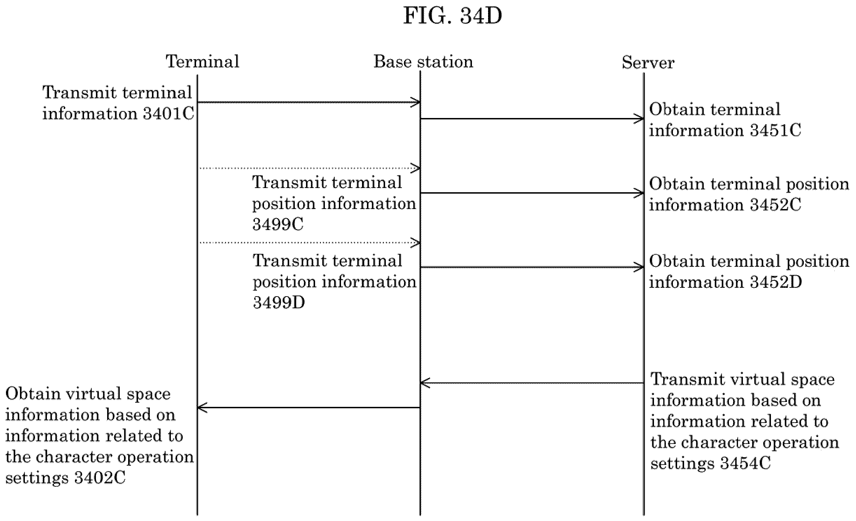

   FIG. 34D illustrates another example of communication between a terminal, a base station, and a server according to Embodiment 5.
[FIG. 35]

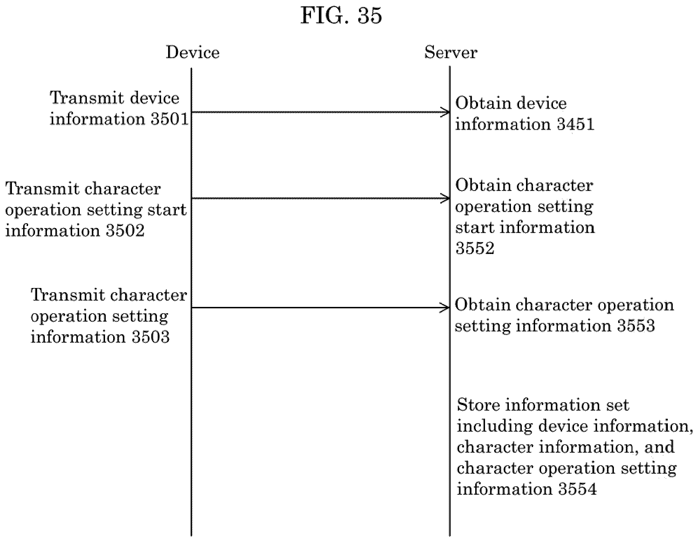

   FIG. 35 illustrates an example of communication between a device and a server according to Embodiment 5.
[FIG. 36A]

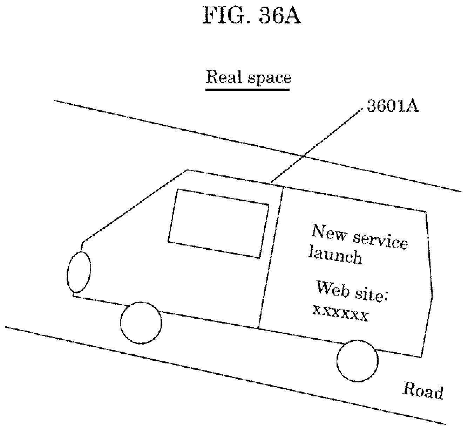

   FIG. 36A illustrates an example of a state of a real space according to Embodiment 6.
[FIG. 36B]

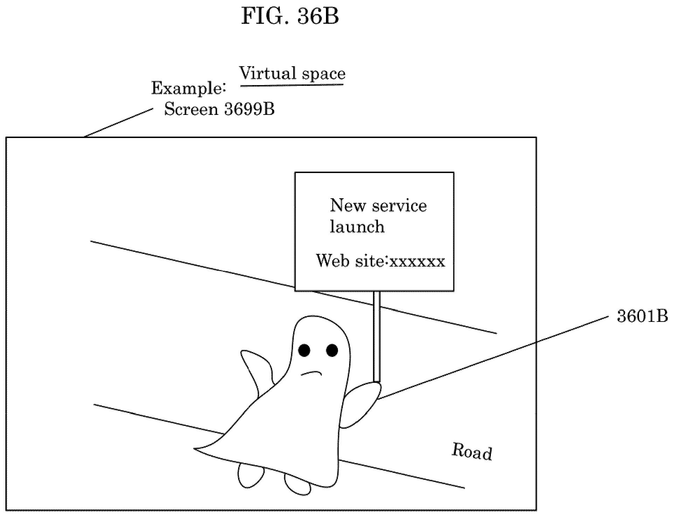

   FIG. 36B illustrates an example of a state of a virtual space according to Embodiment 6.
[FIG. 37A]

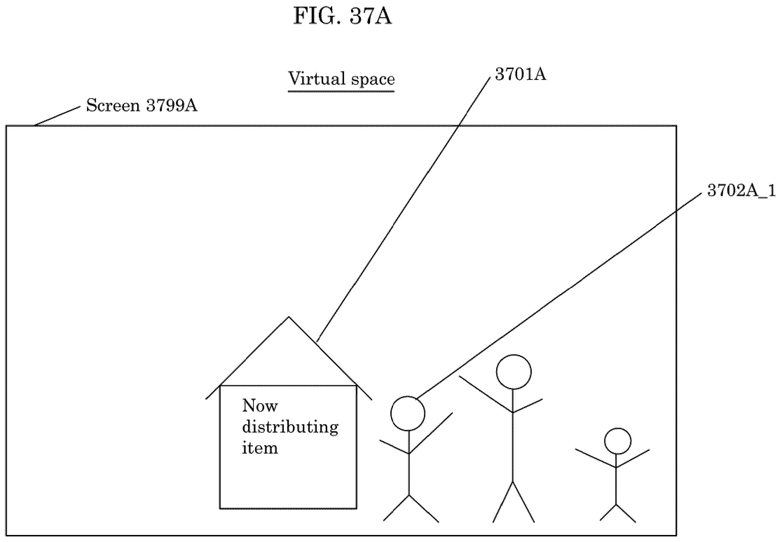

   FIG. 37A illustrates an example of a state of a virtual space.
[FIG. 37B]

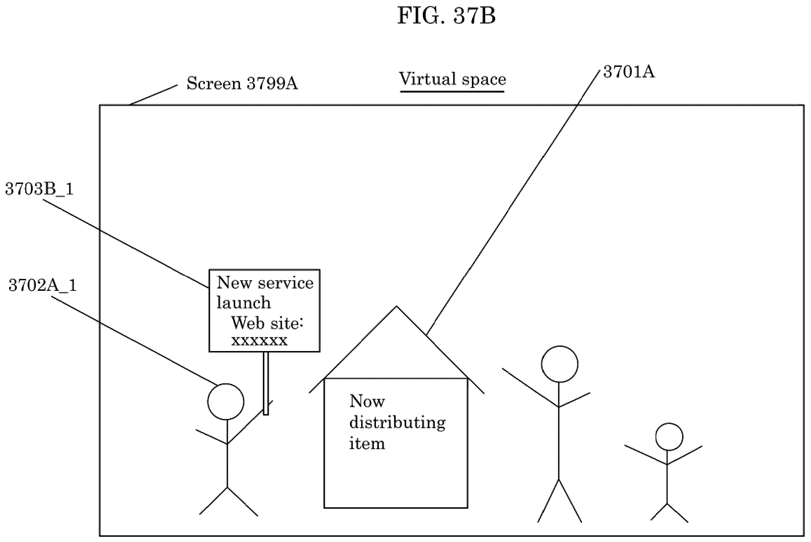

   FIG. 37B illustrates another example of a state of a virtual space.
[FIG. 38A]

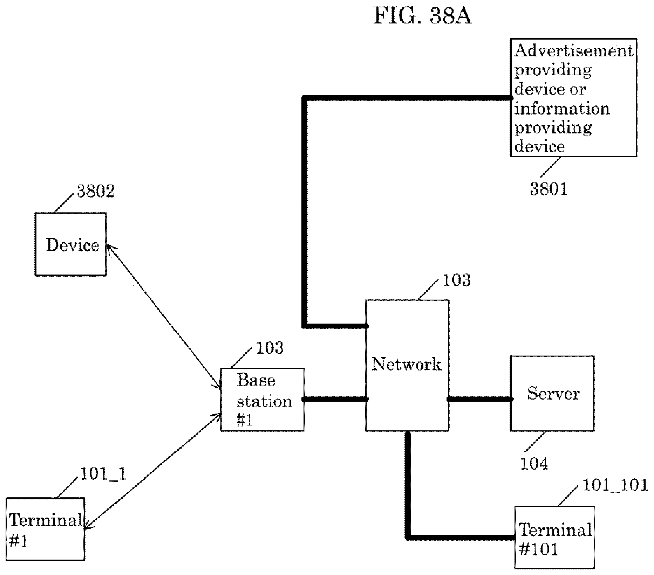

   FIG. 38A illustrates an example of a system configuration according to Embodiment 6.
[FIG. 38B]

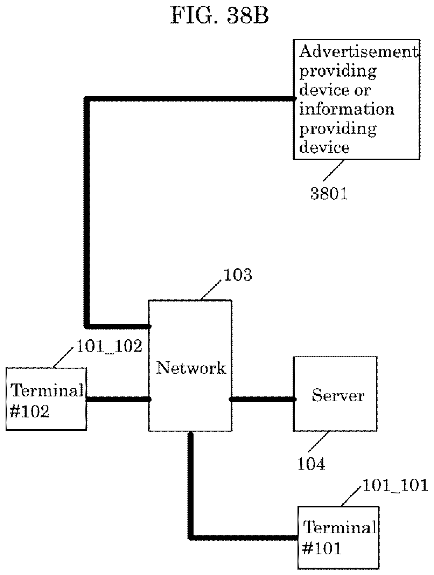

   FIG. 38B illustrates another example of a system configuration according to Embodiment 6.
[FIG. 39]

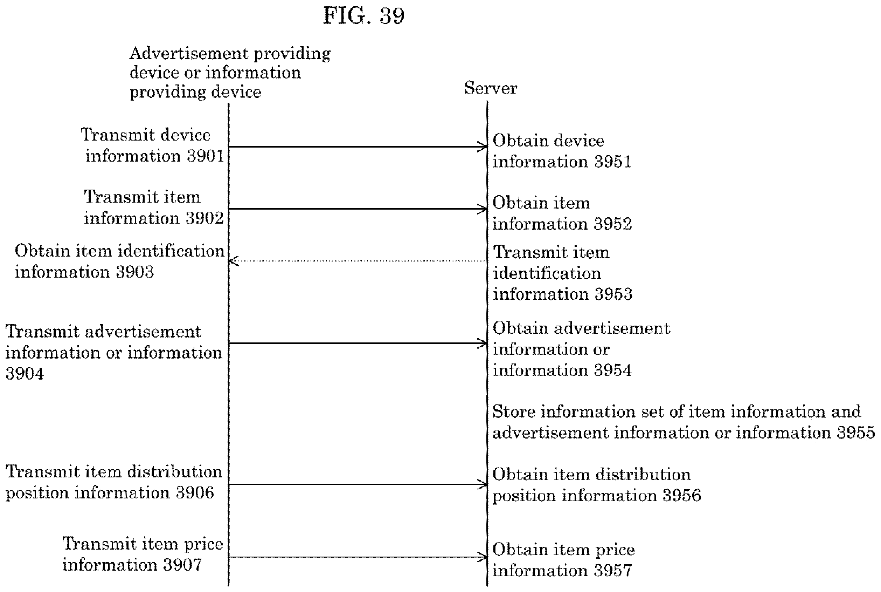

   FIG. 39 illustrates an example of communication between an advertisement providing device or an information providing device and a server according to Embodiment 6.
[FIG. 40]

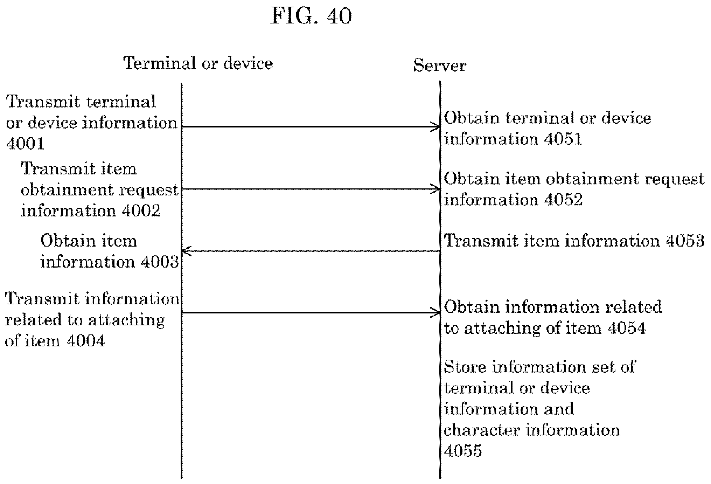

   FIG. 40 illustrates an example of communication between a terminal or a device and a server according to Embodiment 6.
[FIG. 41]

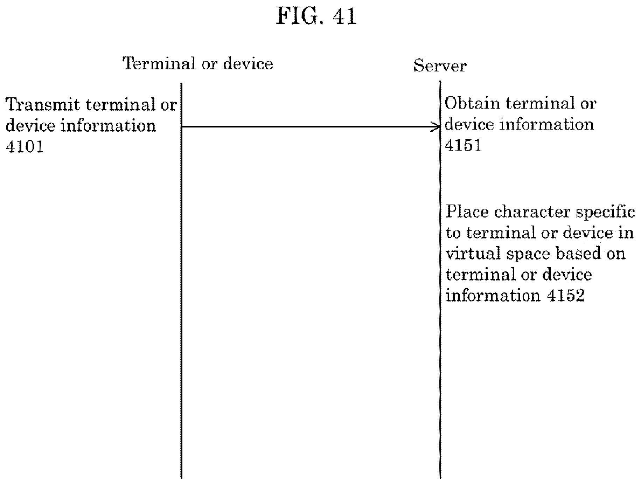

   FIG. 41 illustrates another example of communication between a terminal or a device and a server according to Embodiment 6.
[FIG. 42]

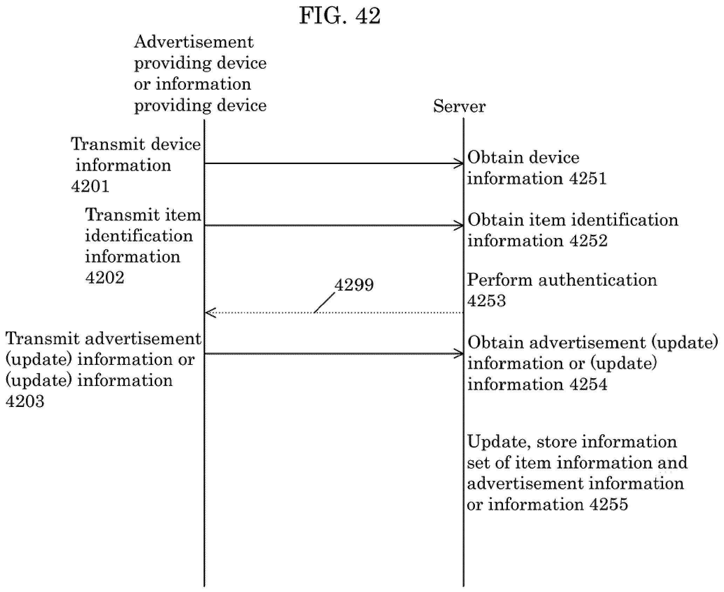

   FIG. 42 illustrates another example of communication between an advertisement providing device or an information providing device and a server according to Embodiment 6.
[FIG. 43]

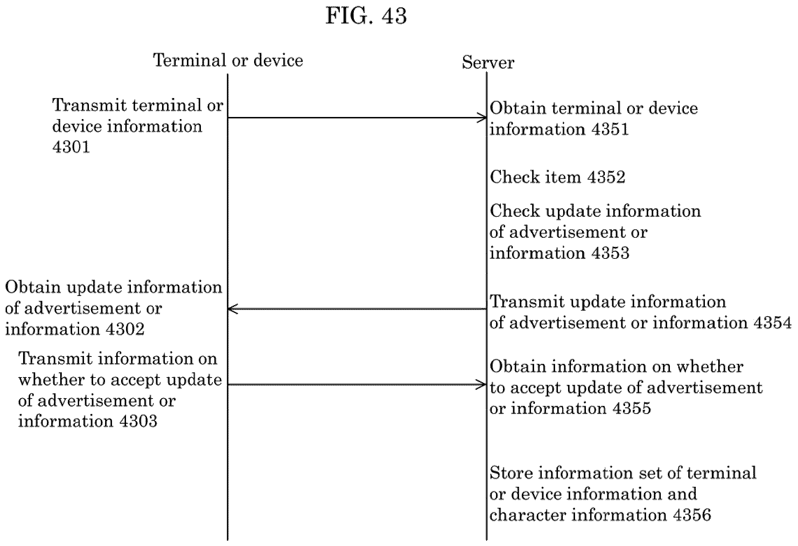

   FIG. 43 illustrates another example of communication between a terminal or a device and a server according to Embodiment 6.
[FIG. 44]

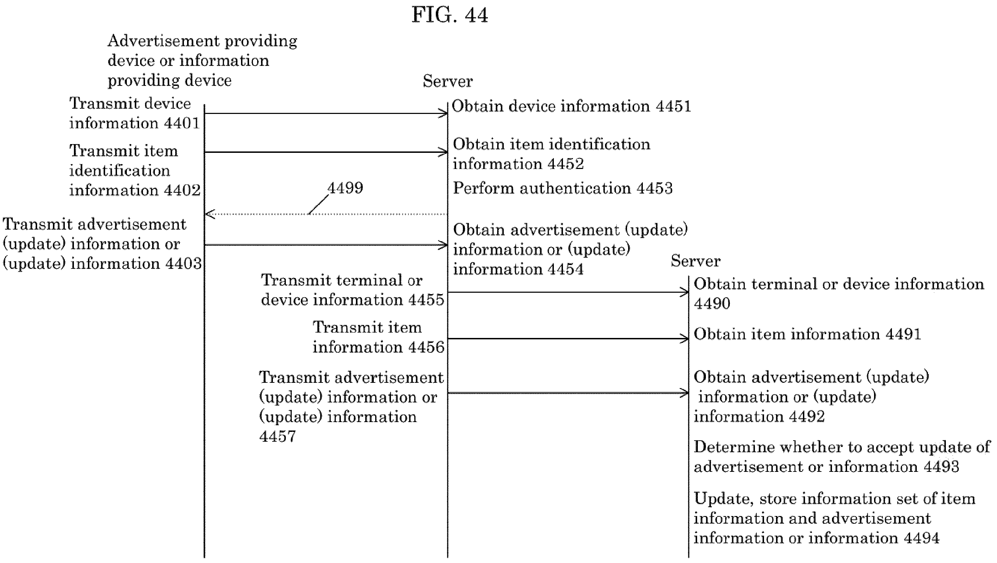

   FIG. 44 illustrates another example of communication between an advertisement providing device or an information providing device, a terminal or a device, and a server according to Embodiment 6.
[FIG. 45]

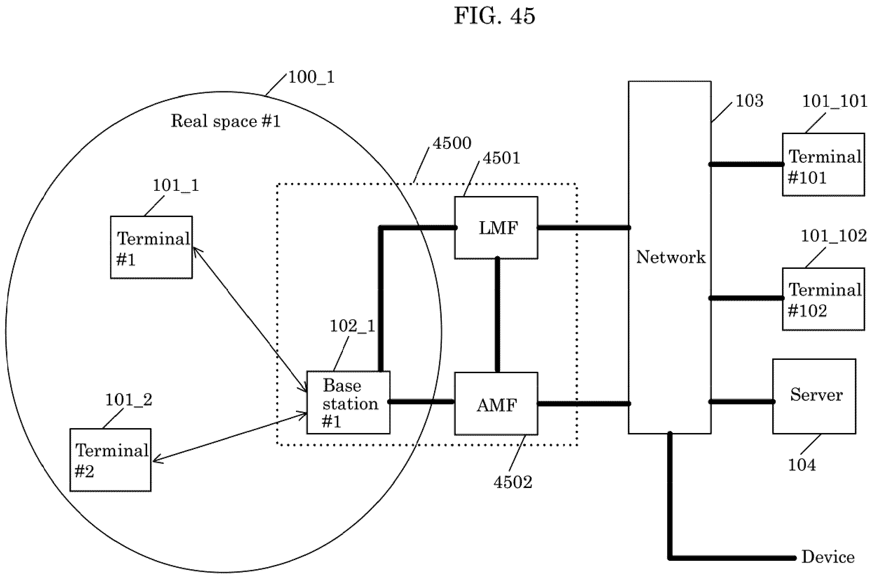

   FIG. 45 illustrates an example of a system configuration according to Embodiment 7.
[FIG. 46]

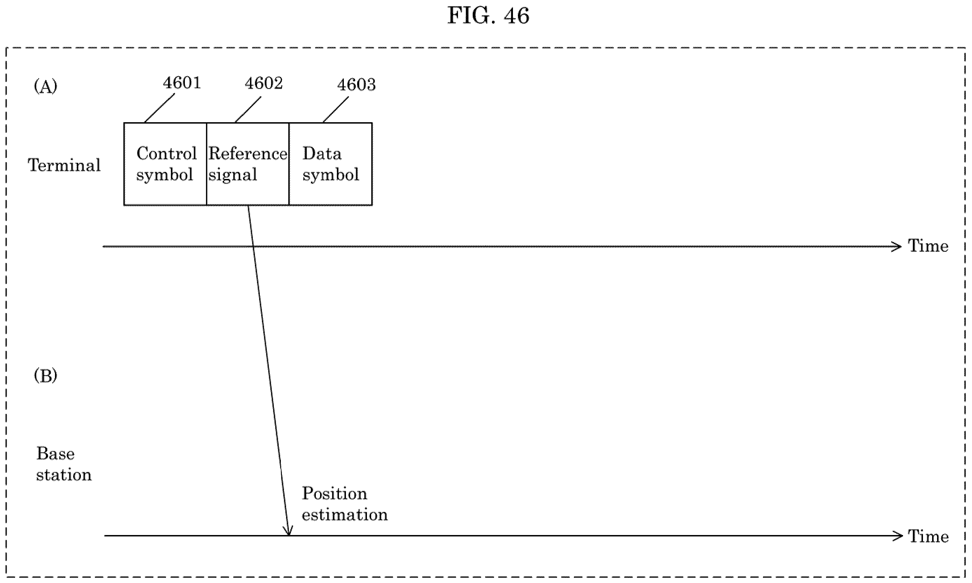

   FIG. 46 illustrates an example of a configuration of a modulated signal transmitted by a terminal according to Embodiment 7.
[FIG. 47A]

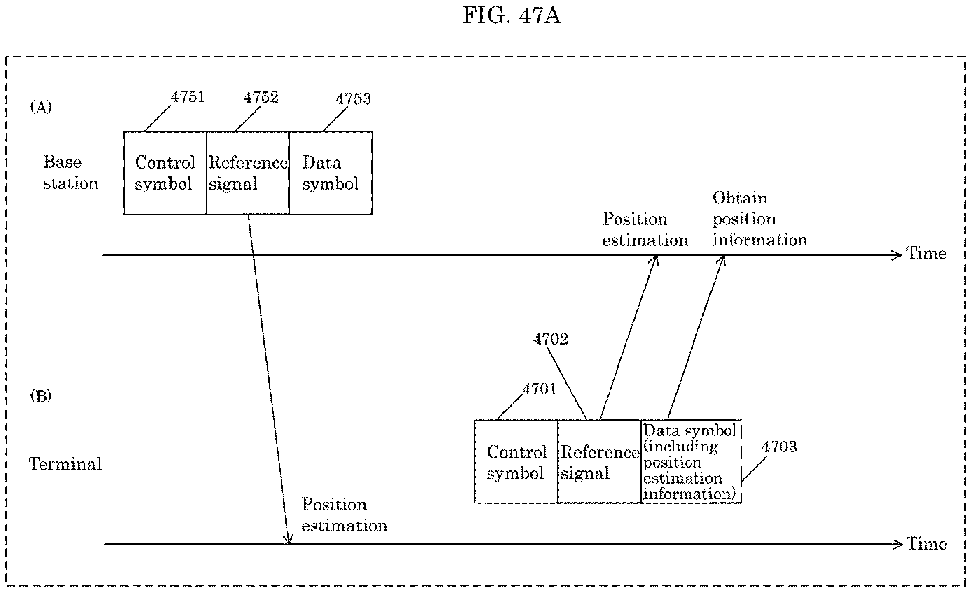

   FIG. 47A illustrates an example of configurations of modulated signals transmitted by a base station and a terminal according to Embodiment 7.
[FIG. 47B]

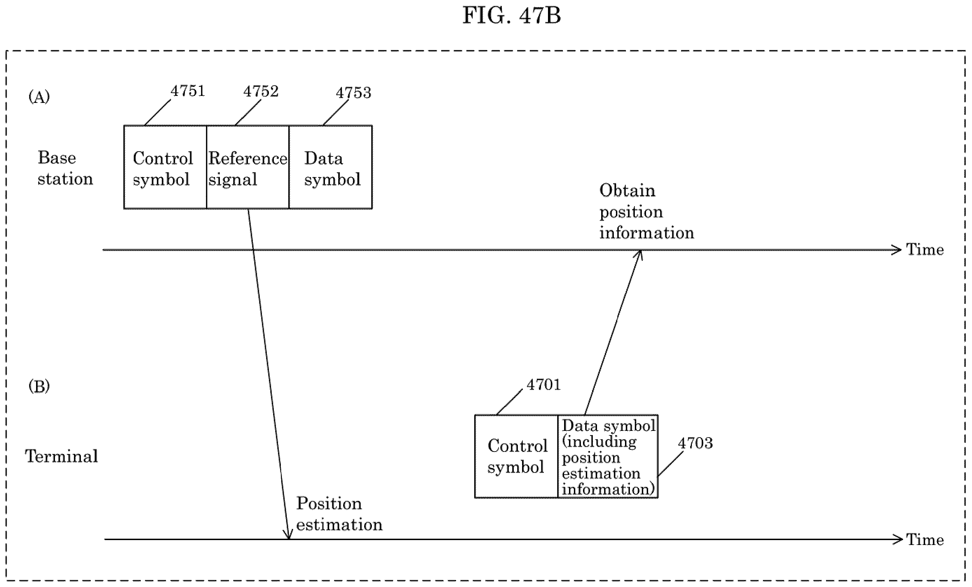

   FIG. 47B illustrates an example of configurations of modulated signals transmitted by a base station and a terminal according to Embodiment 7.
[FIG. 48A]

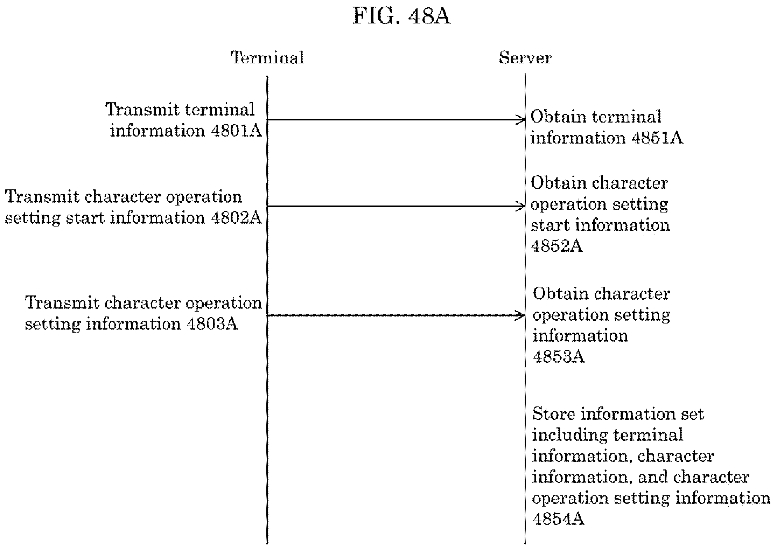

   FIG. 48A illustrates an example of communication between a terminal and a server according to Embodiment 8.
[FIG. 48B]

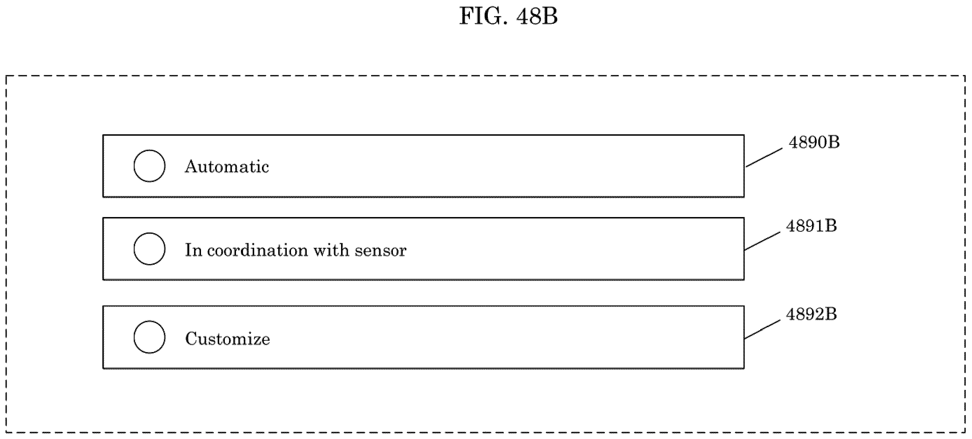

   FIG. 48B illustrates an example of character operation settings set by a terminal according to Embodiment 8.
[FIG. 48C]

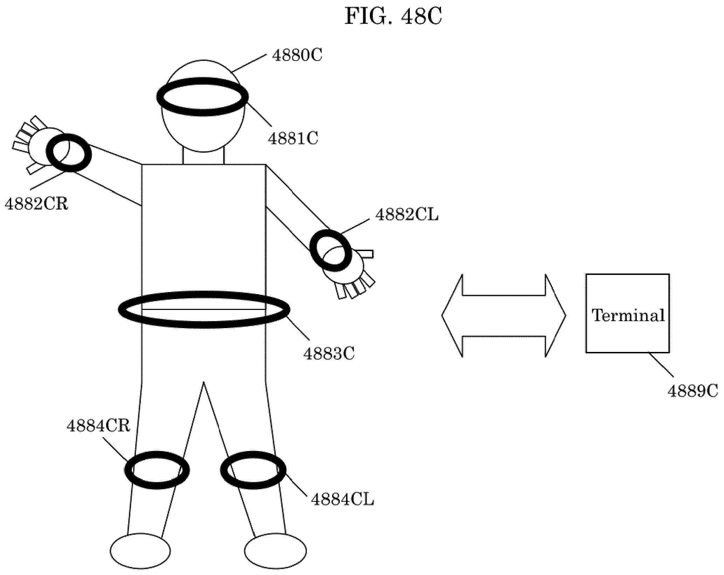

   FIG. 48C illustrates an example of a state of a terminal and a sensor according to Embodiment 8.
[FIG. 48D]

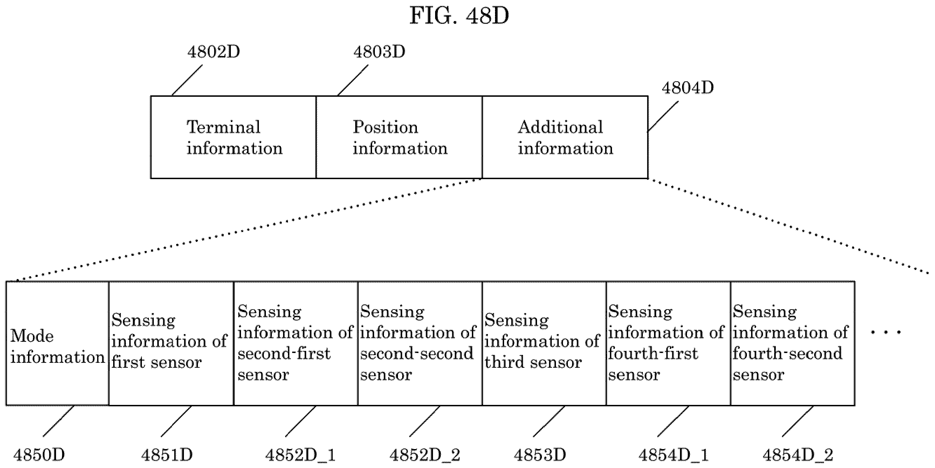

   FIG. 48D illustrates an example of a configuration of information transmitted by a terminal according to Embodiment 8.
[FIG. 48E]

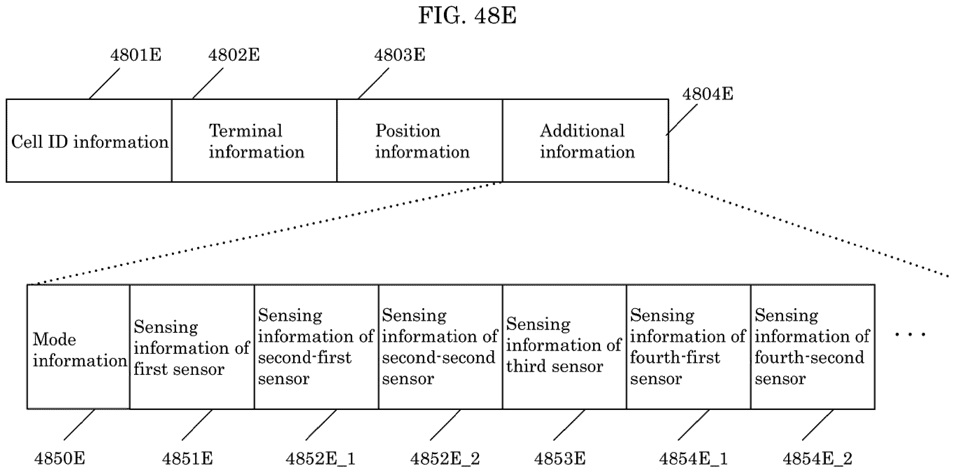

   FIG. 48E illustrates an example of a configuration of information transmitted by a base station according to Embodiment 8.
[FIG. 48F]

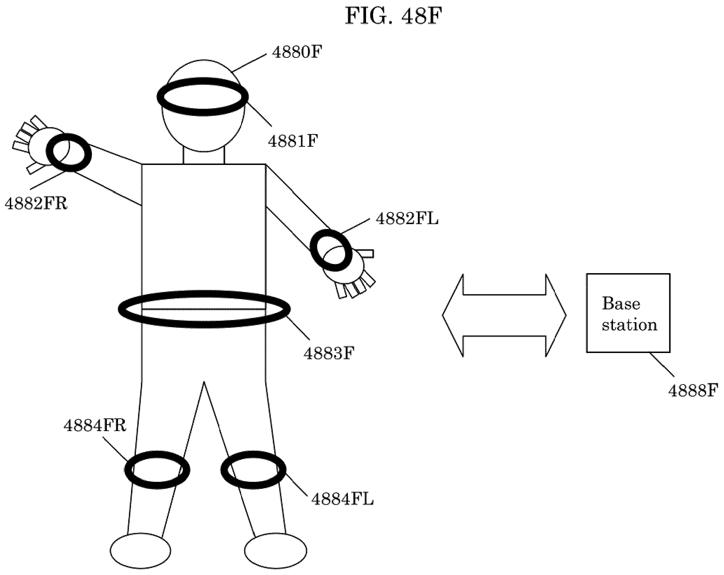

   FIG. 48F illustrates an example of a state of a base station and a sensor according to Embodiment 8.
[FIG. 48G]

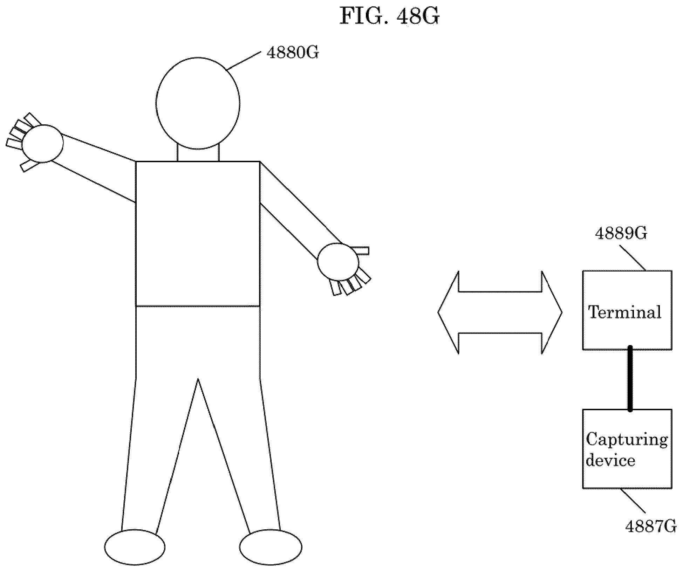

   FIG. 48G illustrates an example of a state of a terminal and a capturing device according to Embodiment 8.
[FIG. 48H]

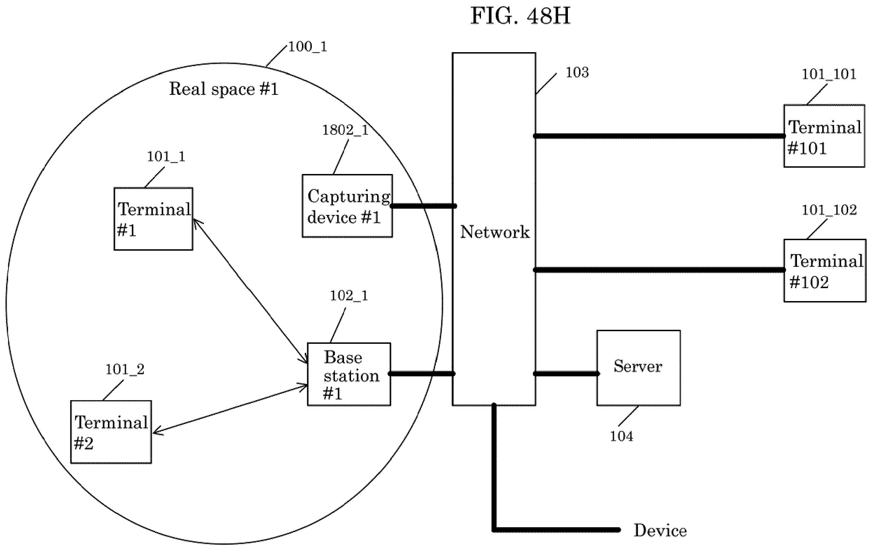

   FIG. 48H illustrates an example of a system configuration according to Embodiment 8.
[FIG. 48I]

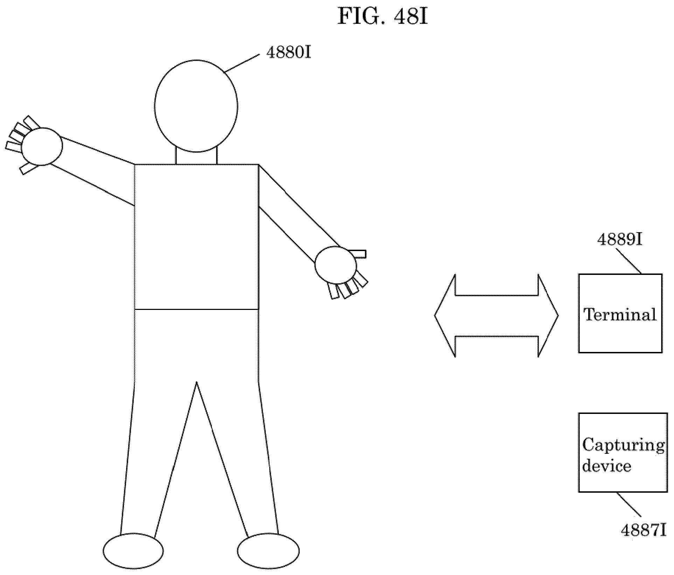

   FIG. 48I illustrates an example of a state of a terminal and a capturing device according to Embodiment 8.
[FIG. 49]

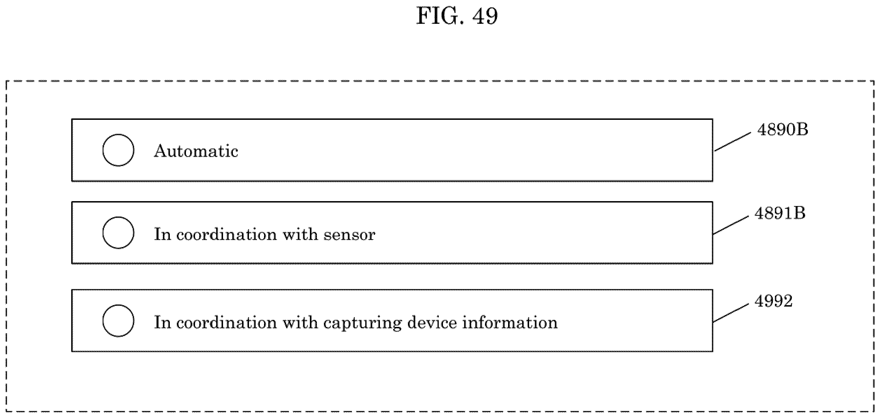

   FIG. 49 illustrates an example of character operation settings set by a terminal according to Embodiment 8.
[FIG. 50A]

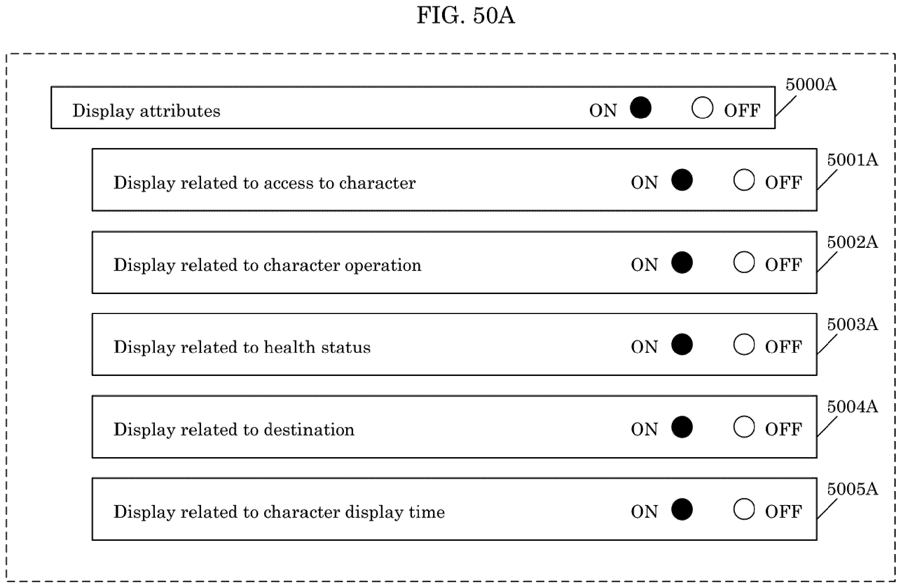

   FIG. 50A illustrates an example of settings related to displaying attributes of a character corresponding to a terminal according to Embodiment 9.
[FIG. 50B]

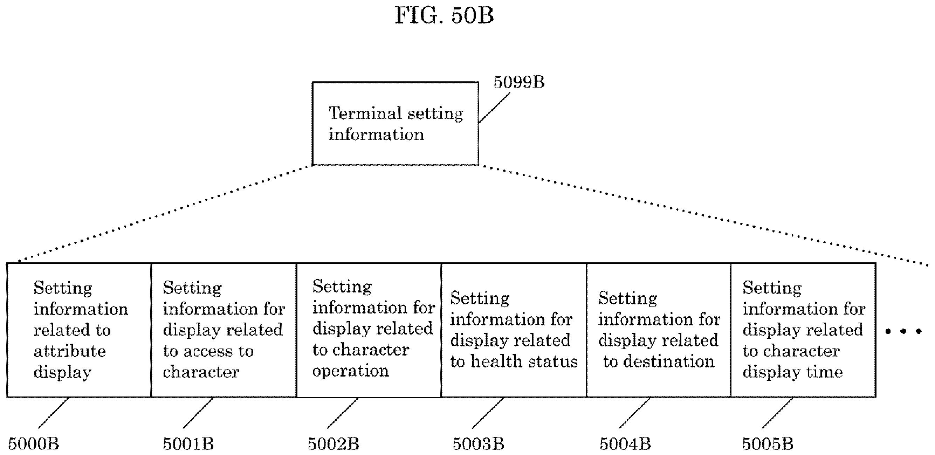

   FIG. 50B illustrates an example of a configuration of terminal setting information transmitted by a terminal according to Embodiment 9.
[FIG. 51]

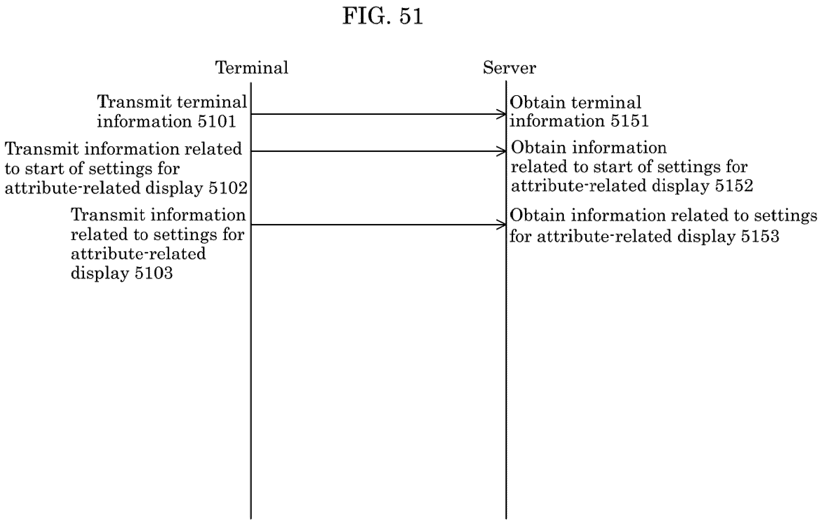

   FIG. 51 illustrates another example of communication between a terminal, a base station, and a server according to Embodiment 9.
[FIG. 52]

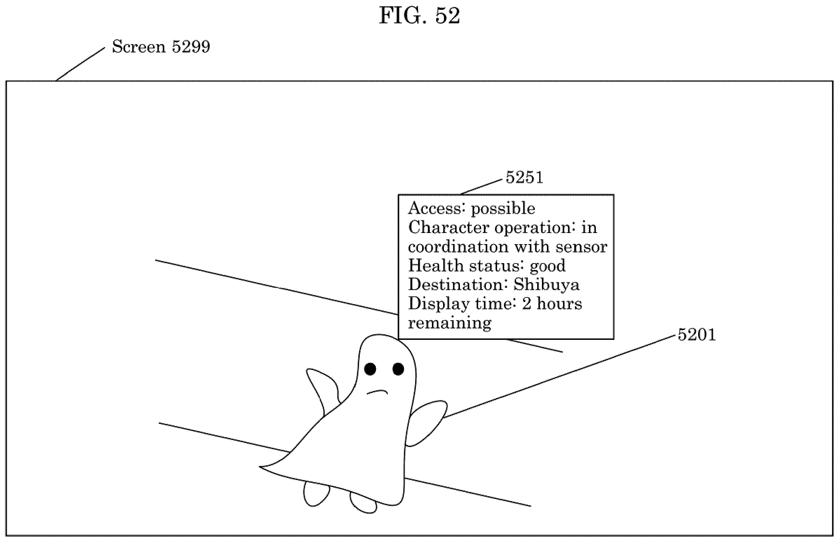

   FIG. 52 illustrates an example of a character corresponding to a terminal in a virtual space according to Embodiment 9.
[FIG. 53A]

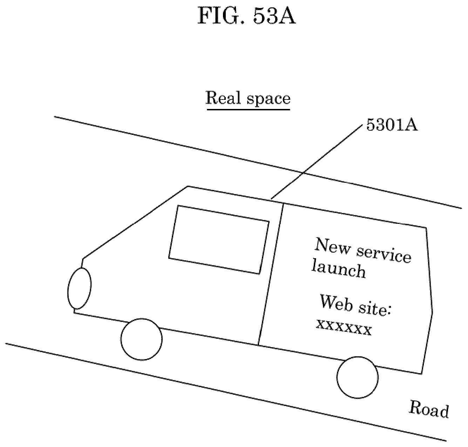

   FIG. 53A illustrates an example of a situation of a real space according to Embodiment 10.
[FIG. 53B]

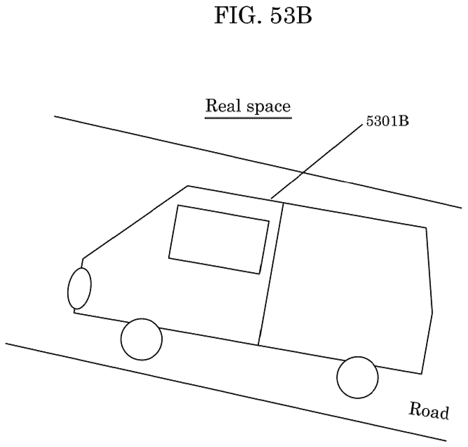

   FIG. 53B illustrates an example of a situation of a real space according to Embodiment 10.
[FIG. 54A]

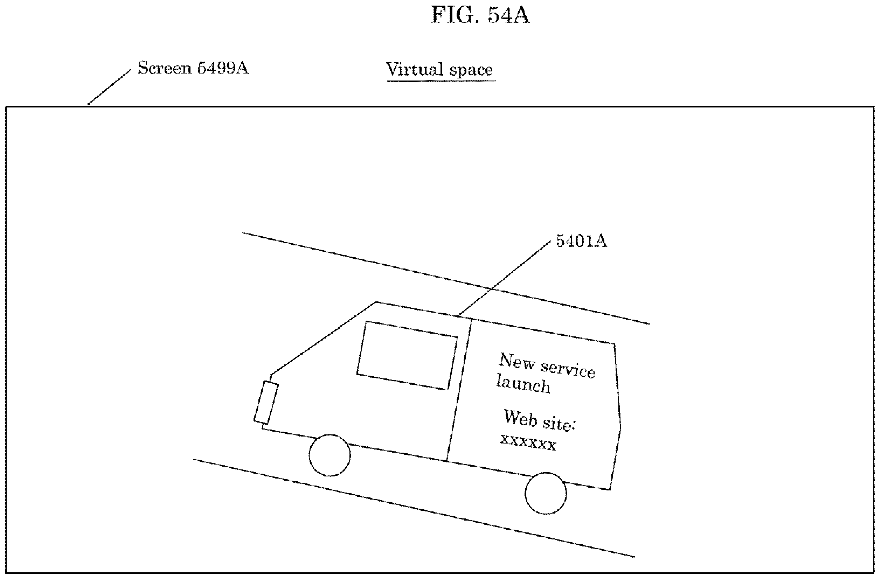

   FIG. 54A illustrates an example of a state of a virtual space corresponding to a real space according to Embodiment 10.
[FIG. 54B]

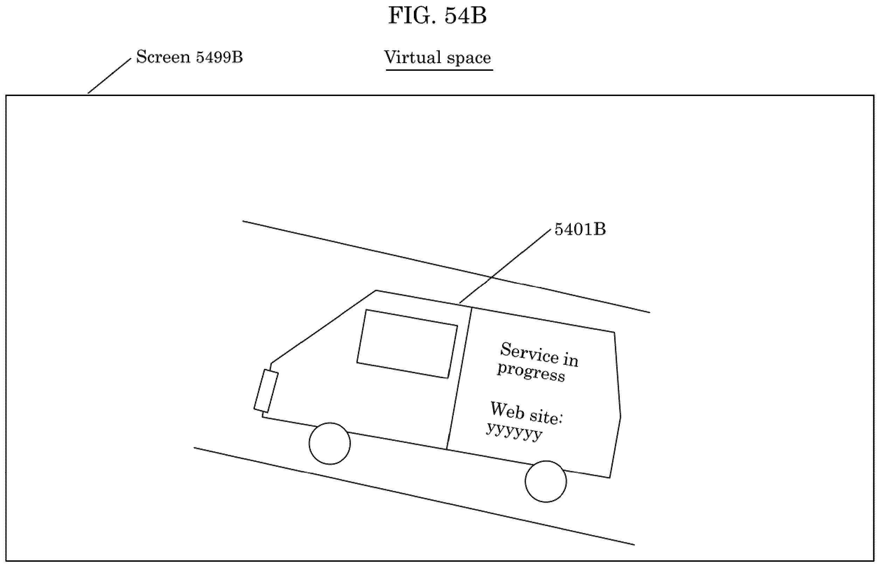

   FIG. 54B illustrates an example of a state of a virtual space corresponding to a real space according to Embodiment 10.
[FIG. 54C]

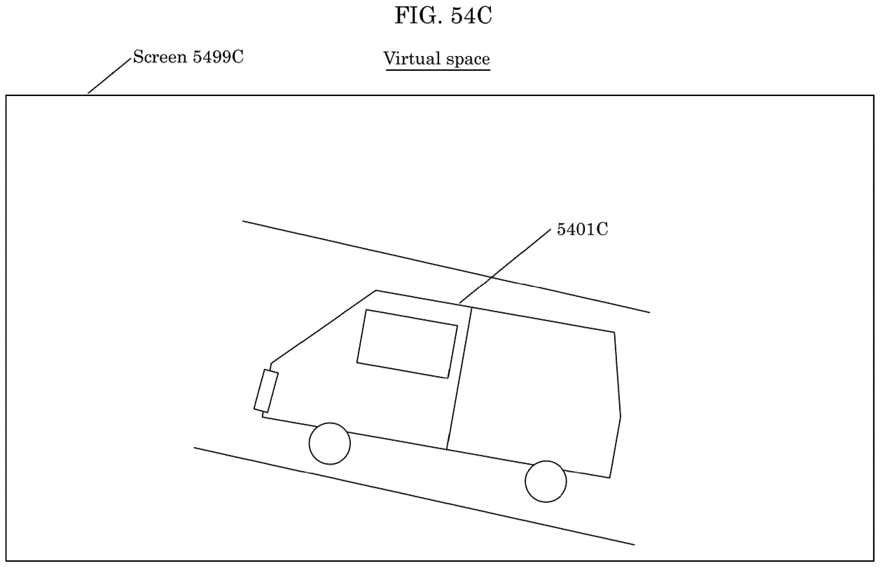

   FIG. 54C illustrates an example of a state of a virtual space corresponding to a real space according to Embodiment 10.
[FIG. 55A]

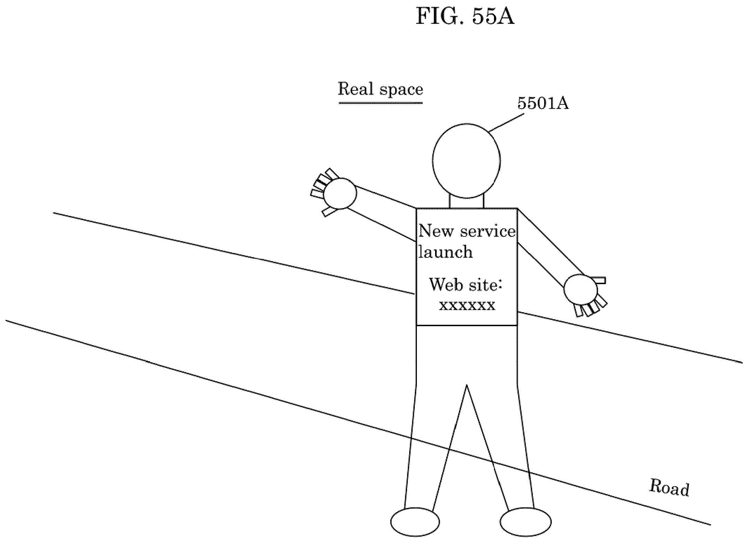

   FIG. 55A illustrates an example of a situation of a real space according to Embodiment 10.
[FIG. 55B]

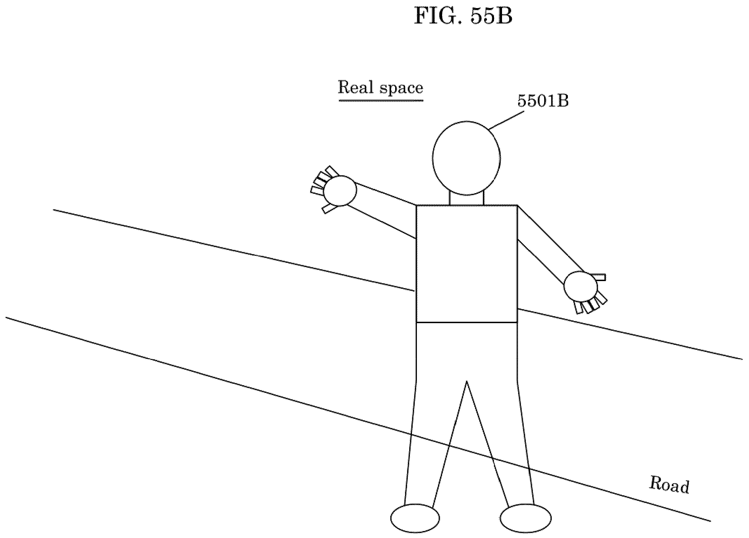

   FIG. 55B illustrates an example of a situation of a real space according to Embodiment 10.
[FIG. 56A]

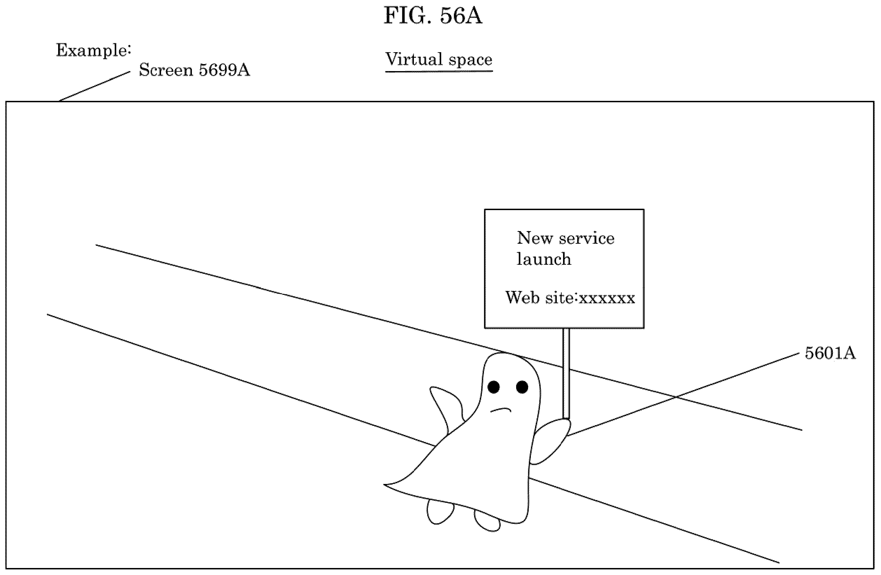

   FIG. 56A illustrates an example of a state of a virtual space corresponding to a real space according to Embodiment 10.
[FIG. 56B]

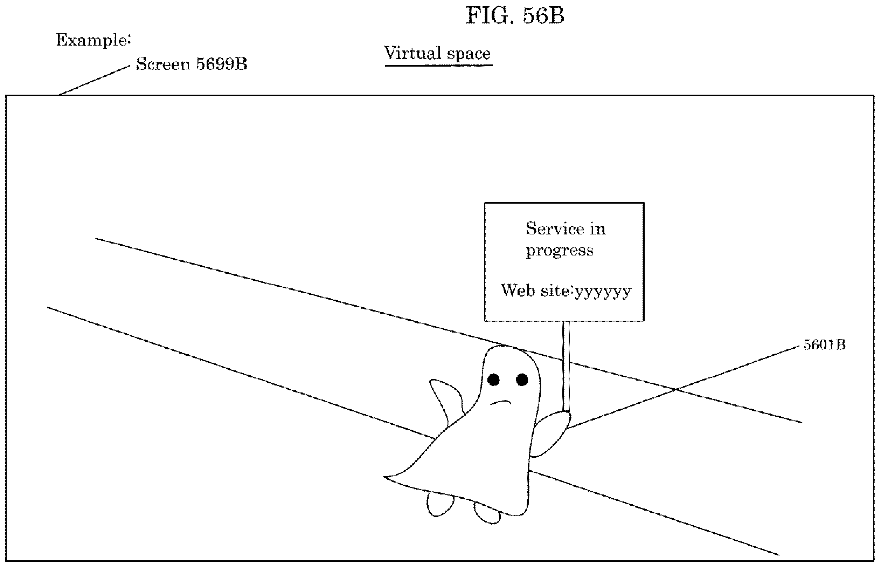

   FIG. 56B illustrates an example of a state of a virtual space corresponding to a real space according to Embodiment 10.
[FIG. 56C]

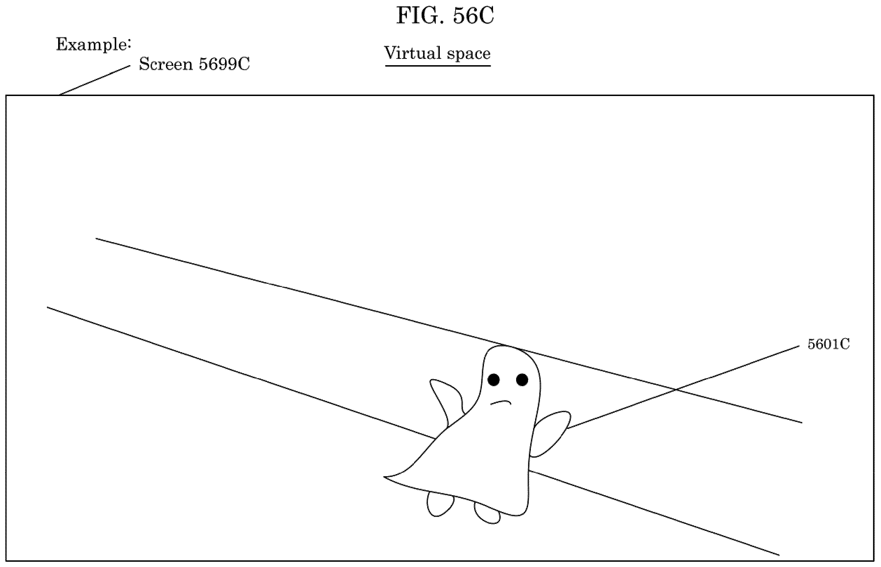

   FIG. 56C illustrates an example of a state of a virtual space corresponding to a real space according to Embodiment 10.
[FIG. 57]

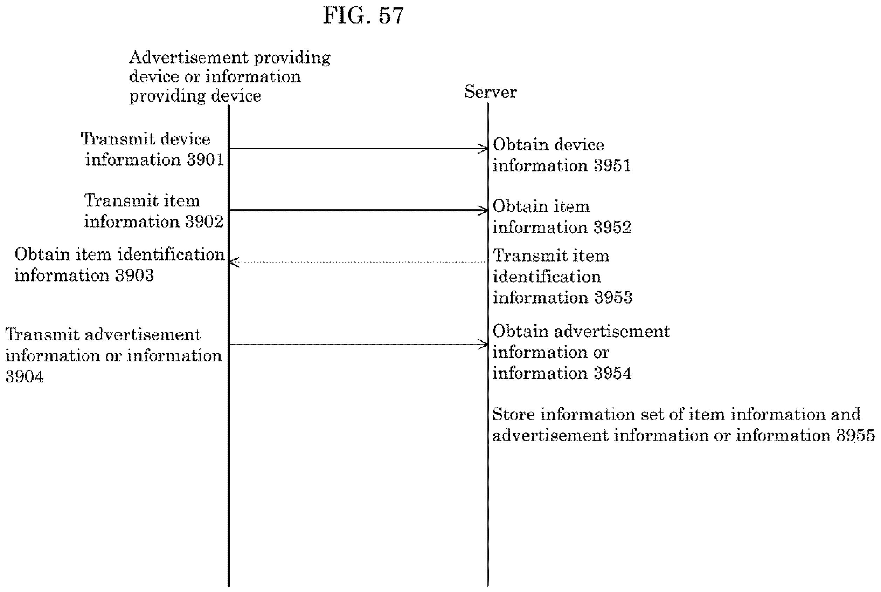

   FIG. 57 illustrates an example of communication between an advertisement providing device or information providing device and a server according to Embodiment 10.
[FIG. 58]

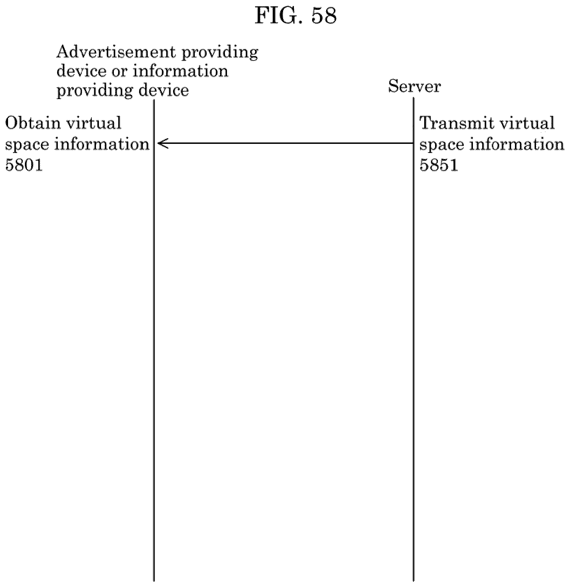

   FIG. 58 illustrates an example of communication between an advertisement providing device or information providing device and a server according to Embodiment 10.
[FIG. 59]

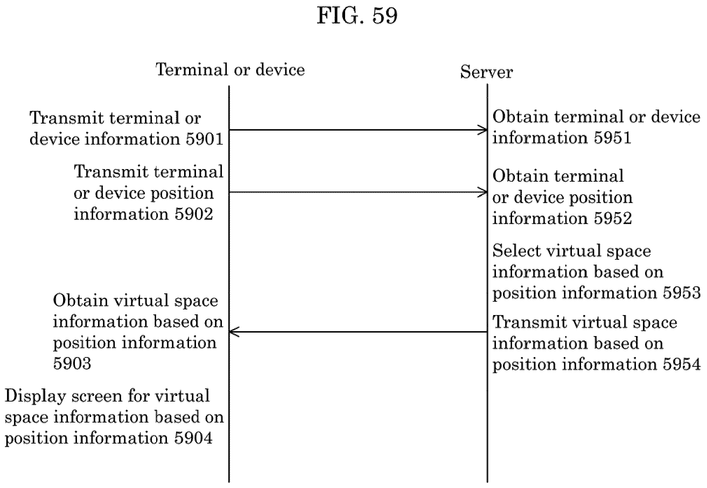

   FIG. 59 illustrates an example of communication between a terminal or a device and a server according to Embodiment 10.
[FIG. 60]

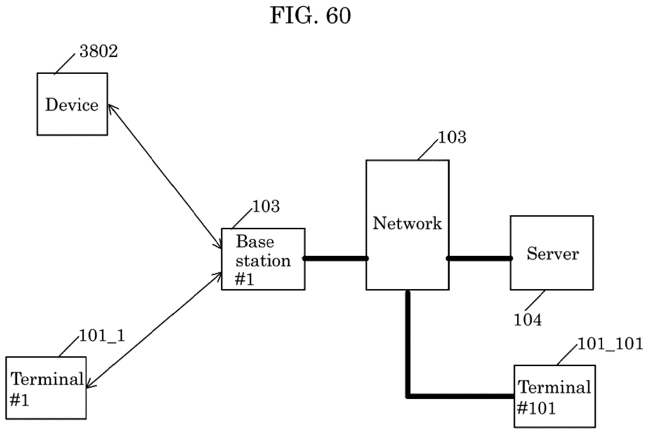

   FIG. 60 illustrates an example of a system configuration according to Embodiment 10.
[FIG. 61]

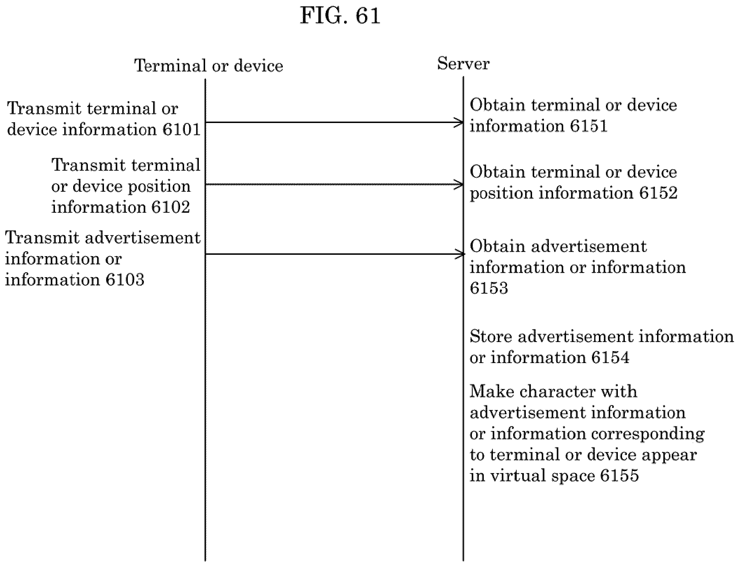

   FIG. 61 illustrates an example of communication between a terminal or a device and a server according to Embodiment 10.
[FIG. 62A]

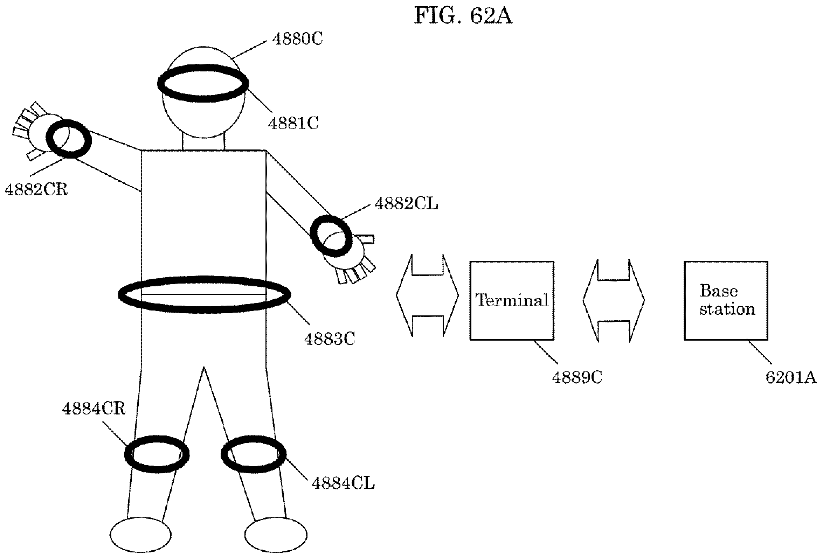

   FIG. 62A illustrates an example of a state of a sensor, a terminal, and a base station according to Embodiment 11.
[FIG. 62B]

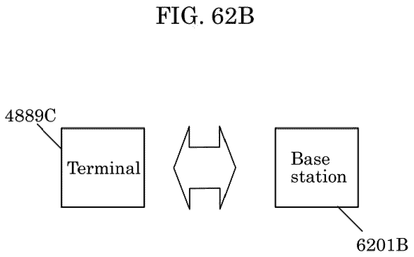

   FIG. 62B illustrates an example of a state of a sensor, a terminal, and a base station according to Embodiment 11.
[FIG. 62C]

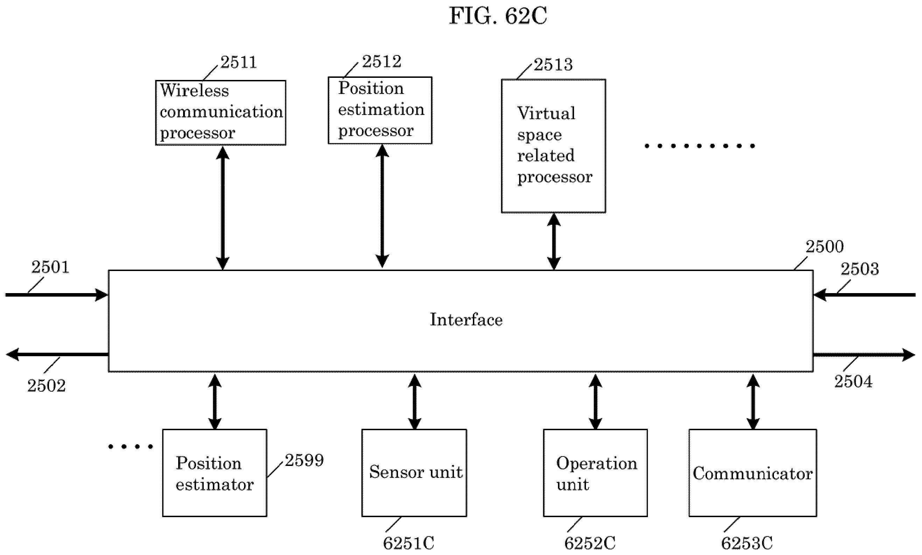

   FIG. 62C illustrates an example of a configuration of a terminal according to Embodiment 11.
[FIG. 63A]

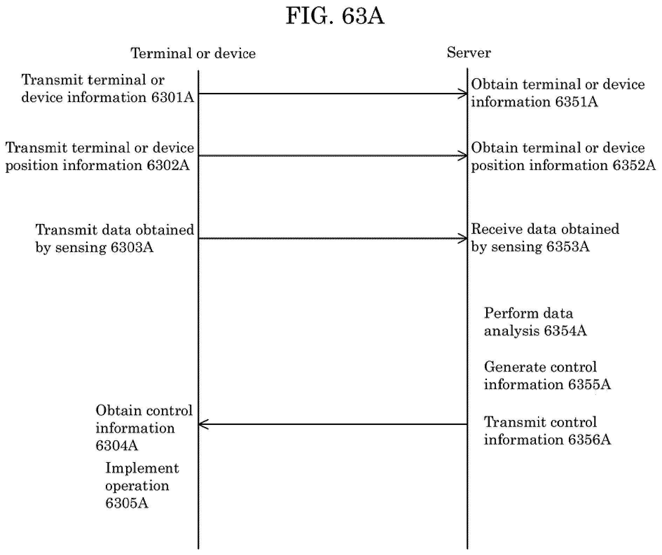

   FIG. 63A illustrates an example of communication between a terminal or a device and a server according to Embodiment 11.
[FIG. 63B]

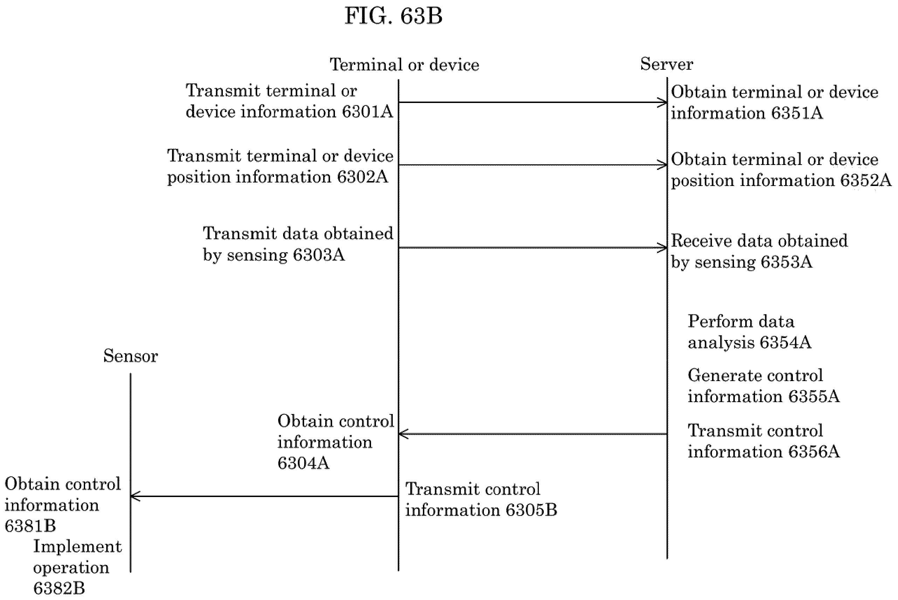

   FIG. 63B illustrates an example of communication between a sensor, a terminal or a device, and a server according to Embodiment 11.
[FIG. 64A]

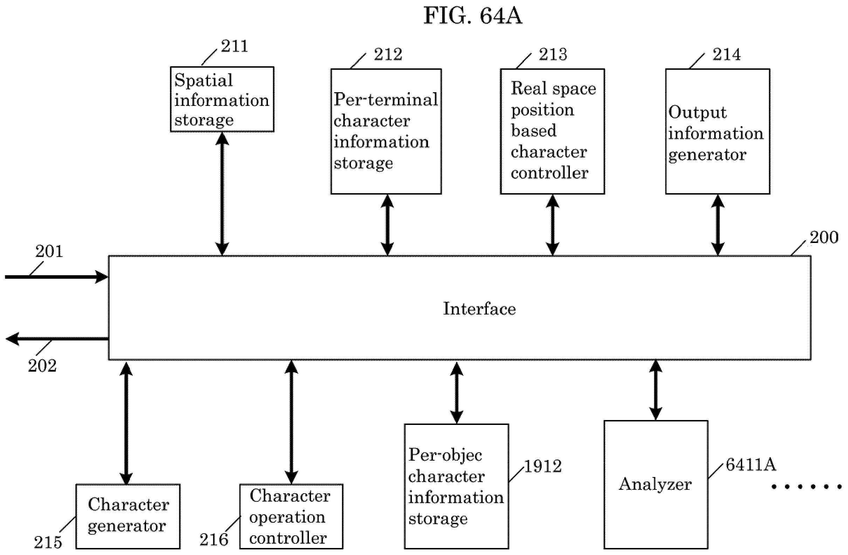

   FIG. 64A illustrates an example of a configuration of a server according to Embodiment 11.
[FIG. 64B]

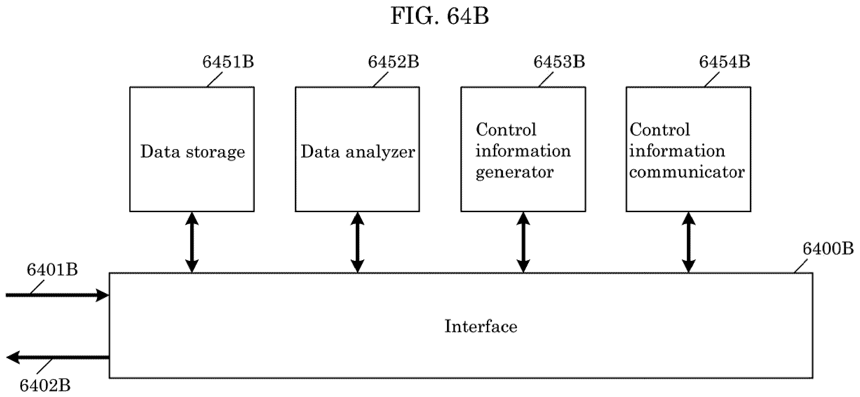

   FIG. 64B illustrates an example of a configuration of an analyzer according to Embodiment 11.
[FIG. 65]

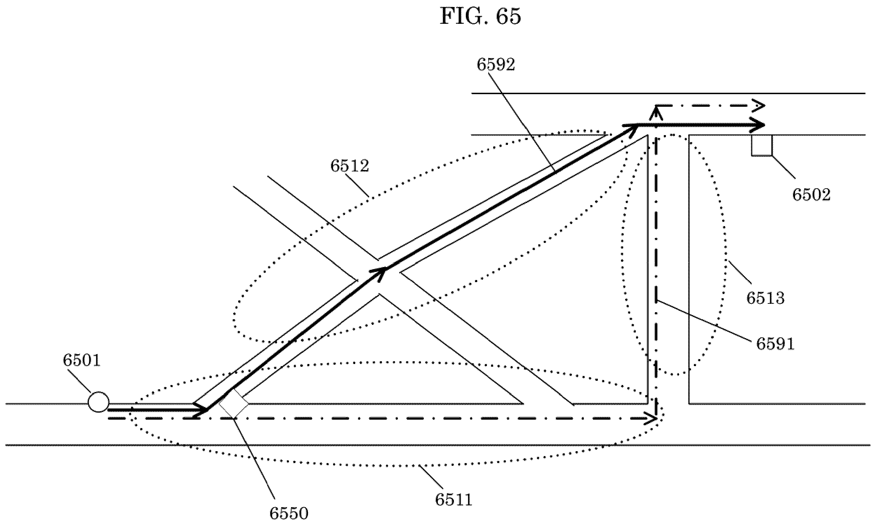

   FIG. 65 illustrates an example of a situation of a real space according to Embodiment 11.
[FIG. 66]

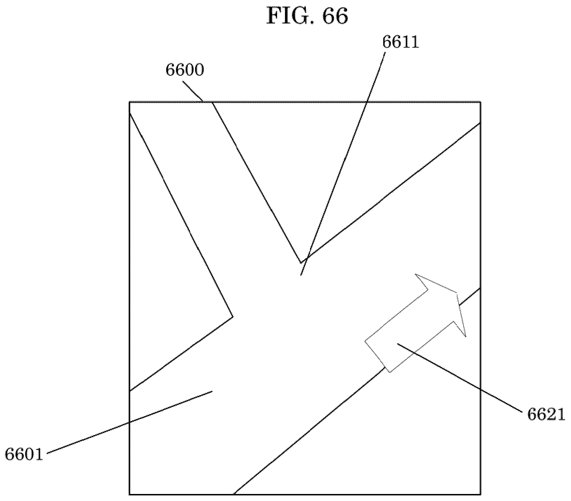

   FIG. 66 illustrates an example of a display screen displayed by a first terminal according to Embodiment 11.
[FIG. 67A]

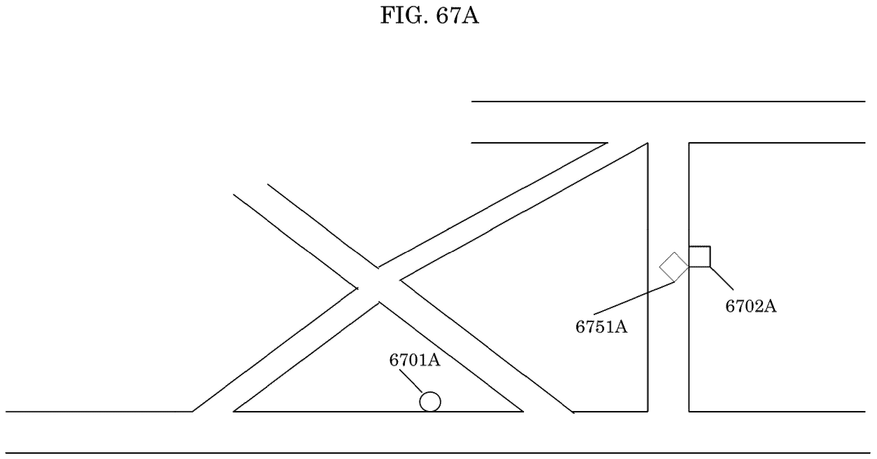

   FIG. 67A illustrates an example of a situation of a real space according to Embodiment 11.
[FIG. 67B]

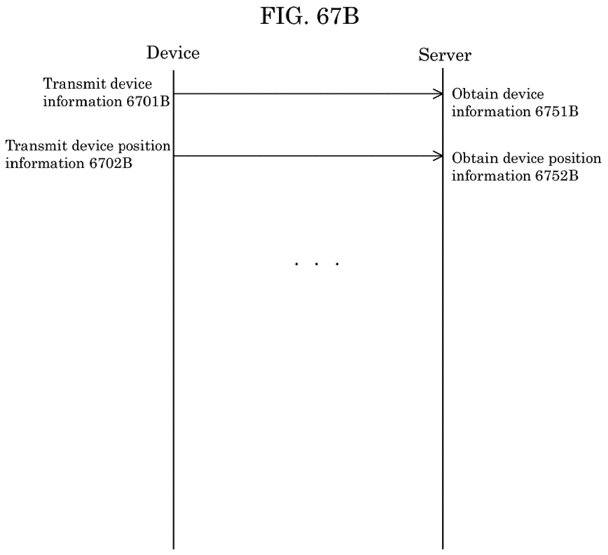

   FIG. 67B illustrates an example of communication between a device and a server according to Embodiment 11.
[FIG. 67C]

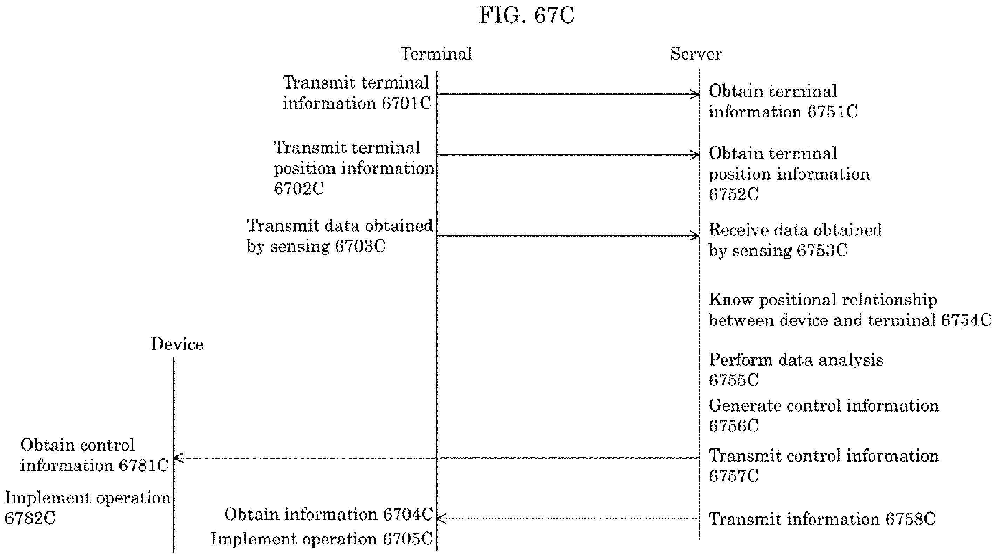

   FIG. 67C illustrates an example of communication between a terminal, a device, and a server according to Embodiment 11.
[FIG. 68]

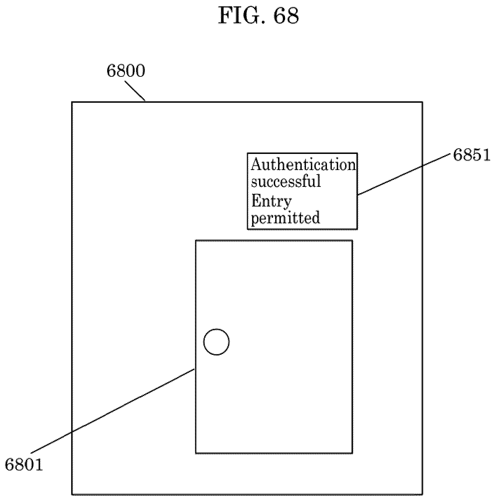

   FIG. 68 illustrates a position of a character corresponding to a device in a virtual space according to Embodiment 11.
[FIG. 69]

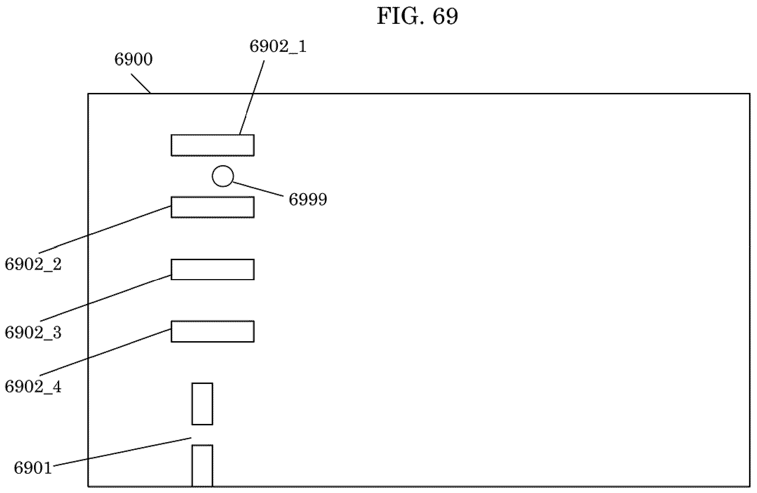

   FIG. 69 illustrates an example of a situation of a real space according to Embodiment 11.
[FIG. 70A]

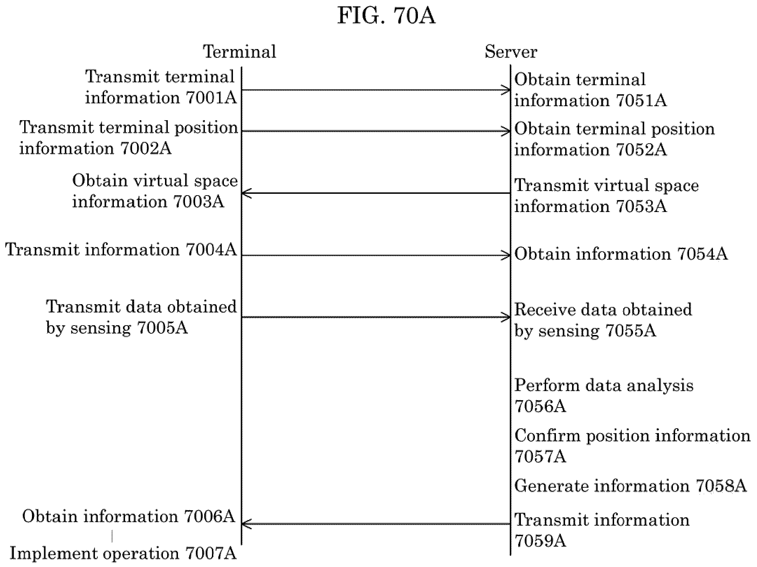

   FIG. 70A illustrates an example of communication between a terminal and a server according to Embodiment 11.
[FIG. 70B]

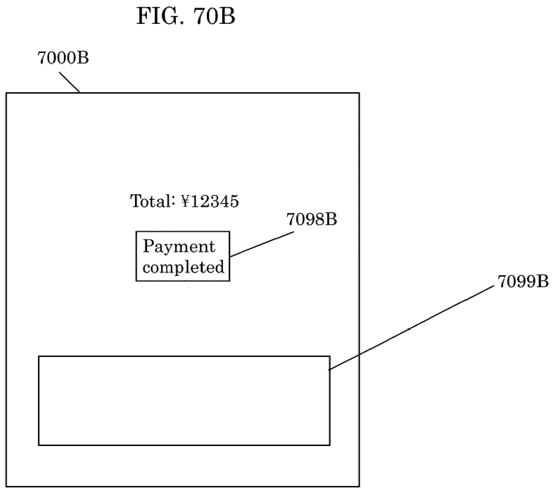

   FIG. 70B illustrates an example of a virtual space when a user of a terminal performs payment according to Embodiment 11.
[FIG. 71A]

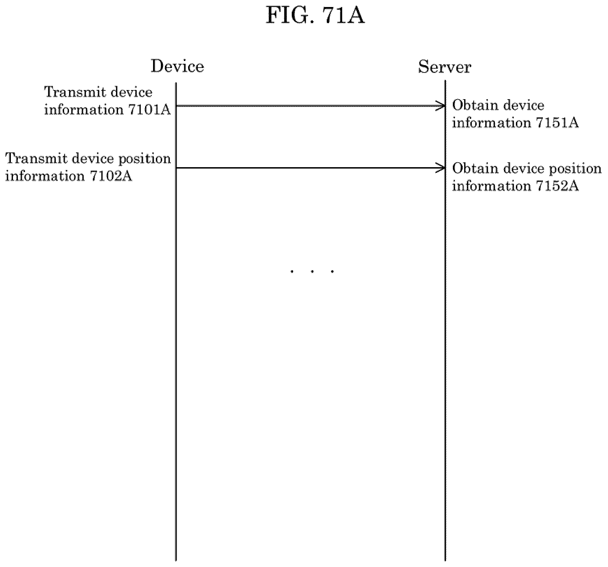

   FIG. 71A illustrates an example of communication between a device and a server according to Embodiment 11.
[FIG. 71B]

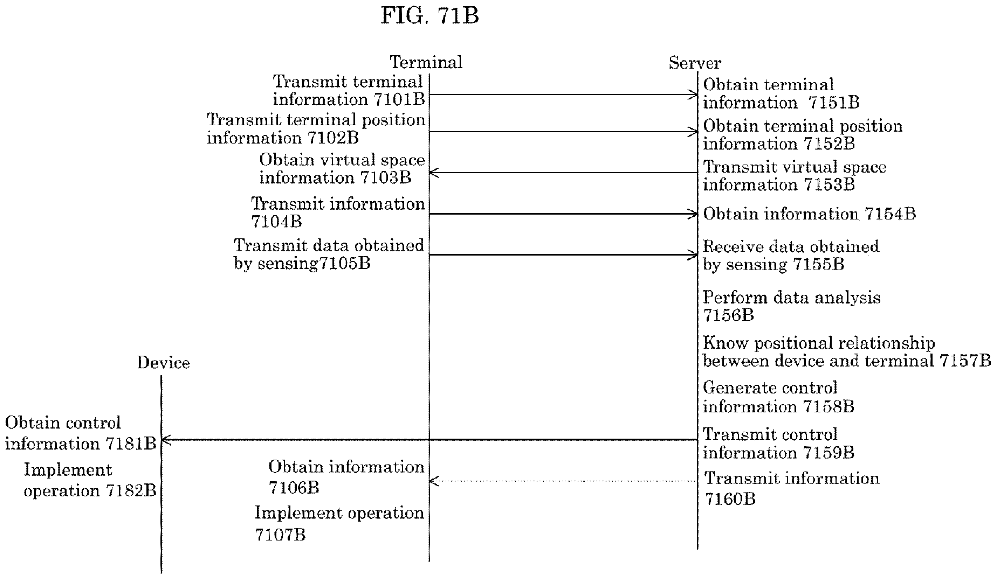

   FIG. 71B illustrates an example of communication between a terminal, a device, and a server according to Embodiment 11.
[FIG. 71C]

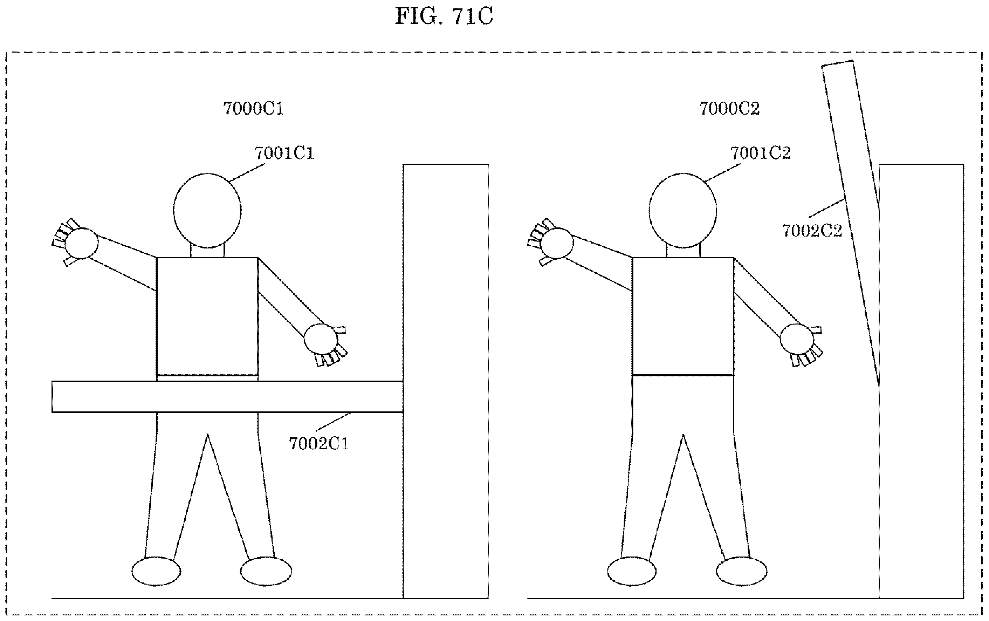

   FIG. 71C illustrates an example of a state of a user in a real space according to Embodiment 11.
[FIG. 71D]

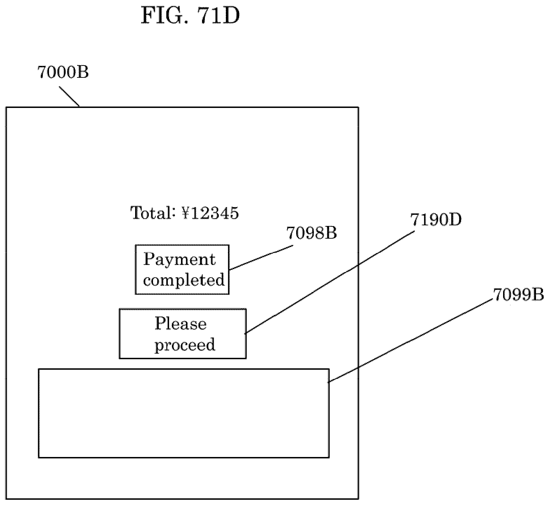

   FIG. 71D illustrates an example of a virtual space when a user of a terminal performs payment according to Embodiment 11.
[FIG. 72]

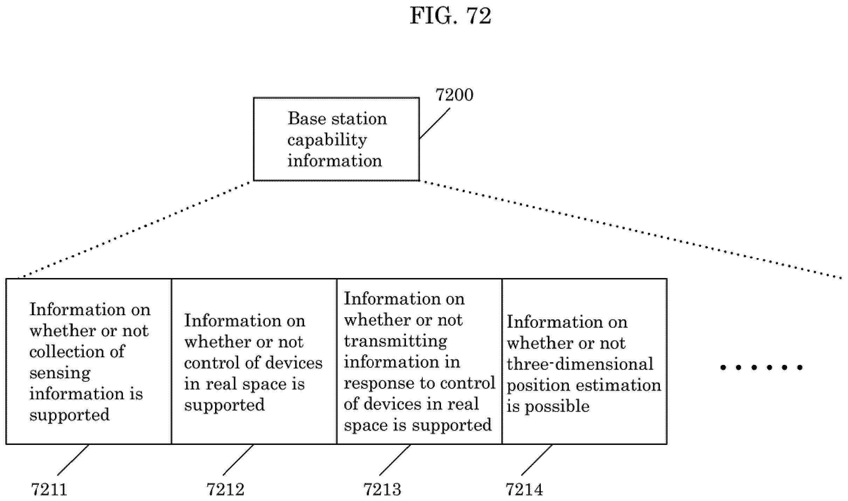

   FIG. 72 illustrates an example of a configuration of a modulated signal transmitted by a base station according to Embodiment 12.
[FIG. 73]

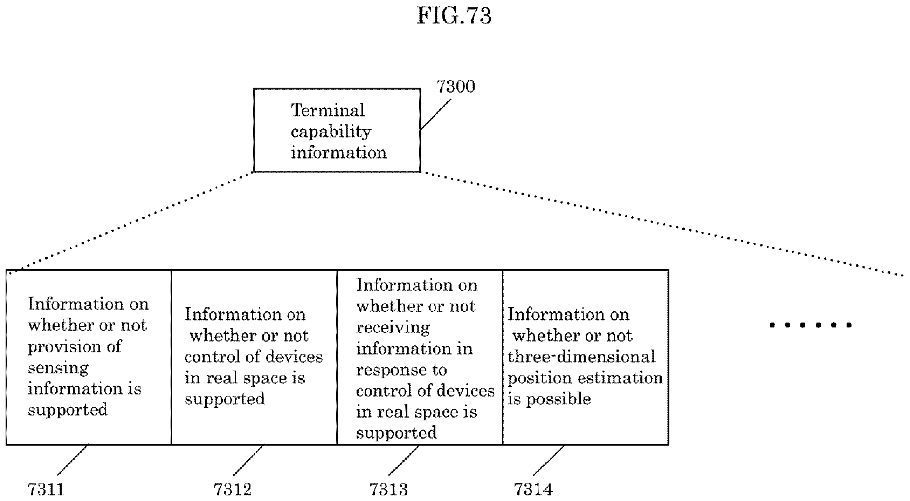

   FIG. 73 illustrates an example of a configuration of a modulated signal transmitted by a terminal according to Embodiment 12.
[FIG. 74A]

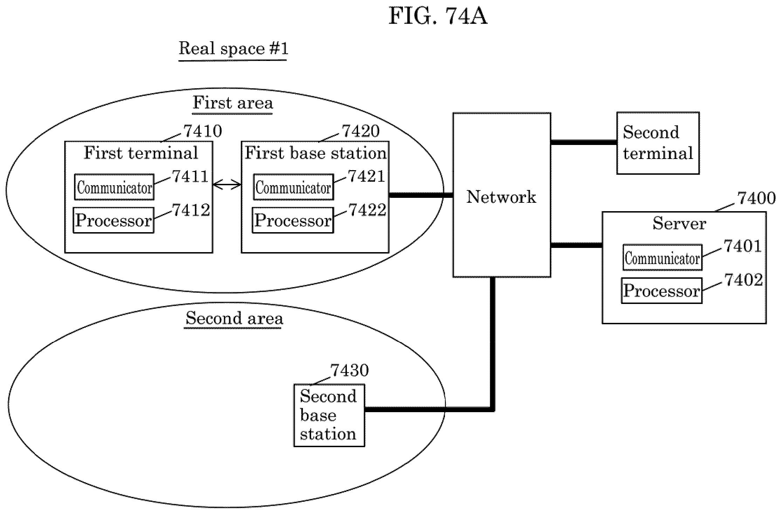

   FIG. 74A illustrates a basic configuration of a system according to each embodiment.
[FIG. 74B]

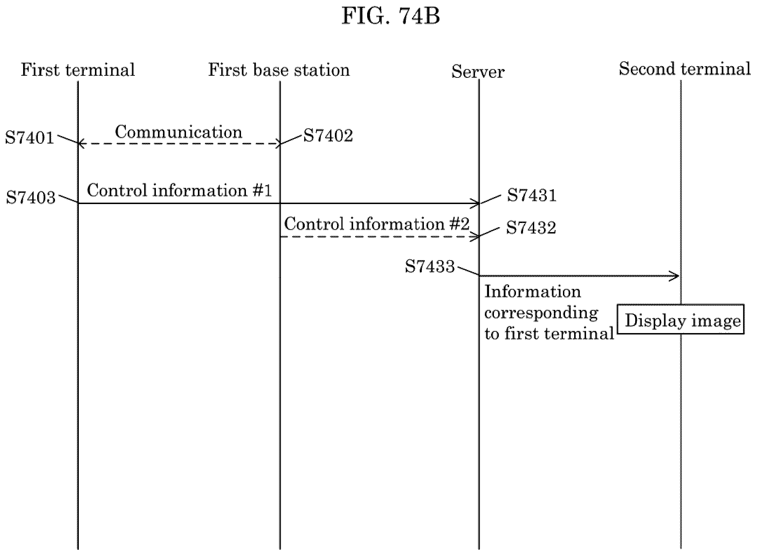

   FIG. 74B illustrates an example of basic processing performed by a system according to each embodiment.
[FIG. 75]
   FIG. 75 illustrates a conventional system configuration that makes a character appear in a virtual space.

### [Description of Embodiments]

A first method according to one aspect of an invention understood based on the present disclosure is a method implemented by a server, the method including: receiving control information indicating that a first terminal is in a first area of a real space; and transmitting information corresponding to the first terminal to a second terminal displaying a first virtual space corresponding to the first area of the real space, and displaying an image corresponding to the first terminal on a display screen of the second terminal.

The method of the above aspect can display, in a first virtual space corresponding to a first area of a real space, information corresponding to a terminal in the first area of the real space. With this, the terminal can easily participate in a virtual space corresponding to the real space where the terminal is.

A second method according to one aspect of an invention understood based on the present disclosure is the first method, wherein the second terminal is located outside the first area of the real space.

The method of the above aspect can allow a terminal participating in the first virtual space regardless of location to coexist with a terminal participating in the first virtual space according to being located in the first area of the real space. With this, it is possible to enable communication between a user participating in a virtual space corresponding to the real space where the terminal is and a user participating in the virtual space regardless of location.

A third method according to one aspect of an invention understood based on the present disclosure is the first method, wherein the control information is information indicating that the first terminal is communicating with a first base station.

The method of the above aspect can facilitate the association between the virtual space and the area of the real space by associating the area of the real space with a base station.

A fourth method according to one aspect of an invention understood based on the present disclosure is the third method, wherein the first area of the real space is associated with the first base station and a second base station different from the first base station.

The method of the above aspect can improve the flexibility of the association between the base station and the virtual space by associating a plurality of base stations in the real space with the same virtual space.

A fifth method according to one aspect of an invention understood based on the present disclosure is the third method, wherein the first virtual space is associated with the first area of the real space and a second area of the real space different from the first area of the real space.

The method of the above aspect can improve the flexibility of the association between areas of real space and the virtual space by associating a plurality of areas of real space with the same virtual space.

A sixth method according to one aspect of an invention understood based on the present disclosure is the third method, wherein the first area of the real space is associated with a first area of the first virtual space.

The method of the above aspect can improve the flexibility of the association between an area of real space and the virtual space by enabling detailed setting of areas within the virtual space associated with the area of real space.

A seventh method according to one aspect of an invention understood based on the present disclosure is the third method, further including obtaining position information of the first terminal from the first base station; and based on the position information of the first terminal, changing a position in the first virtual space at which to display the image corresponding to the first terminal.

The method of the above aspect enables the changing of the position at which to display the image corresponding to the first terminal within the virtual space according to the detailed position within the area of real space of the terminal, thereby providing a virtual space service based on more detailed terminal position.

A server according to one aspect of an invention understood based on the present disclosure includes: a communicator; and a processor, wherein the communicator receives control information indicating that a first terminal is in a first area of a real space, the processor generates information corresponding to the first terminal, and the communicator transmits the information to a second terminal displaying a first virtual space corresponding to the first area of the real space, and displays the information on a display screen of the second terminal.

The server of the above aspect can display, in a first virtual space corresponding to a first area of a real space, a first avatar corresponding to a terminal in the first area of the real space. With this, the terminal can easily participate in a virtual space corresponding to the real space where the terminal is.

An eighth method according to one aspect of an invention understood based on the present disclosure is a method implemented by a terminal, the method including: communicating with a first base station arranged in a first area of a real space; and transmitting control information including an identifier indicating the first base station and an identifier indicating a terminal to a server that provides a first virtual space corresponding to the first area of the real space.

The method of the above aspect can allow a terminal in a first area of a real space to easily participate in a first virtual space corresponding to the first area of the real space.

A ninth method according to one aspect of an invention understood based on the present disclosure is the eighth method, further including performing sensing between the first base station and the terminal to generate position information of the terminal; and transmitting the position information to the server.

The method of the above aspect can provide a virtual space service according to the detailed position within the area of real space of the terminal.

A terminal according to one aspect of an invention understood based on the present disclosure includes: a communicator; and a processor, wherein the communicator is communicating with a first base station arranged in a first area of a real space, the processor generates control information including an identifier indicating the first base station and an identifier indicating the terminal, and the communicator transmits the control information to a server that provides a first virtual space corresponding to the first area of the real space.

The terminal of the above aspect can allow a terminal in a first area of a real space to easily participate in a first virtual space corresponding to the first area of the real space.

A tenth method according to one aspect of an invention understood based on the present disclosure is a method implemented by a base station arranged in a first area of a real space, the method including: communicating with a first terminal in the first area of the real space; and transmitting control information including an identifier indicating a first base station and an identifier indicating the first terminal to a server that provides a first virtual space corresponding to the first area of the real space.

The method of the above aspect can allow a terminal in a first area of a real space to easily participate in a first virtual space corresponding to the first area of the real space.

An eleventh method according to one aspect of an invention understood based on the present disclosure is the tenth method, further including performing sensing to generate position information of the first terminal; and transmitting the position information to the server.

The method of the above aspect can provide a virtual space service according to the detailed position within the area of real space of the terminal.

A base station according to one aspect of an invention understood based on the present disclosure is arranged in a first area of a real space, the base station including: a communicator; and a processor, wherein the communicator is communicating with a first terminal in the first area of the real space, the processor generates control information including an identifier indicating a first base station and an identifier indicating the first terminal, and the communicator transmits the control information to a server that provides a first virtual space corresponding to the first area of the real space.

The base station of the above aspect can allow a terminal in a first area of a real space to easily participate in a first virtual space corresponding to the first area of the real space.

These general or specific aspects may be realized as a system, a method, an integrated circuit, a computer program, or a computer-readable recording medium such as CD-ROM, or any given combination thereof.

Hereinafter, a transmission device according to the present disclosure will be described in detail with reference to the drawings.

The embodiments described below each illustrate either a general or specific example. The numerical values, shapes, materials, elements, the arrangement and connection of the elements, steps, order of the steps, etc., shown in the following embodiments are mere examples, and therefore do not intend to limit the invention understood based on the present disclosure. Accordingly, among the elements in the following embodiments, those not recited in any of the independent claims defining the broadest concept are described as optional elements.

### [Embodiment 1]

In the present embodiment, an explanation will be provided regarding the configuration of a system that makes a character appear in a virtual space based on the position of a terminal in real space, and operations performed by each device.

Note that "real space" may also be referred to as "(physical) real space" or "universe". Real space may be augmented reality (AR) (a world in which the real world is virtually augmented). Real space may be understood as, for example, the physical world in which we live. Real space may be referred to by another name. The above points apply throughout the present specification.

Virtual space may also be referred to as "cyber space", "metaverse space", "(one) multiverse space", "virtual space", "virtual reality (VR)", or "virtual world". Note that virtual space may be referred to by another name. The above points apply throughout the present specification.

Furthermore, the character may also be referred to as an "avatar" or "object". An avatar may be understood as, for example, an alter ego of a user, who possesses a terminal, that appears in games, the internet, and virtual space. Note that the character may be referred to by another name. The above points apply throughout the present specification.

FIG. 1 illustrates an example of a configuration of a system that makes a character appear in a virtual space based on the position of a terminal in real space according to the present embodiment.

The inside of ellipse 100_1 is real space #1. Terminal #1 101_1 and terminal #2 101_2 are present in real space #1. Note that while real space is defined as the inside of an ellipse, real space need not be represented by the inside of an ellipse. Here, for simplicity, real space is represented by the inside of an ellipse. This point applies to the present embodiment and throughout the present specification.

In FIG. 1, base station #1 102_1 is present in real space #1, but base station #1 102_1 may be present in a real space other than real space #1.

Base station #1 102_1 performs communication with devices including server 104 via network 103. Conceivable examples of the communication at this time include wired and/or wireless communication.

Base station #1 102_1 performs, for example, wireless communication with terminals including terminal #1 101_1 and terminal #2 101_2 (the communication may be wired and/or wireless).

Therefore, base station #1 102_1 includes a transmitter for wireless communication and a receiver for wireless communication.

Similarly, terminals including terminal #1 101_1 and terminal #2 101_2 include a transmitter for wireless communication and a receiver for wireless communication.

Base station #1 102_1 includes a transmitter for sensing and a receiver for sensing. Note that the transmitter for sensing and the transmitter for wireless communication may be separate transmitters or may be integrated into a single transmitter. Base station #1 102_1 may include a position estimation system such as Global Positioning System/Satellite (GPS).

Terminals including terminal #1 101_1 and terminal #2 101_2 include a transmitter for sensing and a receiver for sensing. Note that the transmitter for sensing and the transmitter for wireless communication may be separate transmitters or may be integrated into a single transmitter. Terminals including terminal #1 101_1 and terminal #2 101_2 may include a position estimation system such as GPS.

Base station #1 102_1 estimates terminals including terminal #1 101_1 and terminal #2 101_2. At this time, as shown in PTL 2, PTL 3, and PTL 4, for example, base station #1 102_1 may obtain position information (or sensing result information) of terminals including terminal #1 101_1 and terminal #2 101_2 by any of the following methods.

### Method 1:

Base station #1 102_1 transmits a signal for sensing. A terminal receives the signal for sensing and estimates its position (or obtains a sensing result). The terminal transmits this position information (or sensing result information) to base station #1 102_1. With this, base station #1 102_1 obtains position information (or sensing result information) of terminals including terminal #1 101_1 and terminal #2 101_2.

### Method 2:

Base station #1 102_1 transmits a signal for sensing. When the state of the signal for sensing at the terminal changes, base station #1 102_1 captures this change (receives radio waves corresponding to the signal for sensing), and base station #1 102_1 estimates the position of the terminal (or obtains a sensing result). With this, base station #1 102_1 obtains position information (or sensing result information) of terminals including terminal #1 101_1 and terminal #2 101_2.

### Method 3:

Terminals such as terminal #1 101_1 and terminal #2 101_2 transmit signals for sensing. Base station #1 102_1 receives the signals for sensing and estimates the positions (or obtains sensing results). With this, base station #1 102_1 obtains position information (or sensing result information) of terminals including terminal #1 101_1 and terminal #2 101_2.

In this way, base station #1 102_1 or the terminal may transmit the signal for sensing. Note that the method by which base station #1 102_1 obtains position information (or sensing result information) of terminals including terminal #1 101_1 and terminal #2 101_2 is not limited to method 1, method 2, and method 3, and methods described in documents including PTL 2, PTL 3, and PTL 4 can be broadly applied.

As another method, terminals including terminal #1 101_1 and terminal #2 101_2 may estimate their own positions using a position estimation system such as GPS. At this time, the terminals transmit the estimated position information to base station #1 102_1, whereby base station #1 102_1 obtains position information of terminals including terminal #1 101_1 and terminal #2 101_2.

As processing for sensing in the base station and the terminal, as shown in PTL 2, PTL 3, and PTL 4, for example, direction-based sensing processing using arrival angles obtained through direction of arrival estimation methods such as Multiple Signal Classification (MUSIC) and direction estimation, and distance-based sensing processing using, for example, reception timing differences and transmission-reception time differences can be applied.

As processing for sensing in the base station and terminal, for example, the following methods used in New Radio (NR) system can be applied: positioning (sensing) based on reception timing difference (reference signal timing difference); positioning (sensing) based on received signal power (reference signal received power) (reception power of reference signal measured at the terminal (or base station)); positioning (sensing) based on received signal arrival angle (angle of arrival) (arrival angle of radio waves from the transmitter as seen from the receiver, generally measured by the arrival time difference of radio waves received by two or more antennas); ranging (sensing) based on transmission-reception time difference (RX-Tx time difference); ranging (sensing) using roundtrip time (RTT); ranging (sensing) using angle of arrival (AoA) and/or angle of departure (AoD); and ranging (sensing) using time difference of arrival (TDOA) (difference in signal arrival time from a plurality of base stations (or a plurality of devices)).

During processing for sensing in the base station and terminal, as shown in PTL 2, PTL 3, and PTL 4, position estimation (or obtaining sensing results) may be performed by triangulation using a plurality of antennas. During processing for sensing in the base station and terminal, as shown in PTL 2, PTL 3, and PTL 4, position estimation (or obtaining sensing results) may be performed by triangulation using other devices.

Note that the following can be considered as examples of sensing: processing for estimating position of objects; processing for detecting presence or absence of objects; processing for estimating distances between a first object and a second object; processing for predicting material/substance of objects; processing for detecting movement of objects; processing for estimating conditions around devices capable of performing sensing; processing for estimating distance between devices capable of performing sensing and objects; processing for detecting external shape of objects; processing for estimating gestures; processing for estimating human movement; processing for estimating shape of a part of human body; processing for estimating movement of a part of human body; processing for detecting humans; processing for detecting parts of humans; processing for authenticating humans; processing for authenticating parts of humans; processing for estimating movement of objects; processing for estimating object shapes; processing for detecting objects; and processing for authenticating objects.

Note that in the process of detecting the position of an object, it may be possible to simultaneously detect the object and the movement of the object. In the process of detecting the presence or absence of an object, or in the process of detecting the shape of an object, it is possible to identify the target object. Stated differently, during sensing, one or more, or two or more of the above-described processes may be performed.

The system illustrated in FIG. 1 includes server 104 that includes storage that stores data related to the virtual space, includes a controller that controls the appearing and movement of characters and the like in the virtual space, and performs updating and control of virtual space information based on data from other devices. Note that the configuration of the server and details of its operation will be explained in detail later. The system illustrated in FIG. 1 includes, for example, terminal #101 101_101, terminal #2 101_102, and devices.

Base station #1 102_1, server 104, terminal #101 101_101, terminal #2 101_102, and the devices are connected to network 103, whereby devices such as base station #1 102_1, server 104, terminal #101 101_101, terminal #2 101_102, and devices are able to perform communication.

Terminal #101 101_101 and terminal #2 101_102 perform communication with base station #1 102_1. Terminal #101 101_101 and terminal #2 101_102 perform communication with devices such as server 104, terminal #101 101_101, terminal #2 101_102, and devices via base station #1 102_1 and network 103.

Note that the system configuration according to the present embodiment is not limited to the configuration illustrated in FIG. 1; it is sufficient if one or more terminals is present; it is sufficient if one or more base stations is present; it is sufficient if one or more servers is present.

FIG. 2 is an example of a configuration of server 104 illustrated in FIG. 1. Server 104, for example, includes interface 200, which receives input signal 201 as input and outputs output signal 202. Interface 200 is connected to spatial information storage 211, per-terminal character information storage 212, real space position based character controller 213, output information generator 214, and character generator 215. Note that although this element is referred to as an interface, it may be a bus.

Spatial information storage 211 is a part that stores information related to the virtual space. Note that "information related to the virtual space" may be, for example, "data of a two-dimensional space", "data of a three-dimensional space", or "converted data for representing three-dimensional space data in two dimensions". Virtual space may also include virtual space objects corresponding to objects existing in real space, such as buildings, facilities, equipment, plazas, parks, etc. Therefore, information related to the virtual space may include information on virtual space objects.

Note that information related to the virtual space may be updated, for example, by input signal 201. For example, information related to the virtual space, where updates to the virtual space objects themselves and to their positions have been performed by input signal 201, will be stored in spatial information storage 211.

Note that operations performed by per-terminal character information storage 212 will be explained in detail later.

Note that operations performed by real space position based character controller 213 will be explained in detail later.

Output information generator 214 generates output information related to the virtual space, which is to be provided to other devices such as terminals, from the information obtained from spatial information storage 211, the information obtained from per-terminal character information storage 212, and the information obtained from real space position based character controller 213. The output information related to the virtual space is output as output signal 202 from server 104. Note that the output information related to the virtual space will be delivered to one or more terminals accessing server 104.

Therefore, devices such as terminals that have obtained the information of output signal 202 will generate display content of the virtual space based on output signal 202, and display it on an internal and/or external display device.

Conceivable examples of the display device include, but are not limited to a mobile phone, a cellular phone, a smartphone, a tablet, a tablet personal computer (PC), a personal computer (the personal computer may have a monitor or be able to connect to a monitor), a notebook PC, a television, an device connected to a monitor, a game console, a portable game console, AR glasses, AR goggles, a monitor capable of displaying AR, an device connected to a monitor capable of displaying AR, VR glasses, VR goggles, a monitor capable of displaying VR, an device connected to a monitor capable of displaying VR, mixed reality (MR) glasses, a monitor capable of displaying MR, an device connected to a monitor capable of displaying MR, a car navigation system, a head mounted display, an device connected to a head mounted display, a monitor, an device connected to a monitor, a projector, an device connected to a projector, etc.

Note that an example of the configuration of the server is not limited to the example illustrated in FIG. 2.

An explanation will be provided regarding the operations performed by per-terminal character information storage 212 illustrated in FIG. 2. As an example, an explanation will be provided regarding the character corresponding to terminal #1 101_1.

For example, terminal #1 101_1 may perform communication with server 104 via base station #1 102_1 as illustrated in FIG. 1, or may perform communication with server 104 via network 103 (without going through base station #1 102_1) as illustrated in FIG. 3A.

Therefore, the terminal may perform communication with server 104 via base station #1 102_1, or may perform communication with server 104 via network 103.

An explanation will be provided regarding the procedure for associating the character corresponding to a terminal when the terminal is performing communication with server 104 as described above.

As illustrated in FIG. 3B, the terminal transmits terminal information to server 104 (301). Note that the terminal information is information that server 104 can use to identify the terminal (and/or user), and includes, for example, Subscriber Identity Module (SIM) information, telephone number information, email address information (which the user or terminal can use), user-held identification (ID), terminal ID, and Social Networking Service (SNS) information, and is considered "information on the terminal and/or user". Server 104 thus obtains the terminal information (351).

The terminal transmits character information to server 104 (302). Server 104 thus obtains the character information (352).

Note that the terminal, when generating character information, may obtain information that serves as the basis for the character from character generator 215 included in server 104 illustrated in FIG. 2, or may obtain information that serves as the basis for the character from a device different from server 104. With this, the terminal becomes capable of generating character information. As another method, the terminal may generate the character using the terminal's own functions.

Server 104 then stores the set of terminal information and character information of the terminal in per-terminal character information storage 212 illustrated in FIG. 2. Therefore, per-terminal character information storage 212 illustrated in FIG. 2 stores a "set of terminal information and character information of the terminal" per terminal. For example, in the case of FIG. 1, per-terminal character information storage 212 illustrated in FIG. 2 stores the "set of terminal information and character information of the terminal" for terminal #1 101_1, the "set of terminal information and character information of the terminal" for terminal #2 101_2, the "set of terminal information and character information of the terminal" for terminal #101 101_101, and the "set of terminal information and character information of the terminal" for terminal #102 101_102.

In the explanation of FIG. 3B, operations are described using "terminal information", but it can be similarly implemented using "user information or identification information" instead of "terminal information". In other explanations, operations are described using "terminal information", but it can be similarly implemented using "user information or identification information" instead of "terminal information".

An explanation will be provided regarding the operations performed by real space position based character controller 213 illustrated in FIG. 2. An explanation will be provided regarding the relationship between real space and virtual space.

FIG. 4A illustrates an example of real spaces. As illustrated in FIG. 4A, in real space, the inside of ellipse 100_0 is named real space #0, the inside of ellipse 100_1 is named real space #1, and the inside of ellipse 100_2 is named real space #2. Note that real spaces other than real space #0, real space #1, and real space #2 may also exist in real space.

FIG. 4B illustrates the relationship between the real spaces in FIG. 4A and virtual spaces. For example, "real space #0" in FIG. 4A is associated with "virtual space #0", "real space #1" in FIG. 4A is associated with "virtual space #1", "real space #2" in FIG. 4A is associated with "virtual space #2", and so on.

For example, "real space #X" and "virtual space #X" (where X is assumed to be an integer greater than or equal to 0) may be in a digital twin relationship. However, "real space #X" and "virtual space #X" need not be in a complete digital twin relationship, and for example, "real space #X" and "virtual space #X" may partially be in a digital twin relationship. Note that the size of the space represented by "real space #X" and "virtual space #X" may be the same or may be different.

There may be a relationship such that when a position in "real space #X" is determined, a position in "virtual space #X" is determined (this point will be explained later).

Note that digital twin refers to a technical concept of transferring and reproducing data related to objects and environments obtained in a physical real-world space (for example, a real space) to a cyber space (for example, a virtual space). Data and information obtained by utilizing IoT (Internet of Things) technology from sensor devices and the like in a real space are reflected in cyber space as if in a mirror, which is called a digital twin.

An explanation will be provided regarding an example of the operations performed by real space position based character controller 213 illustrated in FIG. 2.

As illustrated in FIG. 1, for example, terminal #1 101_1 is present in real space #1, and terminal #1 101_1 cooperates with base station #1 102_1 and performs sensing-related operations. With this, base station #1 102_1 and terminal #1 101_1 share position information of terminal #1 101_1 in real space #1. Here, the position information of terminal #1 101_1 in real space #1 may be absolute position information such as the longitude and latitude where terminal #1 101_1 is located, or the position information of terminal #1 101_1 in real space #1 may be difference information between the position where terminal #1 101_1 is located and the position where base station #1 102_1 is located (which may be called relative position information).

Base station #1 102_1 transmits the position information of terminal #1 101_1 in real space #1 to server 104, whereby server 104 obtains the position information of terminal #1 101_1 in real space #1 and comes to know "the position of terminal #1 101_1 in real space #1". Note that when server 104 obtains "difference information between the position where terminal #1 101_1 is located and the position where base station #1 102_1 is located" as the position information of terminal #1 101_1 in real space #1, server 104 may obtain the position information of base station #1 102_1, whereby server 104 obtains the position information of terminal #1 101_1 in real space #1 and comes to know "the position of terminal #1 101_1 in real space #1". Server 104 obtains information of terminal #1 101_1 from terminal #1 101_1 via base station #1 102_1.

Per-terminal character information storage 212 of server 104 illustrated in FIG. 2 outputs character information corresponding to terminal #1 101_1 by obtaining the information of terminal #1 101_1.

Real space position based character controller 213 of server 104 illustrated in FIG. 2 obtains position information of terminal #1 101_1 in real space #1, and outputs information for controlling the position of the character corresponding to terminal #1 101_1 in virtual space #1 that is associated with real space #1.

Output information generator 214 of server 104 illustrated in FIG. 2, based on information obtained from spatial information storage 211, "character information corresponding to terminal #1 101_1" output by per-terminal character information storage 212, and "information for controlling the position of the character corresponding to terminal #1 101_1 in virtual space #1 that is associated with real space #1" output by real space position based character controller 213, places the "character corresponding to terminal #1 101_1" at the "position of the character corresponding to terminal #1 101_1 in virtual space #1 that is associated with real space #1" in virtual space #1, and output information generator 214 of server 104 illustrated in FIG. 2 generates output information related to virtual space #1 including "the character corresponding to terminal #1 101_1", and output signal 202 including the output information related to virtual space #1 including "the character corresponding to terminal #1 101_1" is output from server 104. Here, output signal 202 may include information on other virtual spaces (for example, virtual space #2, virtual space #3, ...).

Therefore, when terminal #1 101_1 moves in real space #1 and the position of terminal #1 101_1 in real space #1 is updated, according to the operation explained above, the position of "the character corresponding to terminal #1 101_1" in virtual space #1 that is associated with real space #1 is updated, and output signal 202 including output information related to virtual space #1 including "the character corresponding to terminal #1 101_1" is output from server 104 at output information generator 214 of server 104 illustrated in FIG. 2.

Note that in the above explanation, terminal #1 101_1 may estimate its position in real space #1 using a position estimation system such as GPS that terminal #1 101_1 includes, and base station #1 102_1 and terminal #1 101_1 may share the position information of terminal #1 101_1 in real space #1. Other operations can be implemented similarly to those described above by operating as explained above.

Although the explanation is provided using terminal #1 101_1 and base station #1 102_1, it can be similarly implemented using other terminals and other base stations.

As illustrated in FIG. 5, for example, terminal #1 101_1 has moved to real space #2. Terminal #1 101_1 cooperates with base station #2 102_2 and performs sensing-related operations. With this, base station #2 102_2 and terminal #1 101_1 share position information of terminal #1 101_1 in real space #2. Here, the position information of terminal #1 101_1 in real space #2 may be absolute position information such as the longitude and latitude where terminal #1 101_1 is located, or the position information of terminal #1 101_1 in real space #2 may be difference information between the position where terminal #1 101_1 is located and the position where base station #2 102_2 is located (which may be called relative position information).

Base station #2 102_2 transmits the position information of terminal #1 101_1 in real space #2 to server 104, whereby server 104 obtains the position information of terminal #1 101_1 in real space #2 and comes to know "the position of terminal #1 101_1 in real space #2". Note that when server 104 obtains "difference information between the position where terminal #1 101_1 is located and the position where base station #2 102_2 is located" as the position information of terminal #1 101_1 in real space #2, server 104 may obtain the position information of base station #2 102_2, whereby server 104 obtains the position information of terminal #1 101_1 in real space #2 and comes to know "the position of terminal #1 101_1 in real space #2". Server 104 obtains information of terminal #1 101_1 from terminal #1 101_1 via base station #2 102_2.

Per-terminal character information storage 212 of server 104 illustrated in FIG. 2 outputs character information corresponding to terminal #1 101_1 by obtaining the information of terminal #1 101_1.

Real space position based character controller 213 of server 104 illustrated in FIG. 2 obtains position information of terminal #1 101_1 in real space #2, and outputs information for controlling the position of the character corresponding to terminal #1 101_1 in virtual space #2 that is associated with real space #2.

Output information generator 214 of server 104 illustrated in FIG. 2, based on information obtained from spatial information storage 211, "character information corresponding to terminal #1 101_1" output by per-terminal character information storage 212, and "information for controlling the position of the character corresponding to terminal #1 101_1 in virtual space #2 that is associated with real space #2" output by real space position based character controller 213, places the "character corresponding to terminal #1 101_1" at the "position of the character corresponding to terminal #1 101_1 in virtual space #2 that is associated with real space #2" in virtual space #2, and output information generator 214 of server 104 illustrated in FIG. 2 generates output information related to virtual space #2 including "the character corresponding to terminal #1 101_1", and output signal 202 including the output information related to virtual space #2 including "the character corresponding to terminal #1 101_1" is output from server 104. Here, output signal 202 may include information on other virtual spaces (for example, virtual space #1, virtual space #3, ...).

Therefore, when terminal #1 101_1 moves in real space #2 and the position of terminal #1 101_1 in real space #2 is updated, according to the operation explained above, the position of "the character corresponding to terminal #1 101_1" in virtual space #2 that is associated with real space #2 is updated, and output signal 202 including output information related to virtual space #2 including "the character corresponding to terminal #1 101_1" is output from server 104 at output information generator 214 of server 104 illustrated in FIG. 2.

Note that in the above explanation, terminal #1 101_1 may estimate its position in real space #2 using a position estimation system such as GPS that terminal #1 101_1 includes, and base station #2 102_2 and terminal #1 101_1 may share the position information of terminal #1 101_1 in real space #2. Other operations can be implemented similarly to those described above by operating as explained above.

Although the explanation is provided using terminal #1 101_1 and base station #2 102_2, it can be similarly implemented using other terminals and other base stations.

As described above, an explanation has been provided regarding the relationship between IDs in real space and IDs in virtual space, and the accompanying operations performed by each element. However, the relationship between IDs in real space and IDs in virtual space is not limited to the example illustrated in FIG. 4B. Note that other examples will be explained later.

Next, an explanation will be provided regarding the relationship between real spaces and cell IDs (identification).

FIG. 6 illustrates an example of an arrangement of real spaces and base stations. Note that elements that operate the same as in FIG. 1 are assigned the same reference numbers.

As illustrated in FIG. 6, the inside of ellipse 100_0 is real space #0, the inside of ellipse 100_1 is real space #1, the inside of ellipse 100_2 is real space #2, and so on.

Base station #0 102_0 is assumed to have a communicable area that includes real space #0, base station #1 102_1 is assumed to have a communicable area that includes real space #1, and base station #2 102_2 is assumed to have a communication area that includes real space #2.

Note that base station #0 102_0, base station #1 102_1, and base station #2 102_2 perform communication with server 104 illustrated in FIG. 1 and FIG. 5.

At this time, base station #1 102_1 illustrated in FIG. 1 and base station #2 102_2 illustrated in FIG. 5 transmit information such as the information illustrated in FIG. 7A to server 104.

As illustrated in FIG. 7A, base station #1 102_1 illustrated in FIG. 1 and base station #2 102_2 illustrated in FIG. 5 transmit cell ID information 701, terminal information 702, and position information 703 to server 104.

For example, base station #1 102_1 illustrated in FIG. 1 transmits, to server 104, cell ID information 701, terminal information 702 including information of terminal #1 101_1 (and information of terminal #2 101_2), and position information 703 including position information of terminal #1 101_1 (and information of terminal #2 101_2).

Here, server 104, for example, knows the ID of the real space (in this case, real space #1) from cell ID information 701, and thus, from the IDs of real spaces and virtual spaces in FIG. 4B, causes the character corresponding to terminal #1 101_1 to appear in virtual space #1. Note that details of the operation are as already explained.

In this way, by associating IDs of real spaces and virtual spaces and further cell IDs, the server can achieve the advantageous effect of being able to make a character corresponding to the terminal appear in the virtual space corresponding to the real space and cell where the terminal is present.

Note that the terminals (here, terminal #1 101_1 and terminal #2 101_2) may transmit information such as that illustrated in FIG. 7B to base station #1 102_1. Therefore, the terminal may obtain cell ID information included in the modulated signal transmitted by base station #1 102_1, and may transmit this cell ID information 751 to base station #1 102_1. Furthermore, the terminal may transmit its own terminal information 702 and position information 753 indicating its own position to base station #1 102_1. Base station #1 102_1 transmits this information to server 104.

FIG. 8 illustrates an example of an arrangement of real spaces and base stations. Note that elements that operate the same as in FIG. 1 are assigned the same reference numbers.

As illustrated in FIG. 8, the inside of ellipse 100_0 is real space #0, the inside of ellipse 100_1 is real space #1, the inside of ellipse 100_2 is real space #2, and so on.

Base station #0_0 102_0_0 is assumed to have a communicable area that includes real space #0, and base station #0_1 102_0_1 is assumed to have a communicable area that includes real space #0. Note that there may also be other base stations that have real space #0 as their communication area.

Note that base station #0_0 102_0_0 and base station #0_1 102_0_1 perform communication with server 104 illustrated in FIG. 1 and FIG. 5.

At this time, base station #0_0 102_0_0 transmits information such as the information illustrated in FIG. 7A to server 104.

As illustrated in FIG. 7A, base station #0_0 102_0_0 transmits cell ID information 701, terminal information 702, and position information 703 to server 104.

Note that base station #0_0 102_0_0 performs communication with terminal #1 101_1, for example.

For example, base station #0_0 102_0_0 transmits, to server 104, cell ID information 701, terminal information 702 including information of terminal #1 101_1, and position information 703 including position information of terminal #1 101_1.

Here, server 104, for example, knows the ID of the real space (in this case, real space #0) from cell ID information 701, and thus, from the IDs of real spaces and virtual spaces in FIG. 4B, causes the character corresponding to terminal #1 101_1 to appear in virtual space #0. Note that details of the operation are as already explained.

In this way, by associating IDs of real spaces and virtual spaces and further cell IDs, the server can achieve the advantageous effect of being able to make a character corresponding to the terminal appear in the virtual space corresponding to the real space and cell where the terminal is present.

Note that the terminal (here, terminal #1 101_1) may transmit information such as that illustrated in FIG. 7B to base station #0_0 102_0_0.

Therefore, the terminal may obtain cell ID information included in the modulated signal transmitted by base station #0_0 102_0_0, and may transmit this cell ID information 751 to base station #0_0 102_0_0.

Furthermore, the terminal may transmit its own terminal information 702 and position information 753 indicating its own position to base station #0_0 102_0_0. Base station #0_0 102_0_0 transmits this information to server 104.

Base station #0_1 102_0_1 transmits information such as the information illustrated in FIG. 7A to server 104.

As illustrated in FIG. 7A, base station #0_1 102_0_1 transmits cell ID information 701, terminal information 702, and position information 703 to server 104.

Note that base station #0_1 102_0_1 performs communication with terminal #2 101_2, for example.

For example, base station #0_1 102_0_1 transmits, to server 104, cell ID information 701, terminal information 702 including information of terminal #2 101_2, and position information 703 including position information of terminal #2 101_2.

Here, server 104, for example, knows the ID of the real space (in this case, real space #0) from cell ID information 701, and thus, from the IDs of real spaces and virtual spaces in FIG. 4B, causes the character corresponding to terminal #2 101_2 to appear in virtual space #0. Note that details of the operation are as already explained.

In this way, by associating IDs of real spaces and virtual spaces and further cell IDs, the server can achieve the advantageous effect of being able to make a character corresponding to the terminal appear in the virtual space corresponding to the real space and cell where the terminal is present.

Note that the terminal (here, terminal #2 101_2) may transmit information such as that illustrated in FIG. 7B to base station #0_1 102_0_1.

Therefore, the terminal may obtain cell ID information included in the modulated signal transmitted by base station #0_1 102_0_1, and may transmit this cell ID information 751 to base station #0_1 102_0_1.

Furthermore, the terminal may transmit its own terminal information 702 and position information 753 indicating its own position to base station #0_1 102_0_1. Base station #0_1 102_0_1 transmits this information to server 104.

In this way, for example, as illustrated in FIG. 8, a plurality of base stations may be present in real space #0, whereby real space #0 may be associated with a plurality of cell IDs.

Base station #1_0 102_1_0 is assumed to have a communicable area that includes real space #1, and base station #1_1 102_1_1 is assumed to have a communicable area that includes real space #1. Note that there may also be other base stations that have real space #1 as their communication area.

Note that base station #1_0 102_1_0 and base station #1_1 102_1_1 perform communication with server 104 illustrated in FIG. 1 and FIG. 5.

At this time, base station #1_0 102_1_0 transmits information such as the information illustrated in FIG. 7A to server 104.

As illustrated in FIG. 7A, base station #1_0 102_1_0 transmits cell ID information 701, terminal information 702, and position information 703 to server 104.

Note that base station #1_0 102_1_0 performs communication with terminal #3 101_3, for example.

For example, base station #1_0 102_1_0 transmits, to server 104, cell ID information 701, terminal information 702 including information of terminal #3 101_3, and position information 703 including position information of terminal #3 101_3.

Here, server 104, for example, knows the ID of the real space (in this case, real space #1) from cell ID information 701, and thus, from the IDs of real spaces and virtual spaces in FIG. 4B, causes the character corresponding to terminal #3 101_3 to appear in virtual space #1. Note that details of the operation are as already explained.

In this way, by associating IDs of real spaces and virtual spaces and further cell IDs, the server can achieve the advantageous effect of being able to make a character corresponding to the terminal appear in the virtual space corresponding to the real space and cell where the terminal is present.

Note that the terminal (here, terminal #3 101_3) may transmit information such as that illustrated in FIG. 7B to base station #1_0 102_1_0.

Therefore, the terminal may obtain cell ID information included in the modulated signal transmitted by base station #1_0 102_1_0, and may transmit this cell ID information 751 to base station #1_0 102_1_0.

Furthermore, the terminal may transmit its own terminal information 702 and position information 753 indicating its own position to base station #1_0 102_1_0. Base station #1_0 102_1_0 transmits this information to server 104.

Base station #1_1 102_1_1 transmits information such as the information illustrated in FIG. 7A to server 104.

As illustrated in FIG. 7A, base station #1_1 102_1_1 transmits cell ID information 701, terminal information 702, and position information 703 to server 104.

Note that base station #1_1 102_1_1 performs communication with terminal #4 101_4, for example.

For example, base station #1_1 102_1_1 transmits, to server 104, cell ID information 701, terminal information 702 including information of terminal #4 101_4, and position information 703 including position information of terminal #4 101_4.

Here, server 104, for example, knows the ID of the real space (in this case, real space #1) from cell ID information 701, and thus, from the IDs of real spaces and virtual spaces in FIG. 4B, causes the character corresponding to terminal #4 101_4 to appear in virtual space #1. Note that details of the operation are as already explained.

In this way, by associating IDs of real spaces and virtual spaces and further cell IDs, the server can achieve the advantageous effect of being able to make a character corresponding to the terminal appear in the virtual space corresponding to the real space and cell where the terminal is present.

Note that the terminal (here, terminal #4 101_4) may transmit information such as that illustrated in FIG. 7B to base station #1_1 102_1_1.

Therefore, the terminal may obtain cell ID information included in the modulated signal transmitted by base station #1_1 102_1_1, and may transmit this cell ID information 751 to base station #1_1 102_1_1.

Furthermore, the terminal may transmit its own terminal information 702 and position information 753 indicating its own position to base station #1_1 102_1_1. Base station #1_1 102_1_1 transmits this information to server 104.

In this way, for example, as illustrated in FIG. 8, a plurality of base stations may be present in real space #1, whereby real space #1 may be associated with a plurality of cell IDs.

Note that base station #2_0 102_2_0 is assumed to have a communicable area that includes real space #2, and base station #2_1 102_2_1 is assumed to have a communicable area that includes real space #2. Note that there may also be other base stations that have real space #2 as their communication area.

FIG. 9 illustrates an example of an arrangement of real spaces and a base station. Note that elements that operate the same as in FIG. 1 are assigned the same reference numbers.

As illustrated in FIG. 9, the inside of ellipse 100_0 is real space #0, the inside of ellipse 100_1 is real space #1, the inside of ellipse 100_2 is real space #2, and so on.

Base station #0 102_0 is assumed to have a communicable area that includes real space #0, real space #1, and real space #2.

Note that base station #0 102_0 performs communication with server 104 illustrated in FIG. 1 and FIG. 5.

At this time, base station #0 102_0 transmits information such as the information illustrated in FIG. 7A to server 104.

As illustrated in FIG. 7A, base station #0 102_0 transmits cell ID information 701, terminal information 702, and position information 703 to server 104.

Note that base station #0 102_0 performs communication with terminal #5 101_5, for example.

For example, base station #0 102_0 transmits, to server 104, cell ID information 701, terminal information 702 including information of terminal #5 101_5, and position information 703 including position information of terminal #5 101_5.

Here, server 104, for example, knows the ID of the real space (in this case, one of real space #0, real space #1, or real space #2) from cell ID information 701, and thus, from the IDs of real spaces and virtual spaces in FIG. 4B, causes the character corresponding to terminal #1 101_1 to appear in one of virtual space #0, virtual space #1, or virtual space #2. Note that details of the operation are as already explained.

In this way, by associating IDs of real spaces and virtual spaces and further cell IDs, the server can achieve the advantageous effect of being able to make a character corresponding to the terminal appear in the virtual space corresponding to the real space and cell where the terminal is present.

Note that the terminal (here, terminal #1 101_1) may transmit information such as that illustrated in FIG. 7B to base station #0 102_0.

Therefore, the terminal may obtain cell ID information included in the modulated signal transmitted by base station #0 102_0, and may transmit this cell ID information 751 to base station #0 102_0.

Furthermore, the terminal may transmit its own terminal information 702 and position information 753 indicating its own position to base station #0 102_0. Base station #0 102_0 transmits this information to server 104.

In this way, for example, as illustrated in FIG. 9, a base station may include a plurality of real spaces as communicable areas, whereby a cell ID may be associated with a plurality of real spaces.

An explanation will be provided regarding another example of the operations performed by real space position based character controller 213 illustrated in FIG. 2.

FIG. 4A illustrates an example of real spaces. As illustrated in FIG. 4A, in real space, the inside of ellipse 100_0 is named real space #0, the inside of ellipse 100_1 is named real space #1, and the inside of ellipse 100_2 is named real space #2. Note that real spaces other than real space #0, real space #1, and real space #2 may also exist in real space.

FIG. 10A and FIG. 10B illustrate relationships between real spaces and virtual spaces with reference to FIG. 4A as an example. For example, real space #0 is associated with virtual space #0; virtual space #1, virtual space #2, real space #1 and real space #2 are associated with virtual space #3; real space #3 and real space #4 are associated with virtual space #4 and virtual space #5; real space #5 and real space #6 are associated with virtual space #6, virtual space #7, and virtual space #8; real space #7, real space #8, real space #9, and real space #10 are associated with virtual space #9 and virtual space #10; and so on.

For example, "real space #X" and "virtual space #Y" (where X and Y are assumed to be integers greater than or equal to 0) may be in a digital twin relationship. However, "real space #X" and "virtual space #Y" need not be in a complete digital twin relationship, and for example, "real space #X" and "virtual space #Y" may partially be in a digital twin relationship. Note that the size of the space represented by "real space #X" and "virtual space #Y" may be the same or may be different.

There may be a relationship such that when a position in "real space #X" is determined, a position in "virtual space #Y" is determined.

An explanation will be provided regarding an example of the operations performed by real space position based character controller 213 illustrated in FIG. 2.

Note that, as illustrated in FIG. 11, the terminal and the base station perform communication, and the terminal and the base station perform sensing-related operations. The base station performs communication with server 104 via network 103.

For example, terminal #1 101_1 is present in real space #0 listed in FIG. 10A, and terminal #1 101_1 cooperates with base station #0 102_0 and performs sensing-related operations (it is assumed that base station #0 102_0 is a base station that has real space #0 in its communication area). With this, base station #0 102_0 and terminal #1 101_1 share position information of terminal #1 101_1 in real space #0. Here, the position information of terminal #1 101_1 in real space #0 may be absolute position information such as the longitude and latitude where terminal #1 101_1 is located, or the position information of terminal #1 101_1 in real space #0 may be difference information between the position where terminal #1 101_1 is located and the position where base station #0 102_0 is located (which may be called relative position information).

Base station #0 102_0 transmits the position information of terminal #1 101_1 in real space #0 to server 104 (the cell ID of base station #0 102_0 may also be transmitted), whereby server 104 obtains the position information of terminal #1 101_1 in real space #0 and comes to know "the position of terminal #1 101_1 in real space #0". Note that when server 104 obtains "difference information between the position where terminal #1 101_1 is located and the position where base station #0 102_0 is located" as the position information of terminal #1 101_1 in real space #0, server 104 may obtain the position information of base station #0 102_0, whereby server 104 obtains the position information of terminal #1 101_1 in real space #0 and comes to know "the position of terminal #1 101_1 in real space #0". Server 104 obtains information of terminal #1 101_1 from terminal #1 101_1 via base station #0 102_0.

Per-terminal character information storage 212 of server 104 illustrated in FIG. 2 outputs character information corresponding to terminal #1 101_1 by obtaining the information of terminal #1 101_1.

Real space position based character controller 213 of server 104 illustrated in FIG. 2 obtains position information of terminal #1 101_1 in real space #0, and outputs information for controlling the position of the character corresponding to terminal #1 101_1 in virtual space #0, or virtual space #1, or virtual space #2 that is associated with real space #0.

Output information generator 214 of server 104 illustrated in FIG. 2, based on information obtained from spatial information storage 211, "character information corresponding to terminal #1 101_1" output by per-terminal character information storage 212, and "information for controlling the position of the character corresponding to terminal #1 101_1 in virtual spaces #0, #1, and #2 that are associated with real space #0" output by real space position based character controller 213, places the "character corresponding to terminal #1 101_1" at the "position of the character corresponding to terminal #1 101_1 in virtual spaces #0, #1, and #2 that are associated with real space #0" in one of virtual spaces #0, #1, and #2, and output information generator 214 of server 104 illustrated in FIG. 2 generates output information related to virtual spaces #0, #1, and #2 including "the character corresponding to terminal #1 101_1", and output signal 202 including the output information related to virtual spaces #0, #1, and #2 including "the character corresponding to terminal #1 101_1" is output from server 104. Here, output **signal 202** may include information on other virtual spaces.

Therefore, when terminal #1 101_1 moves in real space #0 and the position of terminal #1 101_1 in real space #0 is updated, according to the operation explained above, the position of "the character corresponding to terminal #1 101_1" in virtual spaces #0, #1, and #2 that are associated with real space #0 is updated, and output signal 202 including output information related to virtual spaces #0, #1, and #2 including "the character corresponding to terminal #1 101_1" is output from server 104 at output information generator 214 of server 104 illustrated in FIG. 2.

Note that in the above explanation, terminal #1 101_1 may estimate its position in real space #0 using a position estimation system such as GPS that terminal #1 101_1 includes, and base station #0 102_0 and terminal #1 101_1 may share the position information of terminal #1 101_1 in real space #0. Other operations can be implemented similarly to those described above by operating as explained above.

Although the explanation is provided using terminal #1 101_1 and base station #0 102_0, it can be similarly implemented using other terminals and other base stations.

For example, assume terminal #1 101_1 has moved to real space #1 in FIG. 10A. Terminal #1 101_1 cooperates with, for example, base station #1 102_1 and performs sensing-related operations (it is assumed that base station #1 102_1 is a base station that has real space #1 in its communication area). With this, base station #1 102_1 and terminal #1 101_1 share position information of terminal #1 101_1 in real space #1. Here, the position information of terminal #1 101_1 in real space #1 may be absolute position information such as the longitude and latitude where terminal #1 101_1 is located, or the position information of terminal #1 101_1 in real space #1 may be difference information between the position where terminal #1 101_1 is located and the position where base station #1 102_1 is located (which may be called relative position information).

Base station #1 102_1 transmits the position information of terminal #1 101_1 in real space #1 to server 104, whereby server 104 obtains the position information of terminal #1 101_1 in real space #1 and comes to know "the position of terminal #1 101_1 in real space #1". Note that when server 104 obtains "difference information between the position where terminal #1 101_1 is located and the position where base station #1 102_1 is located" as the position information of terminal #1 101_1 in real space #1, server 104 may obtain the position information of base station #1 102_1, whereby server 104 obtains the position information of terminal #1 101_1 in real space #1 and comes to know "the position of terminal #1 101_1 in real space #1". Server 104 obtains information of terminal #1 101_1 from terminal #1 101_1 via base station #1 102_1.

Per-terminal character information storage 212 of server 104 illustrated in FIG. 2 outputs character information corresponding to terminal #1 101_1 by obtaining the information of terminal #1 101_1.

Real space position based character controller 213 of server 104 illustrated in FIG. 2 obtains position information of terminal #1 101_1 in real space #1, and outputs information for controlling the position of the character corresponding to terminal #1 101_1 in virtual space #3 that is associated with real spaces #1 and #2.

Output information generator 214 of server 104 illustrated in FIG. 2, based on information obtained from spatial information storage 211, "character information corresponding to terminal #1 101_1" output by per-terminal character information storage 212, and "information for controlling the position of the character corresponding to terminal #1 101_1 in virtual space #3 that is associated with real spaces #1 and #2" output by real space position based character controller 213, places the "character corresponding to terminal #1 101_1" at the "position of the character corresponding to terminal #1 101_1 in virtual space #3 that is associated with real spaces #1 and #2" in virtual space #3, and output information generator 214 of server 104 illustrated in FIG. 2 generates output information related to virtual space #3 including "the character corresponding to terminal #1 101_1", and output signal 202 including the output information related to virtual space #3 including "the character corresponding to terminal #1 101_1" is output from server 104. Here, output signal 202 may include information on other virtual spaces.

Therefore, when terminal #1 101_1 moves in real space #1 and the position of terminal #1 101_1 in real space #1 is updated, according to the operation explained above, the position of "the character corresponding to terminal #1 101_1" in virtual space #3 that is associated with real spaces #1 and #2 is updated, and output signal 202 including output information related to virtual space #3 including "the character corresponding to terminal #1 101_1" is output from server 104 at output information generator 214 of server 104 illustrated in FIG. 2.

Note that in the above explanation, terminal #1 101_1 may estimate its position in real space #1 using a position estimation system such as GPS that terminal #1 101_1 includes, and base station #1 102_1 and terminal #1 101_1 may share the position information of terminal #1 101_1 in real space #1. Other operations can be implemented similarly to those described above by operating as explained above.

Although the explanation is provided using terminal #1 101_1 and base station #1 102_1, it can be similarly implemented using other terminals and other base stations.

An explanation will be provided regarding the operations performed by real space position based character controller 213 illustrated in FIG. 2.

Note that, as illustrated in FIG. 11, the terminal and the base station perform communication, and the terminal and the base station perform sensing-related operations. The base station performs communication with server 104 via network 103.

For example, terminal #2 101_2 is present in real space #1 listed in FIG. 10A, and terminal #2 101_2 cooperates with base station #1 102_1 and performs sensing-related operations (it is assumed that base station #1 102_1 is a base station that has real space #1 in its communication area). With this, base station #1 102_1 and terminal #2 101_2 share position information of terminal #2 101_2 in real space #1. Here, the position information of terminal #2 101_2 in real space #1 may be absolute position information such as the longitude and latitude where terminal #2 101_2 is located, or the position information of terminal #2 101_2 in real space #1 may be difference information between the position where terminal #2 101_2 is located and the position where base station #1 102_1 is located (which may be called relative position information).

Base station #1 102_1 transmits the position information of terminal #2 101_2 in real space #1 to server 104 (the cell ID of base station #1 102_1 may also be transmitted), whereby server 104 obtains the position information of terminal #2 101_2 in real space #1 and comes to know "the position of terminal #2 101_2 in real space #1". Note that when server 104 obtains "difference information between the position where terminal #2 101_2 is located and the position where base station #1 102_1 is located" as the position information of terminal #2 101_2 in real space #1, server 104 may obtain the position information of base station #1 102_1, whereby server 104 obtains the position information of terminal #2 101_2 in real space #1 and comes to know "the position of terminal #2 101_2 in real space #1". Server 104 obtains information of terminal #2 101_2 from terminal #2 101_2 via base station #1 102_1.

Per-terminal character information storage 212 of server 104 illustrated in FIG. 2 outputs character information corresponding to terminal #2 101_2 by obtaining the information of terminal #2 101_2.

Real space position based character controller 213 of server 104 illustrated in FIG. 2 obtains position information of terminal #2 101_2 in real space #1, and outputs information for controlling the position of the character corresponding to terminal #2 101_2 in virtual space #3 that is associated with real spaces #1 and #2.

Output information generator 214 of server 104 illustrated in FIG. 2, based on information obtained from spatial information storage 211, "character information corresponding to terminal #2 101_2" output by per-terminal character information storage 212, and "information for controlling the position of the character corresponding to terminal #2 101_2 in virtual space #3 that is associated with real spaces #1 and #2" output by real space position based character controller 213, places the "character corresponding to terminal #2 101_2" at the "position of the character corresponding to terminal #2 101_2 in virtual space #3 that is associated with real spaces #1 and #2" in virtual space #3, and output information generator 214 of server 104 illustrated in FIG. 2 generates output information related to virtual space #3 including "the character corresponding to terminal #2 101_2", and output signal 202 including the output information related to virtual space #3 including "the character corresponding to terminal #2 101_2" is output from server 104. Here, output signal 202 may include information on other virtual spaces.

Therefore, when terminal #2 101_2 moves in real space #1 and the position of terminal #2 101_2 in real space #1 is updated, according to the operation explained above, the position of "the character corresponding to terminal #2 101_2" in virtual space #3 that is associated with real spaces #1 and #2 is updated, and output signal 202 including output information related to virtual space #3 including "the character corresponding to terminal #2 101_2" is output from server 104 at output information generator 214 of server 104 illustrated in FIG. 2.

Note that in the above explanation, terminal #2 101_2 may estimate its position in real space #1 using a position estimation system such as GPS that terminal #2 101_2 includes, and base station #2 102_2 and terminal #2 101_2 may share the position information of terminal #2 101_2 in real space #1. Other operations can be implemented similarly to those described above by operating as explained above.

Although the explanation is provided using terminal #2 101_2 and base station #1 102_1, it can be similarly implemented using other terminals and other base stations.

For example, assume terminal #2 101_2 has moved to real space #3 in FIG. 10A. Terminal #2 101_2 cooperates with, for example, base station #3 102_3 and performs sensing-related operations (it is assumed that base station #3 102_3 is a base station that has real space #3 in its communication area). With this, base station #3 102_3 and terminal #2 101_2 share position information of terminal #2 101_2 in real space #3. Here, the position information of terminal #2 101_2 in real space #3 may be absolute position information such as the longitude and latitude where terminal #2 101_2 is located, or the position information of terminal #2 101_2 in real space #3 may be difference information between the position where terminal #2 101_2 is located and the position where base station #3 102_3 is located (which may be called relative position information).

Base station #3 102_3 transmits the position information of terminal #2 101_2 in real space #3 to server 104, whereby server 104 obtains the position information of terminal #2 101_2 in real space #3 and comes to know "the position of terminal #2 101_2 in real space #3". Note that when server 104 obtains "difference information between the position where terminal #2 101_2 is located and the position where base station #3 102_3 is located" as the position information of terminal #2 101_2 in real space #3, server 104 may obtain the position information of base station #3 102_3, whereby server 104 obtains the position information of terminal #2 101_2 in real space #3 and comes to know "the position of terminal #2 101_2 in real space #3". Server 104 obtains information of terminal #2 101_2 from terminal #2 101_2 via base station #3 102_3.

Per-terminal character information storage 212 of server 104 illustrated in FIG. 2 outputs character information corresponding to terminal #2 101_2 by obtaining the information of terminal #2 101_2.

Real space position based character controller 213 of server 104 illustrated in FIG. 2 obtains position information of terminal #2 101_2 in real space #3, and outputs information for controlling the position of the character corresponding to terminal #2 101_2 in virtual spaces #4 and #5 that are associated with real spaces #3 and #4.

Output information generator 214 of server 104 illustrated in FIG. 2, based on information obtained from spatial information storage 211, "character information corresponding to terminal #2 101_2" output by per-terminal character information storage 212, and "information for controlling the position of the character corresponding to terminal #2 101_2 in virtual spaces #4 and #5 that are associated with real spaces #3 and #4" output by real space position based character controller 213, places the "character corresponding to terminal #2 101_2" at the "position of the character corresponding to terminal #2 101_2 in virtual spaces #4 and #5 that are associated with real spaces #3 and #4" in virtual spaces #4 and #5, and output information generator 214 of server 104 illustrated in FIG. 2 generates output information related to virtual spaces #4 and #5 including "the character corresponding to terminal #2 101_2", and output signal 202 including the output information related to virtual spaces #4 and #5 including "the character corresponding to terminal #1 101_1" is output from server 104. Here, output signal 202 may include information on other virtual spaces.

Therefore, when terminal #2 101_2 moves in real space #3 and the position of terminal #2 101_2 in real space #3 is updated, according to the operation explained above, the position of "the character corresponding to terminal #2 101_2" in virtual spaces #4 and #5 that are associated with real spaces #3 and #4 is updated, and output signal 202 including output information related to virtual spaces #4 and #5 including "the character corresponding to terminal #2 101_2" is output from server 104 at output information generator 214 of server 104 illustrated in FIG. 2.

Note that in the above explanation, terminal #2 101_2 may estimate its position in real space #3 using a position estimation system such as GPS that terminal #2 101_2 includes, and base station #3 102_3 and terminal #2 101_2 may share the position information of terminal #2 101_2 in real space #3. Other operations can be implemented similarly to those described above by operating as explained above.

Although the explanation is provided using terminal #2 101_2 and base station #3 102_3, it can be similarly implemented using other terminals and other base stations.

An explanation will be provided regarding the operations performed by real space position based character controller 213 illustrated in FIG. 2.

Note that, as illustrated in FIG. 11, the terminal and the base station perform communication, and the terminal and the base station perform sensing-related operations. The base station performs communication with server 104 via network 103.

For example, terminal #3 101_3 is present in real space #3 listed in FIG. 10A, and terminal #3 101_3 cooperates with base station #3 102_3 and performs sensing-related operations (it is assumed that base station #3 102_3 is a base station that has real space #3 in its communication area). With this, base station #3 102_3 and terminal #3 101_3 share position information of terminal #3 101_3 in real space #3. Here, the position information of terminal #3 101_3 in real space #3 may be absolute position information such as the longitude and latitude where terminal #3 101_3 is located, or the position information of terminal #3 101_3 in real space #3 may be difference information between the position where terminal #3 101_3 is located and the position where base station #3 102_3 is located (which may be called relative position information).

Base station #3 102_3 transmits the position information of terminal #3 101_3 in real space #3 to server 104 (the cell ID of base station #3 102_3 may also be transmitted), whereby server 104 obtains the position information of terminal #3 101_3 in real space #3 and comes to know "the position of terminal #3 101_3 in real space #3". Note that when server 104 obtains "difference information between the position where terminal #3 101_3 is located and the position where base station #3 102_3 is located" as the position information of terminal #3 101_3 in real space #3, server 104 may obtain the position information of base station #3 102_3, whereby server 104 obtains the position information of terminal #3 101_3 in real space #3 and comes to know "the position of terminal #3 101_3 in real space #3". Server 104 obtains information of terminal #3 101_3 from terminal #3 101_3 via base station #3 102_3.

Per-terminal character information storage 212 of server 104 illustrated in FIG. 2 outputs character information corresponding to terminal #3 101_3 by obtaining the information of terminal #3 101_3.

Real space position based character controller 213 of server 104 illustrated in FIG. 2 obtains position information of terminal #3 101_3 in real space #3, and outputs information for controlling the position of the character corresponding to terminal #3 101_3 in virtual space #4 and virtual space #5 that are associated with real spaces #3 and #4.

Output information generator 214 of server 104 illustrated in FIG. 2, based on information obtained from spatial information storage 211, "character information corresponding to terminal #3 101_3" output by per-terminal character information storage 212, and "information for controlling the position of the character corresponding to terminal #3 101_3 in virtual spaces #4 and #5 that are associated with real spaces #3 and #4" output by real space position based character controller 213, places the "character corresponding to terminal #3 101_3" at the "position of the character corresponding to terminal #3 101_3 in virtual spaces #4 and #5 that are associated with real spaces #3 and #4" in virtual spaces #4 and #5, and output information generator 214 of server 104 illustrated in FIG. 2 generates output information related to virtual spaces #4 and #5 including "the character corresponding to terminal #3 101_3", and output signal 202 including the output information related to virtual spaces #4 and #5 including "the character corresponding to terminal #3 101_3" is output from server 104. Here, output signal 202 may include information on other virtual spaces.

Therefore, when terminal #3 101_3 moves in real space #3 and the position of terminal #3 101_3 in real space #3 is updated, according to the operation explained above, the position of "the character corresponding to terminal #3 101_3" in virtual space #4 and virtual space #5 that are associated with real spaces #3 and #4 is updated, and output signal 202 including output information related to virtual space #4 and virtual space #5 including "the character corresponding to terminal #3 101_3" is output from server 104 at output information generator 214 of server 104 illustrated in FIG. 2.

Note that in the above explanation, terminal #3 101_3 may estimate its position in real space #3 using a position estimation system such as GPS that terminal #3 101_3 includes, and base station #3 102_3 and terminal #3 101_3 may share the position information of terminal #3 101_3 in real space #3. Other operations can be implemented similarly to those described above by operating as explained above.

Although the explanation is provided using terminal #3 101_3 and base station #3 102_3, it can be similarly implemented using other terminals and other base stations.

For example, assume terminal #3 101_3 has moved to real space #5 in FIG. 10B. Terminal #3 101_3 cooperates with, for example, base station #5 102_5 and performs sensing-related operations (it is assumed that base station #5 102_5 is a base station that has real space #5 in its communication area). With this, base station #5 102_5 and terminal #3 101_3 share position information of terminal #3 101_3 in real space #5. Here, the position information of terminal #3 101_3 in real space #5 may be absolute position information such as the longitude and latitude where terminal #3 101_3 is located, or the position information of terminal #3 101_3 in real space #5 may be difference information between the position where terminal #3 101_3 is located and the position where base station #5 102_5 is located (which may be called relative position information).

Base station #5 102_5 transmits the position information of terminal #3 101_3 in real space #5 to server 104, whereby server 104 obtains the position information of terminal #3 101_3 in real space #5 and comes to know "the position of terminal #3 101_3 in real space #5". Note that when server 104 obtains "difference information between the position where terminal #3 101_3 is located and the position where base station #5 102_5 is located" as the position information of terminal #3 101_3 in real space #5, server 104 may obtain the position information of base station #5 102_5, whereby server 104 obtains the position information of terminal #3 101_3 in real space #5 and comes to know "the position of terminal #3 101_3 in real space #5". Server 104 obtains information of terminal #3 101_3 from terminal #3 101_3 via base station #5 102_5.

Per-terminal character information storage 212 of server 104 illustrated in FIG. 2 outputs character information corresponding to terminal #3 101_3 by obtaining the information of terminal #3 101_3.

Real space position based character controller 213 of server 104 illustrated in FIG. 2 obtains position information of terminal #3 101_3 in real space #5, and outputs information for controlling the position of the character corresponding to terminal #3 101_3 in virtual spaces #6, #7, and #8 that are associated with real spaces #5 and #6.

Output information generator 214 of server 104 illustrated in FIG. 2, based on information obtained from spatial information storage 211, "character information corresponding to terminal #3 101_3" output by per-terminal character information storage 212, and "information for controlling the position of the character corresponding to terminal #3 101_3 in virtual spaces #6, #7, and #8 that are associated with real spaces #5 and #6" output by real space position based character controller 213, places the "character corresponding to terminal #3 101_3" at the "position of the character corresponding to terminal #3 101_3 in virtual spaces #6, #7, and #8 that are associated with real spaces #5 and #6" in virtual spaces #6, #7, and #8, and output information generator 214 of server 104 illustrated in FIG. 2 generates output information related to virtual spaces #6, #7, and #8 including "the character corresponding to terminal #3 101_3", and output signal 202 including the output information related to virtual spaces #6, #7, and #8 including "the character corresponding to terminal #1 101_1" is output from server 104. Here, output signal 202 may include information on other virtual spaces.

Therefore, when terminal #3 101_3 moves in real space #5 and the position of terminal #3 101_3 in real space #5 is updated, according to the operation explained above, the position of "the character corresponding to terminal #3 101_3" in virtual spaces #6, #7, and #8 that are associated with real spaces #5 and #6 is updated, and output signal 202 including output information related to virtual spaces #6, #7, and #8 including "the character corresponding to terminal #3 101_3" is output from server 104 at output information generator 214 of server 104 illustrated in FIG. 2.

Note that in the above explanation, terminal #3 101_3 may estimate its position in real space #5 using a position estimation system such as GPS that terminal #3 101_3 includes, and base station #5 102_5 and terminal #3 101_3 may share the position information of terminal #3 101_3 in real space #5. Other operations can be implemented similarly to those described above by operating as explained above.

Although the explanation is provided using terminal #3 101_3 and base station #5 102_5, it can be similarly implemented using other terminals and other base stations.

An explanation will be provided regarding the operations performed by real space position based character controller 213 illustrated in FIG. 2.

Note that, as illustrated in FIG. 11, the terminal and the base station perform communication, and the terminal and the base station perform sensing-related operations. The base station performs communication with server 104 via network 103.

For example, terminal #4 101_4 is present in real space #5 listed in FIG. 10B, and terminal #4 101_4 cooperates with base station #5 102_5 and performs sensing-related operations (it is assumed that base station #5 102_5 is a base station that has real space #5 in its communication area). With this, base station #5 102_5 and terminal #4 101_4 share position information of terminal #4 101_4 in real space #5. Here, the position information of terminal #4 101_4 in real space #5 may be absolute position information such as the longitude and latitude where terminal #4 101_4 is located, or the position information of terminal #4 101_4 in real space #5 may be difference information between the position where terminal #4 101_4 is located and the position where base station #5 102_5 is located (which may be called relative position information).

Base station #5 102_5 transmits the position information of terminal #4 101_4 in real space #5 to server 104 (the cell ID of base station #5 102_5 may also be transmitted), whereby server 104 obtains the position information of terminal #4 101_4 in real space #5 and comes to know "the position of terminal #4 101_4 in real space #5". Note that when server 104 obtains "difference information between the position where terminal #4 101_4 is located and the position where base station #5 102_5 is located" as the position information of terminal #4 101_4 in real space #5, server 104 may obtain the position information of base station #5 102_5, whereby server 104 obtains the position information of terminal #4 101_4 in real space #5 and comes to know "the position of terminal #4 101_4 in real space #5". Server 104 obtains information of terminal #4 101_4 from terminal #4 101_4 via base station #5 102_5.

Per-terminal character information storage 212 of server 104 illustrated in FIG. 2 outputs character information corresponding to terminal #4 101_4 by obtaining the information of terminal #4 101_4.

Real space position based character controller 213 of server 104 illustrated in FIG. 2 obtains position information of terminal #4 101_4 in real space #5, and outputs information for controlling the position of the character corresponding to terminal #4 101_4 in virtual spaces #6, #7, and #8 that are associated with real spaces #5 and #6.

Output information generator 214 of server 104 illustrated in FIG. 2, based on information obtained from spatial information storage 211, "character information corresponding to terminal #4 101_4" output by per-terminal character information storage 212, and "information for controlling the position of the character corresponding to terminal #4 101_4 in virtual spaces #6, #7, and #8 that are associated with real spaces #5 and #6" output by real space position based character controller 213, places the "character corresponding to terminal #4 101_4" at the "position of the character corresponding to terminal #4 101_4 in virtual spaces #6, #7, and #8 that are associated with real spaces #5 and #6" in virtual spaces #6, #7, and #8, and output information generator 214 of server 104 illustrated in FIG. 2 generates output information related to virtual spaces #6, #7, and #8 including "the character corresponding to terminal #4 101_4", and output signal 202 including the output information related to virtual spaces #6, #7, and #8 including "the character corresponding to terminal #4 101_4" is output from server 104. Here, output signal 202 may include information on other virtual spaces.

Therefore, when terminal #4 101_4 moves in real space #5 and the position of terminal #4 101_4 in real space #5 is updated, according to the operation explained above, the position of "the character corresponding to terminal #4 101_4" in virtual spaces #6, #7, and #8 that are associated with real spaces #5 and #6 is updated, and output signal 202 including output information related to virtual spaces #6, #7, and #8 including "the character corresponding to terminal #4 101_4" is output from server 104 at output information generator 214 of server 104 illustrated in FIG. 2.

Note that in the above explanation, terminal #4 101_4 may estimate its position in real space #5 using a position estimation system such as GPS that terminal #4 101_4 includes, and base station #5 102_5 and terminal #4 101_4 may share the position information of terminal #4 101_4 in real space #5. Other operations can be implemented similarly to those described above by operating as explained above.

Although the explanation is provided using terminal #4 101_4 and base station #5 102_5, it can be similarly implemented using other terminals and other base stations.

For example, assume terminal #4 101_4 has moved to real space #7 in FIG. 10B. Terminal #4 101_4 cooperates with, for example, base station #7 102_7 and performs sensing-related operations (it is assumed that base station #7 102_7 is a base station that has real space #7 in its communication area). With this, base station #7 102_7 and terminal #4 101_4 share position information of terminal #4 101_4 in real space #7. Here, the position information of terminal #4 101_4 in real space #7 may be absolute position information such as the longitude and latitude where terminal #4 101_4 is located, or the position information of terminal #4 101_4 in real space #7 may be difference information between the position where terminal #4 101_4 is located and the position where base station #7 102_7 is located (which may be called relative position information).

Base station #7 102_7 transmits the position information of terminal #4 101_4 in real space #7 to server 104, whereby server 104 obtains the position information of terminal #4 101_4 in real space #7 and comes to know "the position of terminal #4 101_4 in real space #7". Note that when server 104 obtains "difference information between the position where terminal #4 101_4 is located and the position where base station #7 102_7 is located" as the position information of terminal #4 101_4 in real space #7, server 104 may obtain the position information of base station #7 102_7, whereby server 104 obtains the position information of terminal #4 101_4 in real space #7 and comes to know "the position of terminal #4 101_4 in real space #7". Server 104 obtains information of terminal #4 101_4 from terminal #4 101_4 via base station #7 102_7.

Per-terminal character information storage 212 of server 104 illustrated in FIG. 2 outputs character information corresponding to terminal #4 101_4 by obtaining the information of terminal #4 101_4.

Real space position based character controller 213 of server 104 illustrated in FIG. 2 obtains position information of terminal #4 101_4 in real space #7, and outputs information for controlling the position of the character corresponding to terminal #4 101_4 in virtual spaces #9 and #10 that are associated with real spaces #7, #8, #9, and #10.

Output information generator 214 of server 104 illustrated in FIG. 2, based on information obtained from spatial information storage 211, "character information corresponding to terminal #4 101_4" output by per-terminal character information storage 212, and "information for controlling the position of the character corresponding to terminal #4 101_4 in virtual spaces #9 and #10 that are associated with real spaces #7, #8, #9, and #10" output by real space position based character controller 213, places the "character corresponding to terminal #4 101_4" at the "position of the character corresponding to terminal #4 101_4 in virtual spaces #9 and #10 that are associated with real spaces #7, #8, #9, and #10" in virtual spaces #9 and #10, and output information generator 214 of server 104 illustrated in FIG. 2 generates output information related to virtual spaces #9 and #10 including "the character corresponding to terminal #4 101_4", and output signal 202 including the output information related to virtual spaces #9 and #10 including "the character corresponding to terminal #1 101_1" is output from server 104. Here, output signal 202 may include information on other virtual spaces.

Therefore, when terminal #4 101_4 moves in real space #7 and the position of terminal #4 101_4 in real space #7 is updated, according to the operation explained above, the position of "the character corresponding to terminal #4 101_4" in virtual spaces #9 and #10 that are associated with real spaces #7, #8, #9, and #10 is updated, and output signal 202 including output information related to virtual spaces #9 and #10 including "the character corresponding to terminal #4 101_4" is output from server 104 at output information generator 214 of server 104 illustrated in FIG. 2.

Note that in the above explanation, terminal #4 101_4 may estimate its position in real space #7 using a position estimation system such as GPS that terminal #4 101_4 includes, and base station #7 102_7 and terminal #4 101_4 may share the position information of terminal #4 101_4 in real space #7. Other operations can be implemented similarly to those described above by operating as explained above.

Although the explanation is provided using terminal #4 101_4 and base station #7 102_7, it can be similarly implemented using other terminals and other base stations.

An explanation will be provided regarding the operations performed by real space position based character controller 213 illustrated in FIG. 2.

Note that, as illustrated in FIG. 11, the terminal and the base station perform communication, and the terminal and the base station perform sensing-related operations. The base station performs communication with server 104 via network 103.

For example, terminal #5 101_5 is present in real space #7 listed in FIG. 10B, and terminal #5 101_5 cooperates with base station #7 102_7 and performs sensing-related operations (it is assumed that base station #7 102_7 is a base station that has real space #7 in its communication area). With this, base station #7 102_7 and terminal #5 101_5 share position information of terminal #5 101_5 in real space #7. Here, the position information of terminal #5 101_5 in real space #7 may be absolute position information such as the longitude and latitude where terminal #5 101_5 is located, or the position information of terminal #5 101_5 in real space #7 may be difference information between the position where terminal #5 101_5 is located and the position where base station #7 102_7 is located (which may be called relative position information).

Base station #7 102_7 transmits the position information of terminal #5 101_5 in real space #7 to server 104 (the cell ID of base station #7 102_7 may also be transmitted), whereby server 104 obtains the position information of terminal #5 101_5 in real space #7 **and comes** to know "the position of terminal #5 101_5 in real space #7". Note that when server 104 obtains "difference information between the position where terminal #5 101_5 is located and the position where base station #7 102_7 is located" as the position information of terminal #5 101_5 in real space #7, server 104 may obtain the position information of base station #7 102_7, whereby server 104 obtains the position information of terminal #5 101_5 in real space #7 and comes to know "the position of terminal #5 101_5 in real space #7". Server 104 obtains information of terminal #5 101_5 from terminal #5 101_5 via base station #7 102_7.

Per-terminal character information storage 212 of server 104 illustrated in FIG. 2 outputs character information corresponding to terminal #5 101_5 by obtaining the information of terminal #5 101_5.

Real space position based character controller 213 of server 104 illustrated in FIG. 2 obtains position information of terminal #5 101_5 in real space #7, and outputs information for controlling the position of the character corresponding to terminal #5 101_5 in virtual spaces #9 and #10 that are associated with real spaces #7, #8, #9, and #10.

Output information generator 214 of server 104 illustrated in FIG. 2, based on information obtained from spatial information storage 211, "character information corresponding to terminal #5 101_5" output by per-terminal character information storage 212, and "information for controlling the position of the character corresponding to terminal #5 101_5 in virtual spaces #9 and #10 that are associated with real spaces #7, #8, #9, and # 10" output by real space position based character controller 213, places the "character corresponding to terminal #5 101_5" at the "position of the character corresponding to terminal #5 101_5 in virtual spaces #9 and #10 that are associated with real spaces #7, #8, #9, and #10" in virtual spaces #9 and #10, and output information generator 214 of server 104 illustrated in FIG. 2 generates output information related to virtual spaces #9 and #10 including "the character corresponding to terminal #5 101_5", and output signal 202 including the output information related to virtual spaces #9 and #10 including "the character corresponding to terminal #5 101_5" is output from server 104. Here, output signal 202 may include information on other virtual spaces.

Therefore, when terminal #5 101_5 moves in real space #7 and the position of terminal #5 101_5 in real space #7 is updated, according to the operation explained above, the position of "the character corresponding to terminal #5 101_5" in virtual spaces #9 and #10 that are associated with real spaces #7, #8, #9, and #10 is updated, and output signal 202 including output information related to virtual spaces #9 and #10 including "the character corresponding to terminal #5 101_5" is output from server 104 at output information generator 214 of server 104 illustrated in FIG. 2.

Note that in the above explanation, terminal #5 101_5 may estimate its position in real space #7 using a position estimation system such as GPS that terminal #5 101_5 includes, and base station #7 102_7 and terminal #5 101_5 may share the position information of terminal #5 101_5 in real space #7. Other operations can be implemented similarly to those described above by operating as explained above.

Although the explanation is provided using terminal #5 101_5 and base station #7 102_7, it can be similarly implemented using other terminals and other base stations.

For example, assume terminal #5 101_5 has moved to real space #9 in FIG. 10B. Terminal #5 101_5 cooperates with, for example, base station #9 102_9 and performs sensing-related operations (it is assumed that base station #9 102_9 is a base station that has real space #9 in its communication area). With this, base station #9 102_9 and terminal #5 101_5 share position information of terminal #5 101_5 in real space #9. Here, the position information of terminal #5 101_5 in real space #9 may be absolute position information such as the longitude and latitude where terminal #5 101_5 is located, or the position information of terminal #5 101_5 in real space #9 may be difference information between the position where terminal #5 101_5 is located and the position where base station #9 102_9 is located (which may be called relative position information).

Base station #9 102_9 transmits the position information of terminal #5 101_5 in real space #9 to server 104, whereby server 104 obtains the position information of terminal #5 101_5 in real space #9 and comes to know "the position of terminal #5 101_5 in real space #9". Note that when server 104 obtains "difference information between the position where terminal #5 101_5 is located and the position where base station #9 102_9 is located" as the position information of terminal #5 101_5 in real space #9, server 104 may obtain the position information of base station #9 102_9, whereby server 104 obtains the position information of terminal #5 101_5 in real space #9 and comes to know "the position of terminal #5 101_5 in real space #9". Server 104 obtains information of terminal #5 101_5 from terminal #5 101_5 via base station #9 102_9.

Per-terminal character information storage 212 of server 104 illustrated in FIG. 2 outputs character information corresponding to terminal #5 101_5 by obtaining the information of terminal #5 101_5.

Real space position based character controller 213 of server 104 illustrated in FIG. 2 obtains position information of terminal #5 101_5 in real space #9, and outputs information for controlling the position of the character corresponding to terminal #5 101_5 in virtual spaces #9 and #10 that are associated with real spaces #7, #8, #9, and #10.

Output information generator 214 of server 104 illustrated in FIG. 2, based on information obtained from spatial information storage 211, "character information corresponding to terminal #5 101_5" output by per-terminal character information storage 212, and "information for controlling the position of the character corresponding to terminal #5 101_5 in virtual spaces #9 and #10 that are associated with real spaces #7, #8, #9, and #10" output by real space position based character controller 213, places the "character corresponding to terminal #5 101_5" at the "position of the character corresponding to terminal #5 101_5 in virtual spaces #9 and #10 that are associated with real spaces #7, #8, #9, and #10" in virtual spaces #9 and #10, and output information generator 214 of server 104 illustrated in FIG. 2 generates output information related to virtual spaces #9 and #10 including "the character corresponding to terminal #5 101_5", and output signal 202 including the output information related to virtual spaces #9 and #10 including "the character corresponding to terminal #1 101_1" is output from server 104. Here, output signal 202 may include information on other virtual spaces.

Therefore, when terminal #5 101_5 moves in real space #9 and the position of terminal #5 101_5 in real space #9 is updated, according to the operation explained above, the position of "the character corresponding to terminal #5 101_5" in virtual spaces #9 and #10 that are associated with real spaces #7, #8, #9, and #10 is updated, and output signal 202 including output information related to virtual spaces #9 and #10 including "the character corresponding to terminal #5 101_5" is output from server 104 at output information generator 214 of server 104 illustrated in FIG. 2.

Note that in the above explanation, terminal #5 101_5 may estimate its position in real space #9 using a position estimation system such as GPS that terminal #5 101_5 includes, and base station #9 102_9 and terminal #5 101_5 may share the position information of terminal #5 101_5 in real space #9. Other operations can be implemented similarly to those described above by operating as explained above.

Although the explanation is provided using terminal #5 101_5 and base station #9 102_9, it can be similarly implemented using other terminals and other base stations.

As described above, an explanation has been provided regarding the relationship between IDs in real space and IDs in virtual space, and the accompanying operations performed by each element. However, the relationship between IDs in real space and IDs in virtual space is not limited to the example illustrated in FIG. 10B, and can be implemented as described above as long as one or more IDs in real space are associated with one or more IDs in virtual space.

Next, an explanation will be provided regarding the relationship between real spaces and cell IDs (identification) in FIG. 10A and FIG. 10B for base stations present in real space #0, base stations present in real space #1, base stations present in real space #2, base stations present in real space #3, base stations present in real space #4, base stations present in real space #5, base stations present in real space #6, base stations present in real space #7, base stations present in real space #8, base stations present in real space #9, base stations present in real space #10, and so on.

Base stations present in real space #0, base stations present in real space #1, base stations present in real space #2, base stations present in real space #3, base stations present in real space #4, base stations present in real space #5, base stations present in real space #6, base stations present in real space #7, base stations present in real space #8, base stations present in real space #9, base stations present in real space #10, and so on, may be, for example, as illustrated in FIG. 12, FIG. 13, and FIG. 14.

FIG. 12 illustrates an example of an arrangement of real spaces and base stations. As illustrated in FIG. 12, the inside of ellipse 100_a0 is real space #a0, the inside of ellipse 100_a1 is real space #a1, the inside of ellipse 100_a2 is real space #a2, and so on.

Base station #b0 102_b0 is assumed to have a communicable area that includes real space #a0, base station #b1 102_b1 is assumed to have a communicable area that includes real space #a1, and base station #b2 102_b2 is assumed to have a communication area that includes real space #a2.

Note that base station #b0 102_b0, base station #b1 102_b1, and base station #b2 102_b2 perform communication with server 104 as illustrated in FIG. 11.

At this time, base stations such as base station #b0 102_b0, base station #b1 102_b1, and base station #b2 102_b2 transmit information such as the information illustrated in FIG. 7A to server 104.

As illustrated in FIG. 7A, the base station transmits cell ID information 701, terminal information 702, and position information 703 to server 104.

For example, base station #b0 102_b0 transmits, to server 104, cell ID information 701, terminal information 702 of terminals communicating with base station #b0 102_b0, and position information 703 of those terminals.

Here, server 104, for example, knows the ID of the real space (in this case, real space #a0) from cell ID information 701, and thus, from the IDs of real spaces and virtual spaces in FIG. 10A and FIG. 10B, causes the character corresponding to the terminal to appear in the virtual space. Note that details of the operation are as already explained.

In this way, by associating IDs of real spaces and virtual spaces and further cell IDs, the server can achieve the advantageous effect of being able to make a character corresponding to the terminal appear in the virtual space corresponding to the real space and cell where the terminal is present.

Note that the terminal may transmit information such as that illustrated in FIG. 7B to a base station (in this case, base station #b0 102_b0). Therefore, the terminal may obtain cell ID information included in the modulated signal transmitted by the base station, and may transmit this cell ID information 751 to the base station. Furthermore, the terminal may transmit its own terminal information 702 and position information 753 indicating its own position to the base station. The base station transmits this information to server 104.

Although FIG. 12 illustrates an example of the relationship between real spaces and base stations, FIG. 12 is merely one example; the relationship between real spaces and base stations (cell IDs) is not limited to the example illustrated in FIG. 12.

As one example, base station #b0 102_b0 in FIG. 12 may be capable of performing communication and sensing processing with terminals present in real space #a1 (or a part of real space #a1) and/or real space #a2 (or a part of real space #a2) (and so on).

Here, base station #b0 102_b0 (cell ID) will be associated with real space #a1 (or a part of real space #a1) and/or real space #a2 (or a part of real space #a2) (and so on). Stated differently, when base station #b0 102_b0 is performing communication and sensing processing with terminals present in real space #a1 (or a part of real space #a1) and/or real space #a2 (or a part of real space #a2), the characters of those terminals will appear in the virtual space corresponding to real space #a1 (or a part of real space #a1) and/or real space #a2 (or a part of real space #a2).

FIG. 13 illustrates an example of an arrangement of real spaces and base stations. As illustrated in FIG. 13, the inside of ellipse 100_a0 is real space #a0, the inside of ellipse 100_a1 is real space #a1, the inside of ellipse 100_a2 is real space #a2, and so on.

Base station #b0_0 102_b0_0 is assumed to have a communicable area that includes real space #a0, and base station #b0_1 102_b0_1 is assumed to have a communicable area that includes real space #a0. Note that there may also be other base stations that have real space #a0 as their communication area.

Note that base station #b0_0 102_b0_0 and base station #b0_1 102_b0_1 perform communication with server 104 as illustrated in FIG. 11.

At this time, base stations such as base station #b0_0 102_b0_0 and base station #b0_1 102_b0_1 transmit information such as the information illustrated in FIG. 7A to server 104.

As illustrated in FIG. 7A, the base station transmits cell ID information 701, terminal information 702, and position information 703 to server 104.

For example, base station #b0_0 102_b0_0 transmits, to server 104, cell ID information 701, terminal information 702 of terminals communicating with base station #b0_0 102_b0_0, and position information 703 of those terminals.

Here, server 104, for example, knows the ID of the real space (in this case, real space #a0) from cell ID information 701, and thus, from the IDs of real spaces and virtual spaces in FIG. 10A and FIG. 10B, causes the character corresponding to the terminal to appear in the virtual space. Note that details of the operation are as already explained.

In this way, by associating IDs of real spaces and virtual spaces and further cell IDs, the server can achieve the advantageous effect of being able to make a character corresponding to the terminal appear in the virtual space corresponding to the real space and cell where the terminal is present.

Note that the terminal may transmit information such as that illustrated in FIG. 7B to a base station (in this case, base station #b0_0 102_b0_0). Therefore, the terminal may obtain cell ID information included in the modulated signal transmitted by the base station, and may transmit this cell ID information 751 to the base station.

Furthermore, the terminal may transmit its own terminal information 702 and position information 753 indicating its own position to the base station. The base station transmits this information to server 104.

Base station #b0_1 102_b0_1 transmits information such as the information illustrated in FIG. 7A to server 104.

As illustrated in FIG. 7A, the base station transmits cell ID information 701, terminal information 702, and position information 703 to server 104.

For example, base station #b0_1 102_b0_1 transmits, to server 104, cell ID information 701, terminal information 702 of terminals communicating with base station #b0_1 102_b0_1, and position information 703 of those terminals.

Here, server 104, for example, knows the ID of the real space (in this case, real space #a0) from cell ID information 701, and thus, from the IDs of real spaces and virtual spaces in FIG. 10A and FIG. 10B, causes the character corresponding to the terminal to appear in the virtual space. Note that details of the operation are as already explained.

In this way, by associating IDs of real spaces and virtual spaces and further cell IDs, the server can achieve the advantageous effect of being able to make a character corresponding to the terminal appear in the virtual space corresponding to the real space and cell where the terminal is present.

Note that the terminal may transmit information such as that illustrated in FIG. 7B to a base station (in this case, base station #b0_1 102_b0_1). Therefore, the terminal may obtain cell ID information included in the modulated signal transmitted by the base station, and may transmit this cell ID information 751 to the base station.

Furthermore, the terminal may transmit its own terminal information 702 and position information 753 indicating its own position to the base station. The base station transmits this information to server 104.

In this way, for example, as illustrated in FIG. 13, a plurality of base stations may be present in real space #a0, whereby real space #a0 may be associated with a plurality of cell IDs.

Base station #b1_0 102_b1_0 is assumed to have a communicable area that includes real space #a1, and base station #b1_1 102_b1_1 is assumed to have a communicable area that includes real space #a1. Note that there may also be other base stations that have real space #a1 as their communication area.

Note that base station #b1_0 102_b1_0 and base station #b1_1 102_b1_1 perform communication with server 104 as illustrated in FIG. 11.

At this time, base stations such as base station #b1_0 102_b1_0 and base station #b1_1 102_b1_1 transmit information such as the information illustrated in FIG. 7A to server 104.

As illustrated in FIG. 7A, the base station transmits cell ID information 701, terminal information 702, and position information 703 to server 104.

For example, base station #b1_0 102_b1_0 transmits, to server 104, cell ID information 701, terminal information 702 of terminals communicating with base station #b1_0 102_b1_0, and position information 703 of those terminals.

Here, server 104, for example, knows the ID of the real space (in this case, real space #a1) from cell ID information 701, and thus, from the IDs of real spaces and virtual spaces in FIG. 10A and FIG. 10B, causes the character corresponding to the terminal to appear in the virtual space. Note that details of the operation are as already explained.

In this way, by associating IDs of real spaces and virtual spaces and further cell IDs, the server can achieve the advantageous effect of being able to make a character corresponding to the terminal appear in the virtual space corresponding to the real space and cell where the terminal is present.

Note that the terminal may transmit information such as that illustrated in FIG. 7B to a base station (in this case, base station #b1_0 102_b1_0). Therefore, the terminal may obtain cell ID information included in the modulated signal transmitted by the base station, and may transmit this cell ID information 751 to the base station.

Furthermore, the terminal may transmit its own terminal information 702 and position information 753 indicating its own position to the base station. The base station transmits this information to server 104.

Base station #b0_1 102_b1_1 transmits information such as the information illustrated in FIG. 7A to server 104.

As illustrated in FIG. 7A, the base station transmits cell ID information 701, terminal information 702, and position information 703 to server 104.

For example, base station #b1_1 102_b1_1 transmits, to server 104, cell ID information 701, terminal information 702 of terminals communicating with base station #b1_1 102_b1_1, and position information 703 of those terminals.

Here, server 104, for example, knows the ID of the real space (in this case, real space #a1) from cell ID information 701, and thus, from the IDs of real spaces and virtual spaces in FIG. 10A and FIG. 10B, causes the character corresponding to the terminal to appear in the virtual space. Note that details of the operation are as already explained.

In this way, by associating IDs of real spaces and virtual spaces and further cell IDs, the server can achieve the advantageous effect of being able to make a character corresponding to the terminal appear in the virtual space corresponding to the real space and cell where the terminal is present.

Note that the terminal may transmit information such as that illustrated in FIG. 7B to a base station (in this case, base station #b1_1 102_b1_1). Therefore, the terminal may obtain cell ID information included in the modulated signal transmitted by the base station, and may transmit this cell ID information 751 to the base station.

Furthermore, the terminal may transmit its own terminal information 702 and position information 753 indicating its own position to the base station. The base station transmits this information to server 104.

In this way, for example, as illustrated in FIG. 13, a plurality of base stations may be present in real space #a1, whereby real space #a1 may be associated with a plurality of cell IDs.

Base station #b2_0 102_b2_0 is assumed to have a communicable area that includes real space #b2, and base station #b2_1 102_b2_1 is assumed to have a communicable area that includes real space #b2. Note that there may also be other base stations that have real space #b2 as their communication area.

Although FIG. 13 illustrates an example of the relationship between real spaces and base stations, FIG. 13 is merely one example; the relationship between real spaces and base stations (cell IDs) is not limited to the example illustrated in FIG. 13.

As one example, base station #b0_0 102_b0_0 in FIG. 13 may be capable of performing communication and sensing processing with terminals present in real space #a1 (or a part of real space #a1) and/or real space #a2 (or a part of real space #a2) (and so on).

Here, base station #b0_0 102_b0_0 (cell ID) will be associated with real space #a1 (or a part of real space #a1) and/or real space #a2 (or a part of real space #a2) (and so on). Stated differently, when base station #b0_0 102_b0_0 is performing communication and sensing processing with terminals present in real space #a1 (or a part of real space #a1) and/or real space #a2 (or a part of real space #a2), the characters of those terminals will appear in the virtual space corresponding to real space #a1 (or a part of real space #a1) and/or real space #a2 (or a part of real space #a2).

FIG. 14 illustrates an example of an arrangement of real spaces and a base station. As illustrated in FIG. 14, the inside of ellipse 100_a0 is real space #a0, the inside of ellipse 100_a1 is real space #a1, the inside of ellipse 100_a2 is real space #a2, and so on.

Base station #b0 102_b0 is assumed to have a communicable area that includes real space #a0, real space #a1, and real space #a2.

Note that base station #b0 102_b0 performs communication with server 104 as illustrated in FIG. 11.

At this time, base station #b0 102_b0 transmits information such as the information illustrated in FIG. 7A to server 104.

As illustrated in FIG. 7A, base station #b0 102_b0 transmits cell ID information 701, terminal information 702, and position information 703 to server 104.

For example, base station #b0 102_b0 transmits, to server 104, cell ID information 701, terminal information 702 of terminals communicating with base station #b0 102_b0, and position information 703 of those terminals.

Here, server 104, for example, knows the ID of the real space (in this case, any of real space #b0, real space #b1, or real space #b2) from cell ID information 701, and thus, from the IDs of real spaces and virtual spaces in FIG. 10A and FIG. 10B, causes the character corresponding to the terminal to appear in the virtual space. Note that details of the operation are as already explained.

In this way, by associating IDs of real spaces and virtual spaces and further cell IDs, the server can achieve the advantageous effect of being able to make a character corresponding to the terminal appear in the virtual space corresponding to the real space and cell where the terminal is present.

Note that the terminal may transmit information such as that illustrated in FIG. 7B to base station #b0 102_b0.

Therefore, the terminal may obtain cell ID information included in the modulated signal transmitted by base station #b0 102_b0, and may transmit this cell ID information 751 to base station #b0 102_b0.

Furthermore, the terminal may transmit its own terminal information 702 and position information 753 indicating its own position to base station #b0 102_b0. Base station #b0 102_b0 transmits this information to server 104.

In this way, for example, as illustrated in FIG. 14, a base station may include a plurality of real spaces as communicable areas, whereby a cell ID may be associated with a plurality of real spaces.

Although FIG. 14 illustrates an example of the relationship between real spaces and base stations, FIG. 14 is merely one example; the relationship between real spaces and base stations (cell IDs) is not limited to the example illustrated in FIG. 14.

In the above example, an explanation was provided regarding examples of associating real spaces and virtual spaces, or associating real spaces and cell IDs, or associating real spaces, cell IDs, and virtual spaces, but what is associated may be cell IDs and virtual spaces. In such cases, implementation becomes possible by considering the explanation regarding "real space" in the above description as "cell ID" and implementing accordingly.

In the present embodiment, as one example, an explanation was provided regarding performing sensing processing between a base station and a terminal. An explanation will be provided regarding the characteristics of this point.

FIG. 15 is an example of a configuration of antennas included in the base station and terminal. FIG. 15 illustrates 1501 as an antenna (element), and for example, the base station and terminal include 16 antennas, thereby enabling transmission directivity control (transmission beamforming) and reception directivity control (reception beamforming).

Therefore, the base station and terminal can perform transmission directivity control (transmission beamforming) and reception directivity control (reception beamforming) as illustrated in FIG. 16A and FIG. 16B.

For example, consider a three-dimensional space as illustrated in FIG. 16C. Accordingly, there is an x-axis, a y-axis, and a z-axis.

As illustrated in FIG. 16A, for example, using antenna 1600 of a base station or terminal having a configuration like that illustrated in FIG. 15, it is possible to form "transmission beams and/or reception beams 1601", that is, it is possible to form a plurality of "transmission beams and/or reception beams 1601" in the x-y-axis direction, and as illustrated in FIG. 16B, for example, using antenna 1600 of a base station or terminal having a configuration like that illustrated in FIG. 15, it is possible to form "transmission beams and/or reception beams 1602", that is, it becomes possible to form a plurality of "transmission beams and/or reception beams 1602" in the z-axis direction.

Therefore, the base station and terminal can perform three-dimensional sensing processing, whereby the base station and terminal can perform three-dimensional position estimation (for example, estimation of position in the height direction in addition to the latitude and longitude planar position).

Note that the example of three-dimensional sensing is not limited to this example, and the terminal may perform three-dimensional position estimation using other position estimation systems.

As described above, server 104, which obtains the terminal position information via the base station, will make a character corresponding to the terminal appear based on the terminal position information. A specific example of this will be explained.

For example, assume the following situation.
- The terminal is associated with a character in the shape of a "person", and server 104, based on the terminal position information, will cause a character in the shape of a "person" corresponding to the terminal to appear in the virtual space.
- The terminal performs sensing processing with the base station, and the base station and/or the terminal obtains the terminal position information. Server 104 obtains the terminal position information (or the terminal obtains its own position information using other position estimation systems).
- The user carrying the terminal is, for example, riding on a bus, and the bus is traveling on a road. Here, the terminal is located at a height of several meters above the ground and is moving at the speed of the bus.

In such a situation, sensing processing is performed between the base station and the terminal (or the terminal uses other position estimation systems), and it is assumed that the terminal is detected to be located on the road (the longitude and latitude of the road may be obtained) and at a height of 4 m above the ground.

Server 104 obtains the three-dimensional position of the terminal, and for example, as illustrated in FIG. 17A, server 104 may perform processing to cause a character in the shape of a person corresponding to the terminal to appear in the virtual space at a position 4 m above the ground on the road (1700_1).

By doing so, server 104 can represent the character corresponding to the terminal in the virtual space in a manner closer to the position where it is in real space.

As another example, server 104 obtains the three-dimensional position of the terminal, and for example, as illustrated in FIG. 17B, server 104 may perform processing to cause a character in the shape of a person corresponding to the terminal to appear in the virtual space on the ground of the road (for example, at a height of 0 m) (1700_2).

By doing so, server 104 can represent the character corresponding to the terminal in the virtual space with height correction relative to the position where it is in real space.

Note that, for the three-dimensional position of the terminal in real space, the method of causing a character corresponding to the terminal to appear in the virtual space may be switched between a first method of causing it to appear in a three-dimensional equivalent manner as illustrated in FIG. 17A and a second method of causing it to appear with the height corrected as illustrated in FIG. 17B (depending on the correction method, this may become a method of causing it to appear in a two-dimensional equivalent manner).

The terminal may perform the setting of whether to use the first method or the second method. Here, the terminal transmits this setting information to server 104 via the base station and network. Alternatively, the terminal may transmit this setting information to server 104 via the network.

As another method, server 104 may perform the setting of whether to use the first method or the second method.

Furthermore, the base station may perform the setting of whether to use the first method or the second method. Here, the base station transmits this setting information to server 104 via the network.

Server 104 then causes a character corresponding to the terminal to appear in the virtual space based on this setting information.

Next, an explanation will be provided regarding the operations of terminal #101 101_101 and terminal #102 101_102 in FIG. 1 and FIG. 5.

Terminal #101 101_101 and terminal #102 101_102 perform communication with server 104 via network 103, without going through a base station, as illustrated in FIG. 3A.

Terminals such as terminal #101 101_101 and terminal #102 101_102 perform the procedure for associating the character corresponding to the terminal when performing communication with server 104, as described above.

As illustrated in FIG. 3B, the terminal transmits terminal information to server 104 (301). Note that the terminal information is information that server 104 can use to identify the terminal (and/or user), and includes, for example, Subscriber Identity Module (SIM) information, telephone number information, email address information (which the user or terminal can use), user-held identification (ID), terminal ID, and Social Networking Service (SNS) information, and is considered "information on the terminal and/or user". Server 104 thus obtains the terminal information (351).

The terminal transmits character information to server 104 (302). Server 104 thus obtains the character information (352).

Note that the terminal, when generating character information, may obtain information that serves as the basis for the character from character generator 215 included in server 104 illustrated in FIG. 2, or may obtain information that serves as the basis for the character from a device different from server 104. With this, the terminal becomes capable of generating character information. As another method, the terminal may generate the character using the terminal's own functions.

Server 104 then stores the set of terminal information and character information of the terminal in per-terminal character information storage 212 illustrated in FIG. 2. Therefore, per-terminal character information storage 212 illustrated in FIG. 2 stores a "set of terminal information and character information of the terminal" per terminal.

In the explanation of FIG. 3B, operations are described using "terminal information", but it can be similarly implemented using "user information or identification information" instead of "terminal information". In other explanations, operations are described using "terminal information", but it can be similarly implemented using "user information or identification information" instead of "terminal information".

With this, character information storage 212 stores the "set of terminal information and character information of the terminal" for terminal #101 101_101 and the "set of terminal information and character information of the terminal" for terminal #102 101_102 in FIG. 1 and FIG. 5.

The user operating terminal #101 101_101 in FIG. 1 and FIG. 5 then accesses server 104 via network 103. For example, the user operating terminal #101 101_101 in FIG. 1 and FIG. 5 accesses character operation controller 216 of server 104 illustrated in FIG. 2 via network 103. The user operates terminal #101 101_101 to cause the character corresponding to terminal #101 101_101 to appear in the virtual space and move the character corresponding to terminal #101 101_101 in the virtual space. In this way, the part that performs control of the character is character operation controller 216 illustrated in FIG. 2.

The user may also use the character corresponding to terminal #101 101_101 to communicate with, contact, send messages to, or chat (or make voice calls) with other characters in the virtual space. Note that the user can move the character corresponding to terminal #101 101_101 in the virtual space regardless of the position of terminal #101 101_101 in the real space. In this way, the part that performs control of the character is character operation controller 216 illustrated in FIG. 2.

Similarly, the user operating terminal #102 101_102 in FIG. 1 and FIG. 5 accesses server 104 via network 103. For example, the user operating terminal #101 101_101 in FIG. 1 and FIG. 5 accesses character operation controller 216 of server 104 illustrated in FIG. 2 via network 103. The user operates terminal #102 101_102 to cause the character corresponding to terminal #102 101_102 to appear in the virtual space and move the character corresponding to terminal #102 101_102 in the virtual space. In this way, the part that performs control of the character is character operation controller 216 illustrated in FIG. 2.

The user may also use the character corresponding to terminal #102 101_102 to communicate with, contact, send messages to, or chat (or make voice calls) with other characters (and therefore, other terminals) in the virtual space. Note that the user can move the character corresponding to terminal #102 101_102 in the virtual **space regardless** of the position of terminal #102 101_102 in the real space. In this way, the part that performs control of the character is character operation controller 216 illustrated in FIG. 2.

In the following, as an example, an explanation will be provided regarding examples of operations of each character corresponding to each terminal in virtual space #1 that is associated with real space #1. Therefore, an explanation will be provided with reference to FIG. 1.

As already explained, server 104 generates virtual space #1 related to real space #1 illustrated in FIG. 1. As illustrated in FIG. 1, since terminal #1 101_1 and terminal #2 101_2 are present in real space #1, server 104 generates virtual space #1 such that the character corresponding to terminal #1 101_1 and the character corresponding to terminal #2 101_2 appear in virtual space #1. Server 104 controls the position of the character corresponding to terminal #1 101_1 in virtual space #1 according to the position of terminal #1 101_1 in real space, and server 104 also controls the position of the character corresponding to terminal #2 101_2 in virtual space #1 according to the position of terminal #2 101_2 in real space.

However, the user operating terminal #101 101_101, which is not present in real space #1 illustrated in FIG. 1, accesses server 104 via network 103, and the user operates terminal #101 101_101 to cause the character corresponding to terminal #101 101_101 to appear in virtual space #1 and move the character corresponding to terminal #101 101_101 in virtual space #1.

The user operating terminal #101 101_101 may use the character corresponding to terminal #101 101_101 to communicate with, contact, send messages to, or chat (or make voice calls) with the character, in virtual space #1, corresponding to terminal #1 101_1 in real space #1 (or the user using it). The user operating terminal #101 101_101 may use the character corresponding to terminal #101 101_101 to communicate with, contact, send messages to, or chat (or make voice calls) with the character, in virtual space #1, corresponding to terminal #102 101_102 not present in real space #1 (or the user using it).

The user operating terminal #1 101_1 may use the character corresponding to terminal #101 101_1 to communicate with, contact, send messages to, or chat (or make voice calls) with the character, in virtual space #1, corresponding to terminal #101 101_101 not present in real space #1 (or the user using it).

Note that the actions that a user performs in the virtual space using a character corresponding to a terminal, towards other terminals (or users using terminals) corresponding to other characters, are not limited to the above examples (communication, chat, etc.). For example, the action may be the transmission of images (still images), transmission of videos, transmission of advertisements, distribution of advertisements, distribution of coupons, etc.

In this way, users using terminals present in a real space associated with a virtual space and users entering a virtual space using terminals can communicate with each other, making it possible to achieve the advantageous effect of being able to interact with a larger number of users.

As described above, by making a character (avatar) corresponding to a terminal appear in a virtual space corresponding to the real space based on the position information of the terminal in the real space, it is possible to provide a more diversified system suitable for the real environment where the terminal and the user using the terminal are. Additionally, the terminal and the user using the terminal can communicate with many other terminals (other users) in both real space and virtual space, thereby achieving the advantageous effect of improved convenience.

In the present embodiment, an explanation was provided regarding the base station, but the embodiment can be similarly implemented by implementing the base station as any of a TRP (Tx (Transmission)/Rx (Reception) point), relay, access point, broadcast station, gNB (g Node B), eNB (e Node B), node, server, satellite, moving device (electric-based moving devices such as electric vehicle, electric motorcycle (e-bike), electric bicycle, moving robot, electric kick scooter, electric-assist bicycle, electric-assist kick scooter, automobile, motorcycle, bicycle, ship, aircraft, airplane, etc.), terminal, mobile phone, smartphone, tablet, laptop computer, personal computer, home appliance (household electrical appliance), device in a factory, communication device or broadcast device such as an IoT (Internet of Things) device, etc. Therefore, the base station of the present embodiment may be referred to as any of TRP, relay, access point, broadcast station, gNB, eNB, node, server, satellite, moving device as exemplified above, terminal, mobile phone, smartphone, tablet, laptop computer, personal computer, home appliance, device in a factory, communication device or broadcast device such as an IoT device, etc. The above points apply throughout the present specification.

In the present embodiment, an explanation was provided regarding the terminal, but the embodiment can be similarly implemented by implementing the terminal as any of a TRP, base station, relay, access point, broadcast station, gNB, eNB, node, server, satellite, moving device as exemplified above, terminal, mobile phone, smartphone, tablet, laptop computer, personal computer, home appliance, device in a factory, communication device or broadcast device such as an IoT device, etc. Therefore, the terminal of the present embodiment may be referred to as any of TRP, base station, relay, access point, broadcast station, gNB, eNB, node, server, satellite, moving device as exemplified above, terminal, mobile phone, smartphone, tablet, laptop computer, personal computer, home appliance, device in a factory, communication device or broadcast device such as an IoT device, etc. The above points apply throughout the present specification.

For example, when a device such as a base station or terminal transmits a modulated signal or a signal for sensing, it may transmit one or more, or two or more modulated signals or signals for sensing using one or more, or two or more transmit antennas. The above points apply throughout the present specification.

In the above, the signal transmitted by the terminal, for example, the modulated signal or signal for sensing may belong to any of UL-SCH (downlink shared channel), PUCCH (physical uplink control channel), PUSCH (physical uplink shared channel), PRACH (physical random access channel), etc. However, this is non-limiting.

In the above, the "signal transmitted by the base station, for example, downlink frame, reference signal, control signal" may belong to any of PCH (paging channel), BCH (broadcast channel), DL-SCH (downlink shared channel), BCCH (broadcast control channel), PCCH (paging control channel), CCCH (common control channel), common search space, PBCH (physical broadcast channel), SS (Synchronization Signals), PDCCH (physical downlink control channel), PDSCH (physical downlink shared channel), etc. However, this is non-limiting.

In the present embodiment, an example was explained where server 104 causes characters corresponding to terminals such as terminal #1 101_1, terminal #2 101_2, terminal #101 101_101, terminal #102 101_102, etc., illustrated in FIG. 1 to appear in the virtual space and controls the characters corresponding to terminals in the virtual space. However, the characters corresponding to terminals in the virtual space may be any type of character, any type of object, or any type of avatar. Therefore, the present embodiment may be similarly implemented by replacing the term "character" with "object" or "avatar".

For example, the "character corresponding to a terminal" in the virtual space may be a "human-like character (or object or avatar)", "animal-like character (or object or avatar)", "bird-like character (or object or avatar)", "flying object (drone, aircraft, airplane)-like character (or object or avatar)", "vehicle-like character (or object or avatar)", "bicycle-like character (or object or avatar)", "motorcycle-like character (or object or avatar)", "train-like character (or object or avatar)", "railway train-like character (or object or avatar)", "robot-like character (or object or avatar)", but this is non-limiting.

Server 104 may also determine which of a plurality of predetermined terminal types the terminal is, and display in the virtual space an object corresponding to each state or an object selected from an object group corresponding to each state. The correspondence between terminal types and objects is not limited to the above examples. For example, objects shaped like different animals may be associated according to the type of terminal, or objects with the same shape but different colors may be associated according to the type of terminal.

Note that these points apply throughout the present specification.

In FIG. 1, since terminal #1 101_1 is present in real space #1, server 104, for example, causes the character corresponding to terminal #1 101_1 to appear in virtual space #1 corresponding to real space #1, and controls the character corresponding to terminal #1 101_1. Server 104 illustrates an example of providing information of virtual space #1 to terminals including terminal #1 101_1.

**As another** method, server 104 generates information for AR display as information to be provided to terminal #1 101_1, terminal #2 101_2, and the like present in real space #1. Server 104 may then provide the information for AR display to the terminals present in real space #1, such as terminal #1 101_1, terminal #2 101_2, and the like. Here, if a terminal with AR display functionality is present in real space #1, that terminal will obtain information for AR display and display characters, objects, and the like at specified positions.

Server 104 generates information for AR display from information of virtual space #1. Here, server 104 generates, from information and positions of characters and objects present in virtual space #1, information on characters and objects to be superimposed on the real space and position information for superimposing characters and objects on the real space. Server 104 transmits the information on characters and objects to be superimposed on the real space and the position information for superimposing characters and objects on the real space to terminals with AR display functionality present in real space #1, and the terminals with AR display functionality display characters, objects, and the like at specified positions based on the information on characters and objects to be superimposed on the real space and the position information for superimposing characters and objects on the real space.

Note that terminals present in real space #1, such as terminal #1 101_1 and terminal #2 101_2 illustrated in FIG. 1, and/or terminals not present in real space #1, may perform the following processing.

The terminal performs self-position estimation by aligning three-dimensional map information with sensing data (such as point cloud data obtained by Light Detection and Ranging (LIDAR) or a camera). In self-position estimation, the terminal estimates, for example, information on position and orientation in the three-dimensional map information as self-position information. The terminal obtains data indicating shape data and placement positions of surrounding objects from server 104 based on the estimated self-position. The terminal displays objects based on the self-position information of the terminal on a display screen displaying video captured by a camera included in the terminal, or on a transparent display of smart glasses or the like.

Note that the terminal may perform detection of planar surfaces such as surrounding floors or desk tops during position estimation. Here, the detected planar surfaces are assumed to be horizontal or nearly horizontal surfaces, but they may also be vertical planar surfaces such as walls, or detection of planar surfaces having any angle including horizontal and vertical may be performed. The terminal may detect objects including these, provide them to server 104, and display them in the virtual space, or process them as objects for display in AR space.

The terminal may, when displaying objects, correct the position for displaying the objects on the display screen based on information of the detected planar surfaces, rather than directly using the information of the placement position set for the objects. Note that this point is applicable to both display in virtual space and display in AR.

Although an example in which the terminal displays objects for virtual space and AR based on the self-position estimated by the terminal was explained, objects may be displayed for virtual space and AR based on position information obtained by other methods. Position information obtained by other methods may be, for example, terminal position information estimated by a base station, terminal position information estimated by other devices, position information obtained by GPS, etc. Here, when using terminal position information estimated by the base station, in the case where a character is displayed in the virtual space based on the position information estimated by the base station, it is possible to reduce the possibility of differences occurring between objects visible from that character in the virtual space and objects displayed in AR in real space.

### [Embodiment 2]

In the present embodiment, an explanation will be provided regarding the configuration of a system that makes a character appear in a virtual space based on the position of a terminal in real space, and operations performed by each device, as a variation of Embodiment 1.

Note that "real space" may also be referred to as "(physical) real space" or "universe". Real space may be augmented reality (AR) (a world in which the real world is virtually augmented). Real space may be understood as, for example, the physical world in which we live. Real space may be referred to by another name. The above points apply throughout the present specification.

Virtual space may also be referred to as "cyber space", "metaverse space", "(one) multiverse space", "virtual space", "virtual reality (VR)", or "virtual world". Note that virtual space may be referred to by another name. The above points apply throughout the present specification.

Furthermore, the character may also be referred to as an "avatar" or "object". An avatar may be understood as, for example, an alter ego of a user, who possesses a terminal, that appears in games, the internet, and virtual space. Note that the character may be referred to by another name. The above points apply throughout the present specification.

FIG. 18 illustrates an example of a configuration of a system that makes a character appear in a virtual space based on the position of a terminal in real space according to the present embodiment. Note that in FIG. 18, elements that operate the same as in FIG. 1 are assigned the same reference numbers, and some explanations are omitted.

The inside of ellipse 100_1 is real space #1. Object #1 1801_1 and object #2 1801_2 are present in real space #1. Note that while real space is defined as the inside of an ellipse, real space need not be represented by the inside of an ellipse. Here, for simplicity, real space is represented by the inside of an ellipse. This point applies to the present embodiment and throughout the present specification.

In FIG. 18, capturing device #1 1802_1 is present in real space #1, but capturing device #1 1802_1 may be present in a real space other than real space #1.

Capturing device #1 1802_1 may be a device that captures still images, videos, etc., such as a camera, smartphone, personal computer, surveillance camera, or movie camera. Capturing device #1 1802_1 may be a device including a sensing function that utilizes light, radio waves, etc., or a sensor that utilizes light such as infrared light, radio waves, etc. Therefore, while this element is referred to as a capturing device, this designation is not limited to this term, and this element may simply be called a device, or it may be called a sensing device.

Object #1 1801_1 and object #2 1801_2 may be people, animals, moving devices such as cars, motorcycles, or bicycles, or may be items worn by people, devices, or objects.

Capturing device #1 1802_1 performs communication with devices including server 104 via network 103. Conceivable examples of the communication at this time include wired and/or wireless communication.

Capturing device #1 1802_1 may perform, for example, wireless communication with objects including object #1 1801_1 and object #2 1801_2 (the communication may be wired and/or wireless).

Therefore, capturing device #1 1802_1 includes a transmitter and a receiver for wireless or wired communication.

Objects including object #1 1801_1 and object #2 1801_2 may include a transmitter for wireless communication and a receiver for wireless communication.

Capturing device #1 1802_1 may include a transmitter for sensing and a receiver for sensing. Note that the transmitter for sensing and the transmitter for wireless communication may be separate transmitters or may be integrated into a single transmitter. Capturing device #1 1802_1 may include a position estimation system such as GPS.

Capturing device #1 1802_1 may include information on the position where capturing device #1 1802_1 is provided.

Objects including object #1 1801_1 and object #2 1801_2 may include a transmitter for sensing and a receiver for sensing. Note that the transmitter for sensing and the transmitter for wireless communication may be separate transmitters or may be integrated into a single transmitter. Objects including object #1 1801_1 and object #2 1801_2 may include a position estimation system such as GPS.

At this time, as one method, capturing device #1 1802_1 estimates objects including object #1 1801_1 and object #2 1801_2.

Note that estimation of objects including object #1 1801_1 and object #2 1801_2 by capturing device #1 1802_1 is, for example, a process of detecting that objects are within a sensing-capable area of capturing device #1 1802_1, and estimating their positions. The estimation of an object may include a process of identifying what the objects is, that is, detecting the type of object. The estimation of an object may include a process of detecting the movement and state of the object. While it was explained that estimation of objects including object #1 1801_1 and object #2 1801_2 is performed, there may be only one object rather than a plurality of objects. When the object to be estimated is not located within the sensing-capable area, the detection result may be that the object is not detected.

At this time, as shown in PTL 2, PTL 3, and PTL 4, for example, capturing device #1 1802_1 may obtain position information (or sensing result information) of objects including object #1 1801_1 and object #2 1801_2 by any of the following methods.

### Method 2-1:

Capturing device #1 1802_1 transmits a signal for sensing. An object receives the signal for sensing and estimates its position (or obtains a sensing result). The object transmits this position information (or sensing result information) to capturing device #1 1802_1. With this, capturing device #1 1802_1 obtains position information (or sensing result information) of objects including object #1 1801_1 and object #2 1801_2.

### Method 2-2:

Capturing device #1 1802_1 transmits a signal for sensing. When the state of the signal for sensing at the object changes, capturing device #1 1802_1 captures this change (receives radio waves corresponding to the signal for sensing), and capturing device #1 1802_1 estimates the position of the object (or obtains a sensing result). With this, capturing device #1 1802_1 obtains position information (or sensing result information) of objects including object #1 1801_1 and object #2 1801_2.

### Method 2-3:

Objects including object #1 1801_1 and object #2 1801_2 transmit signals for sensing. Capturing device #1 1802_1 receives the signals for sensing and estimates the positions (or obtains sensing results). With this, capturing device #1 1802_1 obtains position information (or sensing result information) of objects including object #1 1801_1 and object #2 1801_2.

In this way, capturing device #1 1802_1 or the object may transmit the signal for sensing. Note that the method by which capturing device #1 1802_1 obtains position information (or sensing result information) of objects including object #1 1801_1 and object #2 1801_2 is not limited to method 2-1, method 2-2, and method 2-3, and methods described in documents including PTL 2, PTL 3, and PTL 4 can be broadly applied.

As another method, objects including object #1 1801_1 and object #2 1801_2 may estimate their own positions using a position estimation system such as GPS. At this time, the objects transmit the estimated position information to capturing device #1 1802_1, whereby capturing device #1 1802_1 obtains position information of objects including object #1 1801_1 and object #2 1801_2.

Note that in method 2-1, method 2-2, and method 2-3, if capturing device #1 1802_1 is considered as base station #1 102_1 illustrated in FIG. 1, and the object is considered as the terminal illustrated in FIG. 1, the situation becomes similar to Embodiment 1. Therefore, in Embodiment 1, if base station #1 102_1 is considered as capturing device #1 1802_1, and the terminal is considered as the object, the explanation of Embodiment 1 can be applied to FIG. 18. Accordingly, detailed explanation is omitted here.

Hereinafter, an explanation will be provided regarding method 2-4, which is different from method 2-1, method 2-2, and method 2-3.

### Method 2-4:

In FIG. 18, capturing device #1 1802_1 is assumed to include one or more of an image sensor, an infrared sensor, and a photodiode. Capturing device #1 1802_1 detects and/or recognizes objects including object #1 1801_1 and object #2 1801_2 using a sensor. Capturing device #1 1802_1 obtains position information of objects including object #1 1801_1 and object #2 1801_2.

Note that capturing device #1 1802_1 retains position information, and the position where capturing device #1 1802_1 is provided may be used as the position of objects including object #1 1801_1 and object #2 1801_2. As another method, objects including object #1 1801_1 and object #2 1801_2 may themselves include a position estimation device, exemplified by GPS, and may directly transmit the position information they themselves have obtained to capturing device #1 1802_1, or may transmit the position information they themselves have obtained to capturing device #1 1802_1 via other devices or networks.

In method 2-4, an explanation will be provided regarding an example of when capturing device #1 1802_1 detects and/or recognizes objects including object #1 1801_1 and object #2 1801_2.

Objects including object #1 1801_1 and object #2 1801_2 are, for example, a hat, clothing, an accessory, or a person. Object #1 1801_1 is, for example, assumed to be associated with a human character #1 (which may be a character based on the form of a human, robot, etc. However, the shape of the character is not limited to these examples and may simply be a character), and server 104 is assumed to retain this information. Note that the handling of information related to the association of object #1 1801_1 and character #1 will be explained later. The object may also include identification codes that enable detection/recognition, and patterns, colors, shapes, characters, etc., for identification.

Capturing device #1 1802_1 is assumed to have detected and recognized object #1 1801_1 using a sensor, for example. Here, for example, video or still images may be obtained. Note that capturing device #1 1802_1 may perform this detection and recognition processing. Alternatively, capturing device #1 1802_1 may transmit the data and information it has obtained to server 104, and server 104 may perform this detection and recognition processing.

Server 104, based on the information that object #1 1801_1 has been recognized, makes character #1, which is associated with object #1 1801_1, appear in virtual space #1. Note that when server 104 makes character #1 appear in virtual space #1, the position where it appears may be determined based on, for example, the position where capturing device #1 1802_1 is provided. Alternatively, server 104 may obtain, via communication, the position where object #1 1801_1 is located, and server 104 may determine the position where character #1 appears in virtual space #1 based on this position information.

Objects including object #1 1801_1 and object #2 1801_2 are, for example, a hat, clothing, an accessory, or an animal. Object #1 1801_1 is, for example, assumed to be associated with animal character #1 (which may be a character based on the form of an animal, robot, etc. However, the shape of the character is not limited to these examples and may simply be a character), and server 104 is assumed to retain this information. Note that the handling of information related to the association of object #1 1801_1 and character #1 will be explained later. The object may also include identification codes that enable detection/recognition, and patterns, colors, shapes, characters, etc., for identification.

Capturing device #1 1802_1 is assumed to have detected and recognized object #1 1801_1 using a sensor, for example. Here, for example, video or still images may be obtained. Note that capturing device #1 1802_1 may perform this detection and recognition processing. Alternatively, capturing device #1 1802_1 may transmit the data and information it has obtained to server 104, and server 104 may perform this detection and recognition processing.

Server 104, based on the information that object #1 1801_1 has been recognized, makes character #1, which is associated with object #1 1801_1, appear in virtual space #1. Note that when server 104 makes character #1 appear in virtual space #1, the position where it appears may be determined based on, for example, the position where capturing device #1 1802_1 is provided. Alternatively, server 104 may obtain, via communication, the position where object #1 1801_1 is located, and server 104 may determine the position where character #1 appears in virtual space #1 based on this position information.

Objects including object #1 1801_1 and object #2 1801_2 are, for example, a vehicle, a bicycle, or a motorcycle. Note that when the object is something equipped with a license plate, such as a vehicle or motorcycle, the object may be the license plate. Object #1 1801_1 is, for example, assumed to be associated with character #1 of a vehicle, a bicycle, or a motorcycle (which may be a character based on the form of a vehicle, bicycle, motorcycle, robot, etc. However, the shape of the character is not limited to these examples and may simply be a character), and server 104 is assumed to retain this information. Note that the handling of information related to the association of object #1 1801_1 and character #1 will be explained later. The object may also include identification codes that enable detection/recognition, and patterns, colors, shapes, characters, etc., for identification.

Capturing device #1 1802_1 is assumed to have detected and recognized object #1 1801_1 using a sensor, for example. Here, for example, video or still images may be obtained. Note that capturing device #1 1802_1 may perform this detection and recognition processing. Alternatively, capturing device #1 1802_1 may transmit the data and information it has obtained to server 104, and server 104 may perform this detection and recognition processing.

Server 104, based on the information that object #1 1801_1 has been recognized, makes character #1, which is associated with object #1 1801_1, appear in virtual space #1. Note that when server 104 makes character #1 appear in virtual space #1, the position where it appears may be determined based on, for example, the position where capturing device #1 1802_1 is provided. Alternatively, server 104 may obtain, via communication, the position where object #1 1801_1 is located, and server 104 may determine the position where character #1 appears in virtual space #1 based on this position information.

Objects including object #1 1801_1 and object #2 1801_2 are, for example, a building, a store, a sign (advertisement), a facility, a street light, a tree, a flower, or an object. Object #1 1801_1 is, for example, assumed to be associated with character #1 (which may be a character corresponding to an object. However, the shape of the character is not limited to these examples and may simply be a character), and server 104 is assumed to retain this information. Note that the handling of information related to the association of object #1 1801_1 and character #1 will be explained later. The object may also include identification codes that enable detection/recognition, and patterns, colors, shapes, characters, etc., for identification.

Capturing device #1 1802_1 is assumed to have detected and recognized object #1 1801_1 using a sensor, for example. Here, for example, video or still images may be obtained. Note that capturing device #1 1802_1 may perform this detection and recognition processing. Alternatively, capturing device #1 1802_1 may transmit the data and information it has obtained to server 104, and server 104 may perform this detection and recognition processing.

Server 104, based on the information that object #1 1801_1 has been recognized, makes character #1, which is associated with object #1 1801_1, appear in virtual space #1. Note that when server 104 makes character #1 appear in virtual space #1, the position where it appears may be determined based on, for example, the position where capturing device #1 1802_1 is provided. Alternatively, server 104 may obtain, via communication, the position where object #1 1801_1 is located, and server 104 may determine the position where character #1 appears in virtual space #1 based on this position information.

The system illustrated in FIG. 18 includes server 104 that includes storage that stores data related to the virtual space, includes a controller that controls the appearing and movement of characters and the like in the virtual space, and performs updating and control of virtual space information based on data from other devices. Note that the configuration of the server and details of its operation will be explained in detail later. The system illustrated in FIG. 18 includes, for example, terminal #101 101_101, terminal #2 101_102, and devices.

Capturing device #1 1802_1, server 104, terminal #101 101_101, terminal #2 101_102, and the devices are connected to network 103, whereby devices such as base station #1 102_1, server 104, terminal #101 101_101, terminal #2 101_102, and devices are able to perform communication.

Object #1 1801_1 and object #2 1801_2 may communicate with capturing device #1 1802_1.

Terminal #101 101_101 and terminal #2 101_102 may perform communication with devices such as server 104, object #1 1801_1, object #2 1801_2, and devices via capturing device #1 1802_1 and network 103.

Note that the system configuration according to the present embodiment is not limited to the configuration illustrated in FIG. 18; it is sufficient if one or more objects is present; it is sufficient if one or more capturing devices is present; it is sufficient if one or more servers is present.

FIG. 19A is an example of a configuration of server 104 illustrated in FIG. 18. Server 104, for example, includes interface 200, which receives input signal 201 as input and outputs output signal 202. Interface 200 is connected to spatial information storage 211, per-object character information storage 1912, real space position based character controller 213, output information generator 214, character generator 215, and per-terminal character information storage 212. Note that although this element is referred to as an interface, it may be a bus.

Spatial information storage 211 is a part that stores information related to the virtual space. Note that "information related to the virtual space" may be, for example, "data of a two-dimensional space", "data of a three-dimensional space", or "converted data for representing three-dimensional space data in two dimensions". Virtual space may also include virtual space objects corresponding to objects existing in real space, such as buildings, facilities, equipment, plazas, parks, etc. Therefore, information related to the virtual space may include information on virtual space objects.

Note that information related to the virtual space may be updated, for example, by input signal 201. For example, information related to the virtual space, where updates to the virtual space objects themselves and to their positions have been performed by input signal 201, will be stored in spatial information storage 211.

Note that operations performed by per-object character information storage 1912 will be explained in detail later.

Note that operations performed by real space position based character controller 213 will be explained in detail later.

Note that operations performed by per-terminal character information storage 212 will be explained in detail later.

Output information generator 214 generates output information related to the virtual space, which is to be provided to other devices such as terminals, from the information obtained from spatial information storage 211, the information obtained from per-object character information storage 1912, and the information obtained from real space position based character controller 213. Output information related to the virtual space, which is to be provided to other devices such as terminals, may be generated from the information obtained from per-terminal character information storage 212.

The output information related to the virtual space is output as output signal 202 from server 104. Note that the output information related to the virtual space will be delivered to one or more terminals accessing server 104.

Therefore, devices such as terminals that have obtained the information of output signal 202 will generate display content of the virtual space based on output signal 202, and display it on an internal and/or external display device.

Conceivable examples of the display device include, but are not limited to a mobile phone, a cellular phone, a smartphone, a tablet, a tablet personal computer (PC), a personal computer (the personal computer may have a monitor or be able to connect to a monitor), a notebook PC, a television, an device connected to a monitor, a game console, a portable game console, AR glasses, AR goggles, a monitor capable of displaying AR, an device connected to a monitor capable of displaying AR, VR glasses, VR goggles, a monitor capable of displaying VR, an device connected to a monitor capable of displaying VR, mixed reality (MR) glasses, a monitor capable of displaying MR, an device connected to a monitor capable of displaying MR, a car navigation system, a head mounted display, an device connected to a head mounted display, a monitor, an device connected to a monitor, a projector, an device connected to a projector, etc.

Note that an example of the configuration of the server is not limited to the example illustrated in FIG. 19A.

An explanation will be provided regarding the operations performed by per-object character information storage 1912 illustrated in FIG. 19A. As an example, an explanation will be provided regarding operations using terminal #1 101_1.

For example, terminal #1 101_1 performs communication with server 104 via network 103 as illustrated in FIG. 19B. Note that terminal #1 101_1 is a terminal for registering character #1 associated with object #1 1801_1 in FIG. 18.

An explanation will be provided regarding the procedure for associating the character corresponding to an object when the terminal is performing communication with server 104 as described above.

As illustrated in FIG. 19C, the terminal transmits object information to server 104 (1901). Note that the object information is information that server 104 can use to identify the object, and is considered information that allows capturing device #1 1802_1 in FIG. 18 to extract features through detection and recognition. For example, when capturing device #1 1802_1 is an image sensor, the object information may be still image or video data, and may be information extracted from the features of the object from still images or videos. Note that this is not limited to this example. Server 104 thus obtains the object information (1951).

The terminal transmits character information to server 104 (1902). Server 104 thus obtains the character information (1952).

Note that the terminal, when generating character information, may obtain information that serves as the basis for the character from character generator 215 included in server 104 illustrated in FIG. 19A, or may obtain information that serves as the basis for the character from a device different from server 104. With this, the terminal becomes capable of generating character information. As another method, the terminal may generate the character using the terminal's own functions.

Server 104 then stores the set of object information and character information of the object in per-object character information storage 1912 illustrated in FIG. 19A. Therefore, per-object character information storage 1912 illustrated in FIG. 19A stores a "set of object information and character information of the object" per object. For example, in the case of FIG. 18, per-object character information storage 1912 illustrated in FIG. 19A stores the "set of object information and character information of the object" for object #1 1801_1 and the "set of object information and character information of the object" for object #2 1801_2.

Note that, as explained with reference to FIG. 19B and FIG. 19C, a terminal may be used for registration of the "set of object information and character information of the object" for each object into per-object character information storage 1912. The terminal may also transmit information related to the terminal to server 104. At this time, "for example, Subscriber Identity Module (SIM) information, telephone number information, email address information (which the user or terminal can use), user-held identification (ID), terminal ID, Social Networking Service (SNS) information, 'user information or identification information', etc." can be considered information related to the terminal. Per-object character information storage 1912 of server 104 illustrated in FIG. 19A may store information related to the terminal along with the "set of object information and character information of the object".

Here, the terminal corresponding to the character can communicate with other characters (other users, other terminals) in the virtual space.

An explanation will be provided regarding the operations performed by real space position based character controller 213 illustrated in FIG. 19A. An explanation will be provided regarding the relationship between real space and virtual space.

FIG. 4A illustrates an example of real spaces. As illustrated in FIG. 4A, in real space, the inside of ellipse 100_0 is named real space #0, the inside of ellipse 100_1 is named real space #1, and the inside of ellipse 100_2 is named real space #2. Note that real spaces other than real space #0, real space #1, and real space #2 may also exist in real space.

FIG. 4B illustrates the relationship between the real spaces in FIG. 4A and virtual spaces. For example, "real space #0" in FIG. 4A is associated with "virtual space #0", "real space #1" in FIG. 4A is associated with "virtual space #1", "real space #2" in FIG. 4A is associated with "virtual space #2", and so on.

For example, "real space #X" and "virtual space #X" (where X is assumed to be an integer greater than or equal to 0) may be in a digital twin relationship. However, "real space #X" and "virtual space #X" need not be in a complete digital twin relationship, and for example, "real space #X" and "virtual space #X" may partially be in a digital twin relationship. Note that the size of the space represented by "real space #X" and "virtual space #X" may be the same or may be different.

There may be a relationship such that when a position in "real space #X" is determined, a position in "virtual space #X" is determined (this point will be explained later).

An explanation will be provided regarding an example of the operations performed by real space position based character controller 213 illustrated in FIG. 19A.

As illustrated in FIG. 18, for example, object #1 1801_1 is present in real space #1, and object #1 1801_1 is detected and recognized by capturing device #1 1802_1. For example, capturing device #1 1802_1 estimates the position of object #1 1801_1 in real space #1. Here, capturing device #1 1802_1 may estimate the position of object #1 1801_1 based on its own position and the detected position of object #1 1801_1, and capturing device #1 1802_1 and object #1 1801_1 may perform processing for sensing, whereby capturing device #1 1802_1 may estimate the position of object #1 1801_1.

Capturing device #1 1802_1 transmits the position information of object #1 1801_1 in real space #1 to server 104, whereby server 104 obtains the position information of object #1 1801_1 in real space #1 and comes to know "the position of object #1 1801_1 in real space #1". Server 104 obtains information of object #1 1801_1 from capturing device #1 1802_1. Note that server 104 may obtain the position information of object #1 1801_1 in real space #1 from other devices.

Per-object character information storage 1912 of server 104 illustrated in FIG. 19A outputs character information corresponding to object #1 1801_1 by obtaining the information of object #1 1801_1.

Real space position based character controller 213 of server 104 illustrated in FIG. 19A obtains position information of object #1 1801_1 in real space #1, and outputs information for controlling the position of the character corresponding to object #1 1801_1 in virtual space #1 that is associated with real space #1.

Output information generator 214 of server 104 illustrated in FIG. 19A, based on information obtained from spatial information storage 211, "character information corresponding to object #1 1801_1" output by per-object character information storage 1912, and "information for controlling the position of the character corresponding to object #1 1801_1 in virtual space #1 that is associated with real space #1" output by real space position based character controller 213, places the "character corresponding to object #1 1801_1" at the "position of the character corresponding to object #1 1801_1 in virtual space #1 that is associated with real space #1" in virtual space #1, and output information generator 214 of server 104 illustrated in FIG. 19A generates output information related to virtual space #1 including "the character corresponding to object #1 1801_1", and output signal 202 including the output information related to virtual space #1 including "the character corresponding to object #1 1801_1" is output from server 104. Here, output signal 202 may include information on other virtual spaces (for example, virtual space #2, virtual space #3, ...).

Therefore, when object #1 1801_1 moves in real space #1 and the position of object #1 1801_1 in real space #1 is updated, according to the operation explained above, the position of "the character corresponding to object #1 1801_1" in virtual space #1 that is associated with real space #1 is updated, and output signal 202 including output information related to virtual space #1 including "the character corresponding to object #1 1801_1" is output from server 104 at output information generator 214 of server 104 illustrated in FIG. 19A.

Note that in the above explanation, object #1 1801_1 may estimate its position in real space #1 using a position estimation system such as GPS that object #1 1801_1 includes, and server 104 may obtain the position information of object #1 1801_1 in real space #1 via other devices. Other operations can be implemented similarly to those described above by operating as explained above.

Although the explanation is provided using object #1 1801_1 and capturing device #1 1802_1, it can be similarly implemented using other objects and other capturing devices.

As illustrated in FIG. 20, for example, object #1 1801_1 has moved to real space #2.

Object #1 1801_1 is detected and recognized by capturing device #2 1802_2. For example, capturing device #2 1802_2 estimates the position of object #1 1801_1 in real space #2. Here, capturing device #2 1802_2 may estimate the position of object #1 1801_1 based on its own position and the detected position of object #1 1801_1, and capturing device #2 1802_2 and object #1 1801_1 may perform processing for sensing, whereby capturing device #2 1802_2 may estimate the position of object #1 1801_1.

Capturing device #2 1802_2 transmits the position information of object #1 1801_1 in real space #2 to server 104, whereby server 104 obtains the position information of object #1 1801_1 in real space #2 and comes to know "the position of object #1 1801_1 in real space #2". Server 104 obtains information of object #1 1801_1 from capturing device #2 1802_2. Note that server 104 may obtain the position information of object #1 1801_1 in real space #2 from other devices.

Per-object character information storage 1912 of server 104 illustrated in FIG. 19A outputs character information corresponding to object #1 1801_1 by obtaining the information of object #1 1801_1.

Real space position based character controller 213 of server 104 illustrated in FIG. 19A obtains position information of object #1 1801_1 in real space #2, and outputs information for controlling the position of the character corresponding to object #1 1801_1 in virtual space #2 that is associated with real space #2.

Output information generator 214 of server 104 illustrated in FIG. 19A, based on information obtained from spatial information storage 211, "character information corresponding to object #1 1801_1" output by per-object character information storage 1912, and "information for controlling the position of the character corresponding to object #1 1801_1 in virtual space #2 that is associated with real space #2" output by real space position based character controller 213, places the "character corresponding to object #1 1801_1" at the "position of the character corresponding to object #1 1801_1 in virtual space #2 that is associated with real space #2" in virtual space #2, and output information generator 214 of server 104 illustrated in FIG. 19A generates output information related to virtual space #2 including "the character corresponding to object #1 1801_1", and output signal 202 including the output information related to virtual space #2 including "the character corresponding to object #1 1801_1" is output from server 104. Here, output signal 202 may include information on other virtual spaces (for example, virtual space #1, virtual space #3, ...).

Therefore, when object #1 1801_1 moves in real space #2 and the position of object #1 1801_1 in real space #2 is updated, according to the operation explained above, the position of "the character corresponding to object #1 1801_1" in virtual space #2 that is associated with real space #2 is updated, and output signal 202 including output information related to virtual space #2 including "the character corresponding to object #1 1801_1" is output from server 104 at output information generator 214 of server 104 illustrated in FIG. 19A.

Note that in the above explanation, object #1 1801_1 may estimate its position in real space #2 using a position estimation system such as GPS that object #1 1801_1 includes, and server 104 may obtain the position information of object #1 1801_1 in real space #2 via other devices. Other operations can be implemented similarly to those described above by operating as explained above.

Although the explanation is provided using object #1 1801_1 and capturing device #2 1802_2, it can be similarly implemented using other objects and other capturing devices.

As described above, an explanation has been provided regarding the relationship between IDs in real space and IDs in virtual space, and the accompanying operations performed by each element. However, the relationship between IDs in real space and IDs in virtual space is not limited to the example illustrated in FIG. 4B. Note that other examples will be explained later.

An explanation will be provided regarding another example of the operations performed by real space position based character controller 213 illustrated in FIG. 19A.

FIG. 4A illustrates an example of real spaces. As illustrated in FIG. 4A, in real space, the inside of ellipse 100_0 is named real space #0, the inside of ellipse 100_1 is named real space #1, and the inside of ellipse 100_2 is named real space #2. Note that real spaces other than real space #0, real space #1, and real space #2 may also exist in real space.

FIG. 10A and FIG. 10B illustrate relationships between real spaces and virtual spaces with reference to FIG. 4A as an example. For example, real space #0 is associated with virtual space #0; virtual space #1, virtual space #2, real space #1 and real space #2 are associated with virtual space #3; real space #3 and real space #4 are associated with virtual space #4 and virtual space #5; real space #5 and real space #6 are associated with virtual space #6, virtual space #7, and virtual space #8; real space #7, real space #8, real space #9, and real space #10 are associated with virtual space #9 and virtual space #10; and so on.

For example, "real space #X" and "virtual space #Y" (where X and Y are assumed to be integers greater than or equal to 0) may be in a digital twin relationship. However, "real space #X" and "virtual space #Y" need not be in a complete digital twin relationship, and for example, "real space #X" and "virtual space #Y" may partially be in a digital twin relationship. Note that the size of the space represented by "real space #X" and "virtual space #Y" may be the same or may be different. When the size of the space represented by real space #X and virtual space #Y is different, the scale ratio between real space #X and virtual space #Y may be different for each axis that defines the space, or it may be the same. Here, the axes that define the space are the three axes of a three-dimensional coordinate system in the case of a three-dimensional space, and the two axes of a two-dimensional coordinate system in the case of a two-dimensional space.

There may be a relationship such that when a position in "real space #X" is determined, a position in "virtual space #Y" is determined.

Note that at least one capturing device is assumed to be in a real space. FIG. 21 illustrates such an example. Note that in FIG. 21, elements that operate the same as in FIG. 1 and FIG. 18 are assigned the same reference numbers, and some explanations are omitted.

As illustrated in FIG. 21, capturing device #0 1802_0 is present in real space #0 100_0 and is capable of communicating with server 104 via network 103.

Capturing device #1 1802_1 is present in real space #1 100_1 and is capable of communicating with server 104 via network 103. ...

Capturing device #N 1802_N is present in real space #N 100_N and is capable of communicating with server 104 via network 103. Note that N is an integer greater than or equal to 2.

Therefore, capturing device #i 1802_i is present in real space #i 100_i and is capable of communicating with server 104 via network 103. Note that i is an integer greater than or equal to 0 and less than or equal to N.

Note that the number of capturing devices present in a real space is not limited to this example; it is sufficient if one or more, or two or more capturing devices are present in a real space.

An explanation will be provided regarding an example of the operations performed by real space position based character controller 213 illustrated in FIG. 19A.

In the system of FIG. 21, for example, object #1 1801_1 is present in real space #0 100_0 listed in FIG. 10A, and object #1 1801_1 is detected and recognized by capturing device #0 1802_0. For example, capturing device #0 1802_0 estimates the position of object #1 1801_1 in real space #0. Here, capturing device #0 1802_0 may estimate the position of object #1 1801_1 based on its own position and the detected position of object #1 1801_1, and capturing device #0 1802_0 and object #1 1801_1 may perform processing for sensing, whereby capturing device #0 1802_0 may estimate the position of object #1 1801_1.

Capturing device #0 1802_0 transmits the position information of object #1 1801_1 in real space #0 to server 104, whereby server 104 obtains the position information of object #1 1801_1 in real space #0 and comes to know "the position of object #1 1801_1 in real space #0". Server 104 obtains information of object #1 1801_1 from capturing device #0 1802_0. Note that server 104 may obtain the position information of object #1 1801_1 in real space #0 from other devices.

Per-object character information storage 1912 of server 104 illustrated in FIG. 19A outputs character information corresponding to object #1 1801_1 by obtaining the information of object #1 1801_1.

Real space position based character controller 213 of server 104 illustrated in FIG. 19A obtains position information of object #1 1801_1 in real space #0, and outputs information for controlling the position of the character corresponding to object #1 1801_1 in virtual space #0, or virtual space #1, or virtual space #2 that is associated with real space #0.

Output information generator 214 of server 104 illustrated in FIG. 19A, based on information obtained from spatial information storage 211, "character information corresponding to object #1 1801_1" output by per-object character information storage 1912, and "information for controlling the position of the character corresponding to object #1 1801_1 in virtual spaces #0, #1, and #2 that are associated with real space #0" output by real space position based character controller 213, places the "character corresponding to object #1 1801_1" at the "position of the character corresponding to object #1 1801_1 in virtual spaces #0, #1, and #2 that are associated with real space #0" in one of virtual spaces #0, #1, and #2, and output information generator 214 of server 104 illustrated in FIG. 19A generates output information related to virtual spaces #0, #1, and #2 including "the character corresponding to object #1 1801_1", and output signal 202 including the output information related to virtual spaces #0, #1, and #2 including "the character corresponding to object #1 1801_1" is output from server 104. Here, output signal 202 may include information on other virtual spaces.

Therefore, when object #1 1801_1 moves in real space #0 and the position of object #1 1801_1 in real space #0 is updated, according to the operation explained above, the position of "the character corresponding to object #1 1801_1" in virtual space #0, virtual space #1, and virtual space #2 that are associated with real space #0 is updated, and output signal 202 including output information related to virtual space #0, virtual space #1, and virtual space #2 including "the character corresponding to object #1 1801_1" is output from server 104 at output information generator 214 of server 104 illustrated in FIG. 19A.

Note that in the above explanation, object #1 1801_1 may estimate its position in real space #0 using a position estimation system such as GPS that object #1 1801_1 includes, and server 104 may obtain the position information of object #1 1801_1 in real space #0 via other devices. Other operations can be implemented similarly to those described above by operating as explained above.

Although the explanation is provided using object #1 1801_1 and capturing device #0 1802_0, it can be similarly implemented using other objects and other capturing devices.

For example, assume object #1 1801_1 has moved to real space #1 100_1 in FIG. 10A.

Object #1 1801_1 is detected and recognized by capturing device #1 1802_1. For example, capturing device #1 1802_1 estimates the position of object #1 1801_1 in real space #1. Here, capturing device #1 1802_1 may estimate the position of object #1 1801_1 based on its own position and the detected position of object #1 1801_1, and capturing device #1 1802_1 and object #1 1801_1 may perform processing for sensing, whereby capturing device #1 1802_1 may estimate the position of object #1 1801_1.

Capturing device #1 1802_1 transmits the position information of object #1 1801_1 in real space #1 to server 104, whereby server 104 obtains the position information of object #1 1801_1 in real space #1 and comes to know "the position of object #1 1801_1 in real space #1". Server 104 obtains information of object #1 1801_1 from capturing device #1 1802_1. Note that server 104 may obtain the position information of object #1 1801_1 in real space #1 from other devices.

Per-object character information storage 1912 of server 104 illustrated in FIG. 19A outputs character information corresponding to object #1 1801_1 by obtaining the information of object #1 1801_1.

Real space position based character controller 213 of server 104 illustrated in FIG. 19A obtains position information of object #1 1801_1 in real space #1, and outputs information for controlling the position of the character corresponding to object #1 1801_1 in virtual space #3 that is associated with real spaces #1 and #2.

Output information generator 214 of server 104 illustrated in FIG. 19A, based on information obtained from spatial information storage 211, "character information corresponding to object #1 1801_1" output by per-object character information storage 1912, and "information for controlling the position of the character corresponding to object #1 1801_1 in virtual space #3 that is associated with real spaces #1 and #2" output by real space position based character controller 213, places the "character corresponding to object #1 1801_1" at the "position of the character corresponding to object #1 1801_1 in virtual space #3 that is associated with real spaces #1 and #2" in virtual space #3, and output information generator 214 of server 104 illustrated in FIG. 19A generates output information related to virtual space #3 including "the character corresponding to object #1 1801_1", and output signal 202 including the output information related to virtual space #3 including "the character corresponding to object #1 1801_1" is output from server 104. Here, output signal 202 may include information on other virtual spaces.

Therefore, when object #1 1801_1 moves in real space #1 and the position of object #1 1801_1 in real space #1 is updated, according to the operation explained above, the position of "the character corresponding to object #1 1801_1" in virtual space #3 that is associated with real spaces #1 and #2 is updated, and output signal 202 including output information related to virtual space #3 including "the character corresponding to object #1 1801_1" is output from server 104 at output information generator 214 of server 104 illustrated in FIG. 19A.

Note that in the above explanation, object #1 1801_1 may estimate its position in real space #1 using a position estimation system such as GPS that object #1 1801_1 includes, and server 104 may obtain the position information of object #1 1801_1 in real space #1 via other devices. Other operations can be implemented similarly to those described above by operating as explained above. Although the explanation is provided using object #1 1801_1 and capturing device #1 1802_1, it can be similarly implemented using other objects and other capturing devices.

An explanation will be provided regarding an example of the operations performed by real space position based character controller 213 illustrated in FIG. 19A.

In the system of FIG. 21, for example, object #2 1801_2 is present in real space #1 100_1 listed in FIG. 10A, and object #2 1801_2 is detected and recognized by capturing device #1 1802_1. For example, capturing device #1 1802_1 estimates the position of object #2 1801_2 in real space #1. Here, capturing device #1 1802_1 may estimate the position of object #2 1801_2 based on its own position and the detected position of object #2 1801_2, and capturing device #1 1802_1 and object #2 1801_2 may perform processing for sensing, whereby capturing device #1 1802_1 may estimate the position of object #2 1801_2.

Capturing device #1 1802_1 transmits the position information of object #2 1801_2 in real space #1 to server 104, whereby server 104 obtains the position information of object #2 1801_2 in real space #1 and comes to know "the position of object #2 1801_2 in real space #1". Server 104 obtains information of object #2 1801_2 from capturing device #1 1802_1. Note that server 104 may obtain the position information of object #2 1801_2 in real space #1 from other devices.

Per-object character information storage 1912 of server 104 illustrated in FIG. 19A outputs character information corresponding to object #2 1801_2 by obtaining the information of object #2 1801_2.

Real space position based character controller 213 of server 104 illustrated in FIG. 19A obtains position information of object #2 1801_2 in real space #1, and outputs information for controlling the position of the character corresponding to object #2 1801_2 in virtual space #3 that is associated with real spaces #1 and #2.

Output information generator 214 of server 104 illustrated in FIG. 19A, based on information obtained from spatial information storage 211, "character information corresponding to object #2 1801_2" output by per-object character information storage 1912, and "information for controlling the position of the character corresponding to object #2 1801_2 in virtual space #3 that is associated with real spaces #1 and #2" output by real space position based character controller 213, places the "character corresponding to object #2 1801_2" at the "position of the character corresponding to object #2 1801_2 in virtual space #3 that is associated with real spaces #1 and #2" in virtual space #3, and output information generator 214 of server 104 illustrated in FIG. 19A generates output information related to virtual space #3 including "the character corresponding to object #2 1801_2", and output signal 202 including the output information related to virtual space #3 including "the character corresponding to object #2 1801_2" is output from server 104. Here, output signal 202 may include information on other virtual spaces.

Therefore, when object #2 1801_2 moves in real space #1 and the position of object #2 1801_2 in real space #1 is updated, according to the operation explained above, the position of "the character corresponding to object #2 1801_2" in virtual space #3 that is associated with real spaces #1 and #2 is updated, and output signal 202 including output information related to virtual space #3 including "the character corresponding to object #2 1801_2" is output from server 104 at output information generator 214 of server 104 illustrated in FIG. 19A.

Note that in the above explanation, object #2 1801_2 may estimate its position in real space #1 using a position estimation system such as GPS that object #2 1801_2 includes, and server 104 may obtain the position information of object #2 1801_2 in real space #1 via other devices. Other operations can be implemented similarly to those described above by operating as explained above.

Although the explanation is provided using object #2 1801_2 and capturing device #1 1802_1, it can be similarly implemented using other objects and other capturing devices.

For example, assume object #2 1801_2 has moved to real space #3 100_3 in FIG. 10A. Object #2 1801_2 is detected and recognized by capturing device #3 1802_3. For example, capturing device #3 1802_3 estimates the position of object #2 1801_2 in real space #3. Here, capturing device #3 1802_3 may estimate the position of object #2 1801_2 based on its own position and the detected position of object #2 1801_2, and capturing device #3 1802_3 and object #2 1801_2 may perform processing for sensing, whereby capturing device #3 1802_3 may estimate the position of object #2 1801_2.

Capturing device #3 1802_3 transmits the position information of object #2 1801_2 in real space #3 to server 104, whereby server 104 obtains the position information of object #2 1801_2 in real space #3 and comes to know "the position of object #2 1801_2 in real space #3". Server 104 obtains information of object #2 1801_2 from capturing device #3 1802_3. Note that server 104 may obtain the position information of object #2 1801_2 in real space #3 from other devices.

Per-object character information storage 1912 of server 104 illustrated in FIG. 19A outputs character information corresponding to object #2 1801_2 by obtaining the information of object #2 1801_2.

Real space position based character controller 213 of server 104 illustrated in FIG. 19A obtains position information of object #2 1801_2 in real space #3, and outputs information for controlling the position of the character corresponding to object #2 1801_2 in virtual spaces #4 and #5 that are associated with real spaces #3 and #4.

Output information generator 214 of server 104 illustrated in FIG. 19A, based on information obtained from spatial information storage 211, "character information corresponding to object #2 1801_2" output by per-object character information storage 1912, and "information for controlling the position of the character corresponding to object #2 1801_2 in virtual spaces #4 and #5 that are associated with real spaces #3 and #4" output by real space position based character controller 213, places the "character corresponding to object #2 1801_2" at the "position of the character corresponding to object #2 1801_2 in virtual spaces #4 and #5 that are associated with real spaces #3 and #4" in virtual spaces #4 and #5, and output information generator 214 of server 104 illustrated in FIG. 19A generates output information related to virtual spaces #4 and #5 including "the character corresponding to object #2 1801_2", and output signal 202 including the output information related to virtual spaces #4 and #5 including "the character corresponding to object #2 1801_2" is output from server 104. Here, output signal 202 may include information on other virtual spaces.

Therefore, when object #2 1801_2 moves in real space #3 and the position of object #2 1801_2 in real space #3 is updated, according to the operation explained above, the position of "the character corresponding to object #2 1801_2" in virtual spaces #4 and #5 that are associated with real spaces #3 and #4 is updated, and output signal 202 including output information related to virtual spaces #4 and #5 including "the character corresponding to object #2 1801_2" is output from server 104 at output information generator 214 of server 104 illustrated in FIG. 19A.

Note that in the above explanation, object #2 1801_2 may estimate its position in real space #3 using a position estimation system such as GPS that object #2 1801_2 includes, and server 104 may obtain the position information of object #2 1801_2 in real space #3 via other devices. Other operations can be implemented similarly to those described above by operating as explained above. Although the explanation is provided using object #2 1801_2 and capturing device #3 1802_3, it can be similarly implemented using other objects and other capturing devices.

An explanation will be provided regarding an example of the operations performed by real space position based character controller 213 illustrated in FIG. 19A.

In the system of FIG. 21, for example, object #3 1801_3 is present in real space #3 100_3 listed in FIG. 10A, and object #3 1801_3 is detected and recognized by capturing device #3 1802_3. For example, capturing device #3 1802_3 estimates the position of object #3 1801_3 in real space #3. Here, capturing device #3 1802_3 may estimate the position of object #3 1801_3 based on its own position and the detected position of object #3 1801_3, and capturing device #3 1802_3 and object #3 1801_3 may perform processing for sensing, whereby capturing device #3 1802_3 may estimate the position of object #3 1801_3.

Capturing device #3 1802_3 transmits the position information of object #3 1801_3 in real space #3 to server 104, whereby server 104 obtains the position information of object #3 1801_3 in real space #3 and comes to know "the position of object #3 1801_3 in real space #3". Server 104 obtains information of object #3 1801_3 from capturing device #3 1802_3. Note that server 104 may obtain the position information of object #3 1801_3 in real space #3 from other devices.

Per-object character information storage 1912 of server 104 illustrated in FIG. 19A outputs character information corresponding to object #3 1801_3 by obtaining the information of object #3 1801_3.

Real space position based character controller 213 of server 104 illustrated in FIG. 19A obtains position information of object #3 1801_3 in real space #3, and outputs information for controlling the position of the character corresponding to object #3 1801_3 in virtual space #4 and virtual space #5 that are associated with real spaces #3 and #4.

Output information generator 214 of server 104 illustrated in FIG. 19A, based on information obtained from spatial information storage 211, "character information corresponding to object #3 1801_3" output by per-object character information storage 1912, and "information for controlling the position of the character corresponding to object #3 1801_3 in virtual spaces #4 and #5 that are associated with real spaces #3 and #4" output by real space position based character controller 213, places the "character corresponding to object #3 1801_3" at the "position of the character corresponding to object #3 1801_3 in virtual spaces #4 and #5 that are associated with real spaces #3 and #4" in virtual spaces #4 and #5, and output information generator 214 of server 104 illustrated in FIG. 19A generates output information related to virtual spaces #4 and #5 including "the character corresponding to object #3 1801_3", and output signal 202 including the output information related to virtual spaces #4 and #5 including "the character corresponding to object #3 1801_3" is output from server 104. Here, output signal 202 may include information on other virtual spaces.

Therefore, when object #3 1801_3 moves in real space #3 and the position of object #3 1801_3 in real space #3 is updated, according to the operation explained above, the position of "the character corresponding to object #3 1801_3" in virtual space #4 and virtual space #5 that are associated with real spaces #3 and #4 is updated, and output signal 202 including output information related to virtual space #4 and virtual space #5 including "the character corresponding to object #3 1801_3" is output from server 104 at output information generator 214 of server 104 illustrated in FIG. 19A.

Note that in the above explanation, object #3 1801_3 may estimate its position in real space #3 using a position estimation system such as GPS that object #3 1801_3 includes, and server 104 may obtain the position information of object #3 1801_3 in real space #3 via other devices. Other operations can be implemented similarly to those described above by operating as explained above.

Although the explanation is provided using object #3 1801_3 and capturing device #3 1802_3, it can be similarly implemented using other objects and other capturing devices.

For example, assume object #3 1801_3 has moved to real space #5 100_5 in FIG. 10B. Object #3 1801_3 is detected and recognized by capturing device #5 1802_5. For example, capturing device #5 1802_5 estimates the position of object #3 1801_3 in real space #5. Here, capturing device #5 1802_5 may estimate the position of object #3 1801_3 based on its own position and the detected position of object #3 1801_3, and capturing device #5 1802_5 and object #3 1801_3 may perform processing for sensing, whereby capturing device #5 1802_5 may estimate the position of object #3 1801_3.

Capturing device #5 1802_5 transmits the position information of object #3 1801_3 in real space #5 to server 104, whereby server 104 obtains the position information of object #3 1801_3 in real space #5 and comes to know "the position of object #3 1801_3 in real space #5". Server 104 obtains information of object #3 1801_3 from capturing device #5 1802_5. Note that server 104 may obtain the position information of object #3 1801_3 in real space #5 from other devices.

Per-object character information storage 1912 of server 104 illustrated in FIG. 19A outputs character information corresponding to object #3 1801_3 by obtaining the information of object #3 1801_3.

Real space position based character controller 213 of server 104 illustrated in FIG. 19A obtains position information of object #3 1801_3 in real space #5, and outputs information for controlling the position of the character corresponding to object #3 1801_3 in virtual spaces #6, #7, and #8 that are associated with real spaces #5 and #6.

Output information generator 214 of server 104 illustrated in FIG. 19A, based on information obtained from spatial information storage 211, "character information corresponding to object #3 1801_3" output by per-object character information storage 1912, and "information for controlling the position of the character corresponding to object #3 1801_3 in virtual spaces #6, #7, and #8 that are associated with real spaces #5 and #6" output by real space position based character controller 213, places the "character corresponding to object #3 1801_3" at the "position of the character corresponding to object #3 1801_3 in virtual spaces #6, #7, and #8 that are associated with real spaces #5 and #6" in virtual spaces #6, #7, and #8, and output information generator 214 of server 104 illustrated in FIG. 19A generates output information related to virtual spaces #6, #7, and #8 including "the character corresponding to object #3 1801_3", and output signal 202 including the output information related to virtual spaces #6, #7, and #8 including "the character corresponding to object #3 1801_3" is output from server 104. Here, output signal 202 may include information on other virtual spaces.

Therefore, when object #3 1801_3 moves in real space #5 and the position of object #3 1801_3 in real space #5 is updated, according to the operation explained above, the position of "the character corresponding to object #3 1801_3" in virtual spaces #6, #7, and #8 that are associated with real spaces #5 and #6 is updated, and output signal 202 including output information related to virtual spaces #6, #7, and #8 including "the character corresponding to object #3 1801_3" is output from server 104 at output information generator 214 of server 104 illustrated in FIG. 19A.

Note that in the above explanation, object #3 1801_3 may estimate its position in real space #5 using a position estimation system such as GPS that object #3 1801_3 includes, and server 104 may obtain the position information of object #3 1801_3 in real space #5 via other devices. Other operations can be implemented similarly to those described above by operating as explained above. Although the explanation is provided using object #3 1801_3 and capturing device #5 1802_5, it can be similarly implemented using other objects and other capturing devices.

An explanation will be provided regarding an example of the operations performed by real space position based character controller 213 illustrated in FIG. 19A.

In the system of FIG. 21, for example, object #4 1801_4 is present in real space #5 100_5 listed in FIG. 10B, and object #4 1801_4 is detected and recognized by capturing device #5 1802_5. For example, capturing device #5 1802_5 estimates the position of object #4 1801_4 in real space #5. Here, capturing device #5 1802_5 may estimate the position of object #4 1801_4 based on its own position and the detected position of object #4 1801_4, and capturing device #5 1802_5 and object #4 1801_4 may perform processing for sensing, whereby capturing device #5 1802_5 may estimate the position of object #4 1801_4.

Capturing device #5 1802_5 transmits the position information of object #4 1801_4 in real space #5 to server 104, whereby server 104 obtains the position information of object #4 1801_4 in real space #5 and comes to know "the position of object #4 1801_4 in real space #5". Server 104 obtains information of object #4 1801_4 from capturing device #5 1802_5. Note that server 104 may obtain the position information of object #4 1801_4 in real space #5 from other devices.

Per-object character information storage 1912 of server 104 illustrated in FIG. 19A outputs character information corresponding to object #4 1801_4 by obtaining the information of object #4 1801_4.

Real space position based character controller 213 of server 104 illustrated in FIG. 19A obtains position information of object #4 1801_4 in real space #5, and outputs information for controlling the position of the character corresponding to object #4 1801_4 in virtual spaces #6, #7, and #8 that are associated with real spaces #5 and #6.

Output information generator 214 of server 104 illustrated in FIG. 19A, based on information obtained from spatial information storage 211, "character information corresponding to object #4 1801_4" output by per-object character information storage 1912, and "information for controlling the position of the character corresponding to object #4 1801_4 in virtual spaces #6, #7, and #8 that are associated with real spaces #5 and #6" output by real space position based character controller 213, places the "character corresponding to object #4 1801_4" at the "position of the character corresponding to object #4 1801_4 in virtual spaces #6, #7, and #8 that are associated with real spaces #5 and #6" in virtual spaces #6, #7, and #8, and output information generator 214 of server 104 illustrated in FIG. 19A generates output information related to virtual spaces #6, #7, and #8 including "the character corresponding to object #4 1801_4", and output signal 202 including the output information related to virtual spaces #6, #7, and #8 including "the character corresponding to object #4 1801_4" is output from server 104. Here, output signal 202 may include information on other virtual spaces.

Therefore, when object #4 1801_4 moves in real space #5 and the position of object #4 1801_4 in real space #5 is updated, according to the operation explained above, the position of "the character corresponding to object #4 1801_4" in virtual spaces #6, #7, and #8 that are associated with real spaces #5 and #6 is updated, and output signal 202 including output information related to virtual spaces #6, #7, and #8 including "the character corresponding to object #4 1801_4" is output from server 104 at output information generator 214 of server 104 illustrated in FIG. 19A.

Note that in the above explanation, object #4 1801_4 may estimate its position in real space #5 using a position estimation system such as GPS that object #4 1801_4 includes, and server 104 may obtain the position information of object #4 1801_4 in real space #5 via other devices. Other operations can be implemented similarly to those described above by operating as explained above.

Although the explanation is provided using object #4 1801_4 and capturing device #5 1802_5, it can be similarly implemented using other objects and other capturing devices.

For example, assume object #4 1801_4 has moved to real space #7 100_3 in FIG. 10B. Object #4 1801_4 is detected and recognized by capturing device #7 1802_7. For example, capturing device #7 1802_7 estimates the position of object #4 1801_4 in real space #7. Here, capturing device #7 1802_7 may estimate the position of object #4 1801_4 based on its own position and the detected position of object #4 1801_4, and capturing device #7 1802_7 and object #4 1801_4 may perform processing for sensing, whereby capturing device #7 1802_7 may estimate the position of object #4 1801_4.

Capturing device #7 1802_7 transmits the position information of object #4 1801_4 in real space #7 to server 104, whereby server 104 obtains the position information of object #4 1801_4 in real space #7 and comes to know "the position of object #4 1801_4 in real space #7". Server 104 obtains information of object #4 1801_4 from capturing device #7 1802_7. Note that server 104 may obtain the position information of object #4 1801_4 in real space #7 from other devices.

Per-object character information storage 1912 of server 104 illustrated in FIG. 19A outputs character information corresponding to object #4 1801_4 by obtaining the information of object #4 1801_4.

Real space position based character controller 213 of server 104 illustrated in FIG. 19A obtains position information of object #4 1801_4 in real space #7, and outputs information for controlling the position of the character corresponding to object #4 1801_4 in virtual spaces #9 and #10 that are associated with real spaces #7, #8, #9, and #10.

Output information generator 214 of server 104 illustrated in FIG. 19A, based on information obtained from spatial information storage 211, "character information corresponding to object #4 1801_4" output by per-object character information storage 1912, and "information for controlling the position of the character corresponding to object #4 1801_4 in virtual spaces #9 and #10 that are associated with real spaces #7, #8, #9, and #10" output by real space position based character controller 213, places the "character corresponding to object #4 1801_4" at the "position of the character corresponding to object #4 1801_4 in virtual spaces #9 and #10 that are associated with real spaces #7, #8, #9, and #10" in virtual spaces #9 and #10, and output information generator 214 of server 104 illustrated in FIG. 19A generates output information related to virtual spaces #9 and #10 including "the character corresponding to object #4 1801_4", and output signal 202 including the output information related to virtual spaces #9 and #10 including "the character corresponding to object #4 1801_4" is output from server 104. Here, output signal 202 may include information on other virtual spaces.

Therefore, when object #4 1801_4 moves in real space #7 and the position of object #4 1801_4 in real space #7 is updated, according to the operation explained above, the position of "the character corresponding to object #4 1801_4" in virtual spaces #9 and #10 that are associated with real spaces #7, #8, #9, and #10 is updated, and output signal 202 including output information related to virtual spaces #9 and #10 including "the character corresponding to object #4 1801_4" is output from server 104 at output information generator 214 of server 104 illustrated in FIG. 19A.

Note that in the above explanation, object #4 1801_4 may estimate its position in real space #7 using a position estimation system such as GPS that object #4 1801_4 includes, and server 104 may obtain the position information of object #4 1801_4 in real space #7 via other devices. Other operations can be implemented similarly to those described above by operating as explained above. Although the explanation is provided using object #4 1801_4 and capturing device #7 1802_7, it can be similarly implemented using other objects and other capturing devices.

An explanation will be provided regarding an example of the operations performed by real space position based character controller 213 illustrated in FIG. 19A.

In the system of FIG. 21, for example, object #5 1801_5 is present in real space #7 100_7 listed in FIG. 10B, and object #5 1801_5 is detected and recognized by capturing device #7 1802_7. For example, capturing device #7 1802_7 estimates the position of object #5 1801_5 in real space #7. Here, capturing device #7 1802_7 may estimate the position of object #5 1801_5 based on its own position and the detected position of object #5 1801_5, and capturing device #7 1802_7 and object #5 1801_5 may perform processing for sensing, whereby capturing device #7 1802_7 may estimate the position of object #5 1801_5.

Capturing device #7 1802_7 transmits the position information of object #5 1801_5 in real space #7 to server 104, whereby server 104 obtains the position information of object #5 1801_5 in real space #7 and comes to know "the position of object #5 1801_5 in real space #7". Server 104 obtains information of object #5 1801_5 from capturing device #7 1802_7. Note that server 104 may obtain the position information of object #5 1801_5 in real space #7 from other devices.

Per-object character information storage 1912 of server 104 illustrated in FIG. 19A outputs character information corresponding to object #5 1801_5 by obtaining the information of object #5 1801_5.

Real space position based character controller 213 of server 104 illustrated in FIG. 19A obtains position information of object #5 1801_5 in real space #7, and outputs information for controlling the position of the character corresponding to object #5 1801_5 in virtual spaces #9 and #10 that are associated with real spaces #7, #8, #9, and #10.

Output information generator 214 of server 104 illustrated in FIG. 19A, based on information obtained from spatial information storage 211, "character information corresponding to object #5 1801_5" output by per-object character information storage 1912, and "information for controlling the position of the character corresponding to object #5 1801_5 in virtual spaces #9 and #10 that are associated with real spaces #7, #8, #9, and #10" output by real space position based character controller 213, places the "character corresponding to object #5 1801_5" at the "position of the character corresponding to object #5 1801_5 in virtual spaces #9 and #10 that are associated with real spaces #7, #8, #9, and #10" in virtual spaces #9 and #10, and output information generator 214 of server 104 illustrated in FIG. 19A generates output information related to virtual spaces #9 and #10 including "the character corresponding to object #5 1801_5", and output signal 202 including the output information related to virtual spaces #9 and #10 including "the character corresponding to object #5 1801_5" is output from server 104. Here, output signal 202 may include information on other virtual spaces.

Therefore, when object #5 1801_5 moves in real space #1 and the position of object #5 1801_5 in real space #1 is updated, according to the operation explained above, the position of "the character corresponding to object #5 1801_5" in virtual spaces #9 and #10 that are associated with real spaces #7, #8, #9, and #10 is updated, and output signal 202 including output information related to virtual spaces #9 and #10 including "the character corresponding to object #5 1801_5" is output from server 104 at output information generator 214 of server 104 illustrated in FIG. 19A.

Note that in the above explanation, object #5 1801_5 may estimate its position in real space #7 using a position estimation system such as GPS that object #5 1801_5 includes, and server 104 may obtain the position information of object #5 1801_5 in real space #7 via other devices. Other operations can be implemented similarly to those described above by operating as explained above.

Although the explanation is provided using object #5 1801_5 and capturing device #7 1802_7, it can be similarly implemented using other objects and other capturing devices.

For example, assume object #5 1801_5 has moved to real space #9 100_3 in FIG. 10B. Object #5 1801_5 is detected and recognized by capturing device #9 1802_9. For example, capturing device #9 1802_9 estimates the position of object #5 1801_5 in real space #9. Here, capturing device #9 1802_9 may estimate the position of object #5 1801_5 based on its own position and the detected position of object #5 1801_5, and capturing device #9 **1802_9 and** object #5 1801_5 may perform processing for sensing, whereby capturing device #9 1802_9 may estimate the position of object #5 1801_5.

Capturing device #9 1802_9 transmits the position information of object #5 1801_5 in real space #9 to server 104, whereby server 104 obtains the position information of object #5 1801_5 in real space #9 and comes to know "the position of object #5 1801_5 in real space #9". Server 104 obtains information of object #5 1801_5 from capturing device #9 1802_9. Note that server 104 may obtain the position information of object #5 1801_5 in real space #9 from other devices.

Per-object character information storage 1912 of server 104 illustrated in FIG. 19A outputs character information corresponding to object #5 1801_5 by obtaining the information of object #5 1801_5.

Real space position based character controller 213 of server 104 illustrated in FIG. 19A obtains position information of object #5 1801_5 in real space #9, and outputs information for controlling the position of the character corresponding to object #5 1801_5 in virtual spaces #9 and #10 that are associated with real spaces #7, #8, #9, and #10.

Output information generator 214 of server 104 illustrated in FIG. 19A, based on information obtained from spatial information storage 211, "character information corresponding to object #5 1801_5" output by per-object character information storage 1912, and "information for controlling the position of the character corresponding to object #5 1801_5 in virtual spaces #9 and #10 that are associated with real spaces #7, #8, #9, and #10" output by real space position based character controller 213, places the "character corresponding to object #5 1801_5" at the "position of the character corresponding to object #5 1801_5 in virtual spaces #9 and #10 that are associated with real spaces #7, #8, #9, and #10" in virtual spaces #9 and #10, and output information generator 214 of server 104 illustrated in FIG. 19A generates output information related to virtual spaces #9 and #10 including "the character corresponding to object #5 1801_5", and output signal 202 including the output information related to virtual spaces #9 and #10 including "the character corresponding to object #5 1801_5" is output from server 104. Here, output signal 202 may include information on other virtual spaces.

Therefore, when object #5 1801_5 moves in real space #9 and the position of object #5 1801_5 in real space #9 is updated, according to the operation explained above, the position of "the character corresponding to object #5 1801_5" in virtual spaces #9 and #10 that are associated with real spaces #7, #8, #9, and #10 is updated, and output signal 202 including output information related to virtual spaces #9 and #10 including "the character corresponding to object #5 1801_5" is output from server 104 at output information generator 214 of server 104 illustrated in FIG. 19A.

Note that in the above explanation, object #5 1801_5 may estimate its position in real space #9 using a position estimation system such as GPS that object #5 1801_5 includes, and server 104 may obtain the position information of object #5 1801_5 in real space #9 via other devices. Other operations can be implemented similarly to those described above by operating as explained above. Although the explanation is provided using object #5 1801_5 and capturing device #9 1802_9, it can be similarly implemented using other objects and other capturing devices.

As described above, an explanation has been provided regarding the relationship between IDs in real space and IDs in virtual space, and the accompanying operations performed by each element. However, the relationship between IDs in real space and IDs in virtual space is not limited to the examples illustrated in FIG. 10A and FIG. 10B, and can be implemented as described above as long as one or more IDs in real space are associated with one or more IDs in virtual space.

As described above, server 104, which obtains the position information of the object via the capturing device, will make a character corresponding to the object appear in the virtual space based on the position information of the object. A specific example of this will be explained.

For example, assume the following situation.

- The object is associated with a character in the shape of a "person", "animal", or "moving object", and server 104, based on the terminal position information, will cause a character in the shape of a "person", "animal", or "moving object" corresponding to the object to appear in the virtual space.
- The capturing device obtains the position information of the object. Server 104 obtains the position information of the object.
- The "person", "animal", or "moving object" in real space corresponding to the object is, for example, riding on a bus, and the bus is traveling on a road. Here, the object is located at a height of several meters above the ground and is moving at the speed of the bus.

In such a situation, it is assumed that the object is detected by the capturing device to be located on the road (the longitude and latitude of the road may be obtained) and at a height of 4 m above the ground.

Server 104 obtains the three-dimensional position of the object, and for example, as illustrated in FIG. 17A, server 104 may perform processing to cause a character in the shape of a person, animal, or moving object corresponding to the object to appear in the virtual space at a position 4 m above the ground on the road (1700_1).

The capturing device may detect and recognize surrounding information other than the object, and may introduce the recognized surrounding situation along with the object into the virtual space.

Note that the character corresponding to the object is not limited to a "person", "animal", or "moving object", and may be any kind of thing.

By doing so, server 104 can represent the character corresponding to the object in the virtual space in a manner closer to the position where it is in real space.

As another example, server 104 obtains the three-dimensional position of the object, and for example, as illustrated in FIG. 17B, server 104 may perform processing to cause a character in the shape of a person, animal, or moving object corresponding to the object to appear in the virtual space on the ground of the road (for example, at a height of 0 m) (1700_2).

By doing so, server 104 can represent the character corresponding to the object in the virtual space with height correction relative to the position where it is in real space. With this, it is possible to realize a virtual space that improves situations that are physically inexplicable in real space (for example, phenomena such as a person floating), and it is also possible to create a situation where it is difficult to infer personal information from information related to the character corresponding to the object. This, in turn, can achieve the advantageous effect of being able to protect personal information.

Note that, for the three-dimensional position of the terminal in real space, the method of causing a character corresponding to the object to appear in the virtual space may be switched between a first method of causing it to appear in a three-dimensional equivalent manner as illustrated in FIG. 17A and a second method of causing it to appear with the height corrected as illustrated in FIG. 17B (depending on the correction method, this may become a method of causing it to appear in a two-dimensional equivalent manner).

The setting of whether to use the first method or the second method may be performed when setting the object on server 104.

As another method, server 104 may perform the setting of whether to use the first method or the second method.

Server 104 then causes a character corresponding to the object to appear in the virtual space based on the setting information.

Next, an explanation will be provided regarding the operations of terminal #101 101_101 and terminal #102 101_102 in FIG. 18, FIG. 20, and FIG. 21.

Terminal #101 101_101 and terminal #102 101_102 perform communication with server 104 via network 103.

Terminals such as terminal #101 101_101 and terminal #102 101_102 perform the procedure for associating the character corresponding to the terminal when performing communication with server 104.

As illustrated in FIG. 3B, the terminal transmits terminal information to server 104 (301). Note that the terminal information is information that server 104 can use to identify the terminal (and/or user), and includes, for example, Subscriber Identity Module (SIM) information, telephone number information, email address information (which the user or terminal can use), user-held identification (ID), terminal ID, and Social Networking Service (SNS) information, and is considered "information on the terminal and/or user". Server 104 thus obtains the terminal information (351).

The terminal transmits character information to server 104 (302). Server 104 thus obtains the character information (352).

Note that the terminal, when generating character information, may obtain information that serves as the basis for the character from character generator 215 included in server 104 illustrated in FIG. 19A, or may obtain information that serves as the basis for the character from a device different from server 104. With this, the terminal becomes capable of generating character information. As another method, the terminal may generate the character using the terminal's own functions.

Server 104 then stores the set of terminal information and character information of the terminal in per-terminal character information storage 212 illustrated in FIG. 2. Therefore, per-terminal character information storage 212 illustrated in FIG. 2 stores a "set of terminal information and character information of the terminal" per terminal.

In the explanation of FIG. 3B, operations are described using "terminal information", but it can be similarly implemented using "user information or identification information" instead of "terminal information". In other explanations, operations are described using "terminal information", but it can be similarly implemented using "user information or identification information" instead of "terminal information".

With this, character information storage 212 stores the "set of terminal information and character information of the terminal" for terminal #101 101_101 and the "set of terminal information and character information of the terminal" for terminal #102 101_102 in FIG. 18, FIG. 20, and FIG. 21.

The user operating terminal #101 101_101 in FIG. 18, FIG. 20, and FIG. 21 then accesses server 104 via network 103. For example, the user operating terminal #101 101_101 in FIG. 18, FIG. 20, and FIG. 21 accesses character operation controller 216 of server 104 illustrated in FIG. 19A via network 103. The user operates terminal #101 101_101 to cause the character corresponding to terminal #101 101_101 to appear in the virtual space and move the character corresponding to terminal #101 101_101 in the virtual space. In this way, the part that performs control of the character is character operation controller 216 illustrated in FIG. 19A.

The user may also use the character corresponding to terminal #101 101_101 to communicate with, contact, send messages to, or chat (or make voice calls) with other characters in the virtual space.

Note that the user can move the character corresponding to terminal #101 101_101 in the virtual space regardless of the position of terminal #101 101_101 in the real space. In this way, the part that performs control of the character is character operation controller 216 illustrated in FIG. 19A.

Similarly, the user operating terminal #102 101_102 in FIG. 18, FIG. 20, and FIG. 21 accesses server 104 via network 103. For example, the user operating terminal #102 101_102 in FIG. 18, FIG. 20, and FIG. 21 accesses character operation controller 216 of server 104 illustrated in FIG. 2 via network 103. The user operates terminal #102 101_102 to cause the character corresponding to terminal #102 101_102 to appear in the virtual space and move the character corresponding to terminal #102 101_102 in the virtual space. In this way, the part that performs control of the character is character operation controller 216 illustrated in FIG. 19A.

The user may also use the character corresponding to terminal #102 101_102 to communicate with, contact, send messages to, or chat (or make voice calls) with other characters in the virtual space.

Note that the user can move the character corresponding to terminal #102 101_102 in the virtual space regardless of the position of terminal #102 101_102 in the real space. In this way, the part that performs control of the character is character operation controller 216 illustrated in FIG. 19A.

In the following, as an example, an explanation will be provided regarding examples of operations of each character in virtual space #1 that is associated with real space #1. Therefore, an explanation will be provided with reference to FIG. 18.

As already explained, server 104 generates virtual space #1 related to real space #1 illustrated in FIG. 18. As illustrated in FIG. 18, since object #1 1801_1 and object #2 1801_2 are present in real space #1, server 104 generates virtual space #1 such that the character corresponding to object #1 1801_1 and the character corresponding to object #2 1801_2 appear in virtual space #1. Server 104 controls the position of the character corresponding to object #1 1801_1 in virtual space #1 according to the position of object #1 1801_1 in real space, and server 104 also controls the position of the character corresponding to object #2 1801_2 in virtual space #1 according to the position of object #2 1801_2 in real space.

However, the user operating terminal #101 101_101, which is not present in real space #1 illustrated in FIG. 18, accesses server 104 via network 103, and the user operates terminal #101 101_101 to cause the character corresponding to terminal #101 101_101 to appear in virtual space #1 and move the character corresponding to terminal #101 101_101 in virtual space #1.

The user operating terminal #101 101_101 may use the character corresponding to terminal #101 101_101 to communicate with, contact, send messages to, or chat (or make voice calls) with the character, in virtual space #1, corresponding to object #1 1801_1 in real space #1 (or the user using it). As already explained, at this time, the user operating terminal #101 101_101 will communicate with, contact, send messages to, or chat (or make voice calls) with the terminal corresponding to the character corresponding to object #1 1801_1, i.e., the user using the terminal.

The user operating terminal #101 101_101 may use the character corresponding to terminal #101 101_101 to communicate with, contact, send messages to, or chat (or make voice calls) with the character, in virtual space #1, corresponding to terminal #102 101_102 not present in real space #1 (or the user using it).

The user operating the terminal corresponding to object #1 1801_1 may use the character corresponding to terminal #101 101_1 to communicate with, contact, send messages to, or chat (or make voice calls) with the character, in virtual space #1, corresponding to terminal #101 101_101 not present in real space #1 (or the user using it).

Note that the actions that a user performs in the virtual space using a character corresponding to a terminal, towards other terminals (or users using terminals) corresponding to other characters, are not limited to the above examples (communication, chat, etc.). For example, the action may be the transmission of images (still images), transmission of videos, transmission of advertisements, distribution of advertisements, distribution of coupons, etc.

In this way, users using terminals corresponding to objects present in a real space associated with a virtual space and users entering a virtual space using terminals can communicate with each other, making it possible to achieve the advantageous effect of being able to interact with a larger number of users.

As described above, by making a character (avatar) corresponding to an object appear in a virtual space corresponding to the real space based on the position information of the object in the real space, it is possible to provide a more diversified system suitable for the real environment where the object, terminal, and the user using the terminal are. Additionally, the terminal and the user using the terminal can communicate with many other terminals (other users) in both real space and virtual space, thereby achieving the advantageous effect of improved convenience.

In the present embodiment, an explanation has been provided regarding the capturing device, but the capturing device may be included in the base station. Here, the embodiment can be similarly implemented by implementing the base station as any of a TRP (Tx (Transmission)/Rx (Reception) point), relay, access point, broadcast station, gNB (g Node B), eNB (e Node B), node, server, satellite, moving device (electric-based moving devices such as electric vehicle, electric motorcycle (e-bike), electric bicycle, moving robot, electric kick scooter, electric-assist bicycle, electric-assist kick scooter, automobile, motorcycle, bicycle, ship, aircraft, airplane, etc.), terminal, mobile phone, smartphone, tablet, laptop computer, personal computer, home appliance (household electrical appliance), device in a factory, communication device or broadcast device such as an IoT (Internet of Things) device, etc. Therefore, the base station may be referred to as any of TRP, relay, access point, broadcast station, gNB, eNB, node, server, satellite, moving device as exemplified above, terminal, mobile phone, smartphone, tablet, laptop computer, personal computer, home appliance, device in a factory, communication device or broadcast device such as an IoT device, etc. The above points apply throughout the present specification.

In the present embodiment, an explanation was provided regarding the terminal, but the embodiment can be similarly implemented by implementing the terminal as any of a TRP, base station, relay, access point, broadcast station, gNB, eNB, node, server, satellite, moving device as exemplified above, terminal, mobile phone, smartphone, tablet, laptop computer, personal computer, home appliance, device in a factory, communication device or broadcast device such as an IoT device, etc. Therefore, the terminal of the present embodiment may be referred to as any of TRP, base station, relay, access point, broadcast station, gNB, eNB, node, server, satellite, moving device as exemplified above, terminal, mobile phone, smartphone, tablet, laptop computer, personal computer, home appliance, device in a factory, communication device or broadcast device such as an IoT device, etc. The above points apply throughout the present specification.

For example, when a device transmits a modulated signal or a signal for sensing, it may transmit one or more, or two or more modulated signals or signals for sensing using one or more, or two or more transmit antennas. The above points apply throughout the present specification.

In the above, the signal transmitted by the terminal, for example, the modulated signal or signal for sensing may belong to any of UL-SCH, PUCCH, PUSCH, PRACH, etc. However, this is non-limiting.

In the above, the "signal transmitted by the base station, for example, downlink frame, reference signal, control signal" may belong to any of PCH, BCH, DL-SCH, BCCH, PCCH, CCCH, common search space, PBCH, SS, PDCCH, PDSCH, etc. However, this is non-limiting.

In the present embodiment, an example was explained where server 104 causes characters corresponding to objects such as object #1 1801_1 and object #2 1801_2 and characters corresponding to terminals such as terminal #101 101_101 and terminal #102 101_102 illustrated in FIG. 18 to appear in the virtual space and controls the characters corresponding to objects and characters corresponding to terminals in the virtual space. However, the characters corresponding to objects and characters corresponding to terminals in the virtual space may be any type of character, any type of object, or any type of avatar. Therefore, the present embodiment may be similarly implemented by replacing the term "character" with "object" or "avatar".

For example, the "character corresponding to an object" or "character corresponding to a terminal" in the virtual space may be a "human-like character (or object or avatar)", "animal-like character (or object or avatar)", "bird-like character (or object or avatar)", "flying object (drone, aircraft, airplane)-like character (or object or avatar)", "vehicle-like character (or object or avatar)", "bicycle-like character (or object or avatar)", "motorcycle-like character (or object or avatar)", "train-like character (or object or avatar)", "railway train-like character (or object or avatar)", "robot-like character (or object or avatar)", but this is non-limiting.

Server 104 may also determine which of a plurality of predetermined terminal types the terminal is, and display in the virtual space an object corresponding to each state or an object selected from an object group corresponding to each state. The correspondence between terminal types and objects is not limited to the above examples. For example, objects shaped like different animals may be associated according to the type of terminal, or objects with the same shape but different colors may be associated according to the type of terminal.

Server 104 may then determine which of a plurality of predetermined object types the object is, and display in the virtual space an object corresponding to each state or an object selected from an object group corresponding to each state. The correspondence between object types and objects is not limited to the above examples. For example, objects shaped like different animals may be associated according to the type of object, or objects with the same shape but different colors may be associated according to the type of object.

Note that these points apply throughout the present specification.

In FIG. 18, since object #1 1801_1 is present in real space #1, server 104, for example, causes the character corresponding to object #1 1801_1 to appear in virtual space #1 corresponding to real space #1, and for example, the user controls the character corresponding to object #1 1801_1 using a terminal or the like. Server 104 illustrates an example of providing information of virtual space #1 to terminals.

As another method, server 104 generates information for AR display as information to be provided to object #1 1801_1, object #2 1801_2, and the like present in real space #1. Server 104 may then provide the information for AR display to terminals corresponding to objects present in real space #1, such as object #1 1801_1, object #2 1801_2, and the like. Here, if a terminal with AR display functionality is present in real space #1, that terminal will obtain information for AR display and display characters, objects, and the like at specified positions.

Server 104 generates information for AR display from information of virtual space #1. Here, server 104 generates, from information and positions of characters and objects present in virtual space #1, information on characters and objects to be superimposed on the real space and position information for superimposing characters and objects on the real space. Server 104 transmits the information on characters and objects to be superimposed on the real space and the position information for superimposing characters and objects on the real space to terminals with AR display functionality present in real space #1, and the terminals with AR display functionality display characters, objects, and the like at specified positions based on the information on characters and objects to be superimposed on the real space and the position information for superimposing characters and objects on the real space.

Note that the terminal may perform the following processing.

The terminal performs self-position estimation by aligning three-dimensional map information with sensing data (such as point cloud data obtained by LIDAR or a camera). In self-position estimation, the terminal estimates, for example, information on position and orientation in the three-dimensional map information as self-position information. The terminal obtains data indicating shape data and placement positions of surrounding objects from server 104 based on the estimated self-position. The terminal displays objects based on the self-position information of the terminal on a display screen displaying video captured by a camera included in the terminal, or on a transparent display of smart glasses or the like.

Note that the terminal may perform detection of planar surfaces such as surrounding floors or desk tops during position estimation. Here, the detected planar surfaces are assumed to be horizontal or nearly horizontal surfaces, but they may also be vertical planar surfaces such as walls, or detection of planar surfaces having any angle including horizontal and vertical may be performed. The terminal may detect objects including these, provide them to server 104, and display them in the virtual space, or process them as objects for display in AR space.

The terminal may, when displaying objects, correct the position for displaying the objects on the display screen based on information of the detected planar surfaces, rather than directly using the information of the placement position set for the objects. Note that this point is applicable to both display in virtual space and display in AR.

Although an example in which the terminal displays objects for virtual space and AR based on the self-position estimated by the terminal was explained, objects may be displayed for virtual space and AR based on position information obtained by other methods. Position information obtained by other methods may be, for example, terminal position information estimated by a base station, terminal position information estimated by other devices, position information obtained by GPS, etc. Here, when using terminal position information estimated by the base station, in the case where a character is displayed in the virtual space based on the position information estimated by the base station, it is possible to reduce the possibility of differences occurring between objects visible from that character in the virtual space and objects displayed in AR in real space.

The virtual space configuration method explained in Embodiment 1 and the virtual space configuration method explained in Embodiment 2 may be used in combination. More specifically, there may be, in the virtual space, a "character corresponding to a terminal present in the real space associated with the virtual space" as described in Embodiment 1, a "character corresponding to an object present in the real space associated with the virtual space" as explained according to the present embodiment, and a "character controlled using a terminal".

### [Embodiment 3]

In the present embodiment, an explanation will be provided regarding a specific example of modulated signals transmitted by the base station and terminal described in Embodiment 1. As an example, an explanation will be provided with reference to FIG. 1.

FIG. 22 illustrates an example of a configuration of base station capability information 2200 included in a modulated signal transmitted by a base station such as base station #1 102_1 illustrated in FIG. 1. Base station capability information 2200 includes, for example, information 2211 on whether or not a position information provision service is being implemented, information 2212 on whether or not a virtual space provision service is being implemented, and information 2213 on whether or not the real space supports a method of causing a character corresponding to the terminal to appear in the virtual space based on position information in the real space. Here, the base station transmits base station capability information 2200 to the terminal.

Note that it is sufficient if base station capability information 2200 includes at least one of information 2211 on whether or not a position information provision service is being implemented, information 2212 on whether or not a virtual space provision service is being implemented, or information 2213 on whether or not the real space supports a method of causing a character corresponding to the terminal to appear in the virtual space based on position information in the real space.

Information 2211 on whether or not a position information provision service is being implemented is information for notifying whether or not the base station includes a function for estimating the position of the terminal.

For example, suppose that information 2211 on whether or not a position information provision service is being implemented is 1-bit information. When information 2211 on whether or not a position information provision service is being implemented is "1", it indicates that the base station supports the transmission of a modulated signal for estimating the position of the terminal and the reception of a modulated signal from the terminal. Therefore, when the terminal receives "1" as information 2211 on whether or not a position information provision service is being implemented, the base station and the terminal perform communication for estimating the position of the terminal.

When information 2211 on whether or not a position information provision service is being implemented is "0", it indicates that the base station does not support the transmission of a modulated signal for estimating the position of the terminal or the reception of a modulated signal from the terminal. Therefore, when the terminal receives "0" as information 2211 on whether or not a position information provision service is being implemented, the base station and the terminal do not perform communication for estimating the position of the terminal. Therefore, the terminal does not request the base station to implement position estimation for its own position. The terminal also does not request services described in Embodiment 1 related to the virtual space using position information.

Information 2212 on whether or not a virtual space provision service is being implemented is information on whether or not the base station supports the provision of the virtual space described in Embodiment 1, or information on whether or not a virtual space exists for the communication area of the base station.

For example, suppose that information 2212 on whether or not a virtual space provision service is being implemented is 1-bit information. When information 2212 on whether or not a virtual space provision service is being implemented is "1", it indicates that the base station supports the provision of a virtual space as described in Embodiment 1. Therefore, when the terminal receives "1" as information 2211 on whether or not a position information provision service is being implemented, the terminal can request access to the virtual space.

When information 2212 on whether or not a virtual space provision service is being implemented is "0", it indicates that the base station does not support the provision of a virtual space as described in Embodiment 1. Therefore, when the terminal receives "0" as information 2211 on whether or not a position information provision service is being implemented, the terminal does not request access to the virtual space.

As another example, when information 2212 on whether or not a virtual space provision service is being implemented is "1", it indicates that a virtual space exists for the area in which the base station can communicate. Therefore, when the terminal receives "1" as information 2211 on whether or not a position information provision service is being implemented, the terminal can request access to the virtual space.

When information 2212 on whether or not a virtual space provision service is being implemented is "0", it indicates that no virtual space exists for the area in which the base station can communicate. Therefore, when the terminal receives "0" as information 2211 on whether or not a position information provision service is being implemented, the terminal does not request access to the virtual space.

Information 2213 on whether or not the real space supports a method of causing a character corresponding to the terminal to appear in the virtual space based on position information in the real space is information on whether or not to implement "as described in Embodiment 1, the base station obtains the terminal position information and communicates with the server to cause a character corresponding to the terminal, for which the position information has been obtained, to appear in the virtual space".

For example, suppose that information 2213 on whether or not the real space supports a method of causing a character corresponding to the terminal to appear in the virtual space based on position information in the real space is 1-bit information.

When information 2213 on whether or not the real space supports a method of causing a character corresponding to the terminal to appear in the virtual space based on position information in the real space is "1", it indicates that "the base station is implementing a service that provides a virtual space in its communication area, and can obtain the terminal position information and cause a character corresponding to the terminal whose position information has been obtained to appear in the virtual space". Therefore, when the terminal receives "1" as information 2211 on whether or not a position information provision service is being implemented, the terminal can request the base station to make a character that is based on the terminal's position information appear in the virtual space, based on the terminal's position information.

When "information 2213 on whether or not the real space supports a method of causing a character corresponding to the terminal to appear in the virtual space based on position information in the real space" is "0", it indicates that "the base station is not implementing a service that provides a virtual space in its communication area". Therefore, when the terminal receives "0" as information 2211 on whether or not a position information provision service is being implemented, the terminal does not request the base station to make a character that is based on the terminal's position information appear in the virtual space, based on the terminal's position information.

As described above, by the base station transmitting base station capability information to the terminal, the terminal can determine whether the base station supports the "service of making a character appear in a virtual space based on the position of a terminal present in real space" as explained in Embodiment 1. This provides the advantage that the terminal can appropriately receive the service.

FIG. 23 illustrates an example of a configuration of terminal capability information 2300 included in a modulated signal transmitted by terminals such as terminal #1 101_1, terminal #2 101_2, terminal #101 101_101, and terminal #102 101_102 illustrated in FIG. 1. Terminal capability information 2300 includes, for example, information 2311 on whether or not a virtual space provision service is supported, information 2312 on whether or not a position information service is supported, and information 2313 on whether or not a method of causing a character corresponding to the terminal to appear in the virtual space based on position information in the real space is supported. Here, the terminal transmits terminal capability information 2300 to the base station.

Note that it is sufficient if terminal capability information 2300 includes at least one of information 2311 on whether or not a virtual space provision service is supported, information 2312 on whether or not a position information service is supported, or information 2313 on whether or not a method of causing a character corresponding to the terminal to appear in the virtual space based on position information in the real space is supported.

Information 2311 on whether or not a virtual space provision service is supported is information for notifying whether or not the terminal supports the virtual space provision service described in Embodiment 1 for the base station.

For example, suppose that information 2311 on whether or not a virtual space provision service is supported is 1-bit information. When information 2311 on whether or not a virtual space provision service is supported is "1", it indicates that it is a terminal that supports the provision of a virtual space as described in Embodiment 1. Therefore, when the base station receives "1" as information 2211 on whether or not a position information provision service is being implemented, the base station can initiate communication with the terminal to provide a service related to the virtual space described in Embodiment 1.

When information 2311 on whether or not a virtual space provision service is supported is "0", it indicates that it is not a terminal that supports the provision of a virtual space as described in Embodiment 1. Therefore, when the base station receives "0" as information 2211 on whether or not a position information provision service is being implemented, the base station does not initiate communication with the terminal to provide a service related to the virtual space described in Embodiment 1.

Information 2312 on whether or not a position information service is supported is information for notifying whether or not the terminal includes a function for obtaining information on its own position.

For example, suppose that information 2312 on whether or not a position information service is supported is 1-bit information. When information 2312 on whether or not a position information service is supported is "1", it indicates that the terminal supports the transmission of a modulated signal for estimating its own position and the reception of a modulated signal from the base station. Therefore, when the base station receives "1" as information 2312 on whether or not a position information service is supported, the base station and the terminal perform communication for estimating the position of the terminal.

When information 2312 on whether or not a position information service is supported is "0", it indicates that the terminal does not support the transmission of a modulated signal for estimating its own position and the reception of a modulated signal from the base station. Therefore, when the base station receives "0" as information 2312 on whether or not a position information service is supported, the base station and the terminal do not perform communication for estimating the position of the terminal.

Note that the estimation of the position of the terminal may be performed by the base station or by the terminal.

Information 2313 on whether or not a method of causing a character corresponding to the terminal to appear in the virtual space based on position information in the real space is supported is information on whether or not "as described in Embodiment 1, the base station obtains the terminal position information and communicates with the server to cause a character corresponding to the terminal, for which the position information has been obtained, to appear in the virtual space" is supported.

For example, suppose that information 2313 on whether or not a method of causing a character corresponding to the terminal to appear in the virtual space based on position information in the real space is supported is 1-bit information. When information 2313 on whether or not a method of causing a character corresponding to the terminal to appear in the virtual space based on position information in the real space is supported is "1", it indicates that "the terminal supports a system where the base station and server obtain the terminal position information and cause a character corresponding to the terminal to appear in the virtual space based on the position information". Therefore, when the base station receives "1" as information 2313 on whether or not a method of causing a character corresponding to the terminal to appear in the virtual space based on position information in the real space is supported, the base station can provide, to the terminal, a service to make a character based on the terminal's position information appear in the virtual space, based on the terminal's position information.

When information 2313 on whether or not a method of causing a character corresponding to the terminal to appear in the virtual space based on position information in the real space is supported is "0", it indicates that "the terminal does not support a system where the base station and server obtain the terminal position information and cause a character corresponding to the terminal to appear in the virtual space based on the position information". Therefore, when the base station receives "0" as information 2313 on whether or not a method of causing a character corresponding to the terminal to appear in the virtual space based on position information in the real space is supported, the base station does not provide, to the terminal, a service to make a character based on the terminal's position information appear in the virtual space, based on the terminal's position information.

As described above, by the terminal transmitting terminal capability information to the base station, the base station can determine whether the terminal supports the "service of making a character appear in a virtual space based on the position of a terminal present in real space" as explained in Embodiment 1. This provides the advantage that the base station can appropriately provide the service.

An explanation will be provided regarding an example of the configuration of a base station that transmits base station capability information 2200 illustrated in FIG. 22.

FIG. 24A is a first example of a configuration of a base station. For example, interface 2400 receives first input signal 2401 as input and outputs first output signal 2402. First input signal 2401 and first output signal 2402 are signals for wireless communication and are signals related to transmission and reception via an antenna.

Interface 2400 receives second input signal 2403 as input and outputs second output signal 2404. Second input signal 2403 and second output signal 2404 are signals for communicating with server 104.

Interface 2400 is connected to wireless communication processor 2411, position estimation processor 2412, and virtual space related processor 2413. Note that although this element is referred to as an interface, it may be a bus.

Wireless communication processor 2411 is an element that performs processing for transmission and processing for reception to conduct wireless communication with the terminal illustrated in FIG. 1.

Position estimation processor 2412 is an element that communicates with the terminal illustrated in FIG. 1, generates transmission signals for estimating the position of the terminal, and processes reception signals. Since specific examples of the processing have already been described in Embodiment 1, repeated explanation will be omitted. Position estimation processor 2412 obtains the terminal position information. Note that the base station may transmit terminal position information to the server.

Virtual space related processor 2413 obtains terminal information and terminal position information, processes this information, and transmits this information to the server. With this, the server implements a process for causing a character corresponding to the terminal to appear in the virtual space. The server transmits, to the base station, data to be transmitted to the terminal, such as data for virtual space display, terminal control data, and data to be transmitted to the terminal (wireless communication processor 2411 obtains this data and performs processing for transmission to the terminal).

Note that the base station may include components other than wireless communication processor 2411, position estimation processor 2412, and virtual space related processor 2413. For example, the base station may include a position estimation processor that uses other systems such as GPS, and an interface for connecting with other devices, etc.

For example, when the base station includes a position estimation processor that uses other systems such as GPS, it may estimate the position of the terminal based on its own position when estimating the position of the terminal. For example, when the base station includes an interface for connecting with other devices, it becomes possible to connect with other devices.

Note that an example of the configuration of the base station is not limited to the example illustrated in FIG. 24A.

Note that a base station having the configuration in FIG. 24A corresponds to a base station that supports the method of causing a character corresponding to the terminal to appear in the virtual space based on position information in the real space of the terminal, as explained in Embodiment 1. Therefore, when transmitting base station capability information 2200 illustrated in FIG. 22, the transmission is performed as follows.

For example, suppose that information 2211 on whether or not a position information provision service is being implemented is 1-bit information. The base station in FIG. 24A sets information 2211 on whether or not a position information provision service is being implemented to "1", indicating that the base station supports the transmission of a modulated signal for estimating the position of the terminal and the reception of a modulated signal from the terminal.

For example, suppose that information 2212 on whether or not a virtual space provision service is being implemented is 1-bit information. The base station in FIG. 24A sets information 2212 on whether or not a virtual space provision service is being implemented to "1", indicating that the base station supports the provision of a virtual space as described in Embodiment 1.

As another example, the base station in FIG. 24A sets information 2212 on whether or not a virtual space provision service is being implemented to "1", indicating that a virtual space exists for the area in which the base station can communicate.

For example, suppose that information 2213 on whether or not the real space supports a method of causing a character corresponding to the terminal to appear in the virtual space based on position information in the real space is 1-bit information. The base station in FIG. 24A sets "information 2213 on whether or not the real space supports a method of causing a character corresponding to the terminal to appear in the virtual space based on position information in the real space" to "1", indicating that "the base station is implementing a service that provides a virtual space in its communication area, and can obtain the terminal position information and cause a character corresponding to the terminal whose position information has been obtained to appear in the virtual space".

As another example, the base station in FIG. 24A may set "information 2213 on whether or not the real space supports a method of causing a character corresponding to the terminal to appear in the virtual space based on position information in the real space" to "0", indicating that "the base station is not implementing a service that provides a virtual space in its communication area".

An explanation will be provided regarding FIG. 24B as another example of the configuration of a base station that transmits base station capability information 2200 illustrated in FIG. 22. Note that elements that operate the same as in FIG. 24A are assigned the same reference numbers, and some explanations are omitted.

FIG. 24B is an example of a configuration of a base station. For example, interface 2400 receives first input signal 2401 as input and outputs first output signal 2402. First input signal 2401 and first output signal 2402 are signals for wireless communication and are signals related to transmission and reception via an antenna.

Interface 2400 receives second input signal 2403 as input and outputs second output signal 2404. Second input signal 2403 and second output signal 2404 are signals for communicating with, for example, a server.

Interface 2400 is connected to wireless communication processor 2411 and position estimation processor 2412. Note that although this element is referred to as an interface, it may be a bus.

Wireless communication processor 2411 is an element that performs processing for transmission and processing for reception to conduct wireless communication with the terminal illustrated in FIG. 1.

Position estimation processor 2412 is an element that communicates with the terminal illustrated in FIG. 1, generates transmission signals for estimating the position of the terminal, and processes reception signals. Since specific examples of the processing have already been described in Embodiment 1, repeated explanation will be omitted. Position estimation processor 2412 obtains the terminal position information. Note that the base station may transmit terminal position information to the server.

Note that the base station may include components other than wireless communication processor 2411 and position estimation processor 2412. For example, the base station may include a position estimation processor that uses other systems such as GPS, and an interface for connecting with other devices, etc.

For example, when the base station includes a position estimation processor that uses other systems such as GPS, it may estimate the position of the terminal based on its own position when estimating the position of the terminal. For example, when the base station includes an interface for connecting with other devices, it becomes possible to connect with other devices.

Note that an example of the configuration of the base station is not limited to the example illustrated in FIG. 24B.

Note that a base station having the configuration in FIG. 24B corresponds to a base station that does not support the method of causing a character corresponding to the terminal to appear in the virtual space based on position information in the real space of the terminal, as explained in Embodiment 1. Therefore, when transmitting base station capability information 2200 illustrated in FIG. 22, the transmission is performed as follows.

For example, suppose that information 2211 on whether or not a position information provision service is being implemented is 1-bit information. The base station in FIG. 24B sets information 2211 on whether or not a position information provision service is being implemented to "1", indicating that the base station supports the transmission of a modulated signal for estimating the position of the terminal and the reception of a modulated signal from the terminal.

For example, suppose that information 2212 on whether or not a virtual space provision service is being implemented is 1-bit information. The base station in FIG. 24B sets information 2212 on whether or not a virtual space provision service is being implemented to "0", indicating that the base station does not support the provision of a virtual space as described in Embodiment 1.

As another example, the base station in FIG. 24B sets information 2212 on whether or not a virtual space provision service is being implemented to "0", indicating that no virtual space exists for the area in which the base station can communicate.

For example, suppose that information 2213 on whether or not the real space supports a method of causing a character corresponding to the terminal to appear in the virtual space based on position information in the real space is 1-bit information. The base station in FIG. 24B sets "information 2213 on whether or not the real space supports a method of causing a character corresponding to the terminal to appear in the virtual space based on position information in the real space" to "0", indicating that "the base station is not implementing a service that provides a virtual space in its communication area".

As another method, the base station in FIG. 24B may transmit base station capability information 2200 that does not include information 2212 on whether or not a virtual space provision service is being implemented, and information 2213 on whether or not the real space supports a method of causing a character corresponding to the terminal to appear in the virtual space based on position information in the real space.

The base station in FIG. 24B may be configured to not transmit base station capability information 2200.

An explanation will be provided regarding FIG. 24C as another example of the configuration of a base station that transmits base station capability information 2200 illustrated in FIG. 22. Note that elements that operate the same as in FIG. 24A are assigned the same reference numbers, and some explanations are omitted.

FIG. 24C is an example of a configuration of a base station. For example, interface 2400 receives first input signal 2401 as input and outputs first output signal 2402. First input signal 2401 and first output signal 2402 are signals for wireless communication and are signals related to transmission and reception via an antenna.

Interface 2400 receives second input signal 2403 as input and outputs second output signal 2404. Second input signal 2403 and second output signal 2404 are signals for communicating with, for example, a server.

Interface 2400 is connected to wireless communication processor 2411. Note that although this element is referred to as an interface, it may be a bus.

Wireless communication processor 2411 is an element that performs processing for transmission and processing for reception to conduct wireless communication with the terminal illustrated in FIG. 1.

Note that the base station may include components other than wireless communication processor 2411. For example, the base station may include a position estimation processor that uses other systems such as GPS, and an interface for connecting with other devices, etc. For example, when the base station includes an interface for connecting with other devices, it becomes possible to connect with other devices.

Note that an example of the configuration of the base station is not limited to the example illustrated in FIG. 24C.

Note that a base station having the configuration in FIG. 24C corresponds to a base station that does not support the method of causing a character corresponding to the terminal to appear in the virtual space based on position information in the real space of the terminal, as explained in Embodiment 1. Therefore, when transmitting base station capability information 2200 illustrated in FIG. 22, the transmission is performed as follows.

For example, suppose that information 2211 on whether or not a position information provision service is being implemented is 1-bit information. The base station in FIG. 24C sets information 2211 on whether or not a position information provision service is being implemented to "0", indicating that the base station does not support the transmission of a modulated signal for estimating the position of the terminal and the reception of a modulated signal from the terminal.

For example, suppose that information 2212 on whether or not a virtual space provision service is being implemented is 1-bit information. The base station in FIG. 24C sets information 2212 on whether or not a virtual space provision service is being implemented to "0", indicating that the base station does not support the provision of a virtual space as described in Embodiment 1.

As another example, the base station in FIG. 24C sets information 2212 on whether or not a virtual space provision service is being implemented to "0", indicating that no virtual space exists for the area in which the base station can communicate.

For example, suppose that information 2213 on whether or not the real space supports a method of causing a character corresponding to the terminal to appear in the virtual space based on position information in the real space is 1-bit information. The base station in FIG. 24C sets "information 2213 on whether or not the real space supports a method of causing a character corresponding to the terminal to appear in the virtual space based on position information in the real space" to "0", indicating that "the base station is not implementing a service that provides a virtual space in its communication area".

As another method, the base station in FIG. 24C may transmit base station capability information 2200 that does not include information 2211 on whether or not a position information provision service is being implemented, information 2212 on whether or not a virtual space provision service is being implemented, and information 2213 on whether or not the real space supports a method of causing a character corresponding to the terminal to appear in the virtual space based on position information in the real space.

The base station in FIG. 24C may be configured to not transmit base station capability information 2200.

An explanation will be provided regarding an example of the configuration of a terminal that transmits terminal capability information 2300 illustrated in FIG. 23.

FIG. 25A is a first example of a configuration of a terminal. For example, interface 2500 receives first input signal 2501 as input and outputs first output signal 2502. First input signal 2501 and first output signal 2502 are signals for wireless communication and are signals related to transmission and reception via an antenna.

Interface 2500 receives second input signal 2503 as input and outputs second output signal 2504. Second input signal 2503 and second output signal 2504 are signals for communicating with other devices.

Interface 2500 is connected to wireless communication processor 2511, position estimation processor 2512, and virtual space related processor 2513. Note that although this element is referred to as an interface, it may be a bus.

Wireless communication processor 2511 is an element that performs processing for transmission and processing for reception to conduct wireless communication with the base station illustrated in FIG. 1.

Position estimation processor 2512 is an element that communicates with the base station illustrated in FIG. 1, generates transmission signals for estimating the position of the terminal, and processes reception signals. Since specific examples of the processing have already been described in Embodiment 1, repeated explanation will be omitted. Note that the base station may transmit terminal position information to the server.

Virtual space related processor 2513 handles its own (i.e., the terminal's) information and its own (the terminal's) position information, and transmits this information to the server via the base station. With this, the server implements a process for causing a character corresponding to the terminal to appear in the virtual space. The server transmits, to the base station, data such as data for virtual space display, terminal control data, and data to be transmitted to the terminal, and the base station transmits this data to the terminal.

Note that the terminal may include components other than wireless communication processor 2511, position estimation processor 2512, and virtual space related processor 2513. For example, the terminal may include a position estimation processor that uses other systems such as GPS, and an interface for connecting with other devices, etc.

For example, when the terminal includes a position estimation processor that uses other systems such as GPS, it may estimate its own (the terminal's) position using the position estimation processor that uses other systems such as GPS. For example, when the terminal includes an interface for connecting with other devices, it becomes possible to connect with other devices.

Note that an example of the configuration of the terminal is not limited to the example illustrated in FIG. 25A.

Note that a terminal having the configuration in FIG. 25A corresponds to a terminal that supports the method of causing a character corresponding to the terminal to appear in the virtual space based on position information in the real space of the terminal, as explained in Embodiment 1. Therefore, when transmitting terminal capability information 2300 illustrated in FIG. 23, the transmission is performed as follows.

For example, suppose that information 2311 on whether or not a virtual space provision service is supported is 1-bit information. The terminal in FIG. 25A sets information 2311 on whether or not a virtual space provision service is supported to "1", indicating that it is a terminal that supports the provision of a virtual space as described in Embodiment 1.

For example, suppose that information 2312 on whether or not a position information service is supported is 1-bit information. The terminal in FIG. 25A sets information 2312 on whether or not a position information service is supported to "1", indicating that the terminal supports the transmission of a modulated signal for estimating its own position and the reception of a modulated signal from the base station.

For example, suppose that information 2313 on whether or not a method of causing a character corresponding to the terminal to appear in the virtual space based on position information in the real space is supported is 1-bit information. The terminal in FIG. 25A sets "information 2313 on whether or not a method of causing a character corresponding to the terminal to appear in the virtual space based on position information in the real space is supported" to "1", indicating that "the terminal supports a system where the base station and server obtain the terminal position information and cause a character corresponding to the terminal to appear in the virtual space based on the position information".

An explanation will be provided regarding FIG. 25B as another example of the configuration of a terminal that transmits terminal capability information 2300 illustrated in FIG. 23. Note that elements that operate the same as in FIG. 25A are assigned the same reference numbers, and some explanations are omitted.

FIG. 25B is an example of a configuration of a terminal. For example, interface 2500 receives first input signal 2501 as input and outputs first output signal 2502. First input signal 2501 and first output signal 2502 are signals for wireless communication and are signals related to transmission and reception via an antenna.

Interface 2500 receives second input signal 2503 as input and outputs second output signal 2504. Second input signal 2503 and second output signal 2504 are signals for communicating with other devices.

Interface 2500 is connected to wireless communication processor 2511 and position estimation processor 2512. Note that although this element is referred to as an interface, it may be a bus.

Wireless communication processor 2511 is an element that performs processing for transmission and processing for reception to conduct wireless communication with the base station illustrated in FIG. 1.

Position estimation processor 2512 is an element that communicates with the base station illustrated in FIG. 1, generates transmission signals for estimating the position of the terminal, and processes reception signals. Since specific examples of the processing have already been described in Embodiment 1, repeated explanation will be omitted. Note that the base station may transmit terminal position information to the server.

Note that the terminal may include components other than wireless communication processor 2511 and position estimation processor 2512. For example, the terminal may include a position estimation processor that uses other systems such as GPS, and an interface for connecting with other devices, etc.

For example, when the terminal includes a position estimation processor that uses other systems such as GPS, it may estimate its own (the terminal's) position using the position estimation processor that uses other systems such as GPS. For example, when the terminal includes an interface for connecting with other devices, it becomes possible to connect with other devices.

Note that an example of the configuration of the terminal is not limited to the example illustrated in FIG. 25B.

Note that a terminal having the configuration in FIG. 25B corresponds to a terminal that does not support the method of causing a character corresponding to the terminal to appear in the virtual space based on position information in the real space of the terminal, as explained in Embodiment 1. Therefore, when transmitting terminal capability information 2300 illustrated in FIG. 23, the transmission is performed as follows.

For example, suppose that information 2311 on whether or not a virtual space provision service is supported is 1-bit information. The terminal in FIG. 25B sets information 2311 on whether or not a virtual space provision service is supported to "0", indicating that it is a terminal that does not support the provision of a virtual space as described in Embodiment 1.

For example, suppose that information 2312 on whether or not a position information service is supported is 1-bit information. The terminal in FIG. 25B sets information 2312 on whether or not a position information service is supported to "1", indicating that the terminal supports the transmission of a modulated signal for estimating its own position and the reception of a modulated signal from the base station.

For example, suppose that information 2313 on whether or not a method of causing a character corresponding to the terminal to appear in the virtual space based on position information in the real space is supported is 1-bit information. The terminal in FIG. 25B sets "information 2313 on whether or not a method of causing a character corresponding to the terminal to appear in the virtual space based on position information in the real space is supported" to "0", indicating that "the terminal does not support a system where the base station and server obtain the terminal position information and cause a character corresponding to the terminal to appear in the virtual space based on the position information".

An explanation will be provided regarding FIG. 25C as another example of the configuration of a terminal that transmits terminal capability information 2300 illustrated in FIG. 23. Note that elements that operate the same as in FIG. 25A are assigned the same reference numbers, and some explanations are omitted.

FIG. 25C is an example of a configuration of a terminal. For example, interface 2500 receives first input signal 2501 as input and outputs first output signal 2502. First input signal 2501 and first output signal 2502 are signals for wireless communication and are signals related to transmission and reception via an antenna.

Interface 2500 receives second input signal 2503 as input and outputs second output signal 2504. Second input signal 2503 and second output signal 2504 are signals for communicating with other devices.

Interface 2500 is connected to wireless communication processor 2511. Note that although this element is referred to as an interface, it may be a bus.

Wireless communication processor 2511 is an element that performs processing for transmission and processing for reception to conduct wireless communication with the base station illustrated in FIG. 1.

Note that the terminal may include components other than wireless communication processor 2511. For example, the terminal may include a position estimation processor that uses other systems such as GPS, and an interface for connecting with other devices, etc.

For example, when the terminal includes a position estimation processor that uses other systems such as GPS, it may estimate its own (the terminal's) position using the position estimation processor that uses other systems such as GPS. For example, when the terminal includes an interface for connecting with other devices, it becomes possible to connect with other devices.

Note that an example of the configuration of the terminal is not limited to the example illustrated in FIG. 25C.

Note that a terminal having the configuration in FIG. 25C corresponds to a terminal that does not support the method of causing a character corresponding to the terminal to appear in the virtual space based on position information in the real space of the terminal, as explained in Embodiment 1. Therefore, when transmitting terminal capability information 2300 illustrated in FIG. 23, the transmission is performed as follows.

For example, suppose that information 2311 on whether or not a virtual space provision service is supported is 1-bit information. The terminal in FIG. 25C sets information 2311 on whether or not a virtual space provision service is supported to "0", indicating that it is a terminal that does not support the provision of a virtual space as described in Embodiment 1.

For example, suppose that information 2312 on whether or not a position information service is supported is 1-bit information. The terminal in FIG. 25C sets information 2312 on whether or not a position information service is supported to "0", indicating that the terminal does not support the transmission of a modulated signal for estimating its own position and the reception of a modulated signal from the base station.

For example, suppose that information 2313 on whether or not a method of causing a character corresponding to the terminal to appear in the virtual space based on position information in the real space is supported is 1-bit information. The terminal in FIG. 25C sets "information 2313 on whether or not a method of causing a character corresponding to the terminal to appear in the virtual space based on position information in the real space is supported" to "0", indicating that "the terminal does not support a system where the base station and server obtain the terminal position information and cause a character corresponding to the terminal to appear in the virtual space based on the position information".

An explanation will be provided regarding FIG. 25D as another example of the configuration of a terminal that transmits terminal capability information 2300 illustrated in FIG. 23. Note that elements that operate the same as in FIG. 25A are assigned the same reference numbers, and some explanations are omitted.

FIG. 25D is an example of a configuration of a terminal. For example, interface 2500 receives first input signal 2501 as input and outputs first output signal 2502. First input signal 2501 and first output signal 2502 are signals for wireless communication and are signals related to transmission and reception via an antenna.

Interface 2500 receives second input signal 2503 as input and outputs second output signal 2504. Second input signal 2503 and second output signal 2504 are signals for communicating with other devices.

Interface 2500 is connected to wireless communication processor 2511, virtual space related processor 2513, and position estimator 2599. Note that although this element is referred to as an interface, it may be a bus.

Wireless communication processor 2511 is an element that performs processing for transmission and processing for reception to conduct wireless communication with the base station illustrated in FIG. 1.

Virtual space related processor 2513 handles its own (i.e., the terminal's) information and its own (the terminal's) position information, and transmits this information to the server via the base station. With this, the server implements a process for causing a character corresponding to the terminal to appear in the virtual space. The server transmits, to the base station, data such as data for virtual space display, terminal control data, and data to be transmitted to the terminal, and the base station transmits this data to the terminal.

Position estimator 2599 is an element that utilizes other systems (for example, GPS, wireless Local Area Network (LAN)) to estimate the position of the terminal. Note that the base station may transmit terminal position information to the server.

Note that the terminal may include components other than wireless communication processor 2511, virtual space related processor 2513, and position estimator 2599. For example, the terminal may include an interface for connecting with other devices, etc.

For example, when the terminal includes an interface for connecting with other devices, it becomes possible to connect with other devices.

Note that an example of the configuration of the terminal is not limited to the example illustrated in FIG. 25D.

Note that a terminal having the configuration in FIG. 25D corresponds to a terminal that supports the method of causing a character corresponding to the terminal to appear in the virtual space based on position information in the real space of the terminal, as explained in Embodiment 1. Therefore, when transmitting terminal capability information 2300 illustrated in FIG. 23, the transmission is performed as follows.

For example, suppose that information 2311 on whether or not a virtual space provision service is supported is 1-bit information. The terminal in FIG. 25D sets information 2311 on whether or not a virtual space provision service is supported to "1", indicating that it is a terminal that supports the provision of a virtual space as described in Embodiment 1. However, the terminal estimates its own (i.e., the terminal's) position by utilizing other systems, and the terminal transmits its own (the terminal's) position estimation information to the base station. The base station and server utilize this terminal position estimation information to form a virtual space. This point is also explained in Embodiment 1.

For example, suppose that information 2312 on whether or not a position information service is supported is 1-bit information. The terminal in FIG. 25D sets information 2312 on whether or not a position information service is supported to "0", indicating that the terminal does not support the transmission of a modulated signal for estimating its own position and the reception of a modulated signal from the base station.

For example, suppose that information 2313 on whether or not a method of causing a character corresponding to the terminal to appear in the virtual space based on position information in the real space is supported is 1-bit information. The terminal in FIG. 25D sets "information 2313 on whether or not a method of causing a character corresponding to the terminal to appear in the virtual space based on position information in the real space is supported" to "1", indicating that "the terminal supports a system where the base station and server obtain the terminal position information and cause a character corresponding to the terminal to appear in the virtual space based on the position information".

Next, an explanation of an operation example of the base station illustrated in FIG. 1 will be given. FIG. 26 is an example of communication between the base station, the terminal, and the network (server) illustrated in FIG. 1.

When implementing the explanation in Embodiment 1, the terminal transmits terminal identification information. The base station obtains the terminal identification information (2601).

The terminal also transmits its own (the terminal's) position information. The base station obtains the terminal position information (2602). Note that the method by which the terminal performs position estimation may be a method of estimating its own position by communicating with the base station, or a method of estimating its own position using a position estimation device included in the terminal.

Here, the terminal may also determine its relative position from the base station. In such cases, the base station may estimate its own position and, using this position information and the relative position information transmitted by the terminal, the base station may determine the (absolute) position of the terminal.

As another method, the terminal may determine the absolute position. Therefore, the terminal transmits information of the absolute position as the terminal position information.

As another method, the base station may estimate the position of the terminal by communicating with the terminal. Here, as 2602, the terminal transmits information instructing the start of position estimation to the base station.

Note that the base station may determine the relative position of the terminal from the base station. In such cases, the base station may estimate its own position and, using this position information and the relative position information of the terminal from the base station, the base station may determine the (absolute) position of the terminal.

As another method, the base station may determine the absolute position of the terminal.

Accordingly, the base station transmits terminal identification information and terminal position information to the server via the network (2611).

The server generates information related to the virtual space such that a terminal-specific character is placed in the virtual space, based on the terminal identification information and terminal position information.

The terminal may perform the "communication between the base station, the terminal, and the network (server)" in FIG. 26 again, in conjunction with movement in the real space. However, if the base station and server possess the terminal identification information, the terminal need not transmit the terminal identification information (the terminal may transmit the terminal identification information).

Therefore, the server updates the position of the character (avatar) in the virtual space based on the terminal position information.

FIG. 27 illustrates an example of a configuration of terminal setting information 2700 included in a modulated signal transmitted by terminals such as terminal #1 101_1, terminal #2 101_2, terminal #101 101_101, and terminal #102 101_102 illustrated in FIG. 1. Terminal setting information 2700 includes, for example, setting information 2711 related to the position information obtainment method, setting information 2712 related to the character display method, information 2713 on whether or not a method of causing a character corresponding to the terminal to appear in the virtual space based on position information in the real space is supported, setting information 2714 related to the character display position, setting information 2715 related to the character display method in terms of speed, and setting information 2716 related to push notifications. Here, the terminal transmits terminal setting information 2700 to the base station.

Note that it is sufficient if terminal setting information 2700 includes at least one of setting information 2711 related to the position information obtainment method, setting information 2712 related to the character display method, information 2713 on whether or not a method of causing a character corresponding to the terminal to appear in the virtual space based on position information in the real space is supported, setting information 2714 related to the character display position, setting information 2715 related to the character display method in terms of speed, or setting information 2716 related to push notifications.

Setting information 2711 related to the position information obtainment method is information on the position information obtainment method set among the position information obtainment methods that the terminal supports.

Examples of position information estimation methods that the terminal supports include a method in which the base station and the terminal communicate and the base station estimates the position of the terminal, a method in which the base station and the terminal communicate and the terminal estimates its own position, and a method of estimating the terminal's position using other systems such as GPS.

For example, suppose that setting information 2711 related to the position information obtainment method is 2-bit information. When the 2-bit information of setting information 2711 related to the position information obtainment method is "00", it indicates that a method is set in which the base station and the terminal communicate and the base station estimates the position of the terminal. Therefore, the base station and the terminal implement communication for the method in which the base station and the terminal communicate and the base station estimates the position of the terminal.

When the 2-bit information of setting information 2711 related to the position information obtainment method is "01", it indicates that a method is set in which the base station and the terminal communicate and the terminal estimates its own position. Therefore, the base station and the terminal implement communication for the method in which the base station and the terminal communicate and the terminal estimates its own position.

When the 2-bit information of setting information 2711 related to the position information obtainment method is "10", it indicates that a method is set for estimating the position of the terminal using other systems (such as GPS). Therefore, the terminal performs position estimation of its own (i.e., the terminal's) by utilizing other systems. Then, the terminal becomes capable of transmitting its own (the terminal's) position information to the base station.

Setting information 2712 related to the character display method is information on a method for displaying a character corresponding to the terminal in the virtual space.

Examples of methods for displaying a character corresponding to a terminal in a virtual space include a method in which a character corresponding to the terminal is always displayed in the virtual space based on the position of the terminal in real space, a method in which locations where character display is to be performed and not to be performed are set when displaying a character corresponding to the terminal in the virtual space based on the position of the terminal in real space, and a method in which character display is supported but not performed in the virtual space based on the position of the terminal in real space.

For example, suppose that setting information 2712 related to the character display method is 2-bit information. When the 2-bit information of setting information 2712 related to the character display method is "00", it indicates that a method is set to always display a character corresponding to the terminal in the virtual space based on the position of the terminal in real space. Therefore, the base station transmits the 2-bit information "00" of setting information 2712 related to the character display method from the terminal to the server, whereby the server processes it to display a character corresponding to this terminal, and generates information of the virtual space.

When the 2-bit information of "setting information related to character display method 2712" is "01", it indicates that a method is set for setting locations where character display is to be performed and not to be performed when displaying a character corresponding to a terminal in a virtual space based on the position of the terminal in real space. Therefore, the base station transmits 2-bit information "01" of setting information 2712 related to the character display method from the terminal to the server, whereby the server generates information of the virtual space based on the information of locations where character display is to be performed and not to be performed for the character corresponding to this terminal.

When the 2-bit information of setting information 2712 related to the character display method is "10", it indicates that a method is set to support displaying a character corresponding to the terminal in the virtual space based on the position of the terminal in real space, but not to perform character display. Therefore, the base station transmits the 2-bit information "10" of setting information 2712 related to the character display method from the terminal to the server, whereby the server processes it to not display a character corresponding to this terminal, and generates information of the virtual space.

Note that the setting of locations where character display is to be performed and not to be performed when displaying a character corresponding to a terminal in a virtual space based on the position of the terminal in real space will be explained later.

Information 2713 on whether or not a method of causing a character corresponding to the terminal to appear in the virtual space based on position information in the real space is supported includes information on "whether or not the terminal supports a method of causing a character corresponding to the terminal to appear in the virtual space based on the terminal position information, as described in Embodiment 1".

For example, suppose that information 2713 on whether or not a method of causing a character corresponding to the terminal to appear in the virtual space based on position information in the real space is supported is 1-bit information. When information 2713 on whether or not a method of causing a character corresponding to the terminal to appear in the virtual space based on position information in the real space is supported is "1", it indicates that "the terminal supports a system where the base station and server obtain the terminal position information and cause a character corresponding to the terminal to appear in the virtual space based on the position information". Therefore, when the base station receives "1" as information 2713 on whether or not a method of causing a character corresponding to the terminal to appear in the virtual space based on position information in the real space is supported, the base station can provide, to the terminal, a service to make a character based on the terminal's position information appear in the virtual space, based on the terminal's position information.

When information 2713 on whether or not a method of causing a character corresponding to the terminal to appear in the virtual space based on position information in the real space is supported is "0", it indicates that "the terminal is not one that allows the base station and server to obtain the terminal position information and cause a character corresponding to the terminal to appear in the virtual space based on the position information". Therefore, the terminal will be provided with information of the virtual space from the server and the base station.

Setting information 2714 related to the character display position is information on the display position when displaying a character corresponding to the terminal in the virtual space.

Examples of methods related to the position for displaying a character corresponding to a terminal in a virtual space include a method of displaying the character in the virtual space with height correction relative to the position of the terminal in real space, and a method of displaying the character in the virtual space without height correction relative to the position of the terminal in real space.

For example, suppose that setting information 2714 related to the character display position is 1-bit information. When the 1-bit information of setting information 2714 related to the character display position is "1", it indicates that a method is set to display in the virtual space with height correction relative to the position of the terminal in real space. Therefore, the base station transmits the 1-bit information "1" of setting information 2714 related to the character display position from the terminal to the server, whereby the server, when displaying a character corresponding to this terminal in the virtual space, performs height correction, and generates information of the virtual space.

Note that examples of the method of height correction are explained in Embodiment 1 with reference to FIG. 17A and FIG. 17B.

When the 1-bit information of setting information 2714 related to the character display position is "0", it indicates that a method is set to display in the virtual space without height correction relative to the position of the terminal in real space. Therefore, the base station transmits the 1-bit information "0" of setting information 2714 related to the character display position from the terminal to the server, whereby the server, when displaying a character corresponding to this terminal in the virtual space, generates information of the virtual space without performing height correction.

Setting information 2715 related to the character display method in terms of speed is information on a method for displaying a character corresponding to the terminal in the virtual space considering speed.

Examples of methods for displaying a character corresponding to a terminal in a virtual space considering speed include a method to display a character corresponding to the terminal in the virtual space regardless of the movement speed (of the terminal), a method to not display a character corresponding to the terminal in the virtual space when a condition related to the movement speed (of the terminal) is satisfied, and a method to apply display control of a character corresponding to the terminal in the virtual space when a condition related to the movement speed (of the terminal) is satisfied.

For example, suppose that setting information 2715 related to the character display method in terms of speed is 2-bit information. When the 2-bit information of setting information 2715 related to the character display method in terms of speed is "00", it indicates that a method is set to display a character corresponding to the terminal in the virtual space regardless of the movement speed (of the terminal). Therefore, the base station transmits the 2-bit information "00" of setting information 2715 related to the character display method in terms of speed from the terminal to the server, whereby the server processes it to display a character corresponding to this terminal regardless of the (terminal's) movement speed, and generates information of the virtual space.

When the 2-bit information of setting information 2715 related to the character display method in terms of speed is "01", it indicates that a method is set to not display a character corresponding to the terminal in the virtual space when a condition related to the movement speed (of the terminal) is satisfied. Therefore, the base station transmits 2-bit information "01" of setting information 2715 related to the character display method in terms of speed from the terminal to the server. The base station transmits terminal position information to the server. The server estimates the movement speed of this terminal, and when a condition related to the movement speed is satisfied, determines not to display the character corresponding to this terminal in the virtual space. On the other hand, the server estimates the movement speed of this terminal, and when a condition related to the movement speed is not satisfied, determines to display the character corresponding to this terminal in the virtual space. Based on this, the server generates information of the virtual space.

Note that the terminal may estimate its own (i.e., the terminal's) movement speed and transmit movement speed information to the server via the base station.

When the 2-bit information of setting information 2715 related to the character display method in terms of speed is "10", it indicates that a method is set to apply display control of a character corresponding to the terminal in the virtual space when a condition related to the movement speed (of the terminal) is satisfied. Therefore, the base station transmits 2-bit information "10" of setting information 2715 related to the character display method in terms of speed from the terminal to the server. The base station transmits terminal position information to the server. The server estimates the movement speed of this terminal, and when a condition related to the movement speed is satisfied, determines to apply display control of the character corresponding to this terminal in the virtual space. On the other hand, the server estimates the movement speed of this terminal, and when a condition related to the movement speed is not satisfied, determines to display the character corresponding to this terminal in the virtual space. Based on this, the server generates information of the virtual space.

Note that the terminal may estimate its own (i.e., the terminal's) movement speed and transmit movement speed information to the server via the base station. Specific examples of the method for "display control in the virtual space of a character corresponding to the terminal when a condition related to the movement speed (of the terminal) is satisfied" will be explained later.

Setting information 2716 related to push notifications is information on whether the terminal is permitted to receive push notifications.

For example, suppose that setting information 2716 related to push notifications is 1-bit information. When the 1-bit information of setting information 2716 related to push notifications is "1", it indicates that it is set that the terminal receives push notifications. Therefore, the base station transmits the 1-bit information "1" of setting information 2716 related to push notifications from the terminal to the server, whereby the server transmits information as a push notification to this terminal via the base station.

Note that the push notification will be explained later.

When the 1-bit information of setting information 2716 related to push notifications is "0", it indicates that it is set that the terminal does not receive push notifications. Therefore, the base station transmits the 1-bit information "0" of setting information 2716 related to push notifications from the terminal to the server, whereby the server does not generate information to be transmitted as a push notification.

Setting information 2717 related to access to the character is information on whether other characters can access the character corresponding to the terminal.

For example, suppose that setting information 2717 related to access to the character is 2-bit information. When the 2-bit information of setting information 2717 related to access to the character is "01", it indicates that it is set that access from other characters is permitted. Therefore, the base station transmits 2-bit information "01" of setting information 2717 related to access to the character from the terminal to the server, whereby the server sets the character corresponding to this terminal as accessible by other characters in the virtual space, and based on this, generates information of the virtual space.

When the 2-bit information of setting information 2717 related to access to the character is "00", it indicates that it is set that access from other characters is not permitted. Therefore, the base station transmits 2-bit information "00" of setting information 2717 related to access to the character from the terminal to the server, whereby the server sets the character corresponding to this terminal as inaccessible by other characters in the virtual space, and based on this, generates information of the virtual space.

When the 2-bit information of setting information 2717 related to access to the character is "10", it indicates that it is set to control access from other characters when the terminal satisfies a condition related to movement speed. Therefore, the base station transmits 2-bit information "10" of setting information 2717 related to access to the character from the terminal to the server, whereby the server sets the character corresponding to this terminal to control access by other characters in the virtual space, and based on this, generates information of the virtual space.

Setting information 2718 related to the character display method in terms of time is information on a method for displaying a character corresponding to the terminal in the virtual space considering time.

Examples of methods for displaying a character corresponding to a terminal in a virtual space considering time include a method to display a character corresponding to the terminal in the virtual space regardless of time, and a method to control the display of a character corresponding to the terminal in the virtual space based on time.

For example, suppose that setting information 2718 related to the character display method in terms of time is 1-bit information. When the 1-bit information of setting information 2718 related to the character display method in terms of time is "1", it indicates that a method is set to display a character corresponding to the terminal in the virtual space regardless of time.

Therefore, the base station transmits the 1-bit information "1" of setting information 2718 related to the character display method in terms of time from the terminal to the server, whereby the server processes it to display a character corresponding to this terminal regardless of time, and generates information of the virtual space.

When the 1-bit information of setting information 2718 related to the character display method in terms of time is "0", it indicates that a method is set to control the display of a character corresponding to the terminal in the virtual space based on time. Therefore, the base station transmits 1-bit information "0" of setting information 2718 related to the character display method in terms of time from the terminal to the server. The terminal transmits information on the time not to display a character corresponding to the terminal (itself) in the virtual space, and/or information on the time to display a character corresponding to the terminal (itself) in the virtual space, to the server via the base station. Here, the transmission is described as "via the base station," but the transmission need not be via the base station. The server determines whether to make the character corresponding to this terminal appear in the virtual space based on the information on the time not to display a character corresponding to the terminal (itself) in the virtual space, and/or the information on the time to display a character corresponding to the terminal (itself) in the virtual space. Note that "information on the time" may include information on the date and may include information on the time.

Specific examples of the method for "controlling the display of a character corresponding to the terminal in the virtual space based on time" will be explained later.

As described above, by the terminal transmitting terminal setting information to the base station, the base station and the server can achieve the advantageous effect of being able to realize the service of making a character appear in a virtual space based on the position of a terminal present in real space, in a form desired by the terminal as explained in Embodiment 1.

In the explanation regarding "setting information related to character display method 2712", an explanation was provided about the setting of locations where character display is to be performed and not to be performed when displaying a character corresponding to a terminal in a virtual space based on the position of the terminal in real space. Hereinafter, an explanation will be provided regarding this.

FIG. 28A illustrates an example of communication between a terminal, a base station, and a server illustrated in FIG. 1, for example, regarding setting locations where character display is to be performed and not to be performed when displaying a character corresponding to a terminal in a virtual space based on the position of the terminal in real space. However, although FIG. 28A illustrates communication between a terminal and a server, in FIG. 28A, the terminal and the server may perform communication via a base station.

As illustrated in FIG. 28A, the terminal transmits terminal information (2801A). Note that since specific examples of terminal information have already been explained in, for example, Embodiment 1, repeated explanation will be omitted.

The server obtains the terminal information (2851A). Since specific operations have already been explained in, for example, Embodiment 1, repeated explanation will be omitted.

The terminal transmits information related to start of setting of character (corresponding to a terminal) display and non-display in a virtual space (2802A).

The server obtains information related to start of setting of character (corresponding to a terminal) display and non-display in a virtual space (2852A).

With this, the terminal and server start a procedure for setting display/non-display of a character (corresponding to the terminal) in the virtual space.

The terminal transmits information related to a character (corresponding to a terminal) display area and non-display setting area in a virtual space (2803A).

The server obtains information related to a character (corresponding to a terminal) display area and non-display setting area in a virtual space (2853A).

Although this information is referred to as "information related to a character (corresponding to a terminal) display area and non-display setting area in a virtual space", this information may be information related to either the "display area" or the "non-display area".

Next, an explanation will be provided regarding an example of settings for a character (corresponding to a terminal) display area and non-display setting area in a virtual space.

FIG. 28B illustrates an example of settings for a character (corresponding to a terminal) display area and non-display setting area in a virtual space set by a terminal.

As illustrated in FIG. 28B, for example, when a terminal is present in the area of real space #1 (inside 2841_1B), settings are configured such that in the virtual space, a character corresponding to the terminal is displayed (character display).

When a terminal is present in the area of real space #2 (inside 2841_2B), settings are configured such that in the virtual space, a character corresponding to the terminal is not displayed (character non-display).

When a terminal is present in the area of real space #3 (inside 2841_3B), settings are configured such that in the virtual space, a character corresponding to the terminal is displayed (character display). ...

Note that when the terminal sets the character display area and non-display area in the virtual space (corresponding to the terminal), the display unit included in the terminal or the display device connected to the terminal may display, for example, a map, corresponding to real spaces and virtual spaces as illustrated in FIG. 28B, where the character display area and non-display setting area corresponding to the terminal are displayed. The terminal transmits information related to a character (corresponding to a terminal) display area and non-display setting area in a virtual space to the server (see FIG. 28A).

FIG. 28C illustrates an example of settings for a character (corresponding to a terminal) display area and non-display setting area in a virtual space set by a terminal.

As illustrated in FIG. 28C, for example, when a terminal is present within an area within an 8 km radius of "Station A" in real space (inside 2842_A), settings are configured such that in the virtual space, a character corresponding to the terminal is displayed (character display).

When a terminal is present within a 5 km radius area (inside 2842_B) of "Station B" in real space, settings are configured such that in the virtual space, a character corresponding to the terminal is not displayed (character non-display). ...

When a terminal is present within a 5 km radius area (inside 2842_N) of "Building N" in real space, settings are configured such that in the virtual space, a character corresponding to the terminal is not displayed (character non-display).

Note that when the terminal sets the character display area and non-display area in the virtual space (corresponding to the terminal), the display unit included in the terminal or the display device connected to the terminal may display, for example, a map, corresponding to real spaces and virtual spaces as illustrated in FIG. 28C, where the character display area and non-display setting area corresponding to the terminal are displayed. The terminal transmits information related to a character (corresponding to a terminal) display area and non-display setting area in a virtual space to the server (see FIG. 28A).

FIG. 28D illustrates an example of settings for a character (corresponding to a terminal) display area and non-display setting area in a virtual space set by a terminal.

As illustrated in FIG. 28D, for example, when a terminal is present in the area of virtual space #1 (inside 2843_1B), settings are configured such that in the virtual space, a character corresponding to the terminal is displayed (character display).

When a terminal is present in the area of virtual space #2 (inside 2843_2B), settings are configured such that in the virtual space, a character corresponding to the terminal is not displayed (character non-display).

When a terminal is present in the area of virtual space #3 (inside 2843_3B), settings are configured such that in the virtual space, a character corresponding to the terminal is displayed (character display). ...

Note that when the terminal sets the character display area and non-display area in the virtual space (corresponding to the terminal), the display unit included in the terminal or the display device connected to the terminal may display, for example, a map, corresponding to real spaces and virtual spaces as illustrated in FIG. 28D, where the character display area and non-display setting area corresponding to the terminal are displayed. The terminal transmits information related to a character (corresponding to a terminal) display area and non-display setting area in a virtual space to the server (see FIG. 28A).

FIG. 28E illustrates an example of communication between a terminal, a base station, and a server illustrated in FIG. 1, for example, after setting locations where character display is to be performed and not to be performed when displaying a character corresponding to a terminal in a virtual space based on the position of the terminal in real space.

As illustrated in FIG. 28E, the terminal transmits terminal information to the server via the base station (2801C). Note that since specific examples of terminal information have already been explained in, for example, Embodiment 1, repeated explanation will be omitted.

The server obtains the terminal information (2851C). Since specific operations have already been explained in, for example, Embodiment 1, repeated explanation will be omitted.

Thereafter, the terminal and the base station communicate. The base station transmits terminal position information to the server (2899C). Note that at this time, the terminal may transmit the terminal's (its own) position information to the base station (for this reason, in FIG. 28E, a dotted arrow is depicted).

The server obtains the terminal position information (2852C).

The server determines whether to cause a character corresponding to the terminal to appear at the position in the virtual space corresponding to the terminal position information based on the information related to the character (corresponding to the terminal) display area and non-display setting area in the virtual space and the terminal position information, generates "virtual space information based on information related to the character (corresponding to the terminal) display area and non-display area in the virtual space" that is based on this determination, and transmits it to the terminal via the base station (2853C).

The terminal obtains the "virtual space information based on information related to the character (corresponding to the terminal) display area and character non-display area in the virtual space" (2802C), and may display the virtual space on a display unit included in the terminal or on a display device connected to the terminal. Note that the display and non-display of the character corresponding to itself (the terminal) in the virtual space on the display unit/display device are based on the "information related to the character (corresponding to the terminal) display area and non-display setting area in the virtual space" in FIG. 28A.

The advantages when implemented as described above will be explained.

The user possessing the terminal may want to protect personal information such as information related to where they live and information about their own office or the school they attend. By controlling the display and non-display of a character corresponding to the terminal in the virtual space as described above, the advantageous effect of being able to protect personal information can be achieved.

In the explanation regarding setting information 2715 related to the character display method in terms of speed, an explanation was provided about the setting related to a method for displaying a character corresponding to the terminal in the virtual space considering speed. Hereinafter, an explanation will be provided regarding this.

FIG. 29A illustrates an example of a situation in a real space of a terminal illustrated in FIG. 1 and a user carrying the terminal. User 2901 is assumed to be carrying terminal 2902 and riding in vehicle 2900. Here, vehicle 2900 is assumed to be traveling at a speed of 50 km/h.

In the real space, terminal 2902 will also move at a speed of 50 km/h, and at this time, as described in Embodiment 1, when the character corresponding to terminal 2902 is displayed in the virtual space, the character corresponding to terminal 2902 will move rapidly within the virtual space. The following issues may arise in such a situation.

- When such a scene is displayed in the virtual space, there may be cases where it is difficult to clearly display the character corresponding to terminal 2902 on the display unit or display device.
- In the virtual space, there may be cases where it is difficult for a character corresponding to another terminal to access (for example, chat, message transmission, communication, etc.) the character corresponding to terminal 2902.

Note that in FIG. 29A, an example is shown where user 2901 carrying terminal 2902 is moving by riding in vehicle 2900, but this example is non-limiting. The techniques can be similarly implemented when user 2901 carrying terminal 2902 is moving via electric-based moving devices such as an electric vehicle, electric motorcycle, electric bicycle, electric kick scooter, electric-assist bicycle, electric-assist kick scooter, or train, or moving devices such as an automobile, motorcycle, bicycle, ship, aircraft, airplane, railway train, etc. The techniques can be similarly implemented when the terminal is mounted on moving robots, electric-based moving devices such as an electric vehicle, electric motorcycle, electric bicycle, electric kick scooter, electric-assist bicycle, electric-assist kick scooter, or train, or moving devices such as an automobile, motorcycle, bicycle, ship, aircraft, airplane, railway train, etc.

To address this, an explanation will be provided regarding a specific example of control for a method of displaying a character corresponding to the terminal in the virtual space that takes speed into consideration.

FIG. 29B illustrates an example of communication between a terminal, a base station, and a server illustrated in FIG. 1, for example, regarding setting a method of displaying a character corresponding to a terminal in a virtual space in consideration of speed. However, although FIG. 29B illustrates communication between a terminal and a server, in FIG. 29B, the terminal and the server may perform communication via a base station.

As illustrated in FIG. 29B, the terminal transmits terminal information (2901B). Note that since specific examples of terminal information have already been explained in, for example, Embodiment 1, repeated explanation will be omitted.

The server obtains the terminal information (2951B). Since specific operations have already been explained in, for example, Embodiment 1, repeated explanation will be omitted.

The terminal transmits information related to start of settings for a character (corresponding to a terminal) display method in terms of speed (2902B).

The server obtains information related to start of settings for a character (corresponding to a terminal) display method in terms of speed (2952B).

With this, the terminal and server start a procedure regarding a character (corresponding to the terminal) display method in terms of speed.

The terminal transmits information related to a character (corresponding to a terminal) display method in terms of speed (2903B).

The server obtains information related to a character (corresponding to a terminal) display method in terms of speed (2953B).

Next, an explanation will be provided regarding an example of settings for a character (corresponding to a terminal) display method in terms of speed.

FIG. 29C illustrates an example of settings for a character (corresponding to a terminal) display method in terms of speed set by a terminal.

As illustrated in FIG. 29C, assume that any of the following three settings are possible. Note that, for example, these may be displayed on the display unit or display device of the terminal as illustrated in FIG. 29C.
- Display a character corresponding to the terminal in the virtual space regardless of the movement speed (of the terminal) (2990).
- Do not display a character corresponding to the terminal in the virtual space when a condition related to the movement speed (of the terminal) is satisfied (2991).
- Apply display control in the virtual space of a character corresponding to the terminal when a condition related to the movement speed (of the terminal) is satisfied (2992).

Note that FIG. 29B illustrates an example where "display a character corresponding to the terminal in the virtual space regardless of the movement speed (of the terminal) (2990)" is selected by the terminal.

For example, the setting "do not display a character corresponding to the terminal in the virtual space when a condition related to the movement speed (of the terminal) is satisfied (2991)" may be configured such that when the movement speed of the terminal in the real space is greater than or equal to 30 km/h, a character corresponding to the terminal is not displayed in the virtual space, and when the movement speed of the terminal in the real space is less than 30 km/h, a character corresponding to the terminal is displayed in the virtual space. Note that the condition related to the movement speed (of the terminal) is not limited to this example.

An explanation will be provided regarding an example of the setting to "apply display control in the virtual space of a character corresponding to the terminal when a condition related to the movement speed (of the terminal) is satisfied (2992)".

For example, assume that the user carrying the terminal is riding on a train. Here, when the train is moving, a character corresponding to the terminal is not displayed in the virtual space (even if the train makes an unscheduled temporarily stop or slows down). However, when the train is stopped at a station, a character corresponding to the terminal is displayed in the virtual space. Note that the identification of the train moving and the train being stopped at a station can be determined by the server by collating the position information of the terminal with the train's travel route on the map.

In this way, it is also possible to impose one or more conditions on the movement of the terminal, and control whether or not to display a character corresponding to the terminal in the virtual space according to the result of the conditions. Note that an example of the setting to "apply display control in the virtual space of a character corresponding to the terminal when a condition related to the movement speed (of the terminal) is satisfied (2992)" is not limited to the above example.

The terminal transmits information related to a character (corresponding to a terminal) display method in terms of speed to the server (see FIG. 29B).

FIG. 29D illustrates an example of communication between a terminal, a base station, and a server illustrated in FIG. 1, for example, after setting a method of displaying a character corresponding to a terminal in a virtual space in consideration of speed.

As illustrated in FIG. 29D, the terminal transmits terminal information to the server via the base station (2901C). Note that since specific examples of terminal information have already been explained in, for example, Embodiment 1, repeated explanation will be omitted.

The server obtains the terminal information (2951C). Since specific operations have already been explained in, for example, Embodiment 1, repeated explanation will be omitted.

Thereafter, the terminal and the base station communicate. The base station transmits terminal position information to the server (2999C). Note that at this time, the terminal may transmit the terminal's (its own) position information to the base station (for this reason, in FIG. 29D, a dotted arrow is depicted).

The server obtains the terminal position information (2952C).

The base station transmits terminal speed information to the server (2998C). Note that at this time, the terminal may transmit the terminal's (its own) speed information to the base station (for this reason, in FIG. 29D, a dotted arrow is depicted).

The server obtains speed information of the terminal (2953C). The server determines whether to make the character corresponding to the terminal appear in the virtual space based on the position information and speed information of the terminal, and generates virtual space information that is based on this determination (virtual space information based on information related to the character display method in terms of speed). Note that an example of determining whether to make the character corresponding to the terminal appear in the virtual space is explained with reference to FIG. 29B.

The server transmits the virtual space information that is based on information related to the character display method in terms of speed to the terminal via the base station (2954C).

The terminal obtains the "virtual space information based on information related to the character display method in terms of speed" (2902C), and may display the virtual space on a display unit included in the terminal or on a display device connected to the terminal. Note that the "display method" of the character corresponding to itself (the terminal) in the virtual space on the display unit/display device is based on the "information related to the character (corresponding to the terminal) display method in terms of speed" in FIG. 29B.

FIG. 29E illustrates a different example from FIG. 29D of communication between a terminal, a base station, and a server illustrated in FIG. 1, for example, after setting a method of displaying a character corresponding to a terminal in a virtual space in consideration of speed.

As illustrated in FIG. 29E, the terminal transmits terminal information to the server via the base station (2901C). Note that since specific examples of terminal information have already been explained in, for example, Embodiment 1, repeated explanation will be omitted.

The server obtains the terminal information (2951C). Since specific operations have already been explained in, for example, Embodiment 1, repeated explanation will be omitted.

Thereafter, the terminal and the base station communicate. The base station transmits terminal position information to the server (2999C). Note that at this time, the terminal may transmit the terminal's (its own) position information to the base station (for this reason, in FIG. 29D, a dotted arrow is depicted).

The server obtains the terminal position information (2952C).

The base station transmits terminal position information to the server (2999D). Note that at this time, the terminal may transmit the terminal's (its own) position information to the base station (for this reason, in FIG. 29E, a dotted arrow is depicted).

The server obtains the terminal position information (2952D). The server estimates the movement speed of the terminal from two instances of "terminal position information", determines whether to make the character corresponding to this terminal appear in the virtual space, and generates virtual space information based on this determination (virtual space information that is based on information related to the character display method in terms of speed). Note that an example of determining whether to make the character corresponding to the terminal appear in the virtual space is explained with reference to FIG. 29B. Here, the movement speed of the terminal is estimated from two instances of terminal position information, but may be estimated from a plurality of instances of terminal position information. The movement speed of the terminal may be estimated by knowing the position on the map from one or more instances of terminal position information.

The server transmits the virtual space information that is based on information related to the character display method in terms of speed to the terminal via the base station (2954C).

The terminal obtains the "virtual space information based on information related to the character display method in terms of speed" (2902C), and may display the virtual space on a display unit included in the terminal or on a display device connected to the terminal. Note that the "display method" of the character corresponding to itself (the terminal) in the virtual space on the display unit/display device is based on the "information related to the character (corresponding to the terminal) display method in terms of speed" in FIG. 29B.

With this, by controlling the display and non-display of the character corresponding to the terminal in the virtual space according to the movement status of the terminal in real space, it becomes possible to provide information of the virtual space with clear images. Moreover, in the virtual space, it is possible to avoid situations where it is difficult for a character corresponding to another terminal to access the character corresponding to the terminal.

FIG. 30A illustrates an example of communication between a terminal, a base station, and a server illustrated in FIG. 1, for example, related to settings concerning push notifications. However, although FIG. 30A illustrates communication between a terminal and a server, in FIG. 30A, the terminal and the server may perform communication via a base station.

As illustrated in FIG. 30A, terminal #A transmits terminal information (3001A). Note that since specific examples of terminal information have already been explained in, for example, Embodiment 1, repeated explanation will be omitted.

The server obtains the terminal information (3051A). Since specific operations have already been explained in, for example, Embodiment 1, repeated explanation will be omitted.

Terminal #A then transmits the information related to the start of settings for push notifications (3002A).

The server obtains the information related to the start settings for push notifications (3052A).

With this, terminal #A and the server start a procedure regarding push notifications.

Terminal #A transmits information related to push notifications (3003A).

The server obtains information related to push notifications (3053A).

Next, an explanation will be provided regarding an example of settings for push notifications.

FIG. 30B illustrates an example of push notification settings set by a terminal.

As illustrated in FIG. 30B, assume that either of the following two settings are possible. Note that, for example, these may be displayed on the display unit or display device of the terminal as illustrated in FIG. 30B.
- Receive push notifications (3090).
- Do not receive push notifications (3091).

Note that FIG. 30B illustrates an example where "receive push notifications (3090)" is selected by the terminal.

The terminal transmits information related to push notifications to the server (see FIG. 30A).

FIG. 30C illustrates an example of communication between a terminal, a base station, and a server illustrated in FIG. 1, for example, after setting concerning push notifications.

As illustrated in FIG. 30C, terminal #A transmits terminal information to the server via the base station (3001C). Note that since specific examples of terminal information have already been explained in, for example, Embodiment 1, repeated explanation will be omitted.

The server obtains the terminal information (3051C). Since specific operations have already been explained in, for example, Embodiment 1, repeated explanation will be omitted.

Thereafter, terminal #A and the base station communicate. The base station transmits terminal #A position information to the server (3099C). Note that at this time, terminal #A may transmit terminal #A's (its own) position information to the base station (for this reason, in FIG. 30C, a dotted arrow is depicted).

The server obtains position information of terminal #A (3052C).

The server generates virtual space information based on various settings and transmits this information to terminal #A via the base station (3053C) (at this time, the information also includes information of the character corresponding to terminal #A).

Terminal #A obtains the virtual space information (3002C).

Terminal #B then transmits the information to terminal #A (3021C). Examples of information that terminal #B transmits to terminal #A include communication, chat, transmission of images (still images), transmission of videos, transmission of advertisements, distribution of advertisements, and distribution of coupons as described in Embodiment 1, but these examples are non-limiting.

If terminal #A is set to receive push notifications in the settings regarding push notifications, the server transmits, to terminal #A via, for example, the base station, the information addressed to terminal #A obtained from terminal #B (3054C). Terminal #A obtains the information addressed to terminal #A (3003C), and this becomes a push notification. Although the transmission is described as via the base station, the transmission need not be via the base station.

If terminal #A is set to not receive push notifications in the settings regarding push notifications, the server does not transmit, to terminal #A via, for example, the base station, the information addressed to terminal #A obtained from terminal #B.

With this, the terminal in real space becomes capable of controlling whether or not to obtain information in response to access from other terminals. For example, although a user wearing AR glasses can understand that there has been access from other users and/or characters without being notified, an advantageous effect of enabling users not wearing AR glasses to also understand that there has been access from other users and/or characters can be achieved.

In the explanation regarding setting information 2717 related to access to the character, an explanation was provided about the setting of whether other characters can access the character corresponding to the terminal. Hereinafter, an explanation will be provided regarding this.

FIG. 31A illustrates an example of communication between a terminal, a base station, and a server illustrated in FIG. 1, for example, related to settings concerning access to a character. However, although FIG. 31A illustrates communication between a terminal and a server, in FIG. 31A, the terminal and the server may perform communication via a base station.

As illustrated in FIG. 31A, terminal #A transmits terminal information (3101A). Note that since specific examples of terminal information have already been explained in, for example, Embodiment 1, repeated explanation will be omitted.

The server obtains the terminal information (3151A). Since specific operations have already been explained in, for example, Embodiment 1, repeated explanation will be omitted.

Terminal #A then transmits the information related to the start of settings for access to the character (3102A).

The server obtains the information related to the start of settings for access to the character (3152A).

With this, terminal #A and the server start a procedure regarding whether other characters can access the character (corresponding to the terminal).

Terminal #A then transmits the information related to access to the character (3103A).

The server obtains the information related to access to the character (3153A).

Next, an explanation will be provided regarding an example of settings regarding access to a character.

FIG. 31B illustrates an example of settings regarding access to a character set by a terminal.

As illustrated in FIG. 31B, assume that any of the following three settings are possible. Note that, for example, these may be displayed on the display unit or display device of the terminal as illustrated in FIG. 31B.
- Permit access from other characters (3190).
- Do not permit access from other characters (3191).
- Terminal controls access from other characters based on a condition related to the movement speed (3192).

Note that FIG. 31B illustrates an example where "permit access from other characters (3190)" is selected by the terminal.

For example, the setting "terminal controls access from other characters based on a condition related to movement speed (3192)" may be configured such that when the movement speed of the terminal in the real space is greater than or equal to 30 km/h, access from other characters is not permitted, and when the movement speed of the terminal in the real space is less than 30 km/h, access from other characters is permitted. Note that the condition related to the movement speed (of the terminal) is not limited to this example.

In this way, it is also possible to impose one or more conditions on the movement of the terminal, and control access from other characters according to the result of the conditions. Note that an example of the setting to "control access from other characters when the terminal satisfies a condition related to movement speed (3192)" is not limited to the above example.

The terminal transmits information related to access to the character to the server (see FIG. 31A).

FIG. 31C illustrates an example of communication between a terminal, a base station, and a server illustrated in FIG. 1, for example, after setting related to access to a character.

As illustrated in FIG. 31C, terminal #A transmits terminal information to the server via the base station (3101C). Note that since specific examples of terminal information have already been explained in, for example, Embodiment 1, repeated explanation will be omitted.

The server obtains the terminal information (3151C). Since specific operations have already been explained in, for example, Embodiment 1, repeated explanation will be omitted.

Thereafter, terminal #A and the base station communicate. The base station transmits terminal #A position information to the server (3199C). Note that at this time, terminal #A may transmit terminal #A's (its own) position information to the base station (for this reason, in FIG. 31C, a dotted arrow is depicted).

The server obtains position information of terminal #A (3152C).

The server generates virtual space information based on various settings and transmits this information to terminal #A via the base station (3153C) (at this time, the information also includes information of the character corresponding to terminal #A).

Terminal #A obtains the virtual space information (3102C).

Terminal #B then transmits the information to terminal #A (3121C). Examples of information that terminal #B transmits to terminal #A include communication, chat, transmission of images (still images), transmission of videos, transmission of advertisements, distribution of advertisements, and distribution of coupons as described in Embodiment 1, but these examples are non-limiting.

If terminal #A is set to permit access from other characters (3190) in the settings regarding access to the character, the server transmits, to terminal #A via, for example, the base station, the information addressed to terminal #A obtained from terminal #B (3154C). Terminal #A obtains the information addressed to terminal #A (3103C), and this may be a push notification. Push notifications are as explained above. The information addressed to terminal #A need not be a push notification. For example, when terminal #A is an AR display device, or when terminal #A is connected to an AR display device, it may perform a display corresponding to the information addressed to terminal #A.

Although the transmission is described as via the base station, the transmission need not be via the base station.

If terminal #A is set to not permit access from other characters (3191) in the settings regarding access to the character, the server does not transmit, to terminal #A via, for example, the base station, the information addressed to terminal #A obtained from terminal #B.

FIG. 31D illustrates a different example from FIG. 31C of communication between a terminal, a base station, and a server illustrated in FIG. 1, for example, after setting related to access to a character. Note that elements that operate the same as in FIG. 31C are assigned the same reference numbers, and some explanations are omitted.

As illustrated in FIG. 31D, terminal #A transmits terminal information to the server via the base station (3101C). Note that since specific examples of terminal information have already been explained in, for example, Embodiment 1, repeated explanation will be omitted.

The server obtains the terminal information (3151C). Since specific operations have already been explained in, for example, Embodiment 1, repeated explanation will be omitted.

Thereafter, terminal #A and the base station communicate. The base station transmits terminal #A position information to the server (3199C). Note that at this time, terminal #A may transmit terminal #A's (its own) position information to the base station (for this reason, in FIG. 31D, a dotted arrow is depicted).

The server obtains position information of terminal #A (3152C).

The base station transmits speed information of terminal #A to the server (3198D). Note that at this time, terminal #A may transmit the terminal's (its own) speed information to the base station (for this reason, in FIG. 31D, a dotted arrow is depicted).

The server obtains speed information of terminal #A (3155D). The server determines whether to permit access from other terminals based on the position information of terminal #A and the speed information of terminal #A, generates virtual space information based on this determination, and transmits information to terminal #A based on this determination. Note that an example of determining whether to transmit information to terminal #A is explained with reference to FIG. 31B.

The server generates virtual space information based on various settings and transmits this information to terminal #A via the base station (3153C) (at this time, the information also includes information of the character corresponding to terminal #A).

Terminal #A obtains the virtual space information (3102C).

Terminal #B then transmits the information to terminal #A (3121C). Examples of information that terminal #B transmits to terminal #A include communication, chat, transmission of images (still images), transmission of videos, transmission of advertisements, distribution of advertisements, and distribution of coupons as described in Embodiment 1, but these examples are non-limiting.

If terminal #A is set to permit access from other characters (3190) in the settings regarding access to the character, the server transmits, to terminal #A via, for example, the base station, the information addressed to terminal #A obtained from terminal #B (3154C). Terminal #A obtains the information addressed to terminal #A (3103C), and this may be a push notification. Push notifications are as explained above. The information addressed to terminal #A need not be a push notification. For example, when terminal #A is an AR display device, or when terminal #A is connected to an AR display device, it may perform a display corresponding to the information addressed to terminal #A.

Although the transmission is described as via the base station, the transmission need not be via the base station.

If terminal #A is set to not permit access from other characters (3191) in the settings regarding access to the character, the server does not transmit, to terminal #A via, for example, the base station, the information addressed to terminal #A obtained from terminal #B.

If terminal #A is set to control access from other characters based on a condition related to movement speed (3192) in the settings regarding access to the character, the server compares the speed information of terminal #A obtained from terminal #A with the condition related to movement speed, and determines whether to transmit information from other characters (other terminals) to terminal #A.

Assume the server determines to transmit information from other characters (other terminals) to terminal #A. In this case, the information addressed to terminal #A obtained from terminal #B is transmitted to terminal #A via, for example, the base station (3154C). Terminal #A obtains the information addressed to terminal #A (3103C), and this may be a push notification. Push notifications are as explained above. The information addressed to terminal #A need not be a push notification. For example, when terminal #A is an AR display device, or when terminal #A is connected to an AR display device, it may perform a display corresponding to the information addressed to terminal #A.

Although the transmission is described as via the base station, the transmission need not be via the base station.

Assume the server determines not to transmit information from other characters (other terminals) to terminal #A. In this case, the server does not transmit the information addressed to terminal #A obtained from terminal #B to terminal #A via, for example, the base station.

FIG. 31E illustrates a different example from FIG. 31C and FIG. 31D of communication between a terminal, a base station, and a server illustrated in FIG. 1, for example, after setting related to access to a character. Note that elements that operate the same as in FIG. 31C are assigned the same reference numbers, and some explanations are omitted.

As illustrated in FIG. 31E, terminal #A transmits terminal information to the server via the base station (3101C). Note that since specific examples of terminal information have already been explained in, for example, Embodiment 1, repeated explanation will be omitted.

The server obtains the terminal information (3151C). Since specific operations have already been explained in, for example, Embodiment 1, repeated explanation will be omitted.

Thereafter, terminal #A and the base station communicate. The base station transmits terminal #A position information to the server (3199C). Note that at this time, terminal #A may transmit terminal #A's (its own) position information to the base station (for this reason, in FIG. 31E, a dotted arrow is depicted).

The server obtains position information of terminal #A (3152C).

The base station transmits position information of terminal #A to the server (3197E). Note that at this time, the terminal may transmit position information of terminal #A (its own position information) to the base station (for this reason, in FIG. 31E, a dotted arrow is depicted).

The server obtains position information of terminal #A (3156E). The server estimates the movement speed of terminal #A from two instances of position information of terminal #A. Here, the movement speed of terminal #A is estimated from two instances of the position information of terminal #A, but may be estimated from a plurality of instances of the position information of terminal #A. The movement speed of terminal #A may be estimated by knowing the position on the map from one or more instances of the position information of terminal #A.

The server determines whether to permit access from other terminals based on the position information of terminal #A and the estimated movement speed of terminal #A, generates virtual space information based on this determination, and transmits information to terminal #A based on this determination. Note that an example of determining whether to transmit information to terminal #A is explained with reference to FIG. 31B.

The server generates virtual space information based on various settings and transmits this information to terminal #A via the base station (3153C) (at this time, the information also includes information of the character corresponding to terminal #A).

Terminal #A obtains the virtual space information (3102C).

Terminal #B then transmits the information to terminal #A (3121C). Examples of information that terminal #B transmits to terminal #A include communication, chat, transmission of images (still images), transmission of videos, transmission of advertisements, distribution of advertisements, and distribution of coupons as described in Embodiment 1, but these examples are non-limiting.

If terminal #A is set to permit access from other characters (3190) in the settings regarding access to the character, the server transmits, to terminal #A via, for example, the base station, the information addressed to terminal #A obtained from terminal #B (3154C). Terminal #A obtains the information addressed to terminal #A (3103C), and this may be a push notification. Push notifications are as explained above. The information addressed to terminal #A need not be a push notification. For example, when terminal #A is an AR display device, or when terminal #A is connected to an AR display device, it may perform a display corresponding to the information addressed to terminal #A.

Although the transmission is described as via the base station, the transmission need not be via the base station.

If terminal #A is set to not permit access from other characters (3191) in the settings regarding access to the character, the server does not transmit, to terminal #A via, for example, the base station, the information addressed to terminal #A obtained from terminal #B.

If terminal #A is set to control access from other characters based on a condition related to movement speed (3192) in the settings regarding access to the character, the server compares the estimated movement speed of terminal #A obtained from terminal #A with the condition related to movement speed, and determines whether to transmit information from other characters (other terminals) to terminal #A.

Assume the server determines to transmit information from other characters (other terminals) to terminal #A. In this case, the information addressed to terminal #A obtained from terminal #B is transmitted to terminal #A via, for example, the base station (3154C). Terminal #A obtains the information addressed to terminal #A (3103C), and this may be a push notification. Push notifications are as explained above. The information addressed to terminal #A need not be a push notification. For example, when terminal #A is an AR display device, or when terminal #A is connected to an AR display device, it may perform a display corresponding to the information addressed to terminal #A.

Although the transmission is described as via the base station, the transmission need not be via the base station.

Assume the server determines not to transmit information from other characters (other terminals) to terminal #A. In this case, the server does not transmit the information addressed to terminal #A obtained from terminal #B to terminal #A via, for example, the base station.

With this, by controlling whether other characters can access the character corresponding to the terminal according to the status of the terminal in real space, it becomes possible to provide suitable information according to the user's situation. Moreover, in the virtual space, it is possible to avoid information transmission from a character corresponding to another terminal in situations where it is difficult to obtain information of the character corresponding to the terminal.

In the explanation regarding setting information 2718 related to the character display method in terms of time, an explanation was provided about the setting related to a method for controlling the display of a character corresponding to the terminal in the virtual space based on time. Hereinafter, an explanation will be provided regarding this.

FIG. 32A illustrates an example of communication between a terminal, a base station, and a server illustrated in FIG. 1, for example, regarding setting a method of controlling the display of a character corresponding to a terminal in a virtual space based on time. However, although FIG. 32A illustrates communication between a terminal and a server, in FIG. 32A, the terminal and the server may perform communication via a base station.

As illustrated in FIG. 32A, the terminal transmits terminal information (3201A). Note that since specific examples of terminal information have already been explained in, for example, Embodiment 1, repeated explanation will be omitted.

The server obtains the terminal information (3251A). Since specific operations have already been explained in, for example, Embodiment 1, repeated explanation will be omitted.

The terminal transmits information related to start of settings for a character (corresponding to a terminal) display method in terms of time (3202A).

The server obtains information related to start of settings for a character (corresponding to a terminal) display method in terms of time (3252A).

With this, the terminal and server start a procedure regarding a character (corresponding to the terminal) display method in terms of speed.

The terminal transmits information related to a character (corresponding to a terminal) display method in terms of time (3203A).

The server obtains information related to a character (corresponding to a terminal) display method in terms of time (3253A).

Next, an explanation will be provided regarding an example of settings for a character (corresponding to a terminal) display method in terms of time.

FIG. 32B illustrates an example of settings for a character (corresponding to a terminal) display method in terms of time set by a terminal.

As illustrated in FIG. 32B, assume that either of the following two settings are possible. Note that, for example, these may be displayed on the display unit or display device of the terminal as illustrated in FIG. 32B.

- Display a character corresponding to the terminal in the virtual space regardless of time (3290).
- A method for controlling the display of a character corresponding to the terminal in the virtual space based on time (3291).

Note that FIG. 32B illustrates an example where "display a character corresponding to the terminal in the virtual space regardless of time (3290)" is selected by the terminal.

In FIG. 32B, when the terminal selects "display a character corresponding to the terminal in the virtual space regardless of time (3290)", control is performed such that the character corresponding to the terminal is displayed in the virtual space.

In FIG. 32B, when the terminal selects "method to control the display of a character corresponding to the terminal in the virtual space based on time (3291)", control is performed such that there are times when the character corresponding to the terminal is not displayed in the virtual space.

The terminal transmits information related to a character (corresponding to a terminal) display method in terms of time to the server (see FIG. 32A).

FIG. 32C illustrates a different example from FIG. 32B of settings for a character (corresponding to a terminal) display method in terms of time set by a terminal. Note that in FIG. 32C, elements that operate the same as in FIG. 32B are assigned the same reference numbers, and some explanations are omitted.

As illustrated in FIG. 32C, assume that either of the following two settings are possible. Note that, for example, these may be displayed on the display unit or display device of the terminal as illustrated in FIG. 32C.

- Display a character corresponding to the terminal in the virtual space regardless of time (3290).
- A method for controlling the display of a character corresponding to the terminal in the virtual space based on time (3291).

Note that FIG. 32C illustrates an example where "a method for controlling the display of a character corresponding to the terminal in the virtual space based on time (3291)" is selected by the terminal.

When the "method for controlling the display of a character corresponding to the terminal in the virtual space based on time" 3291 is selected by the terminal, the terminal can set the time (for example, date, time zone, day of the week, etc.) not to display the character corresponding to the terminal (itself) in the virtual space. For example, in the case of FIG. 32C, assume the terminal has set "do not display the character corresponding to the terminal in the virtual space from 0:00 on January 1, 2030, to 12:00 on January 1, 2030" 3292_1. Note that, for example, at times other than "from 0:00 on January 1, 2030, to 12:00 on January 1, 2030", the character corresponding to the terminal is displayed in the virtual space.

In FIG. 32C, when the terminal selects "display a character corresponding to the terminal in the virtual space regardless of time (3290)", control is performed such that the character corresponding to the terminal is displayed in the virtual space.

The terminal transmits information related to a character (corresponding to a terminal) display method in terms of time to the server (see FIG. 32A).

Note that in FIG. 32C, as the time not to display the character corresponding to the terminal in the virtual space, the date and time are specified (3292_1), but the method for setting the time not to display the character corresponding to the terminal in the virtual space is not limited to this example, and for example, the date, and/or time zone, and/or day of the week may be set.

FIG. 32D illustrates a different example from FIG. 32B and FIG. 32C of settings for a character (corresponding to a terminal) display method in terms of time set by a terminal. Note that in FIG. 32D, elements that operate the same as in FIG. 32B are assigned the same reference numbers, and some explanations are omitted.

As illustrated in FIG. 32D, assume that either of the following two settings are possible. Note that, for example, these may be displayed on the display unit or display device of the terminal as illustrated in FIG. 32D.

- Display a character corresponding to the terminal in the virtual space regardless of time (3290).
- A method for controlling the display of a character corresponding to the terminal in the virtual space based on time (3291).

Note that FIG. 32D illustrates an example where "a method for controlling the display of a character corresponding to the terminal in the virtual space based on time (3291)" is selected by the terminal.

When the "method for controlling the display of a character corresponding to the terminal in the virtual space based on time" 3291 is selected by the terminal, the terminal can set the time (for example, date, time zone, day of the week, etc.) to display the character corresponding to the terminal (itself) in the virtual space. For example, in the case of FIG. 32D, assume the terminal has set "display the character corresponding to the terminal in the virtual space from 0:00 on January 2, 2030, to 12:00 on January 2, 2030" 3292_2. Note that, for example, at times other than "from 0:00 on January 2, 2030, to 12:00 on January 2, 2030", the character corresponding to the terminal is not displayed in the virtual space.

In FIG. 32D, when the terminal selects "display a character corresponding to the terminal in the virtual space regardless of time (3290)", control is performed such that the character corresponding to the terminal is displayed in the virtual space.

The terminal transmits information related to a character (corresponding to a terminal) display method in terms of time to the server (see FIG. 32A).

Note that in FIG. 32D, as the time to display the character corresponding to the terminal in the virtual space, the date and time are specified (3292_2), but the method for setting the time to display the character corresponding to the terminal in the virtual space is not limited to this example, and for example, the date, and/or time zone, and/or day of the week may be set.

FIG. 32E illustrates a different example from FIG. 32B, FIG. 32C, and FIG. 32D of settings for a character (corresponding to a terminal) display method in terms of time set by a terminal. Note that in FIG. 32E, elements that operate the same as in FIG. 32B, FIG. 32C, and FIG. 32D are assigned the same reference numbers, and some explanations are omitted.

As illustrated in FIG. 32E, assume that either of the following two settings are possible. Note that, for example, these may be displayed on the display unit or display device of the terminal as illustrated in FIG. 32E.

- Display a character corresponding to the terminal in the virtual space regardless of time (3290).
- A method for controlling the display of a character corresponding to the terminal in the virtual space based on time (3291).

Note that FIG. 32E illustrates an example where "a method for controlling the display of a character corresponding to the terminal in the virtual space based on time (3291)" is selected by the terminal.

When the "method for controlling the display of a character corresponding to the terminal in the virtual space based on time" 3291 is selected by the terminal, the terminal can set the following.
- Time not to display the character corresponding to the terminal (itself) in the virtual space (for example, date, time zone, day of the week, etc.).
- Time to display the character corresponding to the terminal (itself) in the virtual space (for example, date, time zone, day of the week, etc.).

For example, in the case of FIG. 32E, assume the terminal has set "do not display the character corresponding to the terminal in the virtual space from 0:00 on January 1, 2030, to 12:00 on January 1, 2030" 3292_1.

For example, in the case of FIG. 32E, assume the terminal has set "display the character corresponding to the terminal in the virtual space from 0:00 on January 2, 2030, to 12:00 on January 2, 2030" 3292_2.

In FIG. 32E, when the terminal selects "display a character corresponding to the terminal in the virtual space regardless of time (3290)", control is performed such that the character corresponding to the terminal is displayed in the virtual space.

The terminal transmits information related to a character (corresponding to a terminal) display method in terms of time to the server (see FIG. 32A).

Note that in FIG. 32E, as the time not to display the character corresponding to the terminal in the virtual space, the date and time are specified (3292_1), but the method for setting the time not to display the character corresponding to the terminal in the virtual space is not limited to this example, and for example, the date, and/or time zone, and/or day of the week may be set.

In FIG. 32E, as the time to display the character corresponding to the terminal in the virtual space, the date and time are specified (3292_2), but the method for setting the time to display the character corresponding to the terminal in the virtual space is not limited to this example, and for example, the date, and/or time zone, and/or day of the week may be set.

FIG. 32F illustrates an example of communication between a terminal, a base station, and a server illustrated in FIG. 1, for example, after setting a character (corresponding to a terminal) display method in terms of time.

As illustrated in FIG. 32F, the terminal transmits terminal information to the server via the base station (3201C). Note that since specific examples of terminal information have already been explained in, for example, Embodiment 1, repeated explanation will be omitted.

The server obtains the terminal information (3251C). Since specific operations have already been explained in, for example, Embodiment 1, repeated explanation will be omitted.

Thereafter, the terminal and the base station communicate. The base station transmits terminal position information to the server (3299C). Note that at this time, the terminal may transmit the terminal's (its own) position information to the base station (for this reason, in FIG. 32F, a dotted arrow is depicted).

The server obtains the terminal position information (3252C).

The server performs processing based on settings for a character (corresponding to a terminal) display method in terms of time made by the terminal.

In FIG. 32B, FIG. 32C, FIG. 32D, and FIG. 32E, when the setting is set to display a character corresponding to the terminal in the virtual space regardless of time (3290), the server transmits the virtual space information that is based on information related to the character display method in terms of time to the terminal via the base station (3254C). However, the virtual space information may include information on the character corresponding to this terminal.

The terminal obtains the "virtual space information based on information related to the character display method in terms of time" (3202C), and may display the virtual space on a display unit included in the terminal or on a display device connected to the terminal.

As in FIG. 32C, when the setting is set to "method for controlling the display of the character corresponding to the terminal in the virtual space based on time" (3291) and set to "do not display the character corresponding to the terminal in the virtual space from 0:00 on January 1, 2030, to 12:00 on January 1, 2030" (3292_1), when the date and time satisfy "from 0:00 on January 1, 2030, to 12:00 on January 1, 2030", the server may transmit the virtual space information that is based on information related to the character display method in terms of time to the terminal via the base station (3254C). However, the information on the character corresponding to this terminal is not included in the virtual space information.

The terminal obtains the "virtual space information based on information related to the character display method in terms of time" (3202C), and may display the virtual space on a display unit included in the terminal or on a display device connected to the terminal.

As another method, as in FIG. 32C, when the setting is set to "method for controlling the display of the character corresponding to the terminal in the virtual space based on time" (3291) and set to "do not display the character corresponding to the terminal in the virtual space from 0:00 on January 1, 2030, to 12:00 on January 1, 2030" (3292_1), when the date and time satisfy "from 0:00 on January 1, 2030, to 12:00 on January 1, 2030", the server need not transmit the virtual space information that is based on information related to the character display method in terms of time to the terminal.

As in FIG. 32C, when the setting is set to "method for controlling the display of the character corresponding to the terminal in the virtual space based on time" (3291) and set to "do not display the character corresponding to the terminal in the virtual space from 0:00 on January 1, 2030, to 12:00 on January 1, 2030" (3292_1), when the date and time do not satisfy "from 0:00 on January 1, 2030, to 12:00 on January 1, 2030", the server transmits the virtual space information that is based on information related to the character display method in terms of time to the terminal via the base station (3254C). However, the information on the character corresponding to this terminal is included in the virtual space information.

The terminal obtains the "virtual space information based on information related to the character display method in terms of time" (3202C), and may display the virtual space on a display unit included in the terminal or on a display device connected to the terminal.

As in FIG. 32D, when the setting is set to "method for controlling the display of the character corresponding to the terminal in the virtual space based on time" (3291) and set to "display the character corresponding to the terminal in the virtual space from 0:00 on January 2, 2030, to 12:00 on January 2, 2030" (3292_2), when the date and time satisfy "from 0:00 on January 2, 2030, to 12:00 on January 2, 2030", the server transmits the virtual space information that is based on information related to the character display method in terms of time to the terminal via the base station (3254C). However, the information on the character corresponding to this terminal is included in the virtual space information.

The terminal obtains the "virtual space information based on information related to the character display method in terms of time" (3202C), and may display the virtual space on a display unit included in the terminal or on a display device connected to the terminal.

As in FIG. 32D, when the setting is set to "method for controlling the display of the character corresponding to the terminal in the virtual space based on time" (3291) and set to "display the character corresponding to the terminal in the virtual space from 0:00 on January 2, 2030, to 12:00 on January 2, 2030" (3292_2), when the date and time do not satisfy "from 0:00 on January 2, 2030, to 12:00 on January 2, 2030", the server may transmit the virtual space information that is based on information related to the character display method in terms of time to the terminal via the base station (3254C). However, the information on the character corresponding to this terminal is not included in the virtual space information.

The terminal obtains the "virtual space information based on information related to the character display method in terms of time" (3202C), and may display the virtual space on a display unit included in the terminal or on a display device connected to the terminal.

As another method, as in FIG. 32D, when the setting is set to "method for controlling the display of the character corresponding to the terminal in the virtual space based on time" (3291) and set to "display the character corresponding to the terminal in the virtual space from 0:00 on January 2, 2030, to 12:00 on January 2, 2030" (3292_2), when the date and time do not satisfy "from 0:00 on January 2, 2030, to 12:00 on January 2, 2030", the server need not transmit the virtual space information that is based on information related to the character display method in terms of time to the terminal.

As in FIG. 32E, when the setting is set to "method for controlling the display of the character corresponding to the terminal in the virtual space based on time" (3291) and set to "do not display the character corresponding to the terminal in the virtual space from 0:00 on January 1, 2030, to 12:00 on January 1, 2030" (3292_1) and "display the character corresponding to the terminal in the virtual space from 0:00 on January 2, 2030, to 12:00 on January 2, 2030" (3292_2), when the date and time satisfy "from 0:00 on January 1, 2030, to 12:00 on January 1, 2030", the server may transmit the virtual space information that is based on information related to the character display method in terms of time to the terminal via the base station (3254C). However, the information on the character corresponding to this terminal is not included in the virtual space information.

The terminal obtains the "virtual space information based on information related to the character display method in terms of time" (3202C), and may display the virtual space on a display unit included in the terminal or on a display device connected to the terminal.

As another method, as shown in FIG. 32E, when the setting is set to "method for controlling the display of the character corresponding to the terminal in the virtual space based on time" (3291) and set to "do not display the character corresponding to the terminal in the virtual space from 0:00 on January 1, 2030, to 12:00 on January 1, 2030" (3292_1) and "display the character corresponding to the terminal in the virtual space from 0:00 on January 2, 2030, to 12:00 on January 2, 2030" (3292_2), when the date and time satisfy "from 0:00 on January 1, 2030, to 12:00 on January 1, 2030", the server need not transmit the virtual space information that is based on information related to the character display method in terms of time to the terminal.

As in FIG. 32E, when the setting is set to "method for controlling the display of the character corresponding to the terminal in the virtual space based on time" (3291) and set to "do not display the character corresponding to the terminal in the virtual space from 0:00 on January 1, 2030, to 12:00 on January 1, 2030" (3292_1) and "display the character corresponding to the terminal in the virtual space from 0:00 on January 2, 2030, to 12:00 on January 2, 2030" (3292_2), when the date and time satisfy "from 0:00 on January 2, 2030, to 12:00 on January 2, 2030", the server transmits the virtual space information that is based on information related to the character display method in terms of time to the terminal via the base station (3254C). However, the information on the character corresponding to this terminal is included in the virtual space information.

The terminal obtains the "virtual space information based on information related to the character display method in terms of time" (3202C), and may display the virtual space on a display unit included in the terminal or on a display device connected to the terminal.

As in FIG. 32E, when the setting is set to "method for controlling the display of the character corresponding to the terminal in the virtual space based on time" (3291) and set to "do not display the character corresponding to the terminal in the virtual space from 0:00 on January 1, 2030, to 12:00 on January 1, 2030" (3292_1) and "display the character corresponding to the terminal in the virtual space from 0:00 on January 2, 2030, to 12:00 on January 2, 2030" (3292_2), when the date and time do not satisfy "from 0:00 on January 1, 2030, to 12:00 on January 1, 2030" and also do not satisfy "from 0:00 on January 2, 2030, to 12:00 on January 2, 2030", the server may transmit the virtual space information that is based on information related to the character display method in terms of time to the terminal via the base station (3254C).

The terminal obtains the "virtual space information based on information related to the character display method in terms of time" (3202C), and may display the virtual space on a display unit included in the terminal or on a display device connected to the terminal.

As another method, as in FIG. 32E, when the setting is set to "method for controlling the display of the character corresponding to the terminal in the virtual space based on time" (3291) and set to "do not display the character corresponding to the terminal in the virtual space from 0:00 on January 1, 2030, to 12:00 on January 1, 2030" (3292_1) and "display the character corresponding to the terminal in the virtual space from 0:00 on January 2, 2030, to 12:00 on January 2, 2030" (3292_2), when the date and time do not satisfy "from 0:00 on January 1, 2030, to 12:00 on January 1, 2030" and also do not satisfy "from 0:00 on January 2, 2030, to 12:00 on January 2, 2030", the server need not transmit the virtual space information that is based on information related to the character display method in terms of time to the terminal.

With this, by controlling the display and non-display of the character corresponding to the terminal in the virtual space according to time, the user can control access to characters corresponding to other terminals based on time. By controlling the display and non-display of a character corresponding to the terminal in the virtual space, the advantageous effect of being able to protect personal information can be achieved.

### [Embodiment 4]

In Embodiment 1, an explanation was provided regarding an example of position estimation in the height direction with reference to FIG. 15, FIG. 16A, FIG. 16B, and FIG. 16C. In the present embodiment, an explanation will be provided regarding an example of position estimation in the height direction different from this method.

FIG. 33A illustrates an example of a system configuration for performing height estimation. As illustrated in FIG. 33A, in a real space, a road, store 3300_1, and building 3300_2 are present. Terminal #1 3301_1, terminal #2 3301_2, terminal #3 3301_3, terminal #4 3301_4, terminal #5 3301_5, terminal #6 3301_6, terminal #7 3301_7, terminal #8 3301_8, terminal #9 3301_9, and terminal #10 3301_10 are present in store 3300_1 and building 3300_2. Terminal #1 3301_1, terminal #2 3301_2, and terminal #3 3301_3 are present in store 3300_1, and terminal #4 3301_4, terminal #5 3301_5, terminal #6 3301_6, terminal #7 3301_7, terminal #8 3301_8, terminal #9 3301_9, and terminal #10 3301_10 are in building 3300_2.

Terminal #1 3301_1, terminal #2 3301_2, terminal #3 3301_3, terminal #4 3301_4, terminal #5 3301_5, terminal #6 3301_6, terminal #7 3301_7, terminal #8 3301_8, terminal #9 3301_9, and terminal #10 3301_10 each include a pressure sensor capable of measuring pressure, and terminal #1 3301_1, terminal #2 3301_2, terminal #3 3301_3, terminal #4 3301_4, terminal #5 3301_5, terminal #6 3301_6, terminal #7 3301_7, terminal #8 3301_8, terminal #9 3301_9, and terminal #10 3301_10 each measure pressure.

Terminal #1 3301_1, terminal #2 3301_2, terminal #3 3301_3, terminal #4 3301_4, terminal #5 3301_5, terminal #6 3301_6, terminal #7 3301_7, terminal #8 3301_8, terminal #9 3301_9, and terminal #10 3301_10 each include a pressure sensor capable of measuring pressure, and terminal #1 3301_1, terminal #2 3301_2, terminal #3 3301_3, terminal #4 3301_4, terminal #5 3301_5, terminal #6 3301_6, terminal #7 3301_7, terminal #8 3301_8, terminal #9 3301_9, and terminal #10 3301_10 are each connected to a base station, thereby enabling terminal #1 3301_1, terminal #2 3301_2, terminal #3 3301_3, terminal #4 3301_4, terminal #5 3301_5, terminal #6 3301_6, terminal #7 3301_7, terminal #8 3301_8, terminal #9 3301_9, and terminal #10 3301_10 to perform position estimation in three dimensions, namely, in the x-axis, y-axis, and z-axis directions as illustrated in FIG. 16C. Specific examples of the estimation method are explained in Embodiment 1. Note that in FIG. 33A, the base station is not shown.

As another method, terminal #1 3301_1, terminal #2 3301_2, terminal #3 3301_3, terminal #4 3301_4, terminal #5 3301_5, terminal #6 3301_6, terminal #7 3301_7, terminal #8 3301_8, terminal #9 3301_9, and terminal #10 3301_10 each include a pressure sensor capable of measuring pressure, and terminal #1 3301_1, terminal #2 3301_2, terminal #3 3301_3, terminal #4 3301_4, terminal #5 3301_5, terminal #6 3301_6, terminal #7 3301_7, terminal #8 3301_8, terminal #9 3301_9, and terminal #10 3301_10 are capable of performing position estimation in three dimensions, namely, in x-axis, y-axis, and z-axis directions as illustrated in FIG. 16C, by other systems such as GPS.

Furthermore, as another method, terminal #1 3301_1, terminal #2 3301_2, terminal #3 3301_3, terminal #4 3301_4, terminal #5 3301_5, terminal #6 3301_6, terminal #7 3301_7, terminal #8 3301_8, terminal #9 3301_9, and terminal #10 3301_10 each include a pressure sensor capable of measuring pressure, and terminal #1 3301_1, terminal #2 3301_2, terminal #3 3301_3, terminal #4 3301_4, terminal #5 3301_5, terminal #6 3301_6, terminal #7 3301_7, terminal #8 3301_8, terminal #9 3301_9, and terminal #10 3301_10 obtain three-dimensional position information, i.e., position information in the x-axis, y-axis, and z-axis directions in FIG. 16C, at the time of installation.

Note that in FIG. 33A, although 10 terminals are shown, so long as there are a plurality of terminals used in the system, the techniques can be similarly implemented.

Terminal #A 3301_A illustrated in FIG. 33A performs communication with server 3303 via network 3302 as illustrated in FIG. 33B. Note that A is, for example, an integer greater than or equal to 1 and less than or equal to 10.

Terminal #A 3301_A transmits position information of terminal #A 3301_A (its own position information) to server 3303. Here, the position information, as already explained, is composed of three-dimensional position information, i.e., position information in x-axis, y-axis, and z-axis directions in FIG. 16C, and includes information in the height direction.

Terminal #A 3301_A also transmits atmospheric pressure information corresponding to the position of terminal #A 3301_A (its own position) to server 3303.

With this, server 3303 obtains the set of position information and atmospheric pressure information of terminal #A 3301_A. Server 3303 obtains the set of position information and atmospheric pressure information corresponding to a plurality of terminals, whereby server 3303 creates and stores information on the relationship between position and atmospheric pressure in three dimensions, i.e., x-axis, y-axis, and z-axis directions in FIG. 16C.

Note that when terminal #A 3301_A communicates with server 3303, it may do so via other devices.

Terminal 3304 in FIG. 33C includes a position estimator, and is capable of performing position estimation in two dimensions, namely, in the x-axis and y-axis directions as illustrated in FIG. 16C. Terminal 3304 also includes a pressure sensor and is capable of performing pressure estimation. FIG. 33C illustrates a scene in a real space, and elements that operate the same as in FIG. 33A are assigned the same reference numbers, and some explanations are omitted. Terminal 3304 obtains two-dimensional position information and atmospheric pressure information, and transmits this information to server 3303 via, for example, base station 3305 and network 3302 as illustrated in FIG. 33D. Note that in FIG. 33D, elements that operate the same as in FIG. 33B are assigned the same reference numbers, and some explanations are omitted.

Server 3303 estimates the height of terminal 3304 in real space (z-direction in FIG. 16C) by comparing the stored information on the relationship between position and atmospheric pressure in three dimensions, i.e., the x-axis, y-axis, and z-axis directions in FIG. 16C, with the two-dimensional position information and atmospheric pressure information obtained from terminal 3304. Server 3303 transmits the estimated height information in real space to terminal 3304 via network 3302 and base station 3305. With this, terminal 3304 obtains the height information in real space and comes to know the height in real space.

Note that in FIG. 33D, when terminal 3304 communicates with server 3303, it may do so without going through a base station, or it may do so via other devices.

With this, the terminal becomes capable of performing three-dimensional position estimation. By utilizing this three-dimensional position estimation method, the terminal according to embodiments including Embodiment 1, Embodiment 2, and Embodiment 3, becomes capable of implementing each embodiment.

### [Embodiment 5]

In the present specification, an explanation has been provided regarding the virtual space in which a character corresponding to a terminal is present, but, for example, a character not related to the terminal may be present in the virtual space. For example, the server may generate a character and cause that character to be in the virtual space. Here, operation of this character may be controlled by the server or by another device.

For example, in the virtual space, the "character corresponding to the terminal" and the "character generated by a device such as a server" may communicate, contact, send messages, or chat (or engage in voice interactions) with each other (at this time, handling of the "character generated by a device such as a server" may be done by the server or other device performing signal processing).

The "character corresponding to the terminal" and the "character generated by a device such as a server" may, for example, act (in coordination) in the virtual space.

Next, an explanation will be provided regarding the control of the operation of a character corresponding to the terminal in the virtual space.

FIG. 27 illustrates an example of a configuration of terminal setting information 2700 included in a modulated signal transmitted by terminals such as terminal #1 101_1, terminal #2 101_2, terminal #101 101_101, and terminal #102 101_102 illustrated in FIG. 1. Terminal setting information 2700 includes, for example, information 2719 related to character operation settings. Here, the terminal transmits terminal setting information 2700 to the base station.

FIG. 34A illustrates an example of communication between a terminal, a base station, and a server illustrated in FIG. 1, for example, related to character operation settings. However, although FIG. 34A illustrates communication between a terminal and a server, in FIG. 34A, the terminal and the server may perform communication via a base station.

As illustrated in FIG. 34A, the terminal transmits terminal information (3401A). Note that since specific examples of terminal information have already been explained in, for example, Embodiment 1, repeated explanation will be omitted.

The server obtains the terminal information (3451A). Since specific operations have already been explained in, for example, Embodiment 1, repeated explanation will be omitted.

The terminal transmits operation setting start information of a character (corresponding to a terminal) (3402A).

The server obtains operation setting start information of a character (corresponding to a terminal) (3452A).

With this, the terminal and server start a procedure regarding the setting of operations of a character (corresponding to the terminal).

The terminal transmits operation setting information of a character (corresponding to a terminal) (3403A).

The server obtains operation setting information of a character (corresponding to a terminal) (3453A).

The server stores a set of information including terminal information, character (corresponding to a terminal) information, and operation setting information of a character (corresponding to a terminal) (3454A).

With this, the server controls the operation of a character corresponding to the terminal in the virtual space. An explanation will be provided regarding the specific control method.

When a character is generated based on the position of the terminal as described in Embodiment 1, it is possible to make the character corresponding to the terminal appear in the virtual space according to the position of the terminal. However, after making the character corresponding to the terminal appear in the virtual space, controlling operation of the character makes it possible to realize a more realistic character.

Hereinafter, an explanation will be provided regarding an example of settings for a method of controlling the operation of a character corresponding to the terminal.

FIG. 34B illustrates an example of operation settings of a character (corresponding to a terminal) set by a terminal.

As illustrated in FIG. 34B, assume that, for example, any of the following settings are possible. Note that, for example, these may be displayed on the display unit or display device of the terminal as illustrated in FIG. 34B.

### - Automatic 3490B

For example, when set to this mode, the character corresponding to the terminal automatically performs operations within the virtual space.

### - Customize 3491B

For example, when set to this mode, the character corresponding to the terminal can have the operations of "stationary 3492B_1", "walking 3492B_2", and "running 3492_B" set.

When the character corresponding to the terminal is "stationary 3492B_1", it is possible to select either "dance 1" or "dance 2" as the operation of the character corresponding to the terminal.

When the character corresponding to the terminal is "walking 3492B_2", it is possible to select either "step 1" or "step 2" as the operation of the character corresponding to the terminal.

When the character corresponding to the terminal is "running 3492_B", it is possible to select either "posture 1" or "posture 2" as the operation of the character corresponding to the terminal.

As illustrated in FIG. 34B, the terminal performs operation setting of the character (corresponding to the terminal), and transmits the information related to this setting as operation setting information of the character (corresponding to the terminal), and the server obtains the operation setting information of the character (corresponding to the terminal). The server controls the operation of the character (corresponding to the terminal) based on the operation setting information of the character (corresponding to the terminal), and generates information of the virtual space.

Note that an example of the operation settings of the character (corresponding to a terminal) is not limited to the example illustrated in FIG. 34B.

FIG. 34C illustrates an example of communication between a terminal, a base station, and a server illustrated in FIG. 1, for example, after character operation settings.

As illustrated in FIG. 34C, the terminal transmits terminal information to the server via the base station (3401C). Note that since specific examples of terminal information have already been explained in, for example, Embodiment 1, repeated explanation will be omitted.

The server obtains the terminal information (3451C). Since specific operations have already been explained in, for example, Embodiment 1, repeated explanation will be omitted.

Thereafter, the terminal and the base station communicate. The base station transmits terminal position information to the server (3499C). Note that at this time, the terminal may transmit the terminal's (its own) position information to the base station (for this reason, in FIG. 34C, a dotted arrow is depicted).

The server obtains the terminal position information (3452C).

The base station transmits terminal speed information to the server (3498C). Note that at this time, the terminal may transmit the terminal's (its own) speed information to the base station (for this reason, in FIG. 34C, a dotted arrow is depicted).

The server obtains speed information of the terminal (3453C). The server sets the operation of the character corresponding to this terminal in the virtual space based on the position information and speed information of the terminal, and generates virtual space information that is based on information related to character operation settings. Note that an example of an operation based on the character operation settings is explained with reference to FIG. 34B.

The server transmits the virtual space information that is based on information related to the character operation settings to the terminal via the base station (3454C).

The terminal obtains the "virtual space information based on information related to character operation settings" (3402C), and may display the virtual space on a display unit included in the terminal or on a display device connected to the terminal. Note that the "operation" of the character corresponding to itself (the terminal) in the virtual space on the display unit/display device is based on the "operation settings of the character (corresponding to the terminal)" in FIG. 34B.

FIG. 34D illustrates a different example from FIG. 34C of communication between a terminal, a base station, and a server illustrated in FIG. 1, for example, after character operation setting.

As illustrated in FIG. 34C, the terminal transmits terminal information to the server via the base station (3401C). Note that since specific examples of terminal information have already been explained in, for example, Embodiment 1, repeated explanation will be omitted.

The server obtains the terminal information (3451C). Since specific operations have already been explained in, for example, Embodiment 1, repeated explanation will be omitted.

Thereafter, the terminal and the base station communicate. The base station transmits terminal position information to the server (3499C). Note that at this time, the terminal may transmit the terminal's (its own) position information to the base station (for this reason, in FIG. 34C, a dotted arrow is depicted).

The server obtains the terminal position information (3452C).

The base station transmits terminal position information to the server (3499D). Note that at this time, the terminal may transmit the terminal's (its own) position information to the base station (for this reason, in FIG. 34D, a dotted arrow is depicted).

The server obtains the terminal position information (3452D). The server estimates the terminal's situation from the terminal position information, sets the operation of the character corresponding to this terminal in the virtual space, and generates virtual space information that is based on information related to character operation settings. Note that an example of an operation based on the character operation settings is explained with reference to FIG. 34B.

The server transmits the virtual space information that is based on information related to the character operation settings to the terminal via the base station (3454C).

The terminal obtains the "virtual space information based on information related to character operation settings" (3402C), and may display the virtual space on a display unit included in the terminal or on a display device connected to the terminal. Note that the "operation" of the character corresponding to itself (the terminal) in the virtual space on the display unit/display device is based on the "operation settings of the character (corresponding to the terminal)" in FIG. 34B.

With this, by controlling the operation of the character corresponding to the terminal in the virtual space according to the status of the terminal in real space, it becomes possible to realize a more realistic character.

Next, an explanation will be provided regarding the control of operation of a character generated by a device such as a server in the virtual space.

As described above, a character not related to the terminal may be present in the virtual space, and for example, the server may generate a character and cause that character to be in the virtual space. Here, operation of this character may be controlled by the server or by another device.

Hereinafter, an explanation will be provided regarding an example of operation settings for, for example, a character, not related to the terminal, that present in the virtual space.

FIG. 35 illustrates an example of communication between a device and a server, for example, related to character operation settings. Note that the "device" may be the server (itself).

As illustrated in FIG. 35, the device transmits device information (3501). Note that specific examples of device information may be similar to the terminal information in Embodiment 1, or may be device-specific information.

The server obtains the device information (3551). For example, it may be a task to confirm whether the device can access the server.

Thereafter, the device transmits operation setting start information of a character (3502).

The server obtains operation setting start information of a character (3552).

With this, the device and server start a procedure regarding character operation setting.

Then, the device transmits operation setting information of a character (3503).

The server obtains operation setting information of a character (3553).

The server stores a set of information including device information, character information, and operation setting information of a character (3554).

With this, the server controls the operation of a character set by the device in the virtual space. An explanation will be provided regarding the specific control method.

An explanation will be provided regarding an example of settings for a method of controlling the operation of, for example, a character, not related to the terminal, that is present in the virtual space.

FIG. 34B illustrates an example of character operation settings set by a device.

As illustrated in FIG. 34B, assume that, for example, any of the following settings are possible.

### - Automatic 3490B

For example, when set to this mode, the character automatically performs operations within the virtual space.

### - Customize 3491B

For example, when set to this mode, the character can have the operations of "stationary 3492B_1", "walking 3492B_2", and "running 3492_B" set.

When the character is "stationary 3492B_1", it is possible to select either "dance 1" or "dance 2" as the operation of the character.

When the character is "walking 3492B_2", it is possible to select either "step 1" or "step 2" as the operation of the character.

When the character is "running 3492_B", it is possible to select either "posture 1" or "posture 2" as the operation of the character.

As illustrated in FIG. 34B, the device performs operation setting of the character, and transmits the information related to this setting as operation setting information of the character, and the server obtains the operation setting information of the character. The server controls the operation of the character based on the operation setting information of the character, and generates information of the virtual space.

Note that an example of the character operation settings is not limited to the example illustrated in FIG. 34B.

The device may perform settings related to the character in the virtual space other than those in FIG. 34B. For example, the range of activity of the character in the virtual space may be set by the device, and the shape of the character and the like may also be configured by the device.

In an embodiment exemplified by Embodiment 1 and Embodiment 2, an explanation has been provided regarding the virtual space in which a character based on the position of a terminal or device is present. However, even when the present embodiment is applied to a virtual space where a character based on the position of a terminal or device is not present, for example, a virtual space where simply a character is present, it is possible to implement the technique similarly. Note that the virtual space may be a virtual space based on the real space, or a virtual space unrelated to the real space.

### [Embodiment 6]

In the present specification, such as in Embodiment 1 and Embodiment 2, an explanation was provided regarding an example where the terminal is carried by the user. However, it is conceivable that the terminal is moving or is installed rather than carried by the user. In the present embodiment, an explanation will be provided regarding a terminal that is moving or is installed rather than carried by the user, and a system including the terminal.

FIG. 36A and FIG. 36B illustrate examples of situations in a real space and a virtual space corresponding to the real space. Note that FIG. 36A illustrates the state of a real space, and FIG. 36B illustrates the state of a virtual space.

As illustrated in FIG. 36A, assume that device 3601A is moving on the road. Device 3601 can be, for example, a moving device such as an electric-based moving device like an electric vehicle, electric motorcycle (e-bike), electric bicycle, moving robot, electric kick scooter, electric-assist bicycle, or electric-assist kick scooter, or an automobile, motorcycle, bicycle, ship, aircraft, or airplane, but these examples are non-limiting. Device 3601A may be transporting a user or may not be transporting a user. Device 3601A may move by being controlled by the user or may move automatically.

Device 3601A may also display advertisement information such as "new service launch, web (World Wide Web) site: xxxxxx" as illustrated in FIG. 36A. Here, the information displayed on device 3601A is considered advertisement information, but may be information such as text, images, or videos, or information such as a URL (Uniform Resource Locator). Advertisement information or information may be displayed on a display mounted on device 3601A, or advertisement information or information may be depicted on device 3601A. Note that the method of displaying advertisement information or information on device 3601A is not limited to these examples.

FIG. 36B illustrates an example of a state of a virtual space corresponding to the real space in FIG. 36A when applying the method described in Embodiment 1 and the like.

As illustrated in FIG. 36B, assume that, for example, the display device is displaying the virtual space on screen 3699B. As illustrated in FIG. 36B, character 3601B corresponding to device 3601A is moving on the road. Character 3601B may also display advertisement information such as "new service launch, web (World Wide Web) site: xxxxxx" as illustrated in FIG. 36B. Here, the information displayed on character 3601B is considered advertisement information, but may be information such as text, images, or videos, or information such as a URL (Uniform Resource Locator). Note that the method of displaying advertisement information or information on character 3601B is not limited to the method in FIG. 36B, and the character corresponding to a device existing in the virtual space may be any kind of thing.

Note that conceivable examples of the display device include, but are not limited to a mobile phone, a cellular phone, a smartphone, a tablet, a tablet personal computer (PC), a personal computer (the personal computer may have a monitor or be able to connect to a monitor), a notebook PC, a television, an device connected to a monitor, a game console, a portable game console, AR glasses, AR goggles, a monitor capable of displaying AR, an device connected to a monitor capable of displaying AR, VR glasses, VR goggles, a monitor capable of displaying VR, an device connected to a monitor capable of displaying VR, mixed reality (MR) glasses, a monitor capable of displaying MR, an device connected to a monitor capable of displaying MR, a car navigation system, a head mounted display, an device connected to a head mounted display, a monitor, an device connected to a monitor, a projector, an device connected to a projector, etc.

Although the information displayed on device 3601A in FIG. 36A and the information displayed on character 3601B in FIG. 36B are considered the same information, they may be different information.

By doing as in FIG. 36A and FIG. 36B, the advantageous effect of being able to simultaneously display advertisement information or information in the real space/virtual space and efficiently transmit information can be achieved. Note that details of operations performed by the system will be explained later.

In an embodiment exemplified by Embodiment 1 and Embodiment 2, an explanation has been provided regarding the virtual space in which a character based on the position of a terminal or device is present. However, it is possible to consider a system that forms a virtual space where a character based on the position of a terminal or device is not present, for example, a virtual space where simply a character is present. Hereinafter, an example of such a system will be considered. Note that the virtual space may be a virtual space based on the real space, or a virtual space unrelated to the real space.

FIG. 37A is an example of a virtual space when applying the method described in Embodiment 1, Embodiment 2, and the like, or a virtual space where a character simply exists.

As illustrated in FIG. 37A, assume that, for example, the display device is displaying the virtual space on screen 3799A. As illustrated in FIG. 37A, there is location 3701A for distributing items that a character can equip/attach/wear. Note that the character may be distributing items for equipping/wearing. The method of distributing items for equipping/attaching/wearing is not limited to these examples.

In FIG. 37A, assume that at least character 3702A_1 is present. Note that conceivable examples of the display device include, but are not limited to a mobile phone, a cellular phone, a smartphone, a tablet, a tablet personal computer (PC), a personal computer (the personal computer may have a monitor or be able to connect to a monitor), a notebook PC, a television, an device connected to a monitor, a game console, a portable game console, AR glasses, AR goggles, a monitor capable of displaying AR, an device connected to a monitor capable of displaying AR, VR glasses, VR goggles, a monitor capable of displaying VR, an device connected to a monitor capable of displaying VR, mixed reality (MR) glasses, a monitor capable of displaying MR, an device connected to a monitor capable of displaying MR, a car navigation system, a head mounted display, an device connected to a head mounted display, a monitor, an device connected to a monitor, a projector, an device connected to a projector, etc.

FIG. 37B is an example of a virtual space when applying the method described in Embodiment 1, Embodiment 2, and the like, or a virtual space where a character simply exists.

As illustrated in FIG. 37B, character 3702A_1 passes through location 3701A for distributing items, and as illustrated in FIG. 37B, assume that character 3702A_1 is equipped with (or attached with or wearing) item 3703B_1. At this time, item 3703B_1 may display advertisement information such as "new service launch, web (World Wide Web) site: xxxxxx" as illustrated in FIG. 37B. Here, the information displayed on item 3703B_1 is considered advertisement information, but may be information such as text, images, or videos. Note that the method of displaying advertisement information or information on item 3703B_1 is not limited to these examples.

By doing as in FIG. 37B, the advantageous effect of being able to display advertisement information or information in the virtual space and efficiently transmit information can be achieved. Note that details of operations performed by the system will be explained later.

An explanation will be provided regarding a system for realizing FIG. 36A and FIG. 36B, and a system for realizing FIG. 37A and FIG. 37B.

FIG. 38A illustrates an example of the configuration of a system for realizing FIG. 36A and FIG. 36B and a system for realizing FIG. 37A and FIG. 37B. In FIG. 38A, elements that operate the same as in FIG. 1 are assigned the same reference numbers, and some explanations are omitted for elements that have already been described.

Device 3802 and base station #1 103 perform communication and interaction for sensing, and since this already been described in Embodiment 1 in detail, repeated explanation will be omitted. Note that device 3802 performs some operations similar to terminal #1 101_1 illustrated in FIG. 1, and device 3802 corresponds, for example, to device 3601A in FIG. 36A.

For example, device 3802 performs communication with server 104 via base station #1 103 and network 103, and server 104 causes the character corresponding to device 3802 to appear in the virtual space. Since that procedure has already been explained, for example, in Embodiment 1, repeated explanation will be omitted.

With this, it is possible to realize real spaces and virtual spaces as illustrated in FIG. 36A and FIG. 36B.

In FIG. 38A, terminal #101 101_101 performs communication with server 104 via network 103. Terminal #101 101_101 may perform communication with server 104 and be capable of operating a character in the virtual space. Note that when terminal #101 101_101 communicates with server 104, it may do so via a base station.

With this, it is possible to realize virtual spaces as illustrated in FIG. 37A and FIG. 37B.

In FIG. 38A, terminal #1 101_1 may operate as illustrated in FIG. 1 described in Embodiment 1. With this, it is possible to realize real spaces and virtual spaces as illustrated in FIG. 36A and FIG. 36B, or virtual spaces as illustrated in FIG. 37A and FIG. 37B.

For "system for realizing FIG. 36A and FIG. 36B" and "system for realizing FIG. 37A and FIG. 37B", as illustrated in FIG. 38A, "advertisement providing device or information providing device" 3801 exists, and "advertisement providing device or information providing device" 3801 performs communication with server 104 via network 103, for example. Note that details of operations performed by "advertisement providing device or information providing device" 3801 will be explained later.

FIG. 38B illustrates a different example from FIG. 38A of the configuration of a system for realizing FIG. 37A and FIG. 37B. In FIG. 38B, elements that operate the same as in FIG. 1 and FIG. 38A are assigned the same reference numbers, and some explanations are omitted for elements that have already been described.

In FIG. 38B, terminal #101 101_101 performs communication with server 104 via network 103. Terminal #101 101_101 may perform communication with server 104 and be capable of operating a character in the virtual space. Note that when terminal #101 101_101 communicates with server 104, it may do so via a base station.

With this, it is possible to realize virtual spaces as illustrated in FIG. 37A and FIG. 37B.

In FIG. 38B, terminal #102 101_102 performs communication with server 104 via network 103. Terminal #102 101_102 may perform communication with server 104 and be capable of operating a character in the virtual space. Note that when terminal #102 101_102 communicates with server 104, it may do so via a base station.

With this, it is possible to realize virtual spaces as illustrated in FIG. 37A and FIG. 37B.

For "system for realizing FIG. 37A and FIG. 37B", as illustrated in FIG. 38B, "advertisement providing device or information providing device" 3801 exists, and "advertisement providing device or information providing device" 3801 performs communication with server 104 via network 103, for example. Note that details of operations performed by "advertisement providing device or information providing device" 3801 will be explained later.

In the system of FIG. 38B, it is a feature that there is no character in the virtual space generated by server 104 based on position in real space.

Note that the system configuration is not limited to the configuration illustrated in FIG. 38A and FIG. 38B; it is sufficient so long as devices, terminals, base stations, servers, etc. are present.

FIG. 39 illustrates an example of communication between "advertisement providing device or information providing device" 3801 and server 104 in FIG. 38A and FIG. 38B.

Advertisement providing device or information providing device 3801 first transmits (its own) device information (3901).

The server (104) obtains this device information (3951).

Then, the advertisement providing device or information providing device transmits the item information (3902). Note that item information may be, for example, the character itself in FIG. 36B, or may be an item that the character can equip/attach/wear. Item information may be, for example, an item that the character in FIG. 37B can equip/attach/wear.

The server obtains this item information (3952).

The server may transmit the identification information of this item (item identification information) (3953).

The advertisement providing device or information providing device obtains this item identification information (3903). Note that the advertisement providing device or information providing device uses the item identification information when calling the item. Therefore, the advertisement providing device or information providing device stores the item identification information.

The advertisement providing device or information providing device transmits the "advertisement information or information" to be posted on the item (3904).

The server obtains this "advertisement information, or information" (3954). The server stores the information set of "item information" and "advertisement information, or information" (3955).

The advertisement providing device or information providing device transmits the position information related to the location for distributing the item, that is, the item distribution position information (3906).

The server obtains this item distribution position information (3956).

The advertisement providing device or information providing device transmits the information related to the price of the item, that is, the item price information, when the item is to be sold (3907).

Note that the advertisement providing device or information providing device does not need to transmit the item price information (for example, when providing it for free).

The server obtains this item price information (3957).

Note that the character may simply be a character, or may be a character corresponding to a device or terminal.

The advertisement providing device or information providing device describes an example where the price of the item is presented, but the party attached with (equipped with/attached with/wearing) the item may be the party receiving the amount. Here, a transaction based on currency is described as an example, but it may also be an exchange based on points issued by an affiliated organization or an exchange based on virtual currency.

FIG. 40 illustrates an example of communication between "terminal (for example, terminal #1 101_1, terminal #101 101_101, terminal #102 101_102) or device 3802" and server 104 in FIG. 38A and FIG. 38B. Note that FIG. 40 illustrates an example of processing after the advertisement providing device or information providing device has registered an item with the server, as in FIG. 39.

The terminal or device first transmits (its own) terminal or device information (4001).

The server obtains this terminal or device information (4051).

The terminal or device transmits the request to obtain an item, that is, the item obtainment request information (4002).

The server obtains this item obtainment request information (4052). The server, when it determines to provide an item to the terminal or device, transmits the item information (4053).

The terminal or device obtains this item information (4003). The terminal or device, when it determines to attach (equip/attach/wear) the item, transmits the information related to the attaching of the item (4004).

The server obtains information related to the wearing of this item (4054). The server, while generating a character attached with (equipped with/attached with/wearing) the item, stores the information set of terminal or device information and character information (4055). The server will cause a character attached with the item to appear in the virtual space.

Note that the character may simply be a character, or may be a character corresponding to a device or terminal.

For example, an explanation will be provided regarding the operations in the case of device 3802 and terminal #1 101_1 in FIG. 38A.

The example in FIG. 26 uses the term "terminal", but it is sufficient to consider this terminal as "device 3802 or terminal #1 101_1".

As described with reference to FIG. 26, the terminal (or device) transmits terminal (or device) identification information and terminal (or device) position information (2601, 2602).

The server, based on the terminal (or device) identification information and position information of the terminal (or device), places a character unique to the terminal (or device) in the virtual space. Here, the character will be attached with (equipped with/attached with/wear) an item that includes advertisement information or information. Note that in FIG. 26, the communication between the terminal (or device) and the server is via the base station, but it need not be via the base station.

An explanation will be provided regarding an example of operations in the case of device 3802, terminal #1 101_1 in FIG. 38A, and terminal #101 101_101 and terminal #102 101_102 in FIG. 38B.

FIG. 41 illustrates communication between "terminals or devices" such as "device 3802, terminal #1 101_1 in FIG. 38A, terminal #101 101_101 and terminal #102 101_102 in FIG. 38B" and server 104.

As illustrated in FIG. 41, the terminal or device transmits terminal or device information (4101).

The server obtains the terminal or device information. Subsequently, the server places a character unique to the terminal or device in the virtual space based on the information of the terminal or device. Here, the character will be attached with (equipped with/attached with/wear) an item that includes advertisement information or information. Note that in FIG. 41, the communication between the terminal (or device) and the server may be via the base station.

Next, an explanation will be provided regarding an example of operations performed by "advertisement providing device or information providing device" 3801 in FIG. 38A and FIG. 38B.

FIG. 42 illustrates an example of communication between "advertisement providing device or information providing device" 3801 and server 104.

Advertisement providing device or information providing device 3801 first transmits (its own) device information (4201).

The server (104) obtains this device information (4251).

The advertisement providing device or information providing device transmits the identification information of the item that the character is equipped with/attached with/wearing, that is, the item identification information (4202).

The server obtains this item identification information (4252). The server performs authentication for access to the virtual space and item of the advertisement providing device or information providing device (4253). Here, the server is assumed to have approved access to the virtual space and item of the advertisement providing device or information providing device. Note that the server may transmit the result of the authentication to the advertisement providing device or information providing device (4299).

The advertisement providing device or information providing device transmits the update information of the "advertisement information or information" displayed on the character's item, which is the "advertisement (update) information or (update) information" (4203).

The server obtains this "advertisement (update) information, or (update) information" (4254).

The server updates the information set of item information and "advertisement information, or information" (4255). Therefore, the "advertisement information or information" displayed on the character's item will be updated.

Note that the character may simply be a character, or may be a character corresponding to a device or terminal.

An explanation will be provided regarding the operations of a terminal or device such as device 3802, terminal #1 101_1 in FIG. 38A, terminal #101 101_101 and terminal #102 101_102 in FIG. 38B after the "advertisement information or information" displayed on the character's item has been updated.

FIG. 43 illustrates an example of communication between a terminal or device and server 104.

The terminal or device transmits (its own) terminal or device information (4301).

The server obtains this terminal or device information (4351). The server checks the character and the item that the character is attached with (equipped with/attached with/wearing) based on the terminal or device information and the stored information (4352).

The server checks whether the advertisement or information displayed on the item has been updated by checking the item that the character, which is involved with the terminal or device, is attached with (equipped with/attached with/wearing). If the advertisement or information displayed on the item has been updated, the update information of the advertisement or information is checked (4353).

If the advertisement or information displayed on the item has been updated, the server transmits update information of the advertisement or information (4354).

The terminal or device obtains update information of the advertisement or information (4302).

The terminal or device determines whether to accept the update of the advertisement or information, and transmits information on whether to accept the update of the advertisement or information (4303).

The server obtains information on whether to accept the update of this advertisement or information (4355). If the update of the advertisement or information is accepted, the server updates the advertisement or information displayed on the item and stores the information set of the terminal or device information and the character information (4356). Note that the character information is assumed to include information on items that include the (updated) advertisement or information. The server causes a character attached with the item to appear in the virtual space.

Note that the character may simply be a character, or may be a character corresponding to a device or terminal.

By doing so, the advantageous effect of being able to display advertisement information or information in real space and/or virtual space and efficiently transmit information can be achieved. Since it becomes possible to update advertisement information or information, the advantageous effect of being able to provide a wide variety of information can be achieved.

An explanation will be provided regarding an example of operations performed by "advertisement providing device or information providing device" 3801 in FIG. 38A and FIG. 38B that differs from FIG. 42 and FIG. 43.

FIG. 44 illustrates an example of communication between "advertisement providing device or information providing device" 3801, a terminal or device, and server 104.

Advertisement providing device or information providing device 3801 first transmits (its own) device information (4401).

The terminal or device obtains this device information (4451).

The advertisement providing device or information providing device transmits the identification information of the item that the character is equipped with/attached with/wearing, that is, the item identification information (4402).

The terminal or device obtains this item identification information (4452). The terminal or device performs authentication for access to (the virtual space and) the item of the advertisement providing device or information providing device (4453). Here, the terminal or device is assumed to have approved access to (the virtual space and) the item of the advertisement providing device or information providing device. Note that the terminal or device may transmit the result of the authentication to the advertisement providing device or information providing device (4499).

The advertisement providing device or information providing device transmits the update information of the "advertisement information or information" displayed on the character's item, which is the "advertisement (update) information or (update) information" (4403).

The terminal or device obtains this "advertisement (update) information, or (update) information" (4454).

Next, the terminal or device transmits (its own) terminal or device information (4455).

The server obtains this terminal or device information (4490).

The terminal or device transmits the item information of the item that the character is equipped with/attached with/wearing (4456).

The server obtains this item information (4491).

The terminal or device transmits the update information of the "advertisement information or information" displayed on the character's item, which is the "advertisement (update) information or (update) information" (4457).

The server obtains this "advertisement (update) information, or (update) information" (4492). The server determines whether to accept the update of the advertisement or information (4493). If the server permits the update of "advertisement or information", the server updates the information set of item information and "advertisement information or information" (4494). Therefore, the "advertisement information or information" displayed on the character's item will be updated (the server may refuse the update of "advertisement or information").

Note that the character may simply be a character, or may be a character corresponding to a device or terminal.

The operations of a terminal or device such as device 3802, terminal #1 101_1 in FIG. 38A, terminal #101 101_101 and terminal #102 101_102 in FIG. 38B after the "advertisement information or information" displayed on the character's item has been updated are as illustrated in FIG. 43.

The terminal or device transmits (its own) terminal or device information (4301).

The server obtains this terminal or device information (4351). The server checks the character and the item that the character is attached with (equipped with/attached with/wearing) based on the terminal or device information and the stored information (4352).

The server checks whether the advertisement or information displayed on the item has been updated by checking the item that the character, which is involved with the terminal or device, is attached with (equipped with/attached with/wearing). If the advertisement or information displayed on the item has been updated, the update information of the advertisement or information is checked (4353).

If the advertisement or information displayed on the item has been updated, the server transmits update information of the advertisement or information (4354).

The terminal or device obtains update information of the advertisement or information (4302).

The terminal or device determines whether to accept the update of the advertisement or information, and transmits information on whether to accept the update of the advertisement or information (4303).

The server obtains information on whether to accept the update of this advertisement or information (4355). If the update of the advertisement or information is accepted, the server updates the advertisement or information displayed on the item and stores the information set of the terminal or device information and the character information (4356). Note that the character information is assumed to include information on items that include the (updated) advertisement or information. The server causes a character attached with the item to appear in the virtual space.

Note that the character may simply be a character, or may be a character corresponding to a device or terminal.

By doing so, the advantageous effect of being able to display advertisement information or information in real space and/or virtual space and efficiently transmit information can be achieved. Since it becomes possible to update advertisement information or information, the advantageous effect of being able to provide a wide variety of information can be achieved.

Note that the processing of the terminal or device, the processing of the server, and the processing of the advertisement providing device or information providing device described in the present embodiment are merely examples. The techniques are therefore possible to similarly implement even if other processes are added, parts of the process are omitted, or the order of processing is changed.

Each device may be configured of a plurality of devices. For example, the "advertisement providing device or information providing device" may be configured of a device for providing "advertisements or information" and a device for updating "advertisements or information", and for each device, a device with server functions may be configured as a separate device.

Note that the naming of devices is not limited to the above examples; other names may be used. In regard to this point, examples explained in other embodiments are conceivable.

### [Embodiment 7]

In the present specification, it is explained that the server obtains position information of, for example, devices such as terminals illustrated in FIG. 1, FIG. 5, FIG. 11, etc., and objects illustrated in FIG. 18, FIG. 20. An explanation will be provided regarding an example of this method. Note that in the following, "a device such as a terminal" and an "object" will be referred to as a terminal in the explanation.

FIG. 45 is an example of a configuration of a system that makes a character appear in a virtual space based on the position of a terminal in real space. Note that in FIG. 45, elements that operate the same as in FIG. 1 are assigned the same reference numbers, and some explanations are omitted for elements that have already been described.

Wireless system 4500 is composed of, for example, base station #1 102_1, LMF (location management function) 4501, AMF (access and mobility management function) 4502, and wireless system 4500 performs communication with other devices via network 100.

AMF 4502 includes functions for managing access and mobility based on information from base station #1 102_1 and other devices, and control from base station #1 102_1 and other devices, and controls, for example, base station #1 102_1 and LMF 4501.

LMF 4501 includes functions for managing location based on information from base station #1 102_1 and other devices, and control from base station #1 102_1 and other devices, and controls, for example, base station #1 102_1 and LMF 4501.

For example, LMF 4501 receives signals transmitted by terminal #1 101_1 and signals transmitted by terminal #2 101_2 via base station #1 102_1, and obtains reception signals. LMF 4501 estimates the position of terminal #1 101_1 and the position of terminal #2 101_2 from this reception signal.

As another example, base station #1 102_1 obtains information transmitted by terminal #1 101_1 and information transmitted by terminal #2 101_2. LMF 4501 estimates the position of terminal #1 101_1 and the position of terminal #2 101_2 from the information transmitted by terminal #1 101_1 and the information transmitted by terminal #2 101_2.

Note that base station #1 102_1 may perform the estimation of the position of terminal #1 101_1 and the position of terminal #2 101_2. Base station #1 102_1 may receive signals transmitted by terminal #1 101_1 and signals transmitted by terminal #2 101_2, and estimate the position of terminal #1 101_1 and the position of terminal #2 101_2. Base station #1 102_1 may estimate the position of terminal #1 101_1 and the position of terminal #2 101_2 from the information transmitted by terminal #1 101_1 and the information transmitted by terminal #2 101_2.

As described in other embodiments, server 104 obtains position information of terminal #1 101_1, position information of terminal #2 101_2, and like via network 103, and server 104 performs processing as described in other embodiments.

Next, an explanation will be provided regarding specific examples of operations of "terminal #1 101_1, terminal #2 101_2" and "base station #1 102_1" in FIG. 45.

In FIG. 46, (A) illustrates an example of a configuration of a modulated signal transmitted by a terminal such as terminal #1 101_1 and terminal #2 101_2 to a base station, where the horizontal axis represents time. In FIG. 46, (B) illustrates an example of a state of a base station such as base station #1 102_1, where the horizontal axis represents time.

As illustrated in (A) in FIG. 46, the terminal transmits control symbol 4601, reference signal 4602, and data symbol 4603.

As illustrated in (B) in FIG. 46, the base station receives control symbol 4601, reference signal 4602, and data symbol 4603 transmitted by the terminal. In particular, the base station or LMF utilizes reference signal 4602 to estimate the position of the terminal. Note that the method by which the base station performs position estimation of the terminal will be explained later.

With this, the base station or LMF can obtain position estimation information of the terminal, whereby the server can obtain the position estimation information of the terminal via the network, making it possible to perform processing as described in other embodiments.

In FIG. 47A, (A) illustrates an example of a configuration of a modulated signal transmitted by a base station to a terminal, and an example of a state of the base station, where the horizontal axis represents time. In FIG. 47A, (B) illustrates an example of a configuration of a modulated signal transmitted by a terminal to a base station, and an example of a state of the terminal, where the horizontal axis represents time.

As illustrated in (A) in FIG. 47A, the base station transmits control symbol 4751, reference signal 4752, and data symbol 4753.

As illustrated in (B) in FIG. 47A, the terminal receives control symbol 4751, reference signal 4752, and data symbol 4753 transmitted by the base station. In particular, the terminal utilizes reference signal 4752 to estimate its own position. Note that the method by which the terminal performs position estimation will be explained later.

As illustrated in (B) in FIG. 47A, the terminal transmits control symbol 4701, reference signal 4702, and data symbol 4703. Note that data symbol 4703 (or control symbol 4701) is assumed to include position estimation information of the terminal estimated by itself.

As illustrated in (A) in FIG. 47A, the base station receives control symbol 4701, reference signal 4702, and data symbol 4703 transmitted by the terminal. In particular, the base station or LMF utilizes reference signal 4702 to estimate the position of the terminal. Note that the method by which the base station performs position estimation of the terminal will be explained later.

The base station or LMF further obtains position estimation information of the terminal from data symbol 4703 (or control symbol 4701). The base station or LMF performs position estimation of the terminal obtains position information of the terminal using the position estimation information of the terminal obtained from reference signal 4702 and the position estimation information of the terminal obtained from data symbol 4703 (or control symbol 4701). In this way, by using position estimation information of two terminals, the advantageous effect of being able to determine the position of a terminal more accurately can be achieved.

Another method will be described.

As illustrated in (A) in FIG. 47A, the base station transmits control symbol 4751, reference signal 4752, and data symbol 4753.

As illustrated in (B) in FIG. 47A, the terminal receives control symbol 4751, reference signal 4752, and data symbol 4753 transmitted by the base station. In particular, the terminal utilizes reference signal 4752 to obtain information for position estimation of the terminal. Examples of information for position estimation include information on the time when the terminal received a signal such as reference signal 4752, information on the time of measurement, information on the time when position estimation was performed, information on the reception arrival direction when the terminal received a signal such as reference signal 4752, information on the received field strength (reference signal received power) of a signal such as reference signal 4752, information on the received quality (reference signal received quality) of a signal such as reference signal 4752, quality information of each measurement, AoA information, (reception) beam information, spatial direction information, information on the difference between transmission time and reception time, and position estimation information.

As illustrated in (B) in FIG. 47A, the terminal transmits control symbol 4701, reference signal 4702, and data symbol 4703. Note that data symbol 4703 (or control symbol 4701) is assumed to include information for position estimation obtained by the terminal, such as these examples.

As illustrated in (A) in FIG. 47A, the base station receives control symbol 4701, reference signal 4702, and data symbol 4703 transmitted by the terminal. In particular, the base station or LMF utilizes reference signal 4702 to estimate the position of the terminal. Note that the method by which the base station performs position estimation of the terminal will be explained later.

The Base station or LMF further obtains information for position estimation generated by the terminal from data symbol 4703 (or control symbol 4701). The base station or LMF performs position estimation of the terminal using the information for position estimation, and obtains (second) position estimation information of the terminal.

In this way, by using position estimation information of two terminals, the advantageous effect of being able to determine the position of a terminal more accurately can be achieved.

Base station or LMF can obtain position estimation information of the terminal, whereby the server can obtain the position estimation information of the terminal via the network, making it possible to perform processing as described in other embodiments.

In FIG. 47B, (A) illustrates an example of a configuration of a modulated signal transmitted by a base station to a terminal, and an example of a state of the base station, where the horizontal axis represents time. In FIG. 47B, (B) illustrates an example of a configuration of a modulated signal transmitted by a terminal to a base station, and an example of a state of the terminal, where the horizontal axis represents time.

As illustrated in (A) in FIG. 47B, base station transmits control symbol 4751, reference signal 4752, and data symbol 4753.

As illustrated in (B) in FIG. 47B, the terminal receives control symbol 4751, reference signal 4752, and data symbol 4753 transmitted by the base station. In particular, the terminal utilizes reference signal 4752 to estimate its own position. Note that the method by which the terminal performs position estimation will be explained later.

As illustrated in (B) in FIG. 47B, the terminal transmits control symbol 4701 and data symbol 4703. Note that data symbol 4703 (or control symbol 4701) is assumed to include position estimation information of the terminal estimated by itself.

As illustrated in (A) in FIG. 47B, the base station receives control symbol 4701 and data symbol 4703 transmitted by the terminal. The base station or LMF obtains position estimation information of the terminal from data symbol 4703 (or control symbol 4701).

With this, the base station or LMF can obtain position estimation information of the terminal, whereby the server can obtain the position estimation information of the terminal via the network, making it possible to perform processing as described in other embodiments.

Another method will be described.

As illustrated in (A) in FIG. 47B, the base station transmits control symbol 4751, reference signal 4752, and data symbol 4753.

As illustrated in (B) in FIG. 47B, the terminal receives control symbol 4751, reference signal 4752, and data symbol 4753 transmitted by the base station. In particular, the terminal utilizes reference signal 4752 to obtain information for position estimation of the terminal. Examples of information for position estimation include information on the time when the terminal received a signal such as reference signal 4752, information on the time of measurement, information on the time when position estimation was performed, information on the reception arrival direction when the terminal received a signal such as reference signal 4752, information on the received field strength (reference signal received power) of a signal such as reference signal 4752, information on the received quality (reference signal received quality) of a signal such as reference signal 4752, quality information of each measurement, AoA information, (reception) beam information, spatial direction information, information on the difference between transmission time and reception time, and position estimation information.

As illustrated in (B) in FIG. 47B, the terminal transmits control symbol 4701, reference signal 4702, and data symbol 4703. Note that data symbol 4703 (or control symbol 4701) is assumed to include information for position estimation obtained by the terminal, such as these examples.

As illustrated in (A) in FIG. 47B, the base station receives control symbol 4701, reference signal 4702, and data symbol 4703 transmitted by the terminal. In particular, the base station or LMF utilizes reference signal 4702 to estimate the position of the terminal. Note that the method by which the base station performs position estimation of the terminal will be explained later.

The base station or LMF further obtains information for position estimation generated by the terminal from data symbol 4703 (or control symbol 4701). The base station or LMF performs position estimation of the terminal using the information for position estimation, and obtains (second) position estimation information of the terminal.

With this, the base station or LMF can obtain position estimation information of the terminal, whereby the server can obtain the position estimation information of the terminal via the network, making it possible to perform processing as described in other embodiments.

As processing for position estimation and processing for sensing in the base station, terminal, and LMF, as shown in PTL 2, PTL 3, and PTL 4, for example, direction-based sensing processing using arrival angles obtained through direction of arrival estimation methods such as MUSIC and direction estimation, and distance-based sensing processing using, for example, reception timing differences and transmission-reception time differences can be applied.

As processing for position estimation and sensing in the base station, terminal, and LMF, for example, the following methods used in NR system can be applied: positioning (sensing) based on reception timing difference (reference signal timing difference); positioning (sensing) based on received signal power (reference signal received power) (reception power of reference signal measured at the terminal (or base station, LMF)); positioning (sensing) based on received signal arrival angle (angle of arrival) (arrival angle of radio waves from the transmitter as seen from the receiver, generally measured by the arrival time difference of radio waves received by one or more or two or more antennas. However, this is not limited to this example) based on positioning (sensing), ranging (sensing) based on transmission-reception time difference (RX-Tx time difference), ranging (sensing) using roundtrip time (RTT), ranging (sensing) using angle of arrival (AoA) and/or angle of departure (AoD), and ranging (sensing) using time difference of arrival (TDOA) (difference in signal arrival time from a plurality of base stations (or a plurality of devices)) can be applied.

During processing for position estimation and processing for sensing in the base station, terminal, and LMF, as shown in PTL 2, PTL 3, and PTL 4, position estimation (or obtaining sensing results) may be performed by triangulation using a plurality of antennas. During processing for position estimation and processing for sensing in the base station, terminal, and LMF, as shown in PTL 2, PTL 3, and PTL 4, position estimation (or obtaining sensing results) may be performed by triangulation using other devices.

With reference to FIG. 46, FIG. 47A, and FIG. 47B, an explanation was provided for a method in which a first device (or first system) transmits a signal including a reference signal and/or data symbol (or control symbol), and a second device (or second system) receives this signal and performs position estimation, and a method in which a first device (or first system) transmits a signal including a reference signal and/or data symbol (or control symbol), a second device (or second system) receives this signal and generates information for position estimation, the second device (or second system) transmits a data symbol (or control symbol) including information for position estimation to the first device (or first system), and the first device (first system) performs position estimation. At this time, the data symbol (or control symbol) includes information on the time when a signal such as a reference signal was received, information on the time of measurement, information on the time when position estimation was performed, information on the reception arrival direction when a signal such as a reference signal was received, information on the received field strength (reference signal received power) of a signal such as a reference signal, information on the received quality (reference signal received quality) of a signal such as a reference signal, quality information of each measurement, AoA information, (reception) beam information, spatial direction information, information on the difference between transmission time and reception time, information on signal transmission time, and/or position estimation information. With this, the first device (or first system), or the second device (or second system) can perform position estimation as exemplified above.

The base station includes a transmitter for sensing (position estimation) and a receiver for sensing (position estimation). Note that the transmitter for sensing (position estimation) and the transmitter for wireless communication may be separate transmitters or may be integrated into a single transmitter. The base station may include a position estimation system using GPS, wireless LAN (local area network), a short-range wireless communication system, etc., whereby it may perform position estimation.

The terminal includes a transmitter for sensing (position estimation) and a receiver for sensing (position estimation). Note that the transmitter for sensing (position estimation) and the transmitter for wireless communication may be separate transmitters or may be integrated into a single transmitter. The terminal may include a position estimation system using GPS, wireless LAN, a short-range wireless communication system, etc., whereby it may perform position estimation.

With this, the base station obtains the position information of the terminal.

Note that the following can be considered as examples of sensing: processing for estimating position of objects; processing for detecting presence or absence of objects; processing for estimating distances between a first object and a second object; processing for predicting material/substance of objects; processing for detecting movement of objects; processing for estimating conditions around devices capable of performing sensing; processing for estimating distance between devices capable of performing sensing and objects; processing for detecting external shape of objects; processing for estimating gestures; processing for estimating human movement; processing for estimating shape of a part of human body; processing for estimating movement of a part of human body; processing for detecting humans; processing for detecting parts of humans; processing for authenticating humans; processing for authenticating parts of humans; processing for estimating movement of objects; processing for estimating object shapes; processing for detecting objects; and processing for authenticating objects.

Note that in the process of detecting the position of an object, it may be possible to simultaneously detect the object and the movement of the object. In the process of detecting the presence or absence of an object, or in the process of detecting the shape of an object, it is possible to identify the target object. Stated differently, during sensing, one or more, or two or more of the above-described processes may be performed.

By performing position estimation as described above, base station or LMF can obtain position estimation information of the terminal, whereby the server can obtain the position estimation information of the terminal via the network, making it possible to perform processing as described in other embodiments.

Note that while the configurations of signals transmitted by the base station and terminal have been explained with reference to (A) in FIG. 46, (A) and (B) in FIG. 47A, and (A) and (B) in FIG. 47B, the configurations are not limited to these, and signals transmitted by the base station and terminal may include symbols and signals other than a control symbol, a reference signal, and a data symbol. The control symbol, reference signal, and data symbol may be transmitted individually, and the control symbol, reference signal, and data symbol may be arranged in the frequency-axis direction. The naming of symbols and signals is not limited to these designations.

### [Embodiment 8]

In the present embodiment, an explanation will be provided regarding a variation of Embodiment 5.

Here, in the virtual space, there is a character corresponding to the terminal, and/or a character generated by a server or the like. Hereinafter, an explanation will be provided regarding an example of control of operation of a character corresponding to the terminal.

An explanation will be provided regarding the control of the operation of a character corresponding to the terminal in the virtual space.

FIG. 27 illustrates an example of a configuration of terminal setting information 2700 included in a modulated signal transmitted by terminals such as terminal #1 101_1, terminal #2 101_2, terminal #101 101_101, and terminal #102 101_102 illustrated in FIG. 1. Terminal setting information 2700 includes, for example, information 2719 related to character operation settings. Here, the terminal transmits terminal setting information 2700 to the base station.

FIG. 48A illustrates an example of communication between a terminal, a base station, and a server illustrated in FIG. 1, for example, related to character operation settings. However, although FIG. 48A illustrates communication between a terminal and a server, in FIG. 48A, the terminal and the server may perform communication via a base station.

As illustrated in FIG. 48A, the terminal transmits terminal information (4801A). Note that since specific examples of terminal information have already been explained in, for example, Embodiment 1, repeated explanation will be omitted.

The server obtains the terminal information (4851A). Since specific operations have already been explained in, for example, Embodiment 1, repeated explanation will be omitted.

The terminal transmits operation setting start information of a character (corresponding to a terminal) (4802A).

The server obtains operation setting start information of a character (corresponding to a terminal) (4852A).

With this, the terminal and server start a procedure regarding the setting of operations of a character (corresponding to the terminal).

The terminal transmits operation setting information of a character (corresponding to a terminal) (4803A).

The server obtains operation setting information of a character (corresponding to a terminal) (4853A).

The server stores a set of information including terminal information, character (corresponding to a terminal) information, and operation setting information of a character (corresponding to a terminal) (4854A).

Note that the order of processing in the interaction between the terminal and server is not limited to the example illustrated in FIG. 48A, and other processing may also be added.

With this, the server controls the operation of a character corresponding to the terminal in the virtual space. An explanation will be provided regarding the specific control method.

When a character is generated based on the position of the terminal as described in Embodiment 1, it is possible to make the character corresponding to the terminal appear in the virtual space according to the position of the terminal. However, after making the character corresponding to the terminal appear in the virtual space, controlling operation of the character makes it possible to realize a more realistic character.

Hereinafter, an explanation will be provided regarding an example of settings for a method of controlling the operation of a character corresponding to the terminal.

FIG. 48B illustrates an example of operation settings of a character (corresponding to a terminal) set by a terminal.

As illustrated in FIG. 48B, assume that, for example, any of the following settings are possible. Note that, for example, these may be displayed on the display unit or display device of the terminal as illustrated in FIG. 34B.

### - Automatic 4890B

For example, when set to this mode, the character corresponding to the terminal automatically performs operations within the virtual space.

### - In coordination with sensor 4891B

For example, when set to this mode, the character corresponding to the terminal operates within the virtual space in coordination with the sensor. Note that details will be explained later.

### - Customize 4892B

For example, when set to this mode, since operation examples of the character corresponding to the terminal have been explained in Embodiment 5, repeated explanation will be omitted.

As illustrated in FIG. 48B, the terminal performs operation setting of the character (corresponding to the terminal), and transmits the information related to this setting as operation setting information of the character (corresponding to the terminal), and the server obtains the operation setting information of the character (corresponding to the terminal). The server controls the operation of the character (corresponding to the terminal) based on the operation setting information of the character (corresponding to the terminal), and generates information of the virtual space.

Note that an example of the operation settings of the character (corresponding to a terminal) is not limited to the example illustrated in FIG. 48B.

Next, an explanation will be provided regarding "in coordination with sensor 4891B".

FIG. 48C illustrates an example of a state of a terminal and a sensor. The character present in the virtual space is a character corresponding to terminal 4889C. The character corresponding to the terminal in the virtual space operates within the virtual space in coordination with first sensor 4881C, second-first sensor 4882CR, second-second sensor 4882CL, third sensor 4883C, fourth-first sensor 4884CR, and fourth-second sensor 4884CL.

First sensor 4881C, second-first sensor 4882CR, second-second sensor 4882CL, third sensor 4883C, fourth-first sensor 4884CR, and fourth-second sensor 4884CL are each equipped with, for example, a sensor such as an angular velocity sensor, a geomagnetic sensor, and/or an acceleration sensor. First sensor 4881C, second-first sensor 4882CR, second-second sensor 4882CL, third sensor 4883C, fourth-first sensor 4884CR, and fourth-second sensor 4884CL detect the respective movements of the head, hands, waist, legs, etc., of the person (user) 4880C, and first sensor 4881C, second-first sensor 4882CR, second-second sensor 4882CL, third sensor 4883C, fourth-first sensor 4884CR, and fourth-second sensor 4884CL each obtain sensing information related to the movements.

First sensor 4881C, second-first sensor 4882CR, second-second sensor 4882CL, third sensor 4883C, fourth-first sensor 4884CR, and fourth-second sensor 4884CL each transmit sensing information it obtained to terminal 4889C. Therefore, terminal 4889C obtains the sensing information transmitted by first sensor 4881C, the sensing information transmitted by second-first sensor 4882CR, the sensing information transmitted by second-second sensor 4882CL, the sensing information transmitted by third sensor 4883C, the sensing information transmitted by fourth-first sensor 4884CR, and the sensing information transmitted by fourth-second sensor 4884CL.

FIG. 48D illustrates an example of a configuration of information transmitted by terminal 4889C of FIG. 48C such as terminal #1 101_1 and terminal #2 101_2 illustrated in FIG. 1.

Terminal 4889C transmits terminal information 4802D, position information 4803D, and additional information 4804D of FIG. 48D to base station #1 102_1 (and/or LMF). Therefore, base station #1 102_1 (and/or LMF) obtains terminal information 4802D, position information 4803D, and additional information 4804D. Note that terminal information 4802D is information related to terminal 4889C, and position information 4803D is position information of terminal 4889C.

Additional information 4804D includes, for example, mode information 4850D, sensing information 4851D of the first sensor, sensing information 4852D_1 of the second-first sensor, sensing information 4852D_2 of the second-second sensor, sensing information 4853D of the third sensor, sensing information 4854D_1 of the fourth-first sensor, and sensing information 4854D_2 of the fourth-second sensor. Note that while the naming "additional information" is used, this designation is not limited to this term, and may be interpreted as including data or including information.

Mode information 4850D is information about the mode set by terminal 4889C, and examples of modes are as explained with reference to FIG. 48B.

Sensing information 4851D of the first sensor is the sensing information of first sensor 4881C.

Sensing information 4852D_1 of the second-first sensor is the sensing information of second-first sensor 4882CR.

Sensing information 4852D_2 of the second-second sensor is the sensing information of second-second sensor 4882CL.

Sensing information 4853D of the third sensor is the sensing information of third sensor 4883C.

Sensing information 4854D_1 of the fourth-first sensor is the sensing information of fourth-first sensor 4884CR.

Sensing information 4854D_2 of the fourth-second sensor is the sensing information of fourth-second sensor 4884CL.

FIG. 48E illustrates an example of a configuration of information transmitted to server 104 by base station #1 102_1 (and/or LMF) illustrated in FIG. 1.

Base station #1 102_1 (and/or LMF) transmits cell ID information 4801E, terminal information 4802E, position information 4803E, and additional information 4804E of FIG. 48E to server 104. Therefore, server 104 obtains cell ID information 4801E, terminal information 4802E, position information 4803E, and additional information 4804E. Note that cell ID information 4801E is the cell ID to which terminal 4889C belongs, terminal information 4802E is information related to terminal 4889C, and position information 4803E is position information of terminal 4889C.

Additional information 4804E includes, for example, mode information 4850E, sensing information 4851E of the first sensor, sensing information 4852E_1 of the second-first sensor, sensing information 4852E_2 of the second-second sensor, sensing information 4853E of the third sensor, sensing information 4854E_1 of the fourth-first sensor, and sensing information 4854E_2 of the fourth-second sensor. Note that while the naming "additional information" is used, this designation is not limited to this term, and may be interpreted as including data or including information.

Mode information 4850E is information about the mode set by terminal 4889C, and examples of modes are as explained with reference to FIG. 48B.

Sensing information 4851E of the first sensor is the sensing information of first sensor 4881C.

Sensing information 4852E_1 of the second-first sensor is the sensing information of second-first sensor 4882CR.

Sensing information 4852E_2 of the second-second sensor is the sensing information of second-second sensor 4882CL.

Sensing information 4853E of the third sensor is the sensing information of third sensor 4883C.

Sensing information 4854E_1 of the fourth-first sensor is the sensing information of fourth-first sensor 4884CR.

Sensing information 4854E_2 of the fourth-second sensor is the sensing information of fourth-second sensor 4884CL.

Server 104 in FIG. 1 obtains cell ID information 4801E of the cell where terminal 4889C in FIG. 48C is located, terminal information 4802E of terminal 4889C, position information 4803E of terminal 4889C, and additional information 4804E of terminal 4889C.

Server 104 causes a character corresponding to terminal 4889C to appear in a position in the virtual space corresponding to position information 4803E in real space, based on cell ID information 4801E of the cell where terminal 4889C is located, terminal information 4802E of terminal 4889C, and position information 4803E of terminal 4889C.

Server 104 places a character corresponding to terminal 4889C in the virtual space at a position corresponding to position information 4803E of the real space, and controls the movement of the character corresponding to terminal 4889C in the virtual space based on sensing information 4851E of the first sensor, sensing information 4852E_1 of the second-first sensor, sensing information 4852E_2 of the second-second sensor, sensing information 4853E of the third sensor, sensing information 4854E_1 of the fourth-first sensor, and sensing information 4854E_2 of the fourth-second sensor.

With this, by controlling the operation of the character corresponding to the terminal in the virtual space according to the status of the sensor in real space, it becomes possible to realize a more realistic character. Here, one effective method is for the terminal and base station (and/or LMF) to transmit both position information and sensing information together to the server.

Note that in FIG. 48C, although an explanation was provided with six sensors placed on a person (user), the techniques can be similarly implemented so long as one or more sensors are placed on a person (user). The positions (body parts) where sensors are placed (on a person (user)) are not limited to the positions (body parts) illustrated in FIG. 48C.

In FIG. 48C, the sensors are attached to a person (user), but the object to which the sensors are attached is not limited to this example. For example, sensors may be attached to moving devices such as vehicles, bicycles, motorcycles, bicycles, ships, satellites, aircraft, drones, robots, electric vehicles, electric motorcycles, electric bicycles, kick scooters, or to animals such as birds, mammals, reptiles, amphibians, insects, or to moving objects. The sensors communicate and interact with terminal 4889C, and the terminal obtains data from the sensors.

Sensors may be attached to purely stationary objects. For example, sensors may be attached to trees in forests, woods, and the like. As illustrated in FIG. 48C, terminal 4889C collects information from the sensors. As explained with reference to FIG. 1, FIG. 48D, and FIG. 48E, terminal 4889C delivers sensor information and position information to the server via the base station (and/or LMF). The server causes tree characters to appear in the virtual space at positions corresponding to the position information, and by swaying the tree characters in the virtual space based on the sensor information and controlling their operation, it becomes possible to realize more realistic characters.

Examples of sensors in FIG. 48C are described as including angular velocity sensors, geomagnetic sensors, and acceleration sensors, but the sensors are not limited to these examples. For example, the sensor may be a sensor for light that detects light intensity and color, such as an image sensor. In this way, the server can obtain information related to light, whereby the server can achieve the advantageous effect of being able to more realistically reproduce the direction of light, color, light intensity, shadows, and the like in the virtual space based on the information related to light. The server may obtain video information, image information as information related to light. The video information and image information may include text information, information on objects existing in the surroundings, and character information such as people.

As another example, the sensor may be a sound collection sensor such as a microphone. In this way, the server can obtain information related to audio, whereby the server can achieve the advantageous effect of being able to more realistically reproduce audio in the virtual space based on the information related to audio.

FIG. 48C illustrates a variation. FIG. 48F illustrates an example of a state of a base station and a sensor. First sensor 4881F, second-first sensor 4882FR, second-second sensor 4882FL, third sensor 4883F, fourth-first sensor 4884FR, and fourth-second sensor 4884FL each have the functions of a terminal, that is, they have the function of communicating with base station 4888F. At this time, the server forms one or more characters in the virtual space based on first sensor 4881F, second-first sensor 4882FR, second-second sensor 4882FL, third sensor 4883F, fourth-first sensor 4884FR, and fourth-second sensor 4884FL. This is because first sensor 4881F, second-first sensor 4882FR, second-second sensor 4882FL, third sensor 4883F, fourth-first sensor 4884FR, and fourth-second sensor 4884FL each have the functions of a terminal.

First sensor 4881F, second-first sensor 4882FR, second-second sensor 4882FL, third sensor 4883F, fourth-first sensor 4884FR, and fourth-second sensor 4884FL are each equipped with, for example, a sensor such as an angular velocity sensor, a geomagnetic sensor, and/or an acceleration sensor. First sensor 4881F, second-first sensor 4882FR, second-second sensor 4882FL, third sensor 4883F, fourth-first sensor 4884FR, and fourth-second sensor 4884FL detect the respective movements of the head, hands, waist, legs, etc., of the person (user) 4880F, and first sensor 4881F, second-first sensor 4882FR, second-second sensor 4882FL, third sensor 4883F, fourth-first sensor 4884FR, and fourth-second sensor 4884FL each obtain sensing information related to the movements.

First sensor 4881F, second-first sensor 4882FR, second-second sensor 4882FL, third sensor 4883F, fourth-first sensor 4884FR, and fourth-second sensor 4884FL each transmit sensing information it obtained to base station 4888F. Therefore, base station 4888F obtains the sensing information transmitted by first sensor 4881F, the sensing information transmitted by second-first sensor 4882FR, the sensing information transmitted by second-second sensor 4882FL, the sensing information transmitted by third sensor 4883F, the sensing information transmitted by fourth-first sensor 4884FR, and the sensing information transmitted by fourth-second sensor 4884FL.

FIG. 48E illustrates an example of a configuration of information transmitted to server 104 by base station #1 102_1 (and/or LMF) illustrated in FIG. 1.

Base station #1 102_1 (and/or LMF) transmits cell ID information 4801E, terminal information 4802E, position information 4803E, and additional information 4804E of FIG. 48E to server 104. However, in FIG. 48F, terminal information 4802E is terminal information of one or more terminals corresponding to one or more characters to be caused to appear in the virtual space. Position information 4803E is position information of one or more terminals corresponding to one or more characters to be caused to appear in the virtual space. Cell ID information 4801E is the cell ID to which one or more terminals corresponding to one or more characters to be caused to appear in the virtual space belong.

Therefore, server 104 obtains cell ID information 4801E, terminal information 4802E, position information 4803E, and additional information 4804E.

Additional information 4804E includes, for example, mode information 4850E, sensing information 4851E of the first sensor, sensing information 4852E_1 of the second-first sensor, sensing information 4852E_2 of the second-second sensor, sensing information 4853E of the third sensor, sensing information 4854E_1 of the fourth-first sensor, and sensing information 4854E_2 of the fourth-second sensor. Note that while the naming "additional information" is used, this designation is not limited to this term, and may be interpreted as including data or including information.

Sensing information 4851E of the first sensor is the sensing information of first sensor 4881F.

Sensing information 4852E_1 of the second-first sensor is the sensing information of second-first sensor 4882FR.

Sensing information 4852E_2 of the second-second sensor is the sensing information of second-second sensor 4882FL.

Sensing information 4853E of the third sensor is the sensing information of third sensor 4883F.

Sensing information 4854E_1 of the fourth-first sensor is the sensing information of fourth-first sensor 4884FR.

Sensing information 4854E_2 of the fourth-second sensor is the sensing information of fourth-second sensor 4884FL.

Server 104 in FIG. 1 obtains cell ID information 4801E, terminal information 4802E, position information 4803E, and additional information 4804E of terminal 4889C.

Server 104 causes one or more characters to appear in a position in the virtual space corresponding to position information 4803E in real space, based on cell ID information 4801E, terminal information 4802E, and position information 4803E.

Server 104 places one or more characters in the virtual space at positions corresponding to position information 4803E of the real space, and controls the movement of the one or more characters in the virtual space based on sensing information 4851E of the first sensor, sensing information 4852E_1 of the second-first sensor, sensing information 4852E_2 of the second-second sensor, sensing information 4853E of the third sensor, sensing information 4854E_1 of the fourth-first sensor, and sensing information 4854E_2 of the fourth-second sensor.

With this, by controlling the operation of the character in the virtual space according to the status of the sensor in real space, it becomes possible to realize a more realistic character. Here, one effective method is for the base station (and/or LMF) to transmit both position information and sensing information together to the server.

In the present embodiment, an explanation has been provided regarding the virtual space in which a character based on the position of a terminal or device is present. However, even when the present embodiment is applied to a virtual space where a character based on the position of a terminal or device is not present, for example, a virtual space where simply a character is present, it is possible to implement the technique similarly. Note that the virtual space may be a virtual space based on the real space, or a virtual space unrelated to the real space.

At a location in the virtual space corresponding to a location where moving objects, moving devices, animals, living things and the like exist in the real space, characters in the virtual space can be operated in coordination with the movements of the moving objects, moving devices, animals, living things and the like, whereby the advantageous effect of being able to form a virtual space more closely resembling reality can be achieved.

An explanation will be provided regarding a different example from FIG. 48C concerning "in coordination with sensor 4891B". Here, a capturing device will be used instead of a sensor.

FIG. 48G illustrates an example of a state of a terminal and a capturing device. Note that in FIG. 48G, while terminal 4889G and capturing device 4887G are distinguished, the configuration is not limited to this; the terminal and capturing device may be implemented as a single device.

The character present in the virtual space is a character corresponding to terminal 4889G. Capturing device 4887G captures and analyzes, for example, person (user) 4880G, thereby detecting the respective movements of the person's (user's) 4880G head, hands, waist, legs, and the like. Capturing device 4887G obtains sensing information related to the respective movements of each part.

Terminal 4889G in FIG. 48G obtains sensing information (related to the respective movements of each part) from capturing device 4887G. Then, as illustrated in FIG. 1, the terminal transmits sensing information (related to the respective movements of each part) to the server via the base station (and LMF).

As another method different from the above, terminal 4889G may perform analysis of the person (user) 4880G. Here, for example, capturing device 4887G obtains sensing information related to the respective movements of each part, and terminal 4889G obtains this sensing information and performs analysis.

The server obtains the sensing information (related to the respective movements of each part), and the server controls the character corresponding to the terminal such that the character corresponding to the terminal operates within the virtual space in coordination with the sensing information (related to the respective movements of each part).

Note that the terminal transmits both position information and sensing information (related to the respective movements of each part) together to the server via the base station (and/or LMF), and the server causes a character corresponding to the terminal to appear in a position within the virtual space based on the position information.

With this, by controlling the operation of the character corresponding to the terminal in the virtual space using the capturing device, it becomes possible to realize a more realistic character. Here, one effective method is for the base station (and/or LMF) to transmit both position information and sensing information together to the server.

An explanation will be provided regarding a different example from the above. FIG. 48H is an example of a system configuration, and elements that operate the same as in FIG. 1 and FIG. 18 are assigned the same reference numbers, and some explanations are omitted. FIG. 48H differs from FIG. 1 in that capturing device #1 1802_1 is included in the system, and, for example, that capturing device #1 1802_1 is connected to network 103.

FIG. 48I illustrates an example of a state of a terminal and a capturing device. Capturing device 4887I corresponds to capturing device #1 1802_1 in FIG. 48H, and terminal 4889I corresponds, for example, to terminal #1 101_1 and terminal #2 101_2 in FIG. 48H.

The character present in the virtual space is a character corresponding to terminal 4889I.

Capturing device 4887I captures and analyzes, for example, person (user) 4880I, thereby detecting the respective movements of the person's (user's) 4880G head, hands, waist, legs, and the like. Capturing device 4887I obtains sensing information related to the respective movements of each part. Capturing device 4887I in FIG. 48I transmits sensing information (related to the respective movements of each part) to server via network 103.

The server obtains the sensing information (related to the respective movements of each part), and the server controls the character corresponding to the terminal such that the character corresponding to the terminal operates within the virtual space in coordination with the sensing information (related to the respective movements of each part).

Note that the terminal transmits position information to the server via the base station (and/or LMF), and capturing device 4887I transmits sensing information (related to the respective movements of each part) to the server, and the server causes a character corresponding to the terminal to appear in a position within the virtual space based on the position information.

With this, by controlling the operation of the character corresponding to the terminal in the virtual space using the capturing device, it becomes possible to realize a more realistic character. Here, one effective method is for the server to obtain both position information and sensing information.

Note that in FIG. 48G and FIG. 48I, although an explanation was provided with one capturing device, the techniques can be similarly implemented so long as there are one or more capturing devices.

FIG. 48G and FIG. 48I show the analysis target of the capturing device as a person (user), but the analysis target of the capturing device is not limited to this example. Analysis targets of the capturing device may be, for example, moving devices such as vehicles, bicycles, motorcycles, bicycles, ships, satellites, aircraft, drones, robots, electric vehicles, electric motorcycles, electric bicycles, kick scooters, animals such as birds, mammals, reptiles, amphibians, insects, or moving objects.

The capturing device may also analyze purely stationary objects as analysis targets. For example, the capturing device captures and analyzes forests, woods, and the like, and collects sensing information. Capturing device 4887I delivers sensor information and position information to the server via network 103. The server causes tree characters to appear in the virtual space at positions corresponding to the position information, and by swaying the tree characters in the virtual space based on the sensor information and controlling their operation, it becomes possible to realize more realistic characters. Capturing device 4887I transmits sensing information (related to the respective movements of each part) to server via network 103.

The server obtains the sensing information (related to the respective movements of each part), and the server controls the character corresponding to the terminal such that the character corresponding to the terminal operates within the virtual space in coordination with the sensing information (related to the respective movements of each part).

Note that the terminal transmits position information to the server via the base station (and/or LMF), and capturing device 4887I transmits sensing information (related to the respective movements of each part) to the server, and the server causes a character corresponding to the terminal to appear in a position within the virtual space based on the position information.

For example, capturing device 4887I may detect light properties such as intensity and color, and the server may obtain information related to light. With this, the server can achieve the advantageous effect of being able to more realistically reproduce the direction of light, color, light intensity, shadows, and the like in the virtual space based on the information related to light. The server may obtain video information, image information as information related to light. The video information and image information may include text information, information on objects existing in the surroundings, and character information such as people.

Capturing device 4887I may include a sound collection sensor such as a microphone. In this way, the server can obtain information related to audio, whereby the server can achieve the advantageous effect of being able to more realistically reproduce audio in the virtual space based on the information related to audio.

An explanation will be provided regarding an example of settings for a method of controlling the operation of a character corresponding to the terminal, taking the above into consideration.

FIG. 49 illustrates an example of operation settings of a character (corresponding to a terminal) set by a terminal. Note that in FIG. 49, elements that operate the same as in FIG. 48B are assigned the same reference numbers, and some explanations are omitted.

As illustrated in FIG. 49, assume that, for example, any of the following settings are possible. Note that, for example, these may be displayed on the display unit or display device of the terminal as illustrated in FIG. 34B.

### - Automatic 4890B

For example, when set to this mode, the character corresponding to the terminal automatically performs operations within the virtual space.

### - In coordination with sensor 4891B

For example, when set to this mode, the character corresponding to the terminal operates within the virtual space in coordination with the sensor. Note that details are as already explained.

### - In coordination with capturing device information 4992

For example, when set to this mode, the character corresponding to the terminal operates within the virtual space in coordination with the information of the capturing device. Note that details are as already explained.

As illustrated in FIG. 49, the terminal performs operation setting of the character (corresponding to the terminal), and transmits the information related to this setting as operation setting information of the character (corresponding to the terminal), and the server obtains the operation setting information of the character (corresponding to the terminal). The server controls the operation of the character (corresponding to the terminal) based on the operation setting information of the character (corresponding to the terminal), and generates information of the virtual space.

Note that an example of the operation settings of the character (corresponding to a terminal) is not limited to the example illustrated in FIG. 49.

By enabling the setting of a method for controlling the operation of a character corresponding to the terminal as described above, the advantageous effect of being able to set a method for controlling the operation of a character corresponding to the terminal according to the situation in real space can be achieved.

Note that while the configurations of signals transmitted by the base station and terminal have been explained with reference to FIG. 48D and FIG. 48E, the configurations are not limited to these, and signals transmitted by the base station and terminal may include information other than the information illustrated in FIG. 48D and FIG. 48E. Moreover, the naming of information is not limited to the designations in FIG. 48D and FIG. 48E.

### [Embodiment 9]

In the present embodiment, an explanation will be provided regarding an example of displaying attributes of a character corresponding to the terminal.

In systems such as those in FIG. 1, FIG. 5, FIG. 18, FIG. 20, FIG. 38A, FIG. 45, and FIG. 48H, the server causes a character corresponding to the terminal to appear in the virtual space. Here, an explanation will be provided below regarding an example of implementation related to attributes of a character corresponding to the terminal.

FIG. 50A illustrates an example of settings related to displaying attributes of a character corresponding to a terminal itself (may correspond to another terminal). For example, assume that a display corresponding to FIG. 50A is displayed on the display unit of the terminal.

When attribute display 5000A is "ON", the attribute of the character corresponding to this terminal in the virtual space will be displayed. When attribute display 5000A is "OFF", the attribute of the character corresponding to this terminal in the virtual space will not be displayed.

When display 5001A related to access to the character is "ON", it means that in the virtual space, a character corresponding to another terminal can access (for example, chat, communicate with, etc.) the character corresponding to this terminal. When display 5001A related to access to the character is "OFF", it means that in the virtual space, a character corresponding to another terminal cannot access (for example, chat, communicate with, etc.) the character corresponding to this terminal.

When display 5002A related to character operation is "ON", for example, it indicates whether the operation of the character corresponding to this terminal is automatic, the operation of the character corresponding to this terminal is in coordination with the sensor, or the operation of the character corresponding to this terminal is in coordination with information from the capturing device. When display 5002A related to character operation is "OFF", display related to character operation will not be performed.

When display 5003A related to health status is "ON", for example, the health status of the person (user) using this terminal will be displayed via the character corresponding to this terminal. Examples of health status include the burden status of each part (such as the burden status of the knees, the burden status of the elbows, etc.), body temperature, fatigue level, stress, and number of breaths. When display 5003A related to health status is "OFF", the health status of the person (user) using this terminal will not be displayed.

When display 5004A related to the destination is "ON", for example, the destination the person (user) using this terminal is heading to will be displayed via the character corresponding to this terminal. When display 5004A related to the destination is "OFF", the destination the person (user) using this terminal is heading to will not be displayed.

When display 5005A related to character display time is "ON", the display time of the character corresponding to this terminal in the virtual space will be displayed. When display 5005A related to character display time is "OFF", the display time of the character corresponding to this terminal in the virtual space will not be displayed.

FIG. 50B illustrates an example of a configuration of setting information of a terminal (its own setting information) that the terminal transmits to a server via a base station. The terminal transmits terminal setting information 5099B illustrated in FIG. 50B to the server via the base station. However, terminal setting information 5099B may be transmitted to the server without going through the base station.

Terminal setting information 5099B is configured with setting information 5000B related to attribute display, setting information 5001B for display related to access to character, setting information 5002B for display related to character operation, setting information 5003B for display related to health status, setting information 5004B for display related to destination, and setting information 5005B for display related to character display time.

Setting information 5000B related to attribute display is information for transmitting the state set via attribute display 5000A by the terminal.

Setting information 5001B for display related to access to the character is information for transmitting state set via display 5001A related to access to the character by the terminal.

When the setting for attribute display is "ON", the server performs a display related to access to the character corresponding to the terminal in the virtual space based on setting information 5001B for display related to access to the character, if a display related to access to the character is necessary.

Setting information 5002B for display related to character operation is information for transmitting state set via display 5002A related to character operation by the terminal.

When the setting for attribute display is "ON", the server performs a display related to operation of the character corresponding to the terminal in the virtual space based on setting information 5002B for display related to character operation, if a display related to character operation is necessary. Note that the terminal transmits information related to character operation to the server.

Setting information 5003B for display related to health status is information for transmitting state set via display 5003A related to health status by the terminal.

When the setting for attribute display is "ON", the server performs a display related to the health status of the person (user) associated with the character corresponding to the terminal in the virtual space based on setting information 5003B for display related to the health status, if a display related to the health status is necessary. Note that the terminal transmits information related to health status to the server.

Setting information 5004B for display related to the destination is information for transmitting state set via display 5004A related to the destination by the terminal.

When the setting for attribute display is "ON", the server performs a display related to the destination of the person (user) associated with the character corresponding to the terminal in the virtual space based on setting information 5004B for display related to the destination, if a display related to the destination is necessary. Note that the terminal transmits information related to the destination to the server.

Setting information 5005B for display related to character display time is information for transmitting state set via display 5005A related to character display time by the terminal.

When the setting for attribute display is "ON", the server performs a display related to character display time of the character corresponding to the terminal in the virtual space based on setting information 5005B for display related to character display time, if a display related to character display time is necessary. Note that the terminal transmits information related to character display time to the server.

FIG. 51 illustrates an example of communication between a terminal, a base station, and a server in systems such as those in FIG. 1, FIG. 5, FIG. 18, FIG. 20, FIG. 38A, FIG. 45, FIG. 48H, etc., regarding attribute display of a character corresponding to the terminal in the virtual space. However, although FIG. 51 illustrates communication between a terminal and a server, in FIG. 51, the terminal and the server may perform communication via a base station.

As illustrated in FIG. 51, the terminal transmits terminal information (5101). Note that since specific examples of terminal information have already been explained in, for example, Embodiment 1, repeated explanation will be omitted.

The server obtains the terminal information (5151). Since specific operations have already been explained in, for example, Embodiment 1, repeated explanation will be omitted.

The terminal then transmits the information related to the start of settings for attribute-related display (5102).

The server obtains the information related to the start of settings for attribute-related display (5152).

With this, the terminal and server start a setting procedure regarding attribute-related display.

The terminal transmits the information related to the settings for attribute-related display (5103).

The server obtains the information related to the settings for attribute-related display (5153).

Note that the "information related to the settings for attribute-related display" includes, for example, setting information 5000B related to attribute display, setting information 5001B for display related to access to character, setting information 5002B for display related to character operation, setting information 5003B for display related to health status, setting information 5004B for display related to destination, and setting information 5005B for display related to character display time.

Note that the order of processing in the interaction between the terminal and server is not limited to the example illustrated in FIG. 51, and other processing may also be added.

FIG. 52 illustrates an example of when a character corresponding to a terminal in the virtual space is displayed on a display device such as a terminal, after settings related to attributes as illustrated in FIG. 50A, FIG. 50B, and FIG. 51 have been made.

Character 5201 corresponding to the terminal in the virtual space is displayed on screen 5299 in FIG. 52. Along with character 5201, character attributes (of the terminal corresponding to the character) 5251 are displayed on screen 5299.

For example, character attributes 5251 are displayed as: access (to the character) is possible, character operation is in coordination with a sensor, health status is good, destination is Shibuya, and character display time is 2 hours remaining. However, FIG. 52 is merely one example. Note that character attributes 5251 need not always be displayed.

As explained with reference to FIG. 50A, FIG. 50B, FIG. 51, and FIG. 52, by displaying the attributes of this character along with the character corresponding to the terminal in the virtual space, it is possible to reduce the number of communications with other characters, thereby achieving the advantageous effect of improved data transmission efficiency.

By displaying the attributes of this character along with the character corresponding to the terminal, the person (user) associated with this terminal may be able to obtain useful information from other characters (users using terminals).

For example, by displaying the destination, if it is a place the user is visiting for the first time, there is a higher possibility that other characters can point out whether the direction they are heading in is correct or not.

By displaying the health status, since the user's health status can be known, there is a possibility of receiving help from other characters, which may lead to a higher possibility of ensuring the user's safety.

By displaying the character operation, it becomes possible to know the state of the relationship between the terminal and the character, thereby allowing users corresponding to other characters and the user corresponding to the character to confirm the operations of the character.

Note that the example of setting attributes to be displayed is not limited to FIG. 50A, and display settings other than those described in FIG. 50A may be implemented. Moreover, the display method is not limited to the example illustrated in FIG. 50A. Therefore, the information included in the terminal setting information in FIG. 50B is not limited to the example in FIG. 50B, and the naming of information is also not limited to the example in FIG. 50B.

The example of the display method for attributes of the character (terminal) is not limited to the example in FIG. 52, and the content to be displayed is also not limited to the example in FIG. 52.

### [Embodiment 10]

In Embodiment 6, an explanation was provided regarding advertisements in the real space and the virtual space with reference to FIG. 1, FIG. 5, FIG. 18, FIG. 20, FIG. 38A, FIG. 45, and FIG. 48H. In the present embodiment, an explanation will be provided regarding advertisements in the real space and the virtual space as a variation of Embodiment 6.

FIG. 53A and FIG. 53B illustrate examples of situations in a real space.

As illustrated in FIG. 53A, assume that device 5301A is moving on the road. Device 5301A can be, for example, a moving device such as an electric-based moving device like an electric vehicle, electric motorcycle (e-bike), electric bicycle, moving robot, electric kick scooter, electric-assist bicycle, or electric-assist kick scooter, or an automobile, motorcycle, bicycle, ship, aircraft, or airplane, but these examples are non-limiting. For example, it may be a device that is stationary (installed, fixedly installed, or has portability). Device 5301A may be transporting a user or may not be transporting a user. Device 5301A may move by being controlled by the user or may move automatically.

Device 5301A may also display advertisement information such as "new service launch, web (World Wide Web) site: xxxxxx" as illustrated in FIG. 53A. Here, the information displayed on device 5301A is considered advertisement information, but may be information such as text, images, or videos, or information such as a URL (Uniform Resource Locator). Advertisement information or information may be displayed on a display mounted on device 5301A, or advertisement information or information may be depicted on device 5301A. Note that the method of displaying advertisement information or information on device 5301A is not limited to these examples.

FIG. 53B is a different example from FIG. 53A. As illustrated in FIG. 53B, assume that device 5301B is moving on the road. Device 5301B can be, for example, a moving device such as an electric-based moving device like an electric vehicle, electric motorcycle (e-bike), electric bicycle, moving robot, electric kick scooter, electric-assist bicycle, or electric-assist kick scooter, or an automobile, motorcycle, bicycle, ship, aircraft, or airplane, but these examples are non-limiting. For example, it may be a device that is stationary (installed, fixedly installed, or has portability). Device 5301B may be transporting a user or may not be transporting a user. Device 5301B may move by being controlled by the user or may move automatically. Note that device 5301B is assumed to have no advertisement information.

FIG. 54A illustrates an example of a state of a virtual space corresponding to the real space in FIG. 53A and FIG. 53B when applying the method described in Embodiment 1 and the like.

As illustrated in FIG. 54A, assume that, for example, the display device is displaying the virtual space on screen 5499A. As illustrated in FIG. 54A, character 5401A corresponding to device 5301A or 5301B is moving on the road. Character 5401A may also display advertisement information such as "new service launch, web (World Wide Web) site: xxxxxx" as illustrated in FIG. 54A. Here, the information displayed on character 5401A is considered advertisement information, but may be information such as text, images, or videos, or information such as a URL (Uniform Resource Locator). Note that the method of displaying advertisement information or information on character 5401A is not limited to the method in FIG. 54A, and the character corresponding to a device existing in the virtual space may be any kind of thing.

FIG. 54B illustrates an example of a state of a virtual space corresponding to the real space in FIG. 53A and FIG. 53B when applying the method described in Embodiment 1 and the like.

As illustrated in FIG. 54B, assume that, for example, the display device is displaying the virtual space on screen 5499B. As illustrated in FIG. 54B, character 5401B corresponding to device 5301A or 5301B is moving on the road. Character 5401B may also display advertisement information such as "service in progress, web (World Wide Web) site: yyyyyy" as illustrated in FIG. 54B. Here, the information displayed on character 5401B is considered advertisement information, but may be information such as text, images, or videos, or information such as a URL (Uniform Resource Locator). Note that the method of displaying advertisement information or information on character 5401B is not limited to the method in FIG. 54B, and the character corresponding to a device existing in the virtual space may be any kind of thing.

FIG. 54C illustrates an example of a state of a virtual space corresponding to the real space in FIG. 53A and FIG. 53B when applying the method described in Embodiment 1 and the like.

As illustrated in FIG. 54C, assume that, for example, the display device is displaying the virtual space on screen 5499C. As illustrated in FIG. 54C, character 5401C corresponding to device 5301A or 5301B is moving on the road. Advertisement information need not be displayed on character 5401C, as illustrated in FIG. 54C.

Note that conceivable examples of the display device include, but are not limited to a mobile phone, a cellular phone, a smartphone, a tablet, a tablet personal computer (PC), a personal computer (the personal computer may have a monitor or be able to connect to a monitor), notebook PC, a television, an device connected to a monitor, a game console, a portable game console, AR glasses, AR goggles, a monitor capable of displaying AR, an device connected to a monitor capable of displaying AR, VR glasses, VR goggles, a monitor capable of displaying VR, an device connected to a monitor capable of displaying VR, mixed reality (MR) glasses, a monitor capable of displaying MR, an device connected to a monitor capable of displaying MR, a car navigation system, a head mounted display, an device connected to a head mounted display, a monitor, an device connected to a monitor, a projector, an device connected to a projector, etc.

Next, an explanation will be provided regarding the relationship between "FIG. 53A and FIG. 53B" and "FIG. 54A, FIG. 54B, and FIG. 54C".

### Example 10-1:

Assume that device 5301A in FIG. 53A exists in real space.

Here, for example, when a terminal in country (or region) #A accesses the virtual space, it is assumed that character 5401A is in the virtual space as a character corresponding to device 5301A.

Here, for example, when a terminal in country (or region) #B accesses the virtual space, it is assumed that character 5401B is in the virtual space as a character corresponding to device 5301A.

For example, when a terminal in country (or region) #C accesses the virtual space, it is assumed that character 5401C is in the virtual space as a character corresponding to device 5301A.

### Example 10-2:

Assume that device 5301B in FIG. 53B exists in real space.

Here, for example, when a terminal in country (or region) #A accesses the virtual space, it is assumed that character 5401A is in the virtual space as a character corresponding to device 5301B.

Here, for example, when a terminal in country (or region) #B accesses the virtual space, it is assumed that character 5401B is in the virtual space as a character corresponding to device 5301B.

For example, when a terminal in country (or region) #C accesses the virtual space, it is assumed that character 5401C is in the virtual space as a character corresponding to device 5301B.

In this way, it is assumed that the character in the virtual space corresponding to the device in the real space may differ in the virtual space depending on the country or region. In this way, for example, when advertisements are regulated by country or region, it is possible to achieve the advantageous effect of taking measures such as displaying advertisements suitable for each country or region, or not displaying advertisements.

FIG. 55A and FIG. 55B illustrate examples of situations in a real space.

As illustrated in FIG. 55A, assume that person (user) 5501A using a terminal is moving on the road.

Person (user) 5501A may also display advertisement information such as "new service launch, web (World Wide Web) site: xxxxxx" as illustrated in FIG. 55A. Here, the information displayed on person (user) 5501A is considered advertisement information, but may be information such as text, images, or videos, or information such as a URL (Uniform Resource Locator). Advertisement information or information may also be displayed on person (user) 5501A. Note that the method of displaying advertisement information or information to person (user) 5501A is not limited to these examples.

FIG. 55B is a different example from FIG. 55A. As illustrated in FIG. 55B, assume that person (user) 5501B using a terminal is moving on the road. Note that person (user) 5501B is assumed to have no advertisement information.

FIG. 56A illustrates an example of a state of a virtual space corresponding to the real space in FIG. 55A and FIG. 55B when applying the method described in Embodiment 1 and the like.

As illustrated in FIG. 56A, assume that, for example, the display device is displaying the virtual space on screen 5699A. As illustrated in FIG. 56A, character 5601A corresponding to person (user) 5501A or 5501B is moving on the road. Character 5601A may also display advertisement information such as "new service launch, web (World Wide Web) site: xxxxxx" as illustrated in FIG. 56A. Here, the information displayed on character 5601A is considered advertisement information, but may be information such as text, images, or videos, or information such as a URL (Uniform Resource Locator). Note that the method of displaying advertisement information or information on character 5601A is not limited to the method in FIG. 56A, and the character corresponding to a device (person, user) existing in the virtual space may be any kind of thing.

FIG. 56B illustrates an example of a state of a virtual space corresponding to the real space in FIG. 55A and FIG. 55B when applying the method described in Embodiment 1 and the like.

As illustrated in FIG. 56B, assume that, for example, the display device is displaying the virtual space on screen 5699B. As illustrated in FIG. 56B, character 5601B corresponding to person (user) 5501A or 5501B is moving on the road. Character 5601B may also display advertisement information such as "service in progress, web (World Wide Web) site: yyyyyy" as illustrated in FIG. 56B. Here, the information displayed on character 5601B is considered advertisement information, but may be information such as text, images, or videos, or information such as a URL (Uniform Resource Locator). Note that the method of displaying advertisement information or information on character 5601B is not limited to the method in FIG. 56B, and the character corresponding to a device (person, user) existing in the virtual space may be any kind of thing.

FIG. 56C illustrates an example of a state of a virtual space corresponding to the real space in FIG. 55A and FIG. 55B when applying the method described in Embodiment 1 and the like.

As illustrated in FIG. 56C, assume that, for example, the display device is displaying the virtual space on screen 5699C. As illustrated in FIG. 56C, character 5601C corresponding to person (user) 5501A or 5501B is moving on the road. Advertisement information need not be displayed on character 5601C, as illustrated in FIG. 56C.

Note that conceivable examples of the display device include, but are not limited to a mobile phone, a cellular phone, a smartphone, a tablet, a tablet personal computer (PC), a personal computer (the personal computer may have a monitor or be able to connect to a monitor), notebook PC, a television, an device connected to a monitor, a game console, a portable game console, AR glasses, AR goggles, a monitor capable of displaying AR, an device connected to a monitor capable of displaying AR, VR glasses, VR goggles, a monitor capable of displaying VR, an device connected to a monitor capable of displaying VR, mixed reality (MR) glasses, a monitor capable of displaying MR, an device connected to a monitor capable of displaying MR, a car navigation system, a head mounted display, an device connected to a head mounted display, a monitor, an device connected to a monitor, a projector, an device connected to a projector, etc.

Next, an explanation will be provided regarding the relationship between "FIG. 55A and FIG. 55B" and "FIG. 56A, FIG. 56B, and FIG. 56C".

### Example 10-3:

Assume that person (user) 5501A using a terminal in FIG. 55A exists in real space.

Here, for example, when a terminal in country (or region) #A accesses the virtual space, it is assumed that character 5601A is in the virtual space as a character corresponding to person (user) 5501A.

Here, for example, when a terminal in country (or region) #B accesses the virtual space, it is assumed that character 5601B is in the virtual space as a character corresponding to person (user) 5501A.

For example, when a terminal in country (or region) #C accesses the virtual space, it is assumed that character 5601C is in the virtual space as a character corresponding to person (user) 5501A.

### Example 10-4:

Assume that person (user) 5501B using a terminal in FIG. 55B exists in real space.

Here, for example, when a terminal in country (or region) #A accesses the virtual space, it is assumed that character 5601A is in the virtual space as a character corresponding to person (user) 5501B.

Here, for example, when a terminal in country (or region) #B accesses the virtual space, it is assumed that character 5601B is in the virtual space as a character corresponding to person (user) 5501B.

For example, when a terminal in country (or region) #C accesses the virtual space, it is assumed that character 5601C is in the virtual space as a character corresponding to person (user) 5501B.

In this way, it is assumed that the character in the virtual space corresponding to the device or person (user) in the real space may differ in the virtual space depending on the country or region. In this way, for example, when advertisements are regulated by country or region, it is possible to achieve the advantageous effect of taking measures such as displaying advertisements suitable for each country or region, or not displaying advertisements.

An explanation will be provided regarding a system for realizing "FIG. 53A and FIG. 53B", "FIG. 54A, FIG. 54B, and FIG. 54C", and a system for realizing "FIG. 55A and FIG. 55B", "FIG. 56A, FIG. 56B, and FIG. 56C".

FIG. 38A illustrates an example of the configuration of a system for realizing "FIG. 53A and FIG. 53B", "FIG. 54A, FIG. 54B, and FIG. 54C", and a system for realizing "FIG. 55A and FIG. 55B", "FIG. 56A, FIG. 56B, and FIG. 56C". In FIG. 38A, elements that operate the same as in FIG. 1 are assigned the same reference numbers, and some explanations are omitted for elements that have already been described.

Device 3802 and base station #1 103 perform communication and interaction for sensing, and since this already been described in Embodiment 1 in detail, repeated explanation will be omitted. Note that device 3802 performs some operations similar to terminal #1 101_1 illustrated in FIG. 1, and device 3802 corresponds, for example, to device 5301A in FIG. 53A, device 5301B in FIG. 53B, the terminal used by person (user) 5501A in FIG. 55A, and the terminal used by person (user) 5501B in FIG. 55B.

For example, device 3802 performs communication with server 104 via base station #1 103 and network 103, and server 104 causes the character corresponding to device 3802 to appear in the virtual space. Since that procedure has already been explained, for example, in Embodiment 1, repeated explanation will be omitted.

With this, it is possible to realize the real space and the virtual space as illustrated in "FIG. 53A and FIG. 53B", "FIG. 54A, FIG. 54B, and FIG. 54C", and the real space and the virtual space as illustrated in "FIG. 55A and FIG. 55B", "FIG. 56A, FIG. 56B, and FIG. 56C".

To form the real space and virtual space as illustrated in "FIG. 53A and FIG. 53B", "FIG. 54A, FIG. 54B, and FIG. 54C", and the real space and virtual space as illustrated in "FIG. 55A and FIG. 55B", "FIG. 56A, FIG. 56B, and FIG. 56C", as illustrated in FIG. 38A, "advertisement providing device or information providing device" 3801 exists, and "advertisement providing device or information providing device" 3801 performs communication with server 104 via network 103, for example. Note that details of operations performed by "advertisement providing device or information providing device" 3801 will be explained later.

FIG. 57 illustrates an example of communication between "advertisement providing device or information providing device" 3801 and server 104 in FIG. 38A. Note that in FIG. 57, elements that operate the same as in FIG. 39 are assigned the same reference numbers.

Advertisement providing device or information providing device 3801 first transmits (its own) device information (3901).

The server (104) obtains this device information (3951).

Then, the advertisement providing device or information providing device transmits the item information (3902). Note that item information may be, for example, the character itself in "FIG. 54A, FIG. 54B, FIG. 54C" or "FIG. 56A, FIG. 56B, FIG. 56C", or may be an item that the character can equip/attach/wear. Item information may conceivably be, for example, an item that the character in "FIG. 54A, FIG. 54B, FIG. 54C" or "FIG. 56A, FIG. 56B, FIG. 56C" can equip/attach/wear.

The server obtains this item information (3952).

The server may transmit the identification information of this item (item identification information) (3953).

The advertisement providing device or information providing device obtains this item identification information (3903). Note that the advertisement providing device or information providing device uses the item identification information when calling the item. Therefore, the advertisement providing device or information providing device stores the item identification information.

The advertisement providing device or information providing device transmits the "advertisement information or information" to be posted on the item (3904).

Here, the "advertisement information or information" is assumed to include advertisement information for each country or region (in some cases, not displaying advertisements).

The server obtains this "advertisement information, or information" (3954). The server stores the set information of "item information" and "advertisement information, or information" (3955).

Note that the character may simply be a character, or may be a character corresponding to a device or terminal.

The order of processing in the interaction between the advertisement providing device or information providing device and the server is not limited to the example illustrated in FIG. 57, and other processing may also be added.

Furthermore, as illustrated in FIG. 58, the server may transmit virtual space information (5851), and the advertisement providing device or information providing device may obtain the virtual space information (5801).

FIG. 59 illustrates an example of communication between "terminal (for example, terminal #1 101_1, terminal #101 101_101, terminal #102 101_102) or device 3802" and server 104 in FIG. 38A. Note that FIG. 59 illustrates an example of processing after the advertisement providing device or information providing device has registered an item and a character with the server, as in FIG. 58. When the terminal or device and the server perform communication, they may do so via a base station.

The terminal or device first transmits (its own) terminal or device information (5901).

The server obtains this terminal or device information (5951).

Then, the terminal or device transmits terminal or device position information (5902).

The server obtains this terminal or device position information (5952). The server selects the virtual space information based on this position information (5953). For example, as described above, the advertisement information accompanying the character corresponding to the device or terminal is selected based on the position information.

The server transmits the virtual space information based on the position information (5954).

The terminal or device obtains virtual space information that is based on the position information (5903). The terminal or device will display a screen corresponding to the virtual space information that is based on the position information (5904).

Note that the order of processing in the interaction between the terminal or device and the server is not limited to the example illustrated in FIG. 59, and other processing may also be added.

As described above, the character in the virtual space corresponding to the device or person (user) in the real space may differ in the virtual space depending on the country or region, and the device or terminal can obtain information corresponding to this. In this way, for example, when advertisements are regulated by country or region, it is possible to achieve the advantageous effect of taking measures such as displaying advertisements suitable for each country or region, or not displaying advertisements.

This was explained in the present embodiment. The processing of the terminal or device, the processing of the server, and the processing of the advertisement providing device or information providing device are merely examples. The techniques are therefore possible to similarly implement even if other processes (by other devices (for example, LMF, AMF, etc.)) are added, parts of the process are omitted, or the order of processing is changed.

Each device may be configured of a plurality of devices, and for each device, a device with server functions may be configured as a separate device.

Note that the naming of devices is not limited to the above examples; other names may be used. In regard to this point, examples explained in other embodiments are conceivable.

An explanation will be provided regarding another example of a system for realizing "FIG. 53A and FIG. 53B", "FIG. 54A, FIG. 54B, and FIG. 54C", and a system for realizing "FIG. 55A and FIG. 55B", "FIG. 56A, FIG. 56B, and FIG. 56C".

FIG. 60 illustrates an example of the configuration of a system for realizing "FIG. 53A and FIG. 53B", "FIG. 54A, FIG. 54B, and FIG. 54C", and a system for realizing "FIG. 55A and FIG. 55B", "FIG. 56A, FIG. 56B, and FIG. 56C". In FIG. 60, elements that operate the same as in FIG. 1 and FIG. 38A are assigned the same reference numbers, and some explanations are omitted for elements that have already been described.

Device 3802 and base station #1 103 perform communication and interaction for sensing, and since this already been described in Embodiment 1 in detail, repeated explanation will be omitted. Note that device 3802 performs some operations similar to terminal #1 101_1 illustrated in FIG. 1, and device 3802 corresponds, for example, to device 5301A in FIG. 53A, device 5301B in FIG. 53B, the terminal used by person (user) 5501A in FIG. 55A, and the terminal used by person (user) 5501B in FIG. 55B.

For example, device 3802 performs communication with server 104 via base station #1 103 and network 103, and server 104 causes the character corresponding to device 3802 to appear in the virtual space. Since that procedure has already been explained, for example, in Embodiment 1, repeated explanation will be omitted.

With this, it is possible to realize the real space and the virtual space as illustrated in "FIG. 53A and FIG. 53B", "FIG. 54A, FIG. 54B, and FIG. 54C", and the real space and the virtual space as illustrated in "FIG. 55A and FIG. 55B", "FIG. 56A, FIG. 56B, and FIG. 56C".

To form the real space and virtual space as illustrated in "FIG. 53A and FIG. 53B", "FIG. 54A, FIG. 54B, and FIG. 54C", and the real space and virtual space as illustrated in "FIG. 55A and FIG. 55B", "FIG. 56A, FIG. 56B, and FIG. 56C", server 104 has a function for handling advertisement information. This point will be explained later.

FIG. 61 illustrates an example of communication between "terminal (such as 101_1) or device (3802)" and server 104 in FIG. 38A.

The terminal (such as 101_1) or device (3802) first transmits (its own) terminal (such as 101_1) or device (3802) information (6101).

The server (104) obtains this terminal (such as 101_1) or device (3802) information (6151).

Then, the terminal (such as 101_1) or device (3802) transmits the terminal (such as 101_1) or device (3802) position information (6102).

The server (104) obtains this terminal (such as 101_1) or device (3802) position information (6152).

The terminal (such as 101_1) or device (3802) transmits the "advertisement information, or information" (6103).

Here, the "advertisement information or information" is assumed to include advertisement information for each country or region (in some cases, not displaying advertisements).

The server (104) obtains this "advertisement information, or information" (6153). The server (104) stores the "advertisement information, or information" (6154).

The server (104) causes a character with advertisement information or information corresponding to the terminal or device to appear in the virtual space (6155).

Note that the terminal or device and the server may perform processing other than that illustrated in FIG. 61. For example, the server may transmit virtual space information.

The order of processing in the interaction between the terminal or device and the server is not limited to the example illustrated in FIG. 61, and other processing may also be added.

FIG. 59 illustrates an example of communication between "terminal (for example, terminal #1 101_1, terminal #101 101_101, terminal #102 101_102) or device 3802" and server 104 in FIG. 60. Note that FIG. 59 illustrates an example of processing that is performed after the processing illustrated in FIG. 61. When the terminal or device and the server perform communication, they may do so via a base station.

The terminal or device first transmits (its own) terminal or device information (5901).

The server obtains this terminal or device information (5951).

Then, the terminal or device transmits terminal or device position information (5902).

The server obtains this terminal or device position information (5952). The server selects the virtual space information based on this position information (5953). For example, as described above, the advertisement information accompanying the character corresponding to the device or terminal is selected based on the position information.

The server transmits the virtual space information based on the position information (5954).

The terminal or device obtains virtual space information that is based on the position information (5903). The terminal or device will display a screen corresponding to the virtual space information that is based on the position information (5904).

As described above, the character in the virtual space corresponding to the device or person (user) in the real space may differ in the virtual space depending on the country or region, and the device or terminal can obtain information corresponding to this. In this way, for example, when advertisements are regulated by country or region, it is possible to achieve the advantageous effect of taking measures such as displaying advertisements suitable for each country or region, or not displaying advertisements.

Note that the processing of the terminal or device, the processing of the server, and the processing of the advertisement providing device or information providing device described in the present embodiment are merely examples. The techniques are therefore possible to similarly implement even if other processes (by other devices (for example, LMF, AMF, etc.)) are added, parts of the process are omitted, or the order of processing is changed.

Each device may be configured of a plurality of devices, and for each device, a device with server functions may be configured as a separate device.

Note that the naming of devices is not limited to the above examples; other names may be used. In regard to this point, examples explained in other embodiments are conceivable.

As a system for implementing the present embodiment, systems such as those in FIG. 1, FIG. 5, FIG. 18, FIG. 20, FIG. 38A, FIG. 45, FIG. 48H, and FIG. 60 have been handled, but the devices constituting the system are not limited to the devices in these drawings, and other devices (for example, LMF, AMF, etc.) may be added to the system. The naming of devices is not limited to those used in these drawings.

The device for displaying advertisements is not limited to FIG. 53A, and may be any kind of device. Additionally, displaying advertisements is not limited to FIG. 55A, and may include plants, animals, or stationary objects.

### [Embodiment 11]

In the present embodiment, an explanation will be provided regarding operations of variations of the operations described so far in systems such as those in FIG. 1, FIG. 5, FIG. 38A, FIG. 45, FIG. 48H, FIG. 60, etc.

FIG. 62A is a diagram extracting characteristic portions of "systems such as those in FIG. 1, FIG. 5, FIG. 38A, FIG. 45, FIG. 48H, FIG. 60, etc." according to the present embodiment. Note that specific operations of "systems such as those in FIG. 1, FIG. 5, FIG. 38A, FIG. 45, FIG. 48H, FIG. 60, etc." have already been explained, so some explanations are omitted.

In FIG. 62A, elements that operate the same as in FIG. 48C are assigned the same reference numbers, and some explanations are omitted since they have already been provided.

In FIG. 62A, first sensor 4881C, second-first sensor 4882CR, second-second sensor 4882CL, third sensor 4883C, fourth-first sensor 4884CR, and fourth-second sensor 4884CL are each equipped with, for example, a sensor such as an angular velocity sensor, a geomagnetic sensor, and/or an acceleration sensor. First sensor 4881C, second-first sensor 4882CR, second-second sensor 4882CL, third sensor 4883C, fourth-first sensor 4884CR, and fourth-second sensor 4884CL are communicating with terminal (or device) 4889C. Note that details of the operation will be explained later.

The terminal (or device) 4889C communicates with base station 6201A. Note that details of the operation will be explained later.

FIG. 62A illustrates an example where terminal (or device) 4889C communicates with base station 6201A, but terminal (or device) 4889C may perform communication with the server without going through the base station.

FIG. 62B is a diagram, different from FIG. 62A, extracting characteristic portions of "systems such as those in FIG. 1, FIG. 5, FIG. 38A, FIG. 45, FIG. 48H, FIG. 60, etc." according to the present embodiment.

The terminal (or device) 4889C includes, for example, a sensor unit. The terminal (or device) 4889C transmits the data obtained from the sensor unit to base station 6201B. Base station 6201B transmits information and data to terminal (or device) 4889C. Note that details of the operation will be explained later.

FIG. 62B illustrates an example where terminal (or device) 4889C communicates with base station 6201B, but terminal (or device) 4889C may perform communication with the server without going through the base station.

FIG. 62C illustrates an example of a configuration of terminal (or device) 4889C in FIG. 62A and FIG. 62B. In FIG. 62C, elements that operate the same as in FIG. 25A, FIG. 25B, FIG. 25C, and FIG. 25D are assigned the same reference numbers, and some explanations are omitted.

Terminal (or device) 4889C may further include sensor unit 6251C, operation unit 6252C, and communicator 6253C.

Terminal (or device) 4889C may perform sensing using sensor unit 6251C to obtain data, and transmit that data to a base station, server, or like via wireless communication processor 22511.

Sensor unit 6251C performs object recognition, obtainment of position and height, image information obtainment, image recognition, obtainment of temperature information, obtainment of humidity information, obtainment of speed and acceleration, etc., for the terminal itself or surrounding objects.

Operation unit 6252C is a part for performing operations instructed by the server, and details of the operation will be explained later.

Communicator 6253C assumes that, in FIG. 62A, first sensor 4881C, second-first sensor 4882CR, second-second sensor 4882CL, third sensor 4883C, fourth-first sensor 4884CR, and fourth-second sensor 4884CL are each equipped with, for example, a sensor such as an angular velocity sensor, a geomagnetic sensor, and/or an acceleration sensor. This is an element for communicating with first sensor 4881C, second-first sensor 4882CR, second-second sensor 4882CL, third sensor 4883C, fourth-first sensor 4884CR, and fourth-second sensor 4884CL. Note that details of the operation will be explained later.

Next, an explanation will be provided regarding an example of communication between a terminal (or device) and a server in "systems such as those in FIG. 1, FIG. 5, FIG. 38A, FIG. 45, FIG. 48H, FIG. 60, etc." However, although FIG. 63A illustrates communication between a terminal and a server, in FIG. 63A, the terminal and the server may perform communication via a base station.

As illustrated in FIG. 63A, the terminal (or device) transmits terminal or device information (6301A). Note that since specific examples of the terminal or device information have already been explained in, for example, Embodiment 1, repeated explanation will be omitted.

The server obtains the terminal or device information (6351A). Since specific operations have already been explained in, for example, Embodiment 1, repeated explanation will be omitted.

Then, the terminal (or device) transmits terminal or device position information (6302A).

The server obtains the terminal or device position information (6352A).

The terminal (or device) transmits data obtained by sensing (6303A).

Here, the terminal (or device) may obtain the data obtained by sensing from the sensor unit it includes. The terminal (or device) may obtain the data obtained by sensing from the sensor device, as illustrated in FIG. 62A.

The server obtains the data obtained by sensing (6153A).

Then, the server performs data analysis based on the obtained "data obtained by sensing" (6354A). As a result, the server determines to control the terminal (or device) and generates control information for controlling the terminal (or device) (6355A). Accordingly, the server transmits control information (6356A).

The terminal (or device) obtains this control information (6304A). The terminal (or device) performs an operation based on the control information (6305A).

Note that the terminal or device and the server may perform processing other than that illustrated in FIG. 63A. For example, the server may transmit virtual space information.

The order of processing in the interaction between the terminal or device and the server is not limited to the example illustrated in FIG. 63A, and other processing may also be added.

With this, there is a higher possibility of controlling the user using the terminal in a safer and more comfortable direction. Note that specific examples will be explained later.

An explanation will be provided with reference to FIG. 63B regarding an example of communication between a terminal (or device) and a server in "systems such as those in FIG. 1, FIG. 5, FIG. 38A, FIG. 45, FIG. 48H, FIG. 60, etc.", and communication between the terminal and sensors in FIG. 62A. However, in FIG. 63B, elements that operate the same as in FIG. 63A are assigned the same reference numbers, and some explanations are omitted. In the communication between the terminal and the server in FIG. 63B, the terminal and the server may perform communication via a base station.

The server transmits control information (6356A). Note that since the operations of the server and the terminal or device prior to 6356A have been explained with reference to FIG. 62A, repeated explanation will be omitted.

The terminal (or device) obtains this control information (6304A). The terminal (or device) assumes that, in FIG. 62A, first sensor 4881C, second-first sensor 4882CR, second-second sensor 4882CL, third sensor 4883C, fourth-first sensor 4884CR, and fourth-second sensor 4884CL are each equipped with, for example, a sensor such as an angular velocity sensor, a geomagnetic sensor, and/or an acceleration sensor. Control information is transmitted to sensors such as first sensor 4881C, second-first sensor 4882CR, second-second sensor 4882CL, third sensor 4883C, fourth-first sensor 4884CR, and fourth-second sensor 4884CL (6305B).

The sensor obtains this control information (6381B). The sensor performs an operation based on the control information (6382B).

Note that the terminal or device, the sensor, and the server may perform processing other than that illustrated in FIG. 63B. For example, the server may transmit virtual space information.

The order of processing in the interaction between the terminal or device, the sensor, and the server is not limited to the example illustrated in FIG. 63B, and other processing may also be added.

With this, there is a higher possibility of controlling the user using the sensor in a safer and more comfortable direction. Note that specific examples will be explained later.

FIG. 64A illustrates an example of a configuration of a server in "systems such as those in FIG. 1, FIG. 5, FIG. 38A, FIG. 45, FIG. 48H, FIG. 60, etc." In FIG. 64A, elements that operate the same as in FIG. 2 and FIG. 19A are assigned the same reference numbers, and some explanations are omitted.

As illustrated in FIG. 64A, the server further includes analyzer 6411A.

Note that with interface 200, input signal 201, and output signal 202 of FIG. 64A, data will be exchanged with other devices.

An example configuration of analyzer 6411A is illustrated in FIG. 64B. As illustrated in FIG. 64B, analyzer 6411A includes data storage 6451B, data analyzer 6452B, control information generator 6453B, and control information communicator 6454B.

The server, in systems such as those in FIG. 1, FIG. 5, FIG. 38A, FIG. 45, FIG. 48H, FIG. 60, etc., obtains the "data obtained by sensing" transmitted by terminal via network 103 (see FIG. 63A, FIG. 63B). For example, analyzer 6411A obtains the "data obtained by sensing" through input signal 201 of FIG. 64A.

Analyzer 6411A stores the "data obtained by sensing" in data storage 6451B of FIG. 64B. Data analyzer 6452B of FIG. 64B analyzes the data stored in data storage 6451B and outputs the data analysis results.

Control information generator 6453B of FIG. 64B generates control information for controlling the terminal or device based on the data analysis results. Control information communicator 6454B transmits the control information. Here, for example, the control information will be transmitted to the terminal via interface 200 of FIG. 64A.

Note that with interface 6400B, input signal 6401B, and output signal 6402B of FIG. 64B, data will be exchanged with other parts.

Data analyzer 6452B may perform the following analyses.

- Analysis involving "learning, and/or "inference, and/or estimation, and/or prediction"" by artificial intelligence.
- Analysis involving "learning, and/or "inference, and/or estimation, and/or prediction"" by machine learning.
- Analysis involving "learning, and/or "inference, and/or estimation, and/or prediction"" by deep learning.
- Analysis involving "learning, and/or "inference, and/or estimation, and/or prediction"" using a neural network, which is a mathematical model where processing units that linearly transform inputs are connected on the network.
- Analysis involving "learning, and/or "inference, and/or estimation, and/or prediction"" using fuzzy inference, which is applied mathematics that deals with ambiguity and uncertainty.
- Analysis involving "learning, and/or "inference, and/or estimation, and/or prediction"" using mathematical algorithms.
- Analysis involving "learning, and/or "inference, and/or estimation, and/or prediction"" using processing devices such as a central processing unit (CPU), a graphics processing unit (GPU), a micro processing unit (MPU), a dedicated arithmetic device, edge computing, an analog processing device, or a quantum computer.
- Analysis involving pre-training.

The analysis may also involve pattern recognition and/or machine learning.

Note that pattern recognition may include, for example, a technology that performs specific inputs, applies various processes to input data, and discerns and outputs information according to certain rules.

Machine learning may include, for example, a rule-based system where all operations of the algorithm are determined by humans, and a technique that automatically determines rule-based thresholds from data. The machine learning may utilize algorithms such as K-Nearest Neighbor (K-NN), Support Vector Machine (SVM), Random Forest, and AdaBoost. The machine learning may be classified into supervised learning and unsupervised learning.

Deep learning may include, for example, a technique that automatically learns necessary information from input and also automatically determines decision rules.

In systems such as those in FIG. 1, FIG. 5, FIG. 38A, FIG. 45, FIG. 48H, FIG. 60, etc., processing is performed by the server or the like to cause a character corresponding to the terminal or device, exemplified by terminal 4889C in FIG. 62A and FIG. 62B, to appear in the virtual space. Since that method has already been explained in other embodiments, repeated explanation will be omitted. The server may perform processing to display, in the virtual space, the content of the control information transmitted to the "terminal or device" and/or sensor in FIG. 63A and FIG. 63B, as well as the content of the operations to be performed.

In this way, users using the "terminal or device" and sensor can confirm the content of the control by the server.

Next, an explanation will be provided regarding specific examples of the operations described with reference to FIG. 62A, FIG. 62B, FIG. 62C, FIG. 63A, FIG. 63B, FIG. 64A, and FIG. 64B.

FIG. 65 is a diagram for explaining a situation in real space. Assume that the first terminal and the first user using the first terminal are present at position 6501 in FIG. 65. Assume that the first terminal and the first user using the first terminal are heading toward position 6502. Note that the character corresponding to the first terminal is assumed to be present in the virtual space based on the position information of the first terminal. Since the method at that time has already been explained in other embodiments, explanation here will be omitted.

Here, as routes from position 6501 to position 6502, route #1 6591 and route #2 6592 are conceivable.

In area #1 6511, which includes a part of route #1 6591 and a part of route #2 6512, the server (104) obtains various information from terminals and devices other than the first terminal. For example:
(11-1):
   The server (104) obtains images, videos, and sensing information from terminals and devices other than the first terminal, and obtains information on congestion conditions of vehicles, people, etc., in area #1 6511.
(11-2):
   The server (104) obtains information on the health status of users using the terminals and devices from terminals and devices other than the first terminal, and obtains, for example, fatigue level information in area #1 6511.
(11-3):
   The server (104) obtains images, videos, and sensing information from terminals and devices other than the first terminal, and obtains information on the inclination (elevation difference) of area #1 6511.
(11-4):
   The server (104) obtains images, videos, and sensing information from terminals and devices other than the first terminal, and obtains information on sidewalk width and sidewalk step height in area #1 6511.

In area #2 6512, which includes a part of route #2 6592, the server (104) obtains various information from terminals and devices other than the first terminal. For example:
(11-5):
   The server (104) obtains images, videos, and sensing information from terminals and devices other than the first terminal, and obtains information on congestion conditions of vehicles, people, etc., in area #2 6512.
(11-6):
   The server (104) obtains information on the health status of users using the terminals and devices from terminals and devices other than the first terminal, and obtains, for example, fatigue level information in area #2 6512.
(11-7):
   The server (104) obtains images, videos, and sensing information from terminals and devices other than the first terminal, and obtains information on the inclination (elevation difference) of area #2 6512.
(11-8):
   The server (104) obtains images, videos, and sensing information from terminals and devices other than the first terminal, and obtains information on sidewalk width and sidewalk step height in area #2 6512.

In area #3 6513, which includes a part of route #2 6592, the server (104) obtains various information from terminals and devices other than the first terminal. For example:
(11-9):
   The server (104) obtains images, videos, and sensing information from terminals and devices other than the first terminal, and obtains information on congestion conditions of vehicles, people, etc., in area #3 6513.
(11-10):
   The server (104) obtains information on the health status of users using the terminals and devices from terminals and devices other than the first terminal, and obtains, for example, fatigue level information in area #3 6513.
(11-11):
   The server (104) obtains images, videos, and sensing information from terminals and devices other than the first terminal, and obtains information on the inclination (elevation difference) of area #3 6513.
(11-12):
   The server (104) obtains images, videos, and sensing information from terminals and devices other than the first terminal, and obtains information on sidewalk width and sidewalk step height in area #3 6513.

The server (104) utilizes information on congestion conditions of vehicles, people, etc., in area #1 6511, information on fatigue levels in area #1 6511, information on the slope (elevation difference) in area #1 6511, information on the sidewalk width and sidewalk step height in area #1 6511, information on congestion conditions of vehicles, people, etc., in area #2 6512, information on fatigue levels in area #2 6512, information on the slope (elevation difference) in area #2 6512, information on the sidewalk width and sidewalk step height in area #2 6512, information on congestion conditions of vehicles, people, etc., in area #3 6513, information on fatigue levels in area #3 6513, information on the slope (elevation difference) in area #3 6513, and information on the sidewalk width and sidewalk step height in area #3 6513, and performs analysis in analyzer 6411A of FIG. 64A.

Assume that the first terminal and the first user using the first terminal have approached intersection 6550 in FIG. 65. Here, server (104) determines, based on the above analysis, that route #1 6591 is the optimal route to reach the destination, position 6502.

Note that, as described in other embodiments, terminals including the first terminal, and devices perform communication with the server, but they may perform communication via a network or a base station.

FIG. 66 illustrates display screen 6600 displayed by the first terminal, and it is assumed that display screen 6600 is displaying the virtual space obtained from the server.

Assume that the first terminal and the first user using first terminal have approached intersection 6550 in FIG. 65. As illustrated in FIG. 66, intersection 6611 in the virtual space displayed on display screen 6600 corresponds to intersection 6550 in FIG. 65.

Here, server (104), having determined that route #1 6591 is the optimal route to reach the destination, i.e., position 6502, transmits information regarding directions to the first terminal.

Assume that the first terminal obtains this information regarding directions, and the first terminal displays, for example, arrow 6621 indicating the direction in which to proceed, on the virtual space displayed on display screen 6600. With this, the first user using the first terminal proceeds based on route #1 6591, according to the information of arrow 6621.

Furthermore, the first terminal may transmit control information and operation information to a device equipped with a sensor. For example, assume terminal 4889C in FIG. 62A is the first terminal, and the first terminal transmits control information and operation information to second-first sensor 4882CR and fourth-first sensor 4884CR. Here, assume second-first sensor 4882CR includes, for example, a vibration device that provides stimulation to the arm of the first user, and fourth-first sensor 4884CR includes a vibration device that provides stimulation to the leg of the first user.

Assume second-first sensor 4882CR and fourth-first sensor 4884CR vibrate their respective vibration devices based on the control information and operation information obtained from the first terminal. With this, the first user using the first terminal proceeds based on route #1 6591.

FIG. 66 explains the use of the screen to notify the user of a suitable route, and FIG. 62A explains the use of vibration devices to notify the user of a suitable route; however, the method for notifying the user of a suitable route is not limited to these examples and may include, for example, methods using sound or voice via a loudspeaker or the like.

In this way, users using the "terminal or device" and sensor can execute control and actions by the server.

The information on the screen in FIG. 66, such as the destination of the character corresponding to the first terminal, may be shared with other characters through the virtual space. With this, it is also possible to achieve the advantageous effect of enabling users using other terminals to obtain useful information.

An explanation of another variation will be provided.

FIG. 60 is a system configuration diagram of the present example. Since FIG. 60 has already been explained, some explanations will be omitted. Here, terminal #1 101_1 will be referred to as the first terminal, and device 3802 will be referred to as the first device, and an explanation will be provided.

FIG. 67A is a diagram for explaining a situation in real space. Assume that the first terminal and the first user using the first terminal are present at position 6701A in FIG. 67A. Assume that the first terminal and the first user using the first terminal are heading toward position 6702A. Note that the first device is present at position 6702A. This point will be explained later. The character corresponding to the first terminal is assumed to be present in the virtual space based on the position information of the first terminal. Since the method at that time has already been explained in other embodiments, explanation here will be omitted.

Assume that the first terminal and the first user using the first terminal have moved to position 6751A in FIG. 67A. Hereinafter, an explanation will be provided regarding the operations of the first terminal, the first device, and the server at that time.

FIG. 67B illustrates an example of communication between the first device (referred to as device in FIG. 67B) and the server (104). In FIG. 67C, the device and the server may perform communication via a base station.

As illustrated in FIG. 67C, the device transmits device information (6701B). Note that since specific examples of device information have already been explained in, for example, Embodiment 1, repeated explanation will be omitted.

The server obtains the device information (6751B). Since specific operations have already been explained in, for example, Embodiment 1, repeated explanation will be omitted.

The device transmits device position information (6702B).

The server obtains position information of the device (6352B). Note that the use of position information will be explained later.

The procedure for making the character corresponding to the device appear in the virtual space has already been performed. Since this point has already been explained in other embodiments, repeated explanation will be omitted.

Note that the device and the server may perform processing other than that illustrated in FIG. 67B. For example, the server may transmit virtual space information.

The order of processing in the interaction between the device and server is not limited to the example illustrated in FIG. 67B, and other processing may also be added.

FIG. 67C illustrates an example of communication between the first terminal (referred to as terminal in FIG. 67C), the server (104), and the first device (referred to as device in FIG. 67C) when the first terminal and the first user using the first terminal are present at position 6751A in FIG. 67A. In FIG. 67C, the terminal and the server may perform communication via a base station. The device and the server may perform communication via the base station and/or the terminal.

As illustrated in FIG. 67C, the terminal transmits terminal information (6701C). Note that since specific examples of terminal information have already been explained in, for example, Embodiment 1, repeated explanation will be omitted.

The server obtains terminal information (6751C). Since specific operations have already been explained in, for example, Embodiment 1, repeated explanation will be omitted.

The terminal transmits terminal position information (6702C).

The server obtains the terminal position information (6352C).

The terminal transmits the data obtained by sensing (6303C).

Here, the terminal may obtain the data obtained by sensing from the sensor unit it includes. The terminal may obtain the data obtained by sensing from the sensor device, as illustrated in FIG. 62A.

The server obtains the data obtained by sensing (6753C).

The server knows the positional relationship between the device and the terminal from the obtained position information of the device and the obtained position information of the terminal (6754C). Note that detailed operation examples will be explained later.

The server performs data analysis based on the obtained "data obtained by sensing" (6755C). As a result, the server determines to control the device and generates control information for controlling the device (6756C). Accordingly, the server transmits control information (6757C).

The device obtains this control information (6781C). The device performs an operation based on the control information (6782C).

The server may transmit information to the terminal (6758C). The terminal obtains this information (6704C). The terminal performs an operation based on this information (6705C).

Note that the terminal, the device, and the server may perform processing other than that illustrated in FIG. 67C. For example, the server may transmit virtual space information.

The order of processing in the interaction between the terminal, device, and server is not limited to the example illustrated in FIG. 67C, and other processing may also be added.

With this, there is a higher possibility of controlling the user using the terminal in a safer and more comfortable direction. Note that specific examples will be explained later.

An explanation will be provided regarding a specific example of FIG. 67B. The first device present at position 6702A in FIG. 67A is assumed to be, for example, a door or gate, etc., that can be locked and/or unlocked via authentication. Therefore, for example, in the virtual space, there will be a character corresponding to the first device, such as a "door or gate, etc."

FIG. 68 illustrates an example of a character corresponding to a first device in a virtual space displayed on display device 6800 of the first terminal, where door 6801 is the character corresponding to the first device.

In the explanation of FIG. 67A, it is described that the first terminal and the first user using the first terminal are heading toward position 6702A, and that the first device is present at position 6702A. Assume that the first terminal and the first user using the first terminal have reached position 6751A, which is near position 6702A where the first device, a door, is located.

Accordingly, the first terminal performs operations related to the terminal in FIG. 67C, the server performs operations related to the server in FIG. 67C, and the first device performs operations related to the device in FIG. 67C; however, a supplementary explanation will be provided below.

For example, as the "terminal transmits data obtained by sensing (6703C)" in FIG. 67C, the terminal transmits an image of a characteristic part of the user's body, such as the face (which may be a video or a still image), the terminal transmits sensing information such as the user's fingerprint, and/or vein, and/or iris, the terminal transmits sensing information such as a key, and so on.

Then, the server obtains these items of data obtained by sensing (6753C).

The server obtains the position information of the terminal and the position information of the device. Therefore, the server can know the positional relationship between the device and the terminal (6754C). When the first terminal and the first user using the first terminal have reached position 6751A, which is near position 6702A where the first device, a door, is located, one of the conditions for unlocking the first device, the door (referred to as the first condition), is satisfied, and the server recognizes this.

The server obtains data obtained by sensing. Therefore, the server analyzes the data obtained by sensing and performs authentication to determine whether the door of the first device may be unlocked (6755C). In such cases, the first condition is satisfied, and since there is no issue with the data obtained by sensing, the server determines to unlock the door of the first device.

Therefore, the server generates data as control information stating "unlock the door of the first device" (6756C) and transmits the control information stating "unlock the door of the first device" to the device, which is the first device (6757C).

The device, which is the door of the first device, obtains the control information stating "unlock the door of the first device" (6781C). Therefore, the device, which is the door of the first device, unlocks the door (6782C).

The server transmits, through the virtual space, the information that the authentication for unlocking the door of the first device has been completed to the terminal, which is the first terminal (6758C). Accordingly, the first terminal, which is the terminal, obtains this information (6704C), and the first terminal, which is the terminal, performs a display on the screen (6705C).

FIG. 68 illustrates the screen displayed on screen device 6800 of the first terminal, which is the terminal, at this time. 6801 is a character corresponding to the door of the first device. For example, in order to inform the user through the first terminal that the door of the first device has been unlocked, "authentication successful - entry permitted" 6851 may be displayed. Note that the world displayed on screen device 6800 is a world of virtual space.

FIG. 68 explains the use of the screen to notify the user of "authentication successful - entry permitted" 6851; however, the method for notifying the user of "authentication successful - entry permitted" 6851 is not limited to this examples and may include, for example, methods using sound or voice via a loudspeaker or the like, or methods using vibration devices.

An explanation of yet another variation will be provided.

FIG. 1 is a system configuration diagram of the present example. Since FIG. 1 has already been explained, some explanations will be omitted. Here, terminal #1 101_1 will be referred to as the first terminal, and an explanation will be provided.

FIG. 69 is a diagram for explaining a situation in real space. For example, assume the situation is the situation inside store 6900. Assume that people can enter the store from entrance 6901. Assume that 6902_1, 6902_2, 6902_3, and 6902_4 are provided as locations where people make payments.

Assume that the first terminal and the first user using the first terminal are present at position 6999 in FIG. 67A for payment.

Note that the character corresponding to the first terminal is assumed to be present in the virtual space based on the position information of the first terminal. Since the method at that time has already been explained in other embodiments, explanation here will be omitted.

Hereinafter, an explanation will be provided regarding the operations of the first terminal and the server.

FIG. 70A illustrates an example of communication between the first terminal (referred to as terminal in FIG. 70A) and the server (104) when the first terminal and the first user using the first terminal are present at position 6999 in FIG. 69. In FIG. 70A, the terminal and the server may perform communication via a base station.

As illustrated in FIG. 70A, the terminal transmits terminal information (7001A). Note that since specific examples of terminal information have already been explained in, for example, Embodiment 1, repeated explanation will be omitted.

The server obtains terminal information (7051A). Since specific operations have already been explained in, for example, Embodiment 1, repeated explanation will be omitted.

The terminal transmits terminal position information (7002A).

The server obtains the terminal position information (7052A).

The server transmits virtual space information (7053A). Here, assume that the virtual space information includes information on the character corresponding to the terminal.

The terminal obtains the virtual space information (7003A).

The terminal transmits information (7004A). Note that details of the operation will be explained later.

The server obtains this information (7054A). Note that details of the operation will be explained later.

The terminal transmits the data obtained by sensing (7005A). Here, the terminal may obtain the data obtained by sensing from the sensor unit it includes. The terminal may obtain the data obtained by sensing from the sensor device, as illustrated in FIG. 62A.

The server obtains the data obtained by sensing (7055A).

The server performs data analysis based on the obtained "data obtained by sensing" (7056A).

The server confirms the terminal position information (7057A).

Information is generated based on the analysis data results and the terminal position information (7058A). Note that details of the operation will be explained later.

The server transmits information (7059A).

The terminal obtains this information (7006A) and performs an operation based on this information (7007A).

Note that the terminal and the server may perform processing other than that illustrated in FIG. 70A. For example, the server may transmit virtual space information.

The order of processing in the interaction between the terminal and server is not limited to the example illustrated in FIG. 70A, and other processing may also be added.

With this, there is a higher possibility of controlling the user using the terminal in a safer and more comfortable direction. Note that specific examples will be explained later.

An explanation will be provided regarding a specific example of FIG. 70A. Assume the first device present at position 6999 in FIG. 69 is to perform payment for a product purchased by the first user via the server. Accordingly, for example, the virtual space becomes a scene where the character corresponding to the first device is performing payment.

FIG. 70B illustrates an example of a virtual space displayed on display device 7000B of the first terminal when a user using the first terminal performs payment. FIG. 70B illustrates a virtual space displayed upon completion of payment, and on display device 7000B, it shows an example where the character corresponding to the first terminal is not displayed. However, a character corresponding to the first terminal may be displayed on display screen 7000B.

The first terminal and the user using the first terminal perform payment, and accordingly, the first terminal performs operations related to the terminal in FIG. 70A, and the server performs operations related to the server in FIG. 70A; however, a supplementary explanation will be provided below.

The first terminal transmits information of the purchased product (and information of the price of the purchased product) to the server. This corresponds to "the terminal transmits information (7004A)".

For example, as the "terminal transmits data obtained by sensing (7005A)" in FIG. 70A, the terminal transmits an image of a characteristic part of the user's body, such as the face (which may be a video or a still image), the terminal transmits sensing information such as the user's fingerprint, and/or vein, and/or iris, the terminal transmits sensing information such as a key, and so on. Additionally, the terminal may perform "the terminal transmits information related to the settlement method".

Then, the server obtains these items of data obtained by sensing (7055A).

The server obtains the position information of the terminal. Therefore, the server can confirm the position of the terminal (7054A). Thus, the server performs the settlement operation of the purchased product based on the position of the terminal and data obtained by sensing (additionally, by confirming the position of the terminal, the server can confirm whether it is a terminal suitable for settlement).

The server generates information related to the settlement result (7058A). The server transmits data corresponding to this information (7059A).

The terminal obtains information related to settlement (7006A), and at this time, the screen displayed by the display device of the terminal becomes FIG. 70B.

For example, on display device 7000B of the terminal, the total amount, character 7099B corresponding to the settlement location, and display 7098B stating "Payment completed" (settlement completed) will be displayed. Note that the world displayed on screen device 7000B is a world of virtual space.

FIG. 70B explains the use of the screen to notify the user of "payment completed (settlement completed)"; however, the method for notifying the user of "payment completed (settlement completed)" is not limited to this example and may include, for example, methods using sound or voice via a loudspeaker or the like, or methods using vibration devices.

Next, an explanation will be provided regarding the above-described variation.

FIG. 60 is a system configuration diagram of the present example. Since FIG. 60 has already been explained, some explanations will be omitted. Here, terminal #1 101_1 will be referred to as the first terminal, and device 3802 will be referred to as the first device, and an explanation will be provided.

FIG. 69 is a diagram for explaining a situation in real space. For example, assume the situation is the situation inside store 6900. Assume that people can enter the store from entrance 6901. Assume that 6902_1, 6902_2, 6902_3, and 6902_4 are provided as locations where people make payments.

Assume that the first terminal and the first user using the first terminal are present at position 6999 in FIG. 67A for payment.

Note that the character corresponding to the first terminal is assumed to be present in the virtual space based on the position information of the first terminal. The character corresponding to the first device is assumed to be present in the virtual space. Since the method at that time has already been explained in other embodiments, explanation here will be omitted.

Hereinafter, an explanation will be provided regarding the operations of the first terminal, the first device, and the server.

FIG. 71A illustrates an example of communication between the first device (referred to as device in FIG. 71A) and the server (104). In FIG. 71A, the device and the server may perform communication via a base station.

As illustrated in FIG. 71A, the device transmits device information (7101A). Note that since specific examples of device information have already been explained in, for example, Embodiment 1, repeated explanation will be omitted.

The server obtains the device information (7151A). Since specific operations have already been explained in, for example, Embodiment 1, repeated explanation will be omitted.

The device transmits device position information (7102A).

The server obtains position information of the device (7152A). Note that the use of position information will be explained later.

The procedure for making the character corresponding to the device appear in the virtual space has already been performed. Since this point has already been explained in other embodiments, repeated explanation will be omitted.

Note that the device and the server may perform processing other than that illustrated in FIG. 71A. For example, the server may transmit virtual space information.

The order of processing in the interaction between the device and server is not limited to the example illustrated in FIG. 71A, and other processing may also be added.

FIG. 71B illustrates an example of communication between the first terminal (referred to as terminal in FIG. 71B), the first device (referred to as device in FIG. 71B), and the server (104) when the first terminal and the first user using the first terminal are present at position 6999 in FIG. 69. In FIG. 71B, the terminal and the server may perform communication via a base station. The device and the server may perform communication via the base station and/or the terminal.

As illustrated in FIG. 71B, the terminal transmits terminal information (7101B). Note that since specific examples of terminal information have already been explained in, for example, Embodiment 1, repeated explanation will be omitted.

The server obtains terminal information (7151B). Since specific operations have already been explained in, for example, Embodiment 1, repeated explanation will be omitted.

The terminal transmits terminal position information (7102B).

The server obtains the terminal position information (7152B).

The server transmits virtual space information (7153B). Here, assume that the virtual space information includes information on the character corresponding to the terminal.

The terminal obtains the virtual space information (7103B).

The terminal transmits information (7104B). Note that details of the operation will be explained later.

The server obtains this information (7154B). Note that details of the operation will be explained later.

The terminal transmits the data obtained by sensing (7105B). Here, the terminal may obtain the data obtained by sensing from the sensor unit it includes. The terminal may obtain the data obtained by sensing from the sensor device, as illustrated in FIG. 62A.

The server obtains the data obtained by sensing (7155B).

The server performs data analysis based on the obtained "data obtained by sensing" (7156B).

The server knows the positional relationship between the device and the terminal from the position information of the device and the position information of the terminal (7157B).

Control information is generated based on the analysis data results and the positional relationship information between the device and the terminal (7158B). Note that details of the operation will be explained later.

The server transmits control information (7159B).

The device obtains this control information (7181B) and performs an operation based on this information (7182B).

The server may transmit information (7160B). Note that details of the operation will be explained later.

The terminal obtains this information (7106B) and performs an operation based on this information (7107B).

Note that the terminal, the device, and the server may perform processing other than that illustrated in FIG. 71B. For example, the server may transmit virtual space information.

The order of processing in the interaction between the terminal, device, and server is not limited to the example illustrated in FIG. 71B, and other processing may also be added.

With this, there is a higher possibility of controlling the user using the terminal in a safer and more comfortable direction. Note that specific examples will be explained later.

An explanation will be provided regarding a specific example of FIG. 71B. Assume the first device present at position 6999 in FIG. 69 is to perform payment for a product purchased by the first user via the server. Accordingly, for example, the virtual space becomes a scene where the character corresponding to the first device is performing payment.

FIG. 71D illustrates an example of a virtual space displayed on display device 7000B of the first terminal when a user using the first terminal performs payment. FIG. 71D illustrates a virtual space displayed upon completion of payment, and on display device 7000B, it shows an example where the character corresponding to the first terminal is not displayed. However, a character corresponding to the first terminal may be displayed on display screen 7000B. Note that in FIG. 71D, the same reference numbers as in FIG. 70B are assigned, and some explanations are omitted for parts that have already been described.

The first terminal and the user using the first terminal perform payment, and accordingly, the first terminal performs operations related to the terminal in FIG. 71B, the server performs operations related to the server in FIG. 71B, and the first device performs operations related to the device in FIG. 71B; however, a supplementary explanation will be provided below.

The first terminal transmits information of the purchased product (and information of the price of the purchased product) to the server. This corresponds to "the terminal transmits information (7104B)".

For example, as the "terminal transmits data obtained by sensing (7105B)" in FIG. 71B, the terminal transmits an image of a characteristic part of the user's body, such as the face (which may be a video or a still image), the terminal transmits sensing information such as the user's fingerprint, and/or vein, and/or iris, the terminal transmits sensing information such as a key, and so on. Additionally, the terminal may perform "the terminal transmits information related to the settlement method".

Then, the server obtains these items of data obtained by sensing (7155B).

The server obtains the position information of the terminal and the position information of the device. Therefore, the server can know the positional relationship between the device and the terminal (7157B). Thus, the server performs the settlement operation of the purchased product based on the positional relationship between the device and the terminal and data obtained by sensing (additionally, by confirming the positional relationship between the device and the terminal, the server can confirm whether it is a terminal suitable for settlement).

The server generates control information when it is confirmed that the settlement is problem-free (7158B).

FIG. 71C illustrates an example of a state of a user using a first device in a real space. State 7000C1 illustrates the state before settlement completion, and state 7000C2 illustrates the state after settlement completion. When in state 7000C1 before settlement completion, bar 7002C1 at the exit is closed so that user 7001C1 using the first device cannot pass through. In this way, the server transmits, to the device, which is the first device, control information (7159B) indicating that bar 7002C1 at the exit is closed. Accordingly, the device, which is the first device, obtains the control information (7181B) and performs an operation (7182B) that "bar 7002C1 at the exit is closed".

When settlement is completed, as in state 7000C2 after settlement completion, bar 7002C2 at the exit opens so that user 7001C2 using the first device can pass through. In this way, the server transmits, to the device, which is the first device, control information (7159B) indicating that bar 7002C2 at the exit will open. Accordingly, the device, which is the first device, obtains the control information (7181B) and performs an operation (7182B) that "bar 7002C2 at the exit opens".

The server generates information related to the settlement result and information related to the state of the bar, and transmits data corresponding to this information (7160B).

The terminal obtains information related to settlement and information related to the state of the bar (7106B), and at this time, the screen displayed by the display device of the terminal becomes FIG. 71D.

For example, on display device 7000B of the terminal, the total amount, character 7099B corresponding to the settlement location, and display 7098B stating "Payment completed" (settlement completed) will be displayed. Furthermore, in order for the terminal to obtain information indicating that the bar is open, for example, display 7190D stating "please proceed" will be shown. Note that the world displayed on screen device 7000B is a world of virtual space.

FIG. 71D explains the use of the screen to notify the user of "payment completed (settlement completed)" and "please proceed"; however, the method for notifying the user of "payment completed (settlement completed)" and "please proceed" is not limited to this example and may include, for example, methods using sound or voice via a loudspeaker or the like, or methods using vibration devices.

In this way:
- The server, based on the position information obtained from the terminal or device, makes a character corresponding to the terminal or device appear in the virtual space.
- The server analyzes the information and/or sensing information obtained from the terminal or device, and feeds back control information and operation information to the terminal or other device.

With this, an advantageous effect of enabling a higher possibility of controlling the user using the terminal in a safer and more comfortable direction can be achieved. By utilizing the virtual space, the effect can be further enhanced.

Note that in FIG. 62A, although an explanation was provided with six sensors placed on a person (user), the techniques can be similarly implemented so long as one or more sensors are placed on a person (user). The positions (body parts) where sensors are placed (on a person (user)) are not limited to the positions (body parts) illustrated in FIG. 62A.

In FIG. 62A, the sensors are attached to a person (user), but the object to which the sensors are attached is not limited to this example. For example, sensors may be attached to moving devices such as vehicles, bicycles, motorcycles, bicycles, ships, satellites, aircraft, drones, robots, electric vehicles, electric motorcycles, electric bicycles, kick scooters, or to animals such as birds, mammals, reptiles, amphibians, insects, or to moving objects. The sensors communicate and interact with terminal 4889C, and the terminal obtains data from the sensors.

Sensors may be attached to purely stationary objects. For example, sensors may be attached to trees in forests, woods, and the like. As illustrated in FIG. 62A, terminal 4889C collects information from the sensors. As explained with reference to FIG. 1, FIG. 48D, and FIG. 48E, terminal 4889C delivers sensor information and position information to the server via the base station (and/or LMF). The server causes tree characters to appear in the virtual space at positions corresponding to the position information, and by swaying the tree characters in the virtual space based on the sensor information and controlling their operation, it becomes possible to realize more realistic characters.

Examples of sensors in FIG. 62A are described as including angular velocity sensors, geomagnetic sensors, and acceleration sensors, but the sensors are not limited to these examples. For example, the sensor may be a sensor for light that detects light intensity and color, such as an image sensor. In this way, the server can obtain information related to light, whereby the server can achieve the advantageous effect of being able to more realistically reproduce the direction of light, color, light intensity, shadows, and the like in the virtual space based on the information related to light. The server may obtain video information, image information as information related to light. The video information and image information may include text information, information on objects existing in the surroundings, and character information such as people.

As another example, the sensor may be a sound collection sensor such as a microphone. In this way, the server can obtain information related to audio, whereby the server can achieve the advantageous effect of being able to more realistically reproduce audio in the virtual space based on the information related to audio.

The terminal and the sensor may be integrated, as in FIG. 48F and FIG. 62B. Since details have already been explained, repeated explanation will be omitted.

In the present embodiment, an explanation has been provided regarding the virtual space in which a character based on the position of a terminal or device is present. However, even when the present embodiment is applied to a virtual space where a character based on the position of a terminal or device is not present, for example, a virtual space where simply a character is present, it is possible to implement the technique similarly. Note that the virtual space may be a virtual space based on the real space, or a virtual space unrelated to the real space.

At a location in the virtual space corresponding to a location where moving objects, moving devices, animals, living things and the like exist in the real space, characters in the virtual space can be operated in coordination with the movements of the moving objects, moving devices, animals, living things and the like, whereby the advantageous effect of being able to form a virtual space more closely resembling reality can be achieved.

FIG. 62C illustrates an example of a configuration of the terminal and device; however, the configuration of the terminal and device is not limited to the example in FIG. 62C, and some parts of the configuration in FIG. 62C may be omitted, or portions that perform different processing may also be present.

FIG. 64A illustrates an example of a configuration of the server; however, the configuration of the server is not limited to the example in FIG. 64A, and some parts of the configuration in FIG. 64A may be omitted, or portions that perform different processing may also be present.

FIG. 64B illustrates an example of a configuration of the analyzer of the server; however, the configuration of the analyzer of the server is not limited to the example in FIG. 64B, and some parts of the configuration in FIG. 64B may be omitted, or portions that perform different processing may also be present.

As a system for implementing the present embodiment, systems such as those in FIG. 1, FIG. 5, FIG. 18, FIG. 20, FIG. 38A, FIG. 45, FIG. 48H, and FIG. 60 have been handled, but the devices constituting the system are not limited to the devices in these drawings, and other devices (for example, LMF, AMF, etc.) may be added to the system. The naming of devices is not limited to those used in these drawings.

This was explained in the present embodiment. The processing of the terminal, the processing of the device, and the processing of the server are merely examples. The techniques are therefore possible to similarly implement even if other processes (by other devices (for example, LMF, AMF, etc.)) are added, parts of the process are omitted, or the order of processing is changed.

Each device may be configured of a plurality of devices, and for each device, a device with server functions may be configured as a separate device.

Note that the naming of devices is not limited to the above examples; other names may be used. In regard to this point, examples explained in other embodiments are conceivable.

### [Embodiment 12]

In the present embodiment, an explanation will be provided regarding a specific example of modulated signals transmitted by the base station and terminal described in other embodiments. While the example systems include "systems such as those in FIG. 1, FIG. 5, FIG. 38A, FIG. 45, FIG. 48H, FIG. 60, etc.", an explanation will be provided here with reference to FIG. 1.

FIG. 72 illustrates an example of a configuration of base station capability information 7200 included in a modulated signal transmitted by a base station such as base station #1 102_1 illustrated in FIG. 1. Base station capability information 7200 includes, for example, information 7211 on whether or not the collection of sensing information is supported, information 7212 on whether or not the control of devices in real space is supported, information 7213 on whether or not transmitting information in response to the control of devices in real space is supported, and information 7214 on whether or not three-dimensional position estimation is possible. Here, base station transmits base station capability information 7200 to the terminal (or device).

Note that it is sufficient if base station capability information 7200 includes at least one of information 7211 on whether or not the collection of sensing information is supported, information 7212 on whether or not the control of devices in real space is supported, information 7213 on whether or not transmitting information in response to the control of devices in real space is supported, or information 7214 on whether or not three-dimensional position estimation is possible.

Information 7211 on whether or not the collection of sensing information is supported is information for notifying whether or not the base station supports the collection of sensing information when a device such as a terminal, device, or sensor transmits sensing information to a device such as a terminal, device, or sensor, as described in Embodiment 11.

For example, suppose that information 7211 on whether or not the collection of sensing information is supported is 1-bit information. When information 7211 on whether or not the collection of sensing information is supported is "1", a device such as a terminal, device, or sensor, upon obtaining information 7211 on whether or not the collection of sensing information is supported, determines that the base station supports the collection of sensing information, and the device such as a terminal, device, or sensor transmits sensing information.

When information 7211 on whether or not the collection of sensing information is supported is "0", a device such as a terminal, device, or sensor, upon obtaining information 7211 on whether or not the collection of sensing information is supported, determines that the base station does not support the collection of sensing information, and the device such as a terminal, device, or sensor does not transmit sensing information.

Information 7212 on whether or not the control of devices in real space is supported is information for notifying whether or not the control of devices such as terminals, devices, or sensors present in real space is supported, as described in Embodiment 11.

For example, suppose that information 7212 on whether or not the control of devices in real space is supported is 1-bit information. When information 7212 on whether or not the control of devices in real space is supported is "1", the device such as a terminal, device, or sensor determines that the base station is capable of transmitting control information for controlling operation of devices such as terminals, devices, or sensors present in real space. Therefore, the device such as a terminal, device, or sensor and the like obtains the control information for operation control of the devices such as terminals, devices, sensors, and the like transmitted by the base station, and performs control of operation based on that information.

When information 7212 on whether or not the control of devices in real space is supported is "0", the device such as a terminal, device, or sensor determines that the base station does not transmit control information for controlling operation of devices such as terminals, devices, or sensors present in real space.

Information 7213 on whether or not transmitting information in response to the control of devices in real space is supported is information for notifying whether or not transmitting information of devices such as terminals, devices, or sensors along with the control of devices such as terminals, devices, or sensors present in real space is supported, as described in Embodiment 11.

For example, suppose that information 7213 on whether or not transmitting information in response to the control of devices in real space is supported is 1-bit information. When information 7213 on whether or not transmitting information in response to the control of devices in real space is supported is "1", the device such as a terminal, device, or sensor determines that the base station is capable of transmitting information of devices such as terminals, devices, or sensors along with the controlling of operation of devices such as terminals, devices, or sensors present in real space. Therefore, the device such as a terminal, device, or sensor and the like obtains the information accompanying the control for operation control of the devices such as terminals, devices, sensors, and the like transmitted by the base station (for example, the information on the display of arrows or the information displayed on the display device such as authentication successful - entry permitted in Embodiment 11), and controls operation (for example, display on the display device) based on that information.

When information 7213 on whether or not transmitting information in response to the control of devices in real space is supported is "0", the device such as a terminal, device, or sensor determines that the base station does not transmit information of devices such as terminals, devices, or sensors along with the controlling of operation of devices such as terminals, devices, or sensors present in real space.

Information 7214 on whether or not three-dimensional position estimation is possible is information for notifying whether or not the base station supports the three-dimensional position estimation of devices such as terminals, devices, or sensors as described in other embodiments.

For example, suppose that information 7214 on whether or not three-dimensional position estimation is possible is 1-bit information. When information 7214 on whether or not three-dimensional position estimation is possible is "1", the device such as a terminal, device, or sensor determines that the base station is capable of performing three-dimensional position estimation of devices such as terminals, devices, or sensors. Therefore, the device such as a terminal, device, or sensor and the like interacts (performs transmission and/or reception) with the base station for three-dimensional position estimation.

When information 7214 on whether or not three-dimensional position estimation is possible is "0", the device such as a terminal, device, or sensor determines that the base station does not perform three-dimensional position estimation of devices such as terminals, devices, or sensors. Therefore, the device such as a terminal, device, or sensor and the like does not interact (perform transmission and/or reception) with the base station for three-dimensional position estimation.

As described above, by the base station transmitting base station capability information to the terminal, the terminal can determine whether the base station supports the embodiment explained in Embodiment 11 and the like. This provides the advantage that the terminal can appropriately receive the service.

FIG. 73 illustrates an example of a configuration of terminal capability information 7300 included in a modulated signal transmitted by terminals such as terminal #1 101_1, terminal #2 101_2, terminal #101 101_101, and terminal #102 101_102 illustrated in FIG. 1. Terminal capability information 7300 includes, for example, information 7311 on whether or not the provision of sensing information is supported, information 7312 on whether or not the control of devices in real space is supported, information 7313 on whether or not receiving information in response to the control of devices in real space is supported, and information 7314 on whether or not three-dimensional position estimation is possible. Here, the terminal transmits terminal capability information 7300 to the base station.

Note that it is sufficient if terminal capability information 7300 includes at least one of information 7311 on whether or not the provision of sensing information is supported, information 7312 on whether or not the control of devices in real space is supported, information 7313 on whether or not receiving information in response to the control of devices in real space is supported, or information 7314 on whether or not three-dimensional position estimation is possible.

Information 7311 on whether or not the provision of sensing information is supported is information for notifying whether or not a device such as a terminal, device, or sensor supports transmitting sensing information to a base station or server, as described in Embodiment 11.

For example, suppose that information 7311 on whether or not the provision of sensing information is supported is 1-bit information. When information 7311 on whether or not the provision of sensing information is supported is "1", the base station and server, upon obtaining information 7311 on whether or not the provision of sensing information is supported, determine that the device such as a terminal, device, or sensor supports the transmission of sensing information, and the base station and server receive the sensing information.

When information 7311 on whether or not the provision of sensing information is supported is "0", the base station and server, upon obtaining information 7311 on whether or not the provision of sensing information is supported, determine that the device such as a terminal, device, or sensor does not support the transmission of sensing information.

Information 7312 on whether or not the control of devices in real space is supported is information for notifying whether or not the control of devices such as terminals, devices, or sensors present in real space is supported, as described in Embodiment 11.

For example, suppose that information 7312 on whether or not the control of devices in real space is supported is 1-bit information. When information 7312 on whether or not the control of devices in real space is supported is "1", the base station and server determine that, when the base station and server transmit control information, the device such as a terminal, device, or sensor is capable of controlling operation, based on this control information. Therefore, the base station and server transmit the control information to the devices such as terminals, devices, sensors, and the like.

When information 7312 on whether or not the control of devices in real space is supported is "0", the base station and server determine that, even if the base station and server transmit control information, the device such as a terminal, device, or sensor does not perform operation control based on this control information.

Information 7313 on whether or not receiving information in response to the control of devices in real space is supported is information for notifying whether or not receiving information of devices such as terminals, devices, or sensors along with the control of devices such as terminals, devices, or sensors present in real space is supported, as described in Embodiment 11.

For example, suppose that information 7313 on whether or not receiving information in response to the control of devices in real space is supported is 1-bit information. When information 7313 on whether or not receiving information in response to the control of devices in real space is supported is "1", the base station and server determine that, when the base station and server transmit control information, the device such as a terminal, device, or sensor obtains the control information and performs the operation. Upon the base station and server transmitting the information accompanying the control information (for example, the information on the display of arrows or the information displayed on the display device such as authentication successful - entry permitted in Embodiment 11), the base station and server determine that the device such as a terminal, device, or sensor operates based on that information.

Therefore, the base station and server transmit the information accompanying the control for operation control of the devices such as terminals, devices, sensors, and the like (for example, the information on the display of arrows or the information displayed on the display device such as authentication successful - entry permitted in Embodiment 11).

When information 7313 on whether or not receiving information in response to the control of devices in real space is supported is "0", the base station and server determine that, even if the base station and server transmit the information accompanying the control information (for example, the information on the display of arrows or the information displayed on the display device such as authentication successful - entry permitted in Embodiment 11), the device such as a terminal, device, or sensor does not operate based on that information.

Information 7314 on whether or not three-dimensional position estimation is possible is information for notifying whether or not a device supports the three-dimensional position estimation of devices such as terminals, devices, or sensors as described in other embodiments.

For example, suppose that information 7314 on whether or not three-dimensional position estimation is possible is 1-bit information. When information 7314 on whether or not three-dimensional position estimation is possible is "1", the base station determines that the device such as a terminal, device, or sensor is capable of performing three-dimensional position estimation of devices such as terminals, devices, or sensors. Therefore, the base station interacts (performs transmission and/or reception) with the device such as a terminal, device, or sensor and the like for three-dimensional position estimation.

When information 7314 on whether or not three-dimensional position estimation is possible is "0", the base station determines that the device such as a terminal, device, or sensor does not perform three-dimensional position estimation of devices such as terminals, devices, or sensors. Therefore, the base station does not interact (perform transmission and/or reception) with the device such as a terminal, device, or sensor and the like for three-dimensional position estimation.

As described above, by the terminal transmitting terminal capability information to the base station, the base station can determine whether the terminal supports the embodiment explained in Embodiment 11 and the like. This provides the advantage that the base station can appropriately provide the service.

Note that the naming of each item of information in FIG. 72 and FIG. 73 is not limited to the designations in FIG. 72 and FIG. 73, and any naming may be used.

### Supplemental Information 1

As a matter of course, the embodiments described in the present disclosure may be combined and carried out with other content such as supplemental information.

When the phrase "A and/or B" is used in the present disclosure, this may be interpreted as "A and B", and may be interpreted as "A or B".

The embodiments and other contents are merely examples. For example, while a "modulation method, an error correction coding method (error correction code, code length, coding rate, etc., to be used), control information, etc." are exemplified, it is possible to carry out the present disclosure with the same configuration even when other types of a "modulation method, an error correction coding method (error correction code, code length, coding rate, etc., to be used), control information, etc." are applied.

Regarding the modulation method, even when a modulation method other than the modulation methods described in the present specification is used, it is possible to carry out the embodiments and other contents described in the present specification. For example, APSK (Amplitude Phase Shift Keying) (e.g., 16APSK, 64APSK, 128APSK, 256APSK, 1024APSK, 4096APSK), PAM (Pulse Amplitude Modulation) (e.g., 4PAM, 8PAM, 16PAM, 64PAM, 128PAM, 256PAM, 1024PAM, 4096PAM), PSK (Phase Shift Keying) (e.g., BPSK, QPSK, 8PSK, 16PSK, 64PSK, 128PSK, 256PSK, 1024PSK, 4096PSK), and QAM (Quadrature Amplitude Modulation) (e.g., 4QAM, 8QAM, 16QAM, 64QAM, 128QAM, 256QAM, 1024QAM, 4096QAM) may be applied, or in each modulation method, uniform mapping or non-uniform mapping may be performed. The number of signal points in I (In-phase) - Q (Quadrature (Phase)) is not limited to the above examples, and may be an integer greater than or equal to 3.

The method for arranging 2, 4, 8, 16, 64, 128, 256, 1024, etc., signal points on I-Q plane (a modulation method having 2, 4, 8, 16, 64, 128, 256, 1024, etc., signal points) is not limited to a signal point arrangement method of the modulation schemes described in the present specification. Accordingly, the function of outputting an in-phase component and a quadrature component based on a plurality of bits becomes the function of the mapping unit, and subsequently, matrix operations (such as precoding) for implementing MIMO transmission, and applying phase changes to baseband signals become one of the effective functions of the present disclosure.

In the embodiments of the present specification, the modulated signal may include data symbols and symbols other than data symbols, such as reference signals (preamble, unique word, post-amble, reference symbol, pilot symbol, pilot signal, etc.), control information symbols, sector sweep, etc., and these symbols may be arranged in any order in the frame. Here, the terms "reference signal", "control information symbol", and "sector sweep" are used, but the naming of such symbols is not important; the functions that they perform are.

The reference signal is conceivably, for example, a known symbol modulated using PSK modulation in a transceiver (or the receiver may know the symbol transmitted by the transmitter by synchronizing with the receiver), a non-zero power signal, a zero power signal, or a known signal in the transceiver, and the receiver uses these signals to perform frequency synchronization, time synchronization, channel estimation (channel state information (CSI) estimation) for each modulated signal, signal detection, estimation of reception state, estimation of transmission state, and the like.

The symbol for control information is also a symbol for transmitting information (e.g., the modulation method used for communication, the error correction coding method, the coding rate of the error correction coding method, the setting information in the upper layer, the modulation and coding scheme (MCS), the frame configuration, the channel information, the information on the frequency band being used, the information on the number of channels being used, etc.) that needs to be transmitted to the communication counterpart to realize communication, other than (application, etc.) data.

It may be necessary to notify the transmission device and/or reception device of the communication method (multiple-input multiple-output (MIMO), single-input single-output (SISO), multiple-input single-output (MISO), single-input multiple-output (SIMO), space-time block coding, interleaving scheme, MCS, etc.), modulation scheme, and error correction coding scheme. In some cases, the explanation may be omitted depending on the embodiment.

In the present specification, MIMO transmission is described, but as a variation of MIMO transmission, a method of transmitting a plurality of symbols using a plurality of antennas while sharing a portion of the frequency at the same time is acceptable.

In both the transmission (panel) antenna of the transmission device and the reception (panel) antenna of the reception device, one antenna described in the drawings may be configured by one antenna or by a plurality of antennas.

In the explanation of the embodiment or the like, the transmission (panel) antenna and the reception (panel) antenna may sometimes be described separately, but a configuration in which the transmission (panel) antenna and the reception (panel) antenna are combined as a "transmission/reception (panel) antenna" is also acceptable.

The transmission (panel) antenna, reception (panel) antenna, and transmission/reception (panel) antenna may, for example, also be referred to as antenna ports. The naming of the transmission (panel) antenna, reception (panel) antenna, and transmission/reception (panel) antenna is not limited to this, and it is conceivable that the transmission (panel) antenna is configured by one or more antennas or by a plurality of antennas. The reception (panel) antenna is also conceivably configured by one or more antennas or by a plurality of antennas. The transmission/reception (panel) antenna is also conceivably configured by one or more antennas or by a plurality of antennas. A device may be configured for each transmission (panel) antenna, a device may be configured for each reception (panel) antenna, and a device may be configured for each transmission/reception (panel) antenna. Stated differently, it may be considered as Multiple (Multi) TRP (Transmitter (TX)/Receiver (RX) point) (multi TRP).

An antenna port may be a logical antenna (antenna group) composed of one or more physical antennas. Stated differently, an "antenna port" does not necessarily refer to a single physical antenna, and may refer to, for example, an antenna array of a plurality of antennas. For example, whether an antenna port includes a number of physical antennas or not is not stipulated, but the minimum unit that a terminal station can transmit a reference signal may be stipulated. Moreover, regarding the antenna port, a unit or minimum unit of precoding vector or precoding matrix weighting may be stipulated.

The transmission (panel) antenna and reception (panel) antenna of the communication device in this case may be configured by one or more antennas or antenna elements, or by two or more antennas or antenna elements.

The transmission method supported by the base station and terminal may be a multi-carrier scheme such as OFDM, and may be a single-carrier scheme. The base station and terminal may support both a multi-carrier scheme and a single-carrier scheme. In such cases, a plurality of methods may be used to generate the single-carrier scheme modulated signal, and implementation is possible regardless of which method is used. Examples of single-carrier schemes include discrete Fourier transform (DFT)-spread orthogonal frequency division multiplexing (OFDM), trajectory constrained DFT-Spread OFDM, OFDM based single carrier (SC), single carrier (SC)-frequency division multiple access (FDMA), and guard interval DFT-spread OFDM. When a multicarrier scheme is used, symbols will be present on the frequency-axis in the frame.

In the present specification, as an example of a multicarrier scheme, each embodiment has been described using OFDM; however, even when other multicarrier schemes are used, each embodiment in the present specification can be similarly implemented.

As an example, for the frequency bands described in this specification, "single-carrier scheme using one frequency band" or "single-carrier scheme using one or more frequency bands" may be assigned to achieve multi-carrier transmission.

As another example, one or more carriers, or two or more carriers, may be assigned to the frequency bands described in this specification to achieve multi-carrier transmission. Note that the multi-carrier transmission scheme is not limited to the above-described examples.

In the present specification, for the sake of simplicity, the terms terminal, base station, apparatus, device, server, network, etc., are used in the embodiments, but the terms by which these elements are referred are not limited to these examples.

In the present specification, the reception device and antenna of the "terminal, base station, etc." may be configured as separate components. For example, the reception device includes an interface for inputting, through a cable, a signal received by the antenna or a signal subjected to frequency conversion after being received by the antenna, and the reception device performs subsequent processing. The data and/or information obtained by the reception device are subsequently converted into video and/or audio, and then displayed on a display (monitor) and/or output as sound from a loudspeaker. Furthermore, the data and/or information obtained by the reception device may be subjected to signal processing related to video and/or audio (signal processing may be not performed), and may be output from RCA terminals (video terminal, audio terminal), Universal Serial Bus (USB), High-Definition Multimedia Interface (HDMI) (registered trademark), digital terminals, etc., included in the reception device.

In the present specification, devices that include a transmission device and/or transmitter may conceivably be, for example, broadcast stations, base stations, access points, terminals, mobile phones, smartphones, tablets, laptop computers, servers, personal computers, televisions, home appliances (household electrical appliances), devices in factories, communication devices/broadcast devices such as IoT (Internet of Things) devices, gNB (g Node B), relays, nodes, cars, bicycles, motorcycles, ships, satellites, aircraft, drones, movable devices, robots, TRP (Tx (Transmission)/Rx (Reception) point), etc. Additionally, devices that include a reception device and/or receiver may conceivably be radios, terminals, personal computers, mobile phones, access points, communication devices such as base stations, smartphones, tablets, laptop computers, servers, personal computers, televisions, home appliances (household electrical appliances), devices in factories, communication devices/broadcast devices such as IoT (Internet of Things) devices, gNB (g Node B), relays, nodes, cars, bicycles, motorcycles, ships, satellites, aircraft, drones, movable devices, robots, TRP, etc. The transmission device and reception device in this case are devices having a communication function, and such devices may be configured to be connectable with devices for running applications such as a television, a radio, a personal computer, and a mobile phone, via a certain interface. Furthermore, devices that include a communication device in the present specification may conceivably be, for example, broadcast stations, base stations, access points, terminals, mobile phones, smartphones, tablets, laptop computers, servers, personal computers, televisions, home appliances (household electrical appliances), devices in factories, communication devices/broadcast devices such as IoT (Internet of Things) devices, gNB (g Node B), relays, nodes, cars, bicycles, motorcycles, ships, satellites, aircraft, drones, movable devices, robots, TRP.

Devices that include a device for realizing sensing may conceivably be, for example, broadcast stations, base stations, access points, terminals, mobile phones, smartphones, tablets, laptop computers, servers, personal computers, televisions, home appliances (household electrical appliances), devices in factories, communication devices/broadcast devices such as IoT (Internet of Things) devices, gNB (g Node B), relays, nodes, cars, bicycles, motorcycles, ships, satellites, aircraft, drones, movable devices, robots, TRP (Tx (Transmission)/Rx (Reception) point), etc. Additionally, devices that include a reception device and/or receiver may conceivably be radios, terminals, personal computers, mobile phones, access points, communication devices such as base stations, smartphones, tablets, laptop computers, servers, personal computers, televisions, home appliances (household electrical appliances), devices in factories, communication devices/broadcast devices such as IoT (Internet of Things) devices, gNB (g Node B), relays, nodes, cars, bicycles, motorcycles, ships, satellites, aircraft, drones, movable devices, robots, TRP, etc.

When a device transmits a signal for sensing, signals for sensing include "continuous wave (CW) using frequency modulated continuous wave (FMCW) method, phase modulated continuous wave (PMCW) method, etc.", "pulse signal", "modulated signal using multi-carrier scheme, single-carrier scheme", "spread spectrum signal", "unmodulated signal", "carrier wave", etc., but are not limited to these signals. The signal for sensing may exist regularly or periodically.

The sensing or sensing processing described in the present specification includes at least processing of detecting the position of an object, processing of detecting presence or absence of an object, processing of predicting a material property of an object, processing of detecting movement of an object, processing of estimating the status of a surrounding area of an apparatus capable of performing sensing, processing of estimating a distance between an apparatus capable of performing sensing and an object, or processing of detecting the shape of an object. Note that in the process of detecting the position of an object, it may be possible to simultaneously detect the object and the movement of the object. In the process of detecting the presence or absence of an object, or in the process of detecting the shape of an object, it is possible to identify the target object.

In the above embodiments, upon detecting an object (a person, animal, vehicle, etc.), a shutter may be triggered, that is to say, a still image may be captured. Moreover, upon detecting an object, a video may be captured. What is to be detected may be a predetermined gesture.

The sensing may be sensing performed via wireless technology that uses radio waves or sensing performed via wireless technology that uses a higher frequency, such as light.

An apparatus for sensing and an apparatus for communication may be connected via an interface or the like to achieve an apparatus capable of both sensing and communication.

Note that the purpose for using spatial sensing, the application of spatial sensing, and the environment in which spatial sensing is used vary. Various factors vary depending on the application or environment of use, such as the object that is a detection target or the distance to an object that is a detection target, desired distance precision, allowable delay time, or information desired to be obtained simultaneously with the detection of an object. Accordingly, depending on the purpose for using spatial sensing, the application of spatial sensing, and the environment in which spatial sensing is used, a transmission device and a transmission method that can obtain a purpose-specific sensing result by, for example, switching sensing methods or combining a plurality of sensing methods are required.

With the detection device according to the above aspect, by performing detection of distance to an object using radio waves and controlling detection position using image information, it is possible to easily specify an object that is a detection target for distance measuring, and detect the distance thereto.

For example, when a user specifies an object as a detection target based on video displayed on a device having a display unit such as a touch panel and an input unit or inputs a signal to be selected, it is easy for the user to specify a target object for sensing performed using radio waves.

Moreover, for example, when an object that is a detection target is detected via image processing that uses image information obtained by an image capturing unit and distance between the detected object is estimated, it is possible to use a feature amount included in the image information, such as color or shape, in the object detection. Accordingly, compared to when detection is performed using only radio waves, it is possible to improve object detection precision and foster improvement of identification ability of an object.

In the present disclosure, the sensor used for sensing is not limited to sensing that uses radio waves. For example, sensing that uses light such as light detection and ranging (LIDAR) may be used. When a combination of a plurality of sensors is used, the sensors that are combined may be any sort of sensors. For example, a camera may be used as a sensor, and captured video may be used as sensing data as-is, or image processing for extracting a feature amount or image processing such as pattern recognition may be performed on the video, and the result may be used as sensing data (or position information). Moreover, for example, data obtained from any given sensor included in a wearable terminal worn by the user may be used as sensing data. Examples of such a sensor include a microphone, position sensor, acceleration sensor, myoelectric potential sensor, or temperature sensor.

The terminal (or base station) may perform sensing using an included camera equipped with an image sensor, infrared sensor, or optical sensor for capturing video, images, etc. With this, the terminal obtains position information, transmits it to server 104 in the present specification, and server 104 may cause the character corresponding to the terminal to appear in the virtual space and control the character corresponding to the terminal.

For example, the terminal may capture still images and/or video using an included camera equipped with an image sensor for capturing video, images, etc., and may perform position estimation using the still images and/or video to obtain position information.

Here, when the terminal performs position estimation, it may perform position estimation using video or still images it possesses.

As another method, the terminal transmits still images and/or video to another device, and the other device estimates the position of the terminal. The terminal may obtain its own position estimation information from another device.

The terminal transmits position information to server 104 in the present specification, and server 104 may cause the character corresponding to the terminal to appear in the virtual space and control the character corresponding to the terminal.

An example can be considered in which registration of a paired operation of a combination of events detected using a plurality of sensing data items is performed by a user on settings screen or GUI, but another method may be used for the registration. For example, in the process for registering a gesture to a device, it may be created automatically. For example, in the system, after a user instructs gesture registration to start, while the user is performing the gesture, a first sensor and a second sensor included in a plurality of different or same devices each obtain sensing data, and a temporal change in the sensing data obtained by each of the sensors is stored. Thereafter, determination as to whether or not the registered gesture has been made or not is performed using the sensing data obtained by the first sensor and the sensing data obtained by the second sensor. This configuration achieves the advantageous effect that it is possible to simplify the registration of a paired operation of a combination of events detected using a plurality of sensing data items.

Note that when a sensor that performs sensing using radio waves is used, the sensing data used in the above-described process may be data indicating a three-dimensional position or shape in a given format such as a point cloud or mesh format, and may be data obtained by implementing given signal processing on the reception signal, such as a transmission path characteristic estimated from a pilot or reference signal, a correlation value between a reference signal and the reception signal, or a phase difference between sub-carriers in an OFDM signal. The sensing data may be, for example, data obtained by extracting a difference between a sensing result obtained while a moving target object is not present, such as the sensing result of the initial sensing described above, and a sensing result obtained by normal sensing performed for the purpose of detecting a target object.

In the present disclosure, the sensor used for sensing is not limited to sensing that uses radio waves. For example, a device such as a camera equipped with an image sensor, infrared sensor, or optical sensor for capturing video and images recognizes physically existing organisms, objects, etc., and this device transmits information on these recognized items to server 104. Additionally, this device transmits information on the position where the capture was performed along with the captured information to server 104. Server 104 may then select a virtual space based on the position information, cause characters corresponding to the recognized "physically existing organisms, objects, etc." to appear in the selected virtual space, and control the characters corresponding to the recognized "physically existing organisms, objects, etc." in the virtual space.

Real space may be referred to as "(physical) real space" or "universe". Real space may be augmented reality (AR) (a world in which the real world is virtually augmented). Real space may be understood as, for example, the physical world in which we live. Real space may be referred to by another name. The above points apply throughout the present specification.

Virtual space may also be referred to as "cyber space", "metaverse space", "(one) multiverse space", "virtual space", "virtual reality (VR)", or "virtual world". Note that virtual space may be referred to by another name. The above points apply throughout the present specification.

Furthermore, the character may also be referred to as an "avatar" or "object". An avatar may be understood as, for example, an alter ego of a user, who possesses a terminal, that appears in games, the internet, and virtual space. Note that the character may be referred to by another name.

Note that digital twin refers to a technical concept of transferring and reproducing data related to objects and environments obtained in a physical real-world space (for example, a real space) to a cyber space (for example, a virtual space). Data and information obtained by utilizing IoT (Internet of Things) technology from sensor devices and the like in a real space are reflected in cyber space as if in a mirror, which is called a digital twin.

The "character corresponding to a terminal" in the virtual space may be a "human-like character (or object or avatar)", "animal-like character (or object or avatar)", "bird-like character (or object or avatar)", "flying object (drone, aircraft, airplane)-like character (or object or avatar)", "vehicle-like character (or object or avatar)", "bicycle-like character (or object or avatar)", "motorcycle-like character (or object or avatar)", "train-like character (or object or avatar)", "railway train-like character (or object or avatar)", "robot-like character (or object or avatar)", but this is non-limiting.

Server 104 may also determine which of a plurality of predetermined terminal types the terminal is, and display in the virtual space an object corresponding to each state or an object selected from an object group corresponding to each state. The correspondence between terminal types and objects is not limited to the above examples. For example, objects shaped like different animals may be associated according to the type of terminal, or objects with the same shape but different colors may be associated according to the type of terminal.

Note that the present disclosure is not limited to the embodiments; various modifications may be made to the embodiments. For example, each embodiment is described as being implemented as a communication device, but this example is not limiting, each embodiment may implement a corresponding communication method as software.

Note that a program for executing the above-described communication method may be stored in read only memory (ROM) in advance to cause a central processing unit (CPU) to operate this program.

Moreover, the program for executing the communication method may be stored in a computer-readable storage medium, the program stored in the recording medium may be recorded in RAM in a computer, and the computer may be caused to operate according to this program.

Each configuration of each of the above-described embodiments, etc., may be realized as a large scale integration (LSI) circuit, which is typically an integrated circuit that includes an input terminal and an output terminal. These integrated circuits may be formed as separate chips, or may be formed as one chip so as to include the entire configuration or part of the configuration of each embodiment. LSI is described here, but the circuit may also be referred to as an integrated circuit (IC), system LSI circuit, super LSI circuit or ultra LSI circuit depending on the degree of integration. Moreover, the circuit integration technique is not limited to LSI, and may be realized by a dedicated circuit or a general purpose processor. After manufacturing of the LSI circuit, a programmable FPGA or a reconfigurable processor which is reconfigurable in connection or settings of circuit cells inside the LSI circuit may be used. Further, when development of a semiconductor technology or another derived technology provides a circuit integration technology which replaces LSI, as a matter of course, functional blocks may be integrated by using this technology. Adaption of biotechnology, for example, is a possibility.

Note that at least one of the field programmable gate array (FPGA) and the CPU may be configured to download, via wired or wireless communication, some or all of the software required to implement the communication method described in the present disclosure. At least one of the FPGA and the CPU may be further configured to download, via wired or wireless communication, some or all of software required to perform updates. The downloaded software may be stored in storage, and based on the stored software, at least one of the FPGA and the CPU may be operated to implement the digital signal processing described in the present disclosure.

Here, a device including at least one of the FPGA and the CPU may connect to a communications modem over a wired or wireless connection, and the device and the communications modem may implement the communication method described in the present disclosure.

For example, a communication device such as the base station, or the terminal described in the present specification may include at least one of the FPGA and the CPU, and include an interface for obtaining, from an external source, software for operating at least one of the FPGA and the CPU. The communication device may further include storage for storing software obtained from the external source, and implement the signal processing described in the present disclosure by operating the FPGA and the CPU based on the stored software.

In the present specification, the server may provide an application related to processing associated with the reception device and receiver, and the terminal may realize the functions of the reception device described in this specification by installing this application. Note that the application may be provided to the terminal by a communication device including the transmission device described in this specification connecting to a server via a network, or the application may be provided to the terminal by another communication device having a transmission function connecting to a server via a network. Note that an example of the application may be the "application linking real space and virtual space" explained using the embodiment.

Similarly, in the present specification, the server may provide an application related to processing associated with the transmission device and transmitter, and the communication device may realize the functions of the transmission device described in this specification by installing this application. Note that the application may be provided to this communication device by another communication device connecting to a server via a network.

Note that the present disclosure is not limited to the embodiments; various modifications may be made to the embodiments. For example, each embodiment is described as being implemented as a communication device, but this example is not limiting, each embodiment may implement a corresponding communication method as software.

For example, a program for executing the above-described communication method may be stored in read only memory (ROM) in advance to cause a central processing unit (CPU) to operate this program.

The program for executing the communication method may be stored in a computer-readable storage medium, the program stored in the recording medium may be recorded in random access memory (RAM) in a computer, and the computer may be caused to operate according to this program.

Each configuration of each of the above-described embodiments, etc., may be realized as a large scale integration (LSI) circuit, which is typically an integrated circuit. These integrated circuits may be formed as separate chips, or may be formed as one chip so as to include the entire configuration or part of the configuration of each embodiment. LSI is described here, but the circuit may also be referred to as an IC, a system LSI circuit, a super LSI circuit or an ultra LSI circuit depending on the degree of integration. Moreover, the circuit integration technique is not limited to LSI, and may be realized by a dedicated circuit or a general purpose processor. After manufacturing of the LSI circuit, a programmable FPGA or a reconfigurable processor which is reconfigurable in connection or settings of circuit cells inside the LSI circuit may be used.

Note that at least one of FPGA and CPU may be configured to download, via wired or wireless communication, some or all of the software required to implement the communication method described in the present disclosure. At least one of the FPGA and the CPU may be further configured to download, via wired or wireless communication, some or all of software required to perform updates. The downloaded software may be stored in storage, and based on the stored software, at least one of the FPGA or the CPU may be operated to implement the digital signal processing described in the present disclosure.

Here, a device including at least one of the FPGA or the CPU may connect to a communications modem over a wired or wireless connection, and the device and the communications modem may implement the communication method described in the present disclosure.

For example, a communication device such as the base station, AP, or the terminal described in the present specification may include at least one of the FPGA or the CPU, and include an interface for obtaining, from an external source, software for operating at least one of the FPGA or the CPU. The communication device may further include storage for storing software obtained from the external source, and implement the signal processing described in the present disclosure by operating the FPGA, CPU based on the stored software.

Further, when development of a semiconductor technology or another derived technology provides a circuit integration technology which replaces LSI, as a matter of course, functional blocks may be integrated by using this technology. Adaption of biotechnology, for example, is a possibility.

The disclosure case can be widely applied to wireless systems that transmit different modulated signals from each of a plurality of antennas. The disclosure can be applied to cases where MIMO transmission is performed in wired communication systems having a plurality of transmission points (for example, Power Line Communication (PLC) systems, optical communication systems, Digital Subscriber Line (DSL) systems). The communication device may be referred to as a wireless device.

"Data", "data symbol", and "data frame" may be, for example, Physical Downlink Shared Channel (PDSCH) or Physical Uplink Shared Channel (PUSCH).

In the above embodiments, the notation "xyz unit" used for each element may be replaced with other notations such as "xyz circuit (circuitry)", "xyz device", or "xyz module", where 'xyz' is a placeholder.

### Supplemental Information 2

Note that the present disclosure is not limited to the embodiments; various modifications may be made to the embodiments. For example, each embodiment is described as being implemented as a communication device or a (signal) processing device, but this example is not limiting, each embodiment may implement the corresponding communication method and signal processing as software.

For example, a program for executing the above-described communication method and signal processing may be stored in read only memory (ROM) in advance to cause a central processing unit (CPU) and CPU architecture to operate this program.

The program for executing the above-described communication method and signal processing may be stored in a computer-readable storage medium, the program stored in the recording medium may be recorded in RAM in a computer, and the computer may be caused to operate according to this program.

Each configuration of each of the above-described embodiments, etc., may be realized as a large scale integration (LSI) circuit, which is typically an integrated circuit that includes an input terminal and an output terminal. These integrated circuits may be formed as separate chips, or may be formed as one chip so as to include the entire configuration or part of the configuration of each embodiment. LSI is described here, but the circuit may also be referred to as an IC, a system LSI circuit, a super LSI circuit or an ultra LSI circuit depending on the degree of integration. Moreover, the circuit integration technique is not limited to LSI, and may be realized by a dedicated circuit or a general purpose processor. After manufacturing of the LSI circuit, a programmable FPGA or a reconfigurable processor which is reconfigurable in connection or settings of circuit cells inside the LSI circuit may be used. Further, when development of a semiconductor technology or another derived technology provides a circuit integration technology which replaces LSI, as a matter of course, functional blocks may be integrated by using this technology. Adaption of biotechnology, for example, is a possibility.

Note that at least one of the FPGA, the CPU, or the (CPU) architecture may be configured to download, via wired or wireless communication, some or all of the software or application (software) required to implement the communication method and/or signal processing described in the present disclosure. At least one of the FPGA, the CPU, or the (CPU) architecture may be further configured to download, via wired or wireless communication, some or all of software or application (software) required to perform updates. The downloaded software or application (software) may be stored in storage, and based on the stored software or application (software), at least one of the FPGA, the CPU, or the (CPU) architecture may be operated to implement the digital signal processing described in the present disclosure.

Here, a device including at least one of the FPGA, the CPU, or the (CPU) architecture may connect to a communications modem over a wired or wireless connection, and the device and the communications modem may implement the communication method and/or signal processing described in the present disclosure.

For example, a communication device such as the base station, terminal, capturing device, or object described in the present specification may include at least one of an FPGA, CPU, or (CPU) architecture, and include an interface for obtaining, from an external source, software or application (software) for operating at least one of the FPGA, the CPU, or the (CPU) architecture. The communication device may further include storage for storing software obtained from the external source, and implement the signal processing described in the present disclosure by operating the FPGA, the CPU, or the (CPU) architecture based on the stored software or application (software).

In the present specification, the server may provide an application related to "processing associated with the transmission device and transmitter," "processing associated with the reception device and receiver," and "communication method and signal processing," and the terminal may realize the transmission functions, the functions of the reception device, and the "communication method and signal processing" described in this specification by installing this application. Note that the application may be provided to the terminal by a communication device including the transmission device described in this specification connecting to a server via a network, or the application may be provided to the terminal by another communication device having a transmission function connecting to a server via a network. Note that an example of the application may be the "application linking real space and virtual space" explained using the embodiment.

Note that the present disclosure is not limited to the embodiments; various modifications may be made to the embodiments. For example, each embodiment is described as being implemented as a communication device, but this example is not limiting, each embodiment may implement a corresponding communication method as software.

For example, a program for executing the above-described communication method may be stored in read only memory (ROM) in advance to cause a central processing unit (CPU) to operate this program.

Moreover, the program for executing the communication method may be stored in a computer-readable storage medium, the program stored in the recording medium may be recorded in RAM in a computer, and the computer may be caused to operate according to this program.

Each configuration of each of the above-described embodiments, etc., may be realized as a large scale integration (LSI) circuit, which is typically an integrated circuit. These integrated circuits may be formed as separate chips, or may be formed as one chip so as to include the entire configuration or part of the configuration of each embodiment. LSI is described here, but the circuit may also be referred to as an IC, a system LSI circuit, a super LSI circuit or an ultra LSI circuit depending on the degree of integration. Moreover, the circuit integration technique is not limited to LSI, and may be realized by a dedicated circuit or a general purpose processor. After manufacturing of the LSI circuit, a programmable FPGA or a reconfigurable processor which is reconfigurable in connection or settings of circuit cells inside the LSI circuit may be used.

Note that the present disclosure discloses estimating the position of terminals and objects, but the estimation of said position may include information on the position and orientation of the terminals and objects.

For example, when a reference orientation such as the forward direction for the terminal or object is set, the device performing position estimation estimates (i) the coordinate value indicating the position of the terminal or object in the coordinate system used by the device performing position estimation, and (ii) a vector value or two angle values indicating the reference orientation in the coordinate system used by the device performing position estimation. When the vertical direction for the terminal or object to be detected aligns with the vertical direction in the coordinate system used by the device performing estimation, or when the angle difference is small enough to be negligible, using the above detection method may potentially result in reduced computational requirements for position and orientation estimation and mitigation of estimation errors.

For example, when a coordinate system unique to the terminal or object to be detected is set, the device performing position estimation estimates (i) the coordinate value indicating the position of the terminal or object in the coordinate system used by the device performing position estimation, and (ii) the values of rotation angles for each axis necessary to align the orientation of the axes of the coordinate system set for the terminal or object with the orientation of the axes of the coordinate system used by the device performing estimation. When the orientation of the axes of the coordinate system set for the terminal or object to be detected does not align with any of the axes of the coordinate system used by the device performing estimation, using the above detection method may potentially enable appropriate obtainment of the orientation of the terminal or object to be detected.

Note that while the above explanation described a case of estimating position and orientation in the coordinate system used by the device performing position estimation, the coordinate system on which the estimated values that the device performing position estimation estimates, retains, or outputs are based need not be the coordinate system used by the device performing position estimation. For example, when performing position estimation, if the device performing position estimation uses three-dimensional or two-dimensional map data, the device performing position estimation may estimate values indicating position or orientation in the coordinate system on which the three-dimensional or two-dimensional map data used for estimation is based.

In the present disclosure, while terms such as absolute position and relative position are used, these terms may be interpreted, for example, as follows. For example, the absolute position may be position information specified using geodetic systems such as WGS84, Japanese Geodetic Datum 2011, or International Terrestrial Reference System, or may be position information specified in any coordinate system that can directly or indirectly specify a position in real space different from the above geodetic systems. Stated differently, the position information referred to as "absolute" in the present disclosure may be any position information used in the system to indicate the position of a terminal or object in real space, and is not intended to be a coordinate system that indicates the geographical position in real space without error.

The present disclosure discloses a position estimation method for obtaining position information of terminals or objects using communication devices such as base stations or cameras arranged in a real space, and a position estimation method in which a terminal performs self-position estimation using information obtained from cameras or LiDAR included in the terminal. However, in the present disclosure, an embodiment explained as using one of these position estimation methods may be replaced with a configuration using the other position estimation method. For example, when replacing a configuration for obtaining position information of terminals or objects using communication devices such as base stations or cameras arranged in a real space with a position estimation method in which a terminal performs self-position estimation using information obtained from cameras or LiDAR included in the terminal, the terminal transmits the position information of the terminal estimated by the terminal to communication devices or cameras such as base stations. Note that when transmitting terminal position information to the server, the terminal may directly transmit its own position information to the server. Here, directly transmitting to the server means, for example, that a packet storing the terminal's position information generated in the terminal is transmitted to the server, and a base station may be arranged on the communication path. Stated differently, the position information of the terminal transmitted from the terminal and destined for the server may be relayed by a base station.

The position estimation performed by the terminal using cameras or LiDAR included in the terminal as described above may also be referred to as Visual Positioning System (VPS). The terminal may estimate its position information by performing matching between image data or point cloud data obtained using cameras or LiDAR and three-dimensional map information, or by matching image data obtained using cameras or LiDAR with previously obtained image data. When performing position estimation of the terminal, the terminal may use both image data obtained by a camera and point cloud data obtained by LiDAR, may use a plurality of image data obtained from each of a plurality of cameras, and may use a plurality of image data or point cloud data obtained from a plurality of LiDAR devices.

When performing position estimation of the terminal, the terminal may use, in addition to image or image data or point cloud data obtained using cameras or LiDAR, sensing data obtained from any given sensor or any combination of a plurality of sensors such as gyro sensors, velocity sensors, acceleration sensors, and pressure sensors.

The terminal may also generate point cloud data by estimating positions of points on surfaces of objects located in the surrounding area using image data obtained from one or a plurality of cameras, and may use the generated point cloud data for position estimation. The data that the terminal obtains from LiDAR may be a depth image measured using reflected light of ranging light irradiated over a wide area including the entire area to be measured or the imaging area, or it may be point cloud data measured using reflected light of laser light irradiated by LiDAR.

The point cloud data obtained by LiDAR may include, in addition to data indicating the distance for each obtained point, data indicating reflectivity and data indicating the confidence representing the estimation accuracy of the estimated distance.

In the present disclosure, a configuration where the server grants permission for the upload of advertisement (update) information has been described as an example, but the advertisement (update) information may be uploaded without the server's permission, and the uploaded advertisement (update) information may be displayed by the terminal in the virtual space.

The advertisement displayed in the virtual space or advertisement AR-displayed in the real space may be restricted to be displayable on a predetermined planar area or spatial area. The advertisement displayed on a displayable planar area or spatial area may be included in a server that provides advertisement content, which is separate from the server that manages objects presented in virtual space or AR-displayed in the real space. In such cases, the server that provides advertisement content may determine whether to present the uploaded advertisement data in the virtual space. Whether to present in the virtual space may be switched on a per-user basis. For example, the server that determines whether to present advertisements may make the determination based on information such as the user's age and preferences.

With respect to advertisements presented in the virtual space, if the user who viewed the advertisement wishes to refuse the presentation of the advertisement, a configuration in which it is possible to notify the refusal of the presentation of the advertisement may be adopted. For example, information such as a link or message transmission destination for notifying the refusal of the presentation may be presented with respect to advertisements displayed on the display screen of the terminal. The server becomes capable of providing the above function by transmitting, to the terminal, information including a link or message transmission destination for notifying the refusal of the presentation with respect to the area where the advertisement is presented or the object displayed as an advertisement.

Note that while the above explanation described notifying the refusal of the presentation, it may also be configured to indicate that the advertisement is deemed undesirable to display to other users as well.

Note that the reference signal transmitted by the base station for performing position estimation of the terminal may also be referred to as a positioning reference signal (PRS). The reference signal transmitted by the terminal for performing position estimation of the terminal may also be referred to as a sounding reference signal for positioning (Positioning SRS). Note that the naming of the reference signal is not limited to this example.

In the present specification, an explanation has been provided regarding the configuration and operation of a server, but the server may be LMF or AMF.

The order of processing in the interaction between the terminal and server, as well as the interaction between the first device and second device, is not limited to the order shown in the examples, and other processing may also be added.

The order of processing in the interaction between the terminal, device, and server, as well as the interaction between the first device, second device, and third device, is not limited to the order shown in the examples, and other processing may also be added.

In Embodiment 6, an explanation was provided regarding an example of a method for posting advertisement information or information in the real space and the virtual space simultaneously. Another example will be given.

In real space, it is assumed that there exist advertisement billboards, advertising spaces using buildings and structures, advertising spaces existing in commercial facilities and the like, advertising spaces using those installed on roads, and advertising spaces using buses, taxis, trains, and the like. In the virtual space, it is assumed that advertisement information or information is posted on things (places) corresponding to advertisement billboards, things (places) corresponding to advertising spaces using buildings and structures, things (places) corresponding to advertising spaces existing in commercial facilities and the like, things (places) corresponding to advertising spaces using those installed on roads, and things (places) corresponding to advertising spaces using buses, taxis, trains, and the like.

For example, advertisement information or information is posted on advertisement billboards in real space and on things (places) corresponding to advertisement billboards in virtual space. However, although the advertisement or information in real space and the advertisement or information in virtual space are linked, they need not be the same information.

Advertisement information or information is posted on advertising spaces using buildings and structures in real space and on things (places) corresponding to advertising spaces using buildings and structures in virtual space. However, although the advertisement or information in real space and the advertisement or information in virtual space are linked, they need not be the same information.

Advertisement information or information is posted on things (places) corresponding to advertising spaces existing in commercial facilities and the like in real space and in virtual space. However, although the advertisement or information in real space and the advertisement or information in virtual space are linked, they need not be the same information.

Advertisement information or information is posted on things (places) corresponding to advertising spaces using those installed on roads in real space and in virtual space. However, although the advertisement or information in real space and the advertisement or information in virtual space are linked, they need not be the same information.

Advertisement information or information is posted on things (places) corresponding to advertising spaces using buses, taxis, trains, and the like in real space and in virtual space. However, although the advertisement or information in real space and the advertisement or information in virtual space are linked, they need not be the same information.

Here, it may utilize VOOH (Virtual Out of Home), which is an advertising space posted in a format similar to real outdoor advertisements within 3D (3 dimensions) (3-dimensional) space in which the user participates. With this, the user's play environment is not hindered, and it is possible to appeal natively. Additionally, since it is posted in a digital space, it is possible to determine the user's advertisement viewing time/viewing angle/distance and perform appropriate contact (viewable impression) measurement, achieving the advantageous effect of being able to set the distribution.

Note that the methods for posting advertisements, methods for linking advertisements, methods for changing advertisements, methods for updating advertisements, and methods for providing advertisements can apply the methods explained in Embodiment 6.

The basic configuration and processing of the system according to each of the above embodiments are as follows.

FIG. 74A illustrates a basic configuration of a system according to each embodiment.

As illustrated in FIG. 74A, the system includes at least server 7400, first terminal 7410, and first base station 7420. The system may further include second base station 7430. Note that first terminal 7410 is also simply referred to as a terminal, and first base station 7420 is also simply referred to as a base station.

Server 7400 includes communicator 7401 and processor 7402.

Communicator 7401 receives control information indicating that first terminal 7410 is in a first area of a real space. Control information is information indicating that first terminal 7410 is communicating with first base station 7420.

Processor 7402 generates information corresponding to first terminal 7410. Processor 7402 may obtain position information of first terminal 7410 from first base station 7420, and based on the position information of first terminal 7410, change a position in the first virtual space at which to display the image corresponding to first terminal 7410. The position information that processor 7402 obtains may be, for example, position information of first terminal 7410 sensed by first base station 7420.

Communicator 7401 transmits the information generated by processor 7402 to a second terminal displaying a first virtual space corresponding to the first area of the real space, and displays the information on a display screen of the second terminal.

First terminal 7410 includes communicator 7411 and processor 7412.

Communicator 7411 is communicating with first base station 7420 arranged in a first area of a real space.

Processor 7412 generates control information including an identifier indicating first base station 7420 and an identifier indicating first terminal 7410, and transmits the control information to server 7400 that provides a first virtual space corresponding to the first area of the real space. Control information is information indicating that first terminal 7410 is communicating with first base station 7420.

Note that the first area of the real space may also be associated with first base station 7420 and second base station 7430. Second base station 7430 is a different base station from first base station 7420.

The first virtual space may be associated with the first area and the second area of the real space. The second area is an area of the real space different from the first area.

The first area of the real space may be associated with a first area of the first virtual space.

First base station 7420 includes communicator 7421 and processor 7422. First base station 7420 is arranged in a first area of the real space.

Communicator 7421 is communicating with first terminal 7410 in a first area of a real space.

Processor 7422 generates control information including identifier indicating first base station 7420 and identifier indicating first terminal 7410.

Communicator 7421 transmits the control information to server 7400 that provides a first virtual space corresponding to the first area of the real space.

The second terminal can display an image corresponding to the first terminal on the display screen. The second terminal is located outside the first area of the real space.

FIG. 74B illustrates an example of basic processing performed by a system according to each embodiment.

The first terminal communicates with the first base station arranged in the first area of the real space (step S7401), and transmits control information including an identifier indicating the first base station and an identifier indicating a terminal to a server that provides a first virtual space corresponding to the first area of the real space (step S7403).

Note that the first terminal may further perform sensing between the first base station and the first terminal to generate position information of the first terminal. In such cases, the first terminal can transmit the position information of the first terminal obtained by sensing to the server.

The server receives control information indicating that a first terminal is in a first area of a real space (step S7431 or S7432), transmits information corresponding to the first terminal to a second terminal displaying a first virtual space corresponding to the first area of the real space (step S7433), and displays an image corresponding to the first terminal on a display screen of the second terminal. The control information that the server receives may be control information #1 received from first terminal or control information #2 received from the first base station.

The first base station communicates with the first terminal staying in the first area of the real space (step S7402), and can transmit control information #2 including an identifier indicating the first base station and an identifier indicating the first terminal to a server that provides a first virtual space corresponding to the first area of the real space.

Note that the first base station can perform sensing to generate the position information of the first terminal and transmit the position information of the first terminal obtained by sensing to the server.

With the above processing, the system can make a character (avatar) appear in a virtual space based on the position of a terminal (or user) in real space.

In the above embodiments, each element may be configured as dedicated hardware or may be realized by executing a software program suitable for the element. Each of the elements may be realized by means of a program executing unit, such as a central processing unit (CPU) or a processor, reading and executing the software program recorded on a recording medium such as a hard disk or a semiconductor memory. Here, the software program for realizing the device and the like according to each of the embodiments is the program described below.

Stated differently, the software program is a program that causes a computer to execute a method implemented by a server, the method including: receiving control information indicating that a first terminal is in a first area of a real space; transmitting information corresponding to the first terminal to a second terminal displaying a first virtual space corresponding to the first area of the real space; and displaying an image corresponding to the first terminal on a display screen of the second terminal.

The software program is a program that causes a computer to execute a method implemented by a terminal, the method including: communicating with a first base station arranged in a first area of a real space; and transmitting control information including an identifier indicating the first base station and an identifier indicating a terminal to a server that provides a first virtual space corresponding to the first area of the real space.

The software program is a program that causes a computer to execute a method implemented by a base station, the method including: communicating with a first terminal in the first area of a real space; and transmitting control information including an identifier indicating the first base station and an identifier indicating the first terminal to a server that provides a first virtual space corresponding to the first area of the real space.

Although devices according to one or more aspects have been explained based on embodiments, the invention understood based on the present disclosure is not limited to these embodiments. Various modifications to the embodiments that may be conceived by those skilled in the art, as well as embodiments resulting from combinations of elements from different embodiments, may be included within the scope of one or more aspects.

### [Industrial Applicability]

The present disclosure includes inventions applicable to, for example, wireless communication devices, wired communication devices, and terminals or equipment/devices that include those devices.

### [Reference Signs List]

7400 server
7401, 7411, 7421 communicator
7402, 7412, 7422 processor
7410 first terminal
7420 first base station
7430 second base station

## Claims

1. A method implemented by a server, the method comprising:
receiving control information indicating that a first terminal is in a first area of a real space; and
transmitting information corresponding to the first terminal to a second terminal displaying a first virtual space corresponding to the first area of the real space, and displaying an image corresponding to the first terminal on a display screen of the second terminal.

2. The method according to claim 1, wherein
the second terminal is located outside the first area of the real space.

3. The method according to claim 1, wherein
the control information is information indicating that the first terminal is communicating with a first base station.

4. The method according to claim 3, wherein
the first area of the real space is associated with the first base station and a second base station different from the first base station.

5. The method according to claim 3, wherein
the first virtual space is associated with the first area of the real space and a second area of the real space different from the first area of the real space.

6. The method according to claim 3, wherein
the first area of the real space is associated with a first area of the first virtual space.

7. The method according to claim 3, further comprising:
obtaining position information of the first terminal from the first base station; and
based on the position information of the first terminal, changing a position in the first virtual space at which to display the image corresponding to the first terminal.

8. A server comprising:
a communicator; and
a processor, wherein
the communicator receives control information indicating that a first terminal is in a first area of a real space,
the processor generates information corresponding to the first terminal, and
the communicator transmits the information to a second terminal displaying a first virtual space corresponding to the first area of the real space, and displays the information on a display screen of the second terminal.

9. A method implemented by a terminal, the method comprising:
communicating with a first base station arranged in a first area of a real space; and
transmitting control information including an identifier indicating the first base station and an identifier indicating a terminal to a server that provides a first virtual space corresponding to the first area of the real space.

10. The method according to claim 9, further comprising:
performing sensing between the first base station and the terminal to generate position information of the terminal; and
transmitting the position information to the server.

11. A terminal comprising:
a communicator; and
a processor, wherein
the communicator is communicating with a first base station arranged in a first area of a real space,
the processor generates control information including an identifier indicating the first base station and an identifier indicating the terminal, and
the communicator transmits the control information to a server that provides a first virtual space corresponding to the first area of the real space.

12. A method implemented by a base station arranged in a first area of a real space, the method comprising:
communicating with a first terminal in the first area of the real space; and
transmitting control information including an identifier indicating a first base station and an identifier indicating the first terminal to a server that provides a first virtual space corresponding to the first area of the real space.

13. The method according to claim 12, further comprising:
performing sensing to generate position information of the first terminal; and
transmitting the position information to the server.

14. A base station arranged in a first area of a real space, the base station comprising:
a communicator; and
a processor, wherein
the communicator is communicating with a first terminal in the first area of the real space,
the processor generates control information including an identifier indicating a first base station and an identifier indicating the first terminal, and
the communicator transmits the control information to a server that provides a first virtual space corresponding to the first area of the real space.
